(19) Europäisches Patentamt

European Patent Office

Office européen des brevets

(11) **EP 1 039 392 A1**

(12) **EUROPEAN PATENT APPLICATION**
published in accordance with Art. 158(3) EPC

(43) Date of publication:
**27.09.2000 Bulletin 2000/39**

(51) Int. Cl.$^7$: **G06F 15/00**, G06F 17/60, H04L 9/08

(21) Application number: **99947910.8**

(22) Date of filing: **14.10.1999**

(86) International application number:
**PCT/JP99/05689**

(87) International publication number:
**WO 00/22539 (20.04.2000 Gazette 2000/16)**

(84) Designated Contracting States:
**AT BE CH CY DE DK ES FI FR GB GR IE IT LI LU MC NL PT SE**

(30) Priority: 15.10.1998 JP 29383098
19.10.1998 JP 29694298
04.11.1998 JP 31302098
09.04.1999 JP 10333799

(71) Applicant: **Sony Corporation**
**Tokyo 141-0001 (JP)**

(72) Inventors:
• **MATSUYAMA, Shinako,**
**Sony Corporation**
**Tokyo 141-0001 (JP)**
• **ISHIBASHI, Yoshihito,**
**Sony Corporation**
**Tokyo 141-0001 (JP)**
• **KITAHARA, Jun,**
**Sony Corporation**
**Tokyo 141-0001 (JP)**
• **ASANO, Tomoyuki,**
**Sony Corporation**
**Tokyo 141-0001 (JP)**
• **KITAMURA, Izuru,**
**Sony Corporation**
**Tokyo 141-0001 (JP)**
• **OSAWA, Yoshitomo,**
**Sony Corporation**
**Tokyo 141-0001 (JP)**
• **OISHI, Tateo,**
**Sony Corporation**
**Tokyo 141-0001 (JP)**

(74) Representative:
**DeVile, Jonathan Mark**
**D. Young & Co.,**
**21 New Fetter Lane**
**London EC4A 1DA (GB)**

(54) **INFORMATION PROVIDING SYSTEM**

(57) An accounting module 72 generates information indicating the use permission condition of information. A decoding/encryption module 74 generates authentication information of the information indicating the permission condition. A storage module 73 stores the authentication information.

FIG.1

EP 1 039 392 A1

**Description**

Technical Field

This invention relates to an information providing system for providing encrypted information, an information processing device and method, a management device and method, an information utilization system, a program providing medium, an information storage medium, and an external storage medium.

Background Art

There exists an information providing system for encrypting information such as music and transmitting the information to an information processing device of a user who has made a contract so that the user decodes and reproduces the information using the information processing device.

In such an information providing system, a key necessary for decoding encrypted information is changed at predetermined timing in order to protect the information from attacks such as tapping. Also, in the information providing system, as a signature is provided on information to be transmitted, any tapping of the information during transmission can be detected. In addition, in the information providing system, the user can receive and use information using a plurality of information processing devices. An information provider can transmit information and thus provide services to a plurality of information processing devices. In the information providing device, predetermined information including a key necessary for decoding the information and accounting information is stored in a storage section that can exclude unauthorized access from outside.

However, in the system where a key is periodically distributed, since the timing for changing the key and the timing for distributing the key may not be matched, the user may not be able to decode the data.

Even though a signature is provided on the information to be transmitted, an unauthorized action by a person who has a valid key cannot be detected on the basis of the signature.

Also, the user must take predetermined procedures for the contact, and the information provider must investigate whether the contact requested by the user is possible or not. Therefore, the whole procedures are troublesome and it takes a long time to complete the contract. Moreover, if the user who has made a contract took an unauthorized action, it is difficult for the information provider to discover the unauthorized action.

In addition, a user who has a plurality of information processing devices must make a contract and pay the fee for each information processing device. This is troublesome.

Also, if information indicating the details of use are rewritten, the details of use can be changed, for example, to cancel the limitation of the number of times of playback or to enable copy from playback alone, without paying the predetermined fee.

Moreover, the information provider must make a contract and clear accounts for each of the plural users, and must carry out settlement processing and profit calculation processing. This is wasteful.

In addition, in the case where a new equipment is used, a contract must be newly made with the information provider. If, for a certain reason, information stored in the storage section that can exclude unauthorized access from outside is broken, the user cannot use the information despite the contract which he/she made, and the information provider cannot settle accounts as accounting information cannot be used with respect to the information that is already used. Also, if the information stored in the storage section that can exclude unauthorized access from outside is externally stored as it is, the security against unauthorized access is lowered.

Disclosure of the Invention

Thus, in view of the foregoing status of the art, it is an object of the present invention to enable a user to constantly and securely decode encrypted information even in the case where a key is changed at arbitrary timing on the data provider side.

It is another object of the present invention to prevent reading of a key for encrypting information when decoding the information.

It is still another object of the present invention to enable detection of an unauthorized action by a person having a valid key.

It is still another object of the present invention to enable a user to easily make a contract for the offer of information, and to enable a provider to quickly determine whether the contract of the user is possible or not and also to easily confirm an unauthorized action by the contracting user and the validity of information to be transmitted.

It is still another object of the present invention to enable detection of rewriting of information indicating the details of use and enable measures to deal with the rewriting.

It is still another object of the present invention to enable efficient settlement processing and profit calculation processing.

It is a further object of the present invention to enable storage of necessary information to outside while maintaining the security against unauthorized actions.

According to the present invention, in receiving encrypted information, an encrypted first key for decoding the information and a second key for decoding the first key so as to decode the information, the first key is decoded with the second key, and when the first key cannot be decoded, transmission of the second key is requested.

Specifically, according to the present inven-

**EP 1 039 392 A1**

tion, there is provided an information processing device for receiving encrypted information, an encrypted first key for decoding the information and a second key for decoding the first key so as to decode the information, the device comprising: decoding means for decoding the first key with the second key; and request means for requesting transmission of the second key when the decoding means cannot decode the first key.

According to the present invention, there is also provided an information processing method for receiving encrypted information, an encrypted first key for decoding the information and a second key for decoding the first key so as to decode the information, the method comprising: a decoding step of decoding the first key with the second key; and a request step of requesting transmission of the second key when the first key cannot be decoded at the decoding step.

According to the present invention, there is also provided a program providing medium for providing a computer-readable program which causes an information processing device for receiving encrypted information, an encrypted first key for decoding the information and a second key for decoding the first key so as to decode the information, to execute processing comprising: a decoding step of decoding the first key with the second key; and a request step of requesting transmission of the second key when the first key cannot be decoded at the decoding step.

Also, according to the present invention, in receiving encrypted information, an encrypted first key for decoding the information and a second key for decoding the first key so as to decode the information, when an accounting value has reached a predetermined value, transmission of the second key is requested.

Specifically, according to the present invention, there is provided an information processing device for receiving encrypted information, an encrypted first key for decoding the information and a second key for decoding the first key so as to decode the information, the device comprising: accounting means for executing processing for accounting; and request means for requesting transmission of the second key when an accounting value obtained by the accounting means has reached a predetermined value.

According to the present invention, there is also provided an information processing method for receiving encrypted information, an encrypted first key for decoding the information and a second key for decoding the first key so as to decode the information, the method comprising: an accounting step of executing processing for accounting; and a request step of requesting transmission of the second key when an accounting value at the accounting step has reached a predetermined value.

According to the present invention, there is also provided an information providing medium for providing a computer-readable program which causes an information processing device for receiving encrypted information, an encrypted first key for decoding the information and a second key for decoding the first key so as to decode the information, to execute processing comprising: an accounting step of executing processing for accounting; and a request step of requesting transmission of the second key when an accounting value at the accounting step has reached a predetermined value.

Also, according to the present invention, in receiving encrypted information, an encrypted first key for decoding the information and a second key for decoding the first key from a system managed by a predetermined management device so as to decode the information, data specifying an information processing device is stored, and the data specifying the information processing device is transmitted to the management device. When the data specifying the information processing device is transmitted, transmission of the second key is requested.

Specifically, according to the present invention, there is provided an information processing device for receiving encrypted information, an encrypted first key for decoding the information and a second key for decoding the first key from a system managed by a predetermined management device so as to decode the information, the device comprising: storage means for storing data specifying the information processing device; transmission means for transmitting the data specifying the information processing device to the management device; and request means for requesting transmission of the second key when the data specifying the information processing device is transmitted.

According to the present invention, there is also provided an information processing method for receiving encrypted information, an encrypted first key for decoding the information and a second key for decoding the first key from a system managed by a predetermined management device so as to decode the information, the method comprising: a storage step of storing data specifying an information processing device; a transmission step of transmitting the data specifying the information processing device to the management device; and a request step of requesting transmission of the second key when the data specifying the information processing device is transmitted.

According to the present invention, there is also provided a program providing medium for providing a computer-readable program which causes an information processing device for receiving encrypted information, an encrypted first key for decoding the information and a second key for decoding the first key from a system managed by a predetermined management device so as to decode the information, to execute processing comprising: a storage step of storing data specifying the information processing device; a transmission step of transmitting the data specifying the information processing device to the management device; and a request step of requesting transmission of the second key when the data specifying the information processing device is transmitted.

Also, according to the present invention, in an information processing device having first storage means and first decoding means for using encrypted information, an encrypted first key for decoding the information and a second key for decoding the first key so as to decode the information, mutual authentication is carried out and a temporary key is generated. The second key is stored and the first key is decoded with the second key. The first key is encrypted with the temporary key and the first key is decoded with the temporary key. The information is decoded with the first key.

Specifically, according to the present invention, there is provided an information processing device having first storage means and first decoding means for using encrypted information, an encrypted first key for decoding the information and a second key for decoding the first key so as to decode the information, the first storage means comprising first mutual authentication means for carrying out mutual authentication with the first decoding means and for generating a temporary key, second storage means for storing the second key, second decoding means for decoding the first key with the second key, and encryption means for encrypting the first key with the temporary key, and the first decoding means comprising second mutual authentication means for carrying out mutual authentication with the first storage means and for generating a temporary key, third decoding means for decoding the first key with the temporary key, and fourth decoding means for decoding the information with the first key.

According to the present invention, there is also provided an information processing method for an information processing device having storage means and decoding means for using encrypted information, an encrypted first key for decoding the information and a second key for decoding the first key so as to decode the information, the storage means including a first mutual authentication step of carrying out mutual authentication with the decoding means and for generating a temporary key, a storage step of storing the second key, a first decoding step of decoding the first key with the second key, and an encryption step of encrypting the first key with the temporary key, and the decoding means including a second mutual authentication step of carrying out mutual authentication with the first storage means and for generating a temporary key, a second decoding step of decoding the first key with the temporary key, and a third decoding step of decoding the information with the first key.

According to the present invention, there is also provided a program providing medium for providing a computer-readable program with respect to an information processing device having storage means and decoding means for using encrypted information, an encrypted first key for decoding the information and a second key for decoding the first key so as to decode the information, the program causing the storage means to execute processing including a first mutual authentication step of carrying out mutual authentication with the decoding means and for generating a temporary key, a storage step of storing the second key, a first decoding step of decoding the first key with the second key, and an encryption step of encrypting the first key with the temporary key, and the program causing the decoding means to execute processing including a second mutual authentication step of carrying out mutual authentication with the first storage means and for generating a temporary key, a second decoding step of decoding the first key with the temporary key, and a third decoding step of decoding the information with the first key.

Also, according to the present invention, in an information providing system comprising an information providing device for providing encrypted information, an information distribution device for distributing the provided information, an information processing device for decoding and using the distributed information, and a management device for managing the information providing device, the information distribution device and the information processing device, information indicating the handling of information is appended to the encrypted information, which is then transmitted. On the basis of the information indicating the handling of the transmitted information, the use fee of the information is calculated and the use fee is appended to the encrypted information, which is then transmitted. On the basis of the use fee, accounting information corresponding to the use of information is prepared and the accounting information is transmitted together with a part of or all of the information indicating the handling of information and the use fee. From a part of or all of the accounting information, the information indicating the handling of information and the use fee, an unauthorized action is detected.

Specifically, according to the present invention, there is provided an information providing system comprising an information providing device for providing encrypted information, an information distribution device for distributing the provided information, an information processing device for decoding and using the distributed information, and a management device for managing the information providing device, the information distribution device and the information processing device. The information providing device has first transmission means for appending information indicating the handling of information to the encrypted information and for transmitting the resultant information to the information distribution device. The information distribution device has calculation means for calculating the use fee of the information on the basis of the information indicating the handling of the information transmitted from the information providing device, and second transmission means for appending the use fee to the encrypted information and for transmitting the resultant information to the information processing device. The information processing device has accounting information preparation means for preparing accounting information corresponding to the use of the information on the basis of the use fee, and third transmission means for transmitting the accounting information together with a part of or all of the information indicating the handling of information and the use fee to the management device. The management device has detection means for detecting an unauthorized action from a part of or all of the accounting information, the information indicating the handling of information and the use fee.

According to the present invention, there is also provided an information providing method for an information providing system comprising an information providing device for providing encrypted information, an information distribution device for distributing the provided information, an information processing device for decoding and using the distributed information, and a management device for managing the information providing device, the information distribution device and the information processing device. The information providing method for the information providing device includes a first transmission step of appending information indicating the handling of information to the encrypted information and transmitting the resultant information to the information distribution device. The information providing method for the information distribution device includes a calculation step of calculating the use fee of the information on the basis of the information indicating the handling of the information transmitted from the information providing device, and a second transmission step of appending the use fee to the encrypted information and transmitting the resultant information to the information processing device. The information providing method for the information processing device includes an accounting information preparation step of preparing accounting information corresponding to the use of the information on the basis of the use fee, and a third transmission step of transmitting the accounting information together with a part of or all of the information indicating the handling of information and the use fee to the management device. The information providing method for the management device includes a detection step of detecting an unauthorized action from a part of or all of the accounting information, the information indicating the handling of information and the use fee.

According to the present invention, there is also provided a program providing medium for providing a computer-readable program with respect to an information providing system comprising an information providing device for providing encrypted information, an information distribution device for distributing the provided information, an information processing device for decoding and using the distributed information, and a management device for managing the information providing device, the information distribution device and the information processing device. The program causes the information providing device to execute processing including a first transmission step of appending information indicating the handling of information to the encrypted information and transmitting the resultant information to the information distribution device. The program causes the information distribution device to execute processing including a calculation step of calculating the use fee of the information on the basis of the information indicating the handling of the information transmitted from the information providing device, and a second transmission step of appending the use fee to the encrypted information and transmitting the resultant information to the information processing device. The program causes the information processing device to execute processing including an accounting information preparation step of preparing accounting information corresponding to the use of the information on the basis of the use fee, and a third transmission step of transmitting the accounting information together with a part of or all of the information indicating the handling of information and the use fee to the management device. The program causes the management device to execute processing including a detection step of detecting an unauthorized action from a part of or all of the accounting information, the information indicating the handling of information and the use fee.

Also, according to the present invention, in an information providing system comprising an information providing device for providing encrypted information, an information distribution device for distributing the provided information, an information processing device for decoding and using the distributed information, and a management device for managing the information providing device, the information distribution device and the information processing device, information indicating the handling of information is appended to the encrypted information, which is then transmitted to the information distribution device. The received encrypted information and the information indicating the handling of information are transmitted. On the basis of the information indicating the handling of information, use permission information corresponding to the use of information is prepared and is transmitted together with a part of or all of the information indicating the handling of information. An unauthorized action is detected from a part of or all of the use permission information and the information indicating the handling of information.

Specifically, according to the present invention, there is provided an information providing system comprising an information providing device for providing encrypted information, an information distribution device for distributing the provided information, an information processing device for decoding and using the distributed information, and a management device for managing the information providing device, the information distribution device and the information processing device. The information providing device has first transmission means for appending information indicating the handling of information to the encrypted information and then transmitting the resultant information to the information distribution device. The information distribution device has second transmission means for transmitting the encrypted information received from the information providing device and the information indicating the handling of information to the information processing device. The information processing device has use permission information preparation means for preparing use permission information corresponding to the use of the information on the basis of the information indicating the handling of information, and third transmission means for transmitting the use permission information together with a part of or all of the information indicating the handling of information to the management device. The management device has detection means for detecting an unauthorized action from a part of or all of the use permission information and the information indicating the handling of information.

According to the present invention, there is also provided an information providing method for an information providing system comprising an information providing device for providing encrypted information, an information distribution device for distributing the provided information, an information processing device for decoding and using the distributed information, and a management device for managing the information providing device, the information distribution device and the information processing device. The information providing method for the information providing device includes a first transmission step of appending information indicating the handling of information to the encrypted information and then transmitting the resultant information to the information distribution device. The information providing method for the information distribution device includes a second transmission step of transmitting the encrypted information received from the information providing device and the information indicating the handling of information to the information processing device. The information providing method for the information processing device includes a use permission information preparation step of preparing use permission information corresponding to the use of the information on the basis of the information indicating the handling of information, and a third transmission step of transmitting the use permission information together with a part of or all of the information indicating the handling of information to the management device. The information providing method for the management device includes a detection step of detecting an unauthorized action from a part of or all of the use permission information and the information indicating the handling of information.

According to the present invention, there is also provided a program providing medium for providing a computer-readable program with respect to an information providing system comprising an information providing device for providing encrypted information, an information distribution device for distributing the provided information, an information processing device for decoding and using the distributed information, and a management device for managing the information providing device, the information distribution device and the information processing device. The program causes the information providing device to execute processing including a first transmission step of appending information indicating the handling of information to the encrypted information and then transmitting the resultant information to the information distribution device. The program causes the information distribution device to execute processing including a second transmission step of transmitting the encrypted information received from the information providing device and the information indicating the handling of information to the information processing device. The program causes the information processing device to execute processing including a use permission information preparation step of preparing use permission information corresponding to the use of the information on the basis of the information indicating the handling of information, and a third transmission step of transmitting the use permission information together with a part of or all of the information indicating the handling of information to the management device. The program causes the management device to execute processing including a detection step of detecting an unauthorized action from a part of or all of the use permission information and the information indicating the handling of information.

Also, according to the present invention, in managing an information providing device for providing encrypted information and an information processing device for using the information, ID of the information processing device and data indicating the availability of registration with respect to that ID are provided, and the information processing device is registered on the basis of the ID of the information processing device.

Specifically, according to the present invention, there is provided a management device for managing an information providing device for providing encrypted information and an information processing device for using the information, the management device comprising registration means having ID of the information processing device and data indicating the availability of registration with respect to that ID, for registering the information processing device on the basis of the ID of the information processing device.

According to the present invention, there is also provided a management method for managing an information providing device for providing encrypted information and an information processing device for using the information, the management method comprising a registration step of having ID of the information processing device and data indicating the availability of registration with respect to that ID and registering the information processing device on the basis of the ID of the information processing device.

According to the present invention, there is also provided a program providing medium for providing a computer-readable program which causes a management device for managing an information providing device for providing encrypted information and an information processing device for using the information, to execute processing including a registration step of having ID of the information processing device and data indicating the availability of registration with respect to that ID and registering the information processing device on the basis of the ID of the information processing device.

Also, according to the present invention, registration of another information processing device subordinate to an information processing device which is registered to a management device and which uses encrypted information provided from an information providing device is requested.

Specifically, according to the present invention, there is provided an information processing device which is registered to a management device and which uses encrypted information provided from an information providing device, the information processing device comprising registration request means for requesting registration of another information processing device subordinate to the information processing device.

According to the present invention, there is also provided an information processing method for an information providing device which is registered to a management device and which uses encrypted information provided from an information providing device, the method comprising a registration request step of requesting registration of another information processing device subordinate to the information processing device.

According to the present invention, there is also provided a program providing medium for providing a computer-readable program which causes an information providing device which is registered to a management device and which uses encrypted information provided from an information providing device to execute processing including a registration request step of requesting registration of another information processing device subordinate to the information processing device.

Also, according to the present invention, in an information utilization system comprising an information processing device for decoding information encrypted and provided thereto and a management device for managing the information processing device, the management device has ID of the information processing device and data indicating availability of registration with respect to that ID, and registers the information processing device on the basis of the ID of the information processing device. The information processing device requests registration of another information processing device subordinate to the information processing device.

Specifically, according to the present invention, there is provided an information utilization system comprising an information processing device for decoding information encrypted and provided thereto and a management device for managing the information processing device, the management device having registration means having ID of the information processing device and data indicating availability of registration with respect to that ID for registering the information processing device on the basis of the ID of the information processing device, the information processing device having registration request means for requesting registration of another information processing device subordinate to the information processing device.

Also, according to the present invention, there is provided an information processing device which is managed by a management device and is connected to another information processing device and which decodes and uses encrypted information, the information processing device comprising: mutual authentication means for carrying out mutual authentication with the management device and said another information processing device; decoding means for decoding predetermined information; transmission/reception means for transmitting/receiving a registration condition prepared by the management device; storage means for storing the registration condition transmitted/received by the transmission/reception means; and control means for controlling the operation on the basis of the registration condition stored by the storage means.

According to the present invention, there is also provided an information processing method for an information processing device which is managed by a management device and is connected to another information processing device and which decodes and uses encrypted information, the method comprising: a mutual authentication step of carrying out mutual authentication with the management device and said another information processing device; a decoding step of decoding predetermined information; a transmission/reception step of transmitting/receiving a registration condition prepared by the management device; a storage step of storing the registration condition transmitted/received at the transmission/reception step; and a control step of controlling the operation on the basis of the registration condition stored at the storage step.

According to the present invention, there is also provided a program providing medium for providing a computer-readable program which causes an information processing device which is managed by a management device and is connected to another information processing device and which decodes and uses encrypted information, to execute processing comprising: a mutual authentication step of carrying out mutual authentication with the management device and said another information processing device; a decoding step of decoding predetermined information; a transmission/reception step of transmitting/receiving a registration condition prepared by the management device; a storage step of storing the registration condition transmitted/received at the transmission/reception step; and a control step of controlling the operation on the basis of the registration condition stored at the storage step.

Also, according to the present invention, in managing an information processing device which decodes and uses encrypted information, data to be supplied to the information processing device is encrypted, and predetermined processing is executed when a registration condition is transmitted from the information processing device. The registration condition of the information processing device is prepared when executing the predetermined processing, and the prepared registration condition is transmitted to the information processing device.

Specifically, according to the present invention, there is provided a management device for managing an information processing device which decodes and uses encrypted information, the management device comprising: encryption means for encrypting data to be supplied to the information processing device; execution means for executing predetermined processing when a registration condition is transmitted from the information processing device; preparation means for preparing the registration condition of the information processing device when executing the predetermined processing by the execution means; and transmission means for transmitting the registration condition prepared by the preparation means to the information processing device.

According to the present invention, there is also provided a management method for a management device for managing an information processing device which decodes and uses encrypted information, the method comprising: an encryption step of encrypting data to be supplied to the information processing device; an execution step of executing predetermined processing when a registration condition is transmitted from the information processing device; a preparation step of preparing the registration condition of the information processing device when executing the predetermined processing at the execution step; and a transmission step of transmitting the registration condition prepared at the preparation step to the information processing device.

According to the present invention, there is also provided a program providing medium for providing a computer-readable program which causes a management device for managing an information processing device which decodes and uses encrypted information, to execute processing comprising: an encryption step of encrypting data to be supplied to the information processing device; an execution step of executing predetermined processing when a registration condition is transmitted from the information processing device; a preparation step of preparing the registration condition of the information processing device when executing the predetermined processing at the execution step; and a transmission step of transmitting the registration condition prepared at the preparation step to the information processing device.

Also, according to the present invention, in decoding and using encrypted information, information indicating a permission condition for the use of the information is generated, and authentication information of the information indicating the permission condition is generated and stored.

Specifically, according to the present invention, there is provided an information processing device for decoding and using encrypted information, the device comprising: permission information generation means for generating information indicating a permission condition for the use of the information; authentication information generation means for generating authentication information of the information indicating the permission condition; and storage means for storing the authentication information.

According to the present invention, there is also provided an information processing method for decoding and using encrypted information, the method comprising: a permission information generation step of generating information indicating a permission condition for the use of the information; an authentication information generation step of generating authentication information of the information indicating the permission condition; and a storage step of storing the authentication information.

According to the present invention, there is also provided a program providing medium for providing a computer-readable program which causes an information processing device for decoding and using encrypted information to execute processing comprising : a permission information generation step of generating information indicating a permission condition for the use of the information; an authentication information generation step of generating authentication information of the information indicating the permission condition; and a storage step of storing the authentication information.

Also, according to the present invention, in storing information to a loaded information storage medium and using the information, authentication information of related information necessary for the use of the information is generated and stored. Another authentication information is generated from the related information, and coincidence with the stored authentication information is verified. Then, mutual authentication with the information storage medium is carried out.

Specifically, according to the present invention, there is provided an information processing device for storing information to a loaded information storage medium and using the information, the device comprising: authentication information generation means for generating authentication information of related information necessary for the use of the information; storage means for storing the authentication information; verification means for generating another authentication information from the related information and verifying coincidence with the authentication information stored by the storage means; and mutual authentication means for carrying out mutual authentication with the information storage medium.

According to the present invention, there is also provided an information processing method for an information processing device for storing information to a loaded information storage medium and using the information, the method comprising: an authentication information generation step of generating authentication information of related information necessary for the use of the information; a storage step of storing the authentication information; a verification step of generating another authentication information from the related information and verifying coincidence with the authentication information stored at the storage step; and a mutual authentication step of carrying out mutual authentication with the information storage medium.

According to the present invention, there is also provided a program providing medium for providing a computer-readable program which causes an information processing device for storing information to a loaded information storage medium and using the information, to execute processing comprising: an authentication information generation step of generating authentication information of related information necessary for the use of the information; a storage step of storing the authentication information; a verification step of generating another authentication information from the related information and verifying coincidence with the authentication information stored at the storage step; and a mutual authentication step of carrying out mutual authentication with the information storage medium.

According to the present invention, there is also provided an information storage medium for storing encrypted information and being loaded on an information processing device, the medium comprising: authentication information generation means for generating authentication information of related information necessary for the use of the information; storage means for storing the authentication information; verification means for generating another authentication information from the related information and verifying coincidence with the authentication information stored by the storage means; and mutual authentication means for carrying out mutual authentication with the information processing device.

Also, according to the present invention, in collecting instead of an information provider the use fee from a user of information provided by the information provider and distributing the profit to the information provider, data specifying the information and data indicating an amount to be paid to the information provider for the use of the information are stored, and the total amount to be paid to each information provider is calculated on the basis of the stored data. A settlement institution is instructed to settle an account for each information provider on the basis of the profit of each information provider.

Specifically, according to the present invention, there is provided an information processing device for collecting instead of an information provider the use fee from a user of information provided by the information provider and distributing the profit to the information provider, the device comprising: storage means for storing data specifying the information and data indicating an amount to be paid to the information provider for the use of the information; calculation means for calculating the total amount to be paid to each information provider on the basis of the data stored by the storage means; and settlement instruction means for instructing a settlement institution to settle an account for each information provider on the basis of the profit of each information provider.

According to the present invention, there is also provided an information processing method for collecting instead of an information provider the use fee from a user of information provided by the information provider and distributing the profit to the information provider, the method comprising: a storage step of storing data specifying the information and data indicating an amount to be paid to the information provider for the use of the information; a calculation step of calculating the total amount to be paid to each information provider on the basis of the data stored at the storage step; and a settlement instruction step of instructing a settlement institution to settle an account for each information provider on the basis of the profit of each information provider.

According to the present invention, there is also provided a program providing medium for providing a computer-readable program which causes an information processing device for collecting instead of an information provider the use fee from a user of information provided by the information provider and distributing the profit to the information provider, to execute processing comprising: a storage step of storing data specifying the information and data indicating an amount to be paid to the information provider for the use of the information; a calculation step of calculating the total amount to be paid to each information provider on the basis of the data stored at the storage step; and a settlement instruction step of instructing a settlement institution to settle an account for each information provider on the basis of the profit of each information provider.

Also, according to the present invention, in decoding and using encrypted information, mutual authentication is carried out with an external storage medium loaded for managing an information processing device, and predetermined information is encrypted with a predetermined key.

Specifically, according to the present invention, there is provided a management device for managing an information processing device for decoding and using encrypted information, the management device comprising decoding means for decoding data stored in an external storage medium loaded on the information processing device.

According to the present invention, there is also provided a management method for managing an information processing device for decoding and using encrypted information, the method comprising a decoding step of decoding data stored in an external storage medium loaded on the information processing device.

According to the present invention, there is also provided a program providing medium for providing a computer-readable program which causes a management device for managing an information processing device for decoding and using encrypted information to execute processing comprising a decoding step of decoding data stored in an external storage medium loaded on the information processing device.

Also, according to the present invention, in an information utilization system comprising an information processing device for storing predetermined information to an external storage medium loaded thereon and for decoding and using encrypted information, and a management device for managing the information processing device, data stored in the external storage medium loaded on the information processing device is decoded.

Specifically, according to the present invention, there is provided an information utilization system comprising an information processing device for storing predetermined information to an external storage medium loaded thereon and for decoding and using encrypted information, and a management device for managing the information processing device. The information processing device has mutual authentication means for carrying out mutual authentication with the external storage medium loaded thereon, and encryption means for encrypting predetermined information with a public key of the management device. The management device has decoding means for decoding data stored in the external storage medium.

According to the present invention, there is also provided an external storage medium loaded on an information processing device for decoding and using encrypted information, the external storage medium comprising mutual authentication means for carrying out mutual authentication with the information processing device.

Brief Description of the Drawings

Fig. 1 illustrates an EMD (electronic music distribution) system.

Fig.2 is a block diagram showing the functional structure of an EMD service center in the EMD system.

Fig.3 illustrates transmission of a distribution key of the EMD service center.

Fig.4 illustrates transmission of a distribution key of the EMD service center.

Fig.5 illustrates transmission of a distribution key of the EMD service center.

Fig.6 illustrates transmission of a distribution key of the EMD service center.

Fig.7 illustrates a user registration database.

Fig.8 is a block diagram showing the functional structure of a contents provider.

Fig.9 is a block diagram showing the functional structure of a service provider.

Fig.10 is a block diagram showing the structure of a user home network.

Fig.11 is a block diagram showing the structure of a user home network.

Fig.12 illustrates contents and information accompanying the contents.

Fig.13 illustrates a contents provider secure container.

Fig.14 illustrates a certificate of the contents provider.

Fig.15 illustrates a service provider secure container.

Fig.16 illustrates a certificate of the service provider.

Figs.17(A), 17(B) and 17(C) show handling policy, price information, and use permission information.

Figs.18(A) and 18(B) illustrate single copy and multiple copy.

Figs.19(A), 19(B) and 19(C) illustrate handling policy and price information.

Figs.20(A), 20(B) and 20(C) illustrate handling policy, price information, and use permission information.

Fig.21 shows an example of the operation of the EMD service center to collect data necessary for settlement processing.

Fig.22 shows an example of a profit distribution database.

Fig.23 shows an example of a discount table.

Fig.24 shows an example of a user fee table.

Fig.25 illustrates the operation of the EMD service center to receive accounting information from the user home network.

Fig.26 illustrates the operation of the EMD service center for profit distribution processing.

Fig.27 illustrates the operation of the EMD service center to transmit information on contents use results to the JASRAC.

Fig.28 shows the structure of still another embodiment of the user home network 5.

Fig.29 illustrates a storage mode of an external storage section.

Fig.30 illustrates a storage mode of a storage module.

Fig.31 illustrates another storage mode of the external storage section.

Fig.32 illustrates another storage mode of the storage module.

Fig.33 illustrates a storage mode of key data.

Fig.34 illustrates a storage mode of a storage section.

Fig.35 illustrates another storage mode of the key data.

Fig.36 illustrates another storage mode of the storage section.

Fig.37 is a flowchart illustrating the processing for distribution of contents.

Fig.38 is a flowchart illustrating the processing for distribution of contents.

Fig.39 is a flowchart illustrating the processing for transmission of a distribution key from the EMD service center 1 to the contents provider 2.

Fig.40 is a flowchart illustrating the operation of mutual authentication between the contents provider and the EMD service center.

Fig.41 is a flowchart illustrating the operation of mutual authentication between the contents provider 2 and the EMD service center 1.

Fig.42 is a flowchart illustrating the operation of mutual authentication between the contents provider and the EMD service center.

Fig.43 is a flowchart illustrating the processing for registration of a receiver to the EMD service center.

Fig.44 illustrates a certificate of a SAM.

Fig.45 illustrates a registration list.

Fig.46 is a flowchart illustrating the processing for backup of data of the SAM to an IC card.

Fig.47 is a flowchart illustrating the processing for backup of data of the SAM to an IC card.

Fig.48 is a flowchart illustrating the processing for reading backup data of the IC card to a new receiver.

Fig.49 is a flowchart illustrating the processing for reading backup data of the IC card to a new receiver.

Fig.50 is a flowchart illustrating the processing for reading backup data of the IC card to a new receiver.

Fig.51 is a flowchart illustrating the processing in which the receiver registers a subordinate recorder to the EMD service center.

Fig.52 is a flowchart illustrating the processing in which the receiver receives a distribution key from the EMD service center.

Fig.53 is a flowchart illustrating the distribution key reception processing of the recorder.

Fig.54 is a flowchart illustrating the processing in which the contents provider transmits a contents provider secure container to the service provider.

Fig.55 is a flowchart illustrating the processing in which the service provider transmits a service provider secure container to the receiver.

Fig.56 is a flowchart illustrating the accounting processing of the receiver.

Fig.57 is a flowchart illustrating the details of the processing in which the receiver receives an appropriate service provider secure container and carries out accounting.

Fig.58 is a flowchart illustrating the details of the processing in which the receiver receives an appropriate service provider secure container and carries out accounting.

Fig.59 is a flowchart illustrating the processing in which the receiver reproduces contents.

Fig.60 is a flowchart illustrating the processing in which the receiver causes a decoder to reproduce contents.

Fig.61 is a flowchart illustrating the processing for preparing a settlement object of the EMD service center.

Figs.62(A), 62(B), 62(C) and 62(D) illustrate examples of credit settlement objects.

Figs.63(A), 63(B), 63(C) and 63(D) illustrate examples of bank settlement objects.

Figs.64(A), 64(B), 64(C) and 64(D) illustrate examples of credit settlement objects and bank settlement objects.

Fig.65 is a flowchart illustrating the credit settlement processing.

Fig.66 is a flowchart illustrating the bank settlement processing.

Fig.67 illustrates another EMD system.

Fig.68 is another view illustrating a registration list.

Fig.69 is another view illustrating a registration list.

Fig.70 is another view illustrating a registration list.

Fig.71 is a flowchart illustrating the processing for holding a registration list.

Fig.72 is a flowchart illustrating the registration processing of the receiver.

Fig.73 is another view illustrating a registration list.

Fig.74 is a flowchart illustrating the registration processing of the receiver.

Fig.75 is another view illustrating a registration list.

Fig.76 is a flowchart illustrating the distribution key reception processing.

Fig.77 is a flowchart illustrating the details of the processing for encrypting non-encrypted contents supplied from an MD driver and then recording the encrypted contents.

Fig.78 is a flowchart illustrating the processing in which the receiver reproduces contents.

Fig.79 is a flowchart illustrating the processing in which the receiver causes the decoder to reproduce contents.

Fig.80 is a flowchart illustrating the processing for shifting contents from the receiver to the memory stick.

Fig.81 is a flowchart illustrating the processing for shifting contents from the receiver to the memory stick.

Fig.82 is a flowchart illustrating the processing for shifting contents from the receiver to the memory stick.

Fig.83 is a flowchart illustrating the processing for shifting contents from the receiver to the memory stick.

Fig.84 is a flowchart illustrating the processing for shifting contents from the memory stick to the receiver

Fig.85 is a flowchart illustrating the processing for shifting contents from the memory stick to the receiver

Fig.86 is a flowchart illustrating the processing for shifting contents from the memory stick to the receiver

Fig.87 is a flowchart illustrating the processing for shifting contents from the memory stick to the receiver

Fig.88 is a flowchart illustrating the processing in which the receiver reproduces contents stored in the memory stick.

Fig.89 is a flowchart illustrating the processing in which the receiver 51 reproduces contents stored in the memory stick.

Best Mode for Carrying Out the Invention

Preferred embodiments of the present invention will now be described in detail with reference to the drawings.

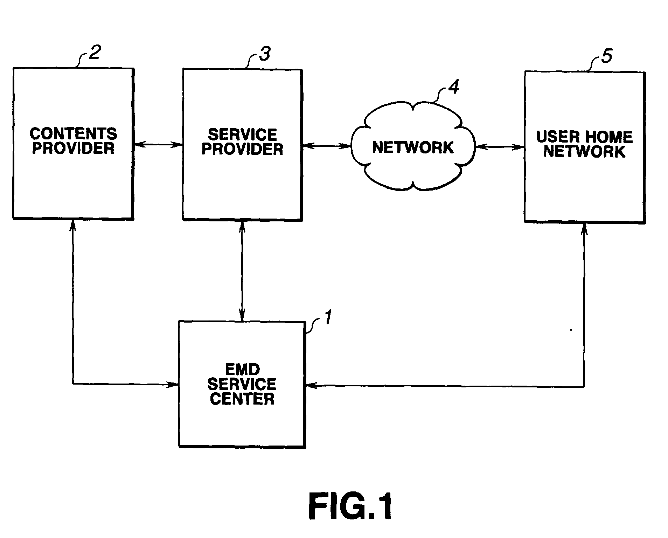

Fig.1 illustrates an EMD (electronic music distribution) system to which the present invention is applied. The contents distributed to users in this system refer to digital data in which information itself has a certain value. Hereinafter, the contents are explained with reference to music data as an example. An EMD service center 1 transmits a distribution key Kd to a contents provider 2, a user home network 5 and the like. The EMD service center 1 receives accounting information corresponding to the use of the contents from the user home network 5, settles accounts for the use fee, and carries out processing for profit distribution to the contents provider 2 and a service provider 3.

The contents provider 2 has digitized contents. The contents provider 2 inserts a watermark into the contents so as to prove that the it owns the contents, then compresses and encrypts the contents, then appends predetermined information thereto, and transmits the resultant information to the service provider 3.

The service provider 3 sets a price to the contents supplied from the contents provider 2 and transmits the contents to the user home network 5 though a network 4 made up of a dedicated cable network, the Internet or a satellite.

The user home network 5 obtains the contents which are priced and sent from the service provider 3. The user home network 5 decodes and reproduces the contents so as to use the contents, and carries out accounting. Accounting information obtained by the accounting is transmitted to the EMD service center 1 when the user home network 5 obtains the distribution key Kd from the EMD service center 1.

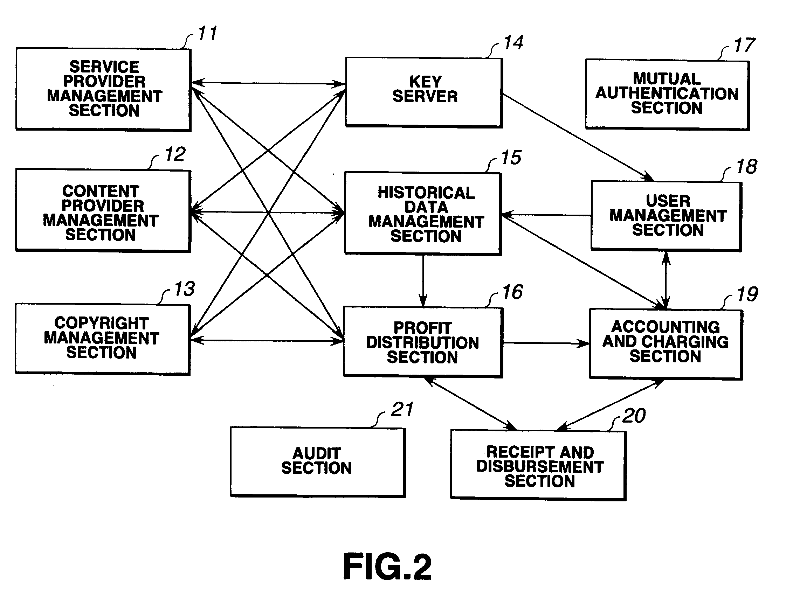

Fig.2 is a block diagram showing the functional structure of the EMD service center 1. A service provider management section 11 supplies information on profit distribution to the service provider 3, and transmits the distribution key Kd to the service provider 3 in the case where the information (handling policy) appended to the contents supplied from the contents provider 2 is encrypted. A contents provider management section 12 transmits the distribution key Kd to the contents provider 2 and supplies the information on profit distribution. A copyright management section 13 transmits information on the result of use of the contents by the user home network 5 to an organization managing the copyright such as JASRAC (Japanese Society for Rights of Authors, Composers and Publishers). A key server 14 stores the distribution key Kd therein and supplies the distribution key Kd to the contents provider 2 or the user home network 5 through the contents provider management section 12 or a user management section 18. The user management section 18 inputs the accounting information, which is the information indicating the result of use of the contents by the user home network 5, the price information corresponding to the contents and the handling policy corresponding to the contents, and causes a historical data management section 15 to store such information.

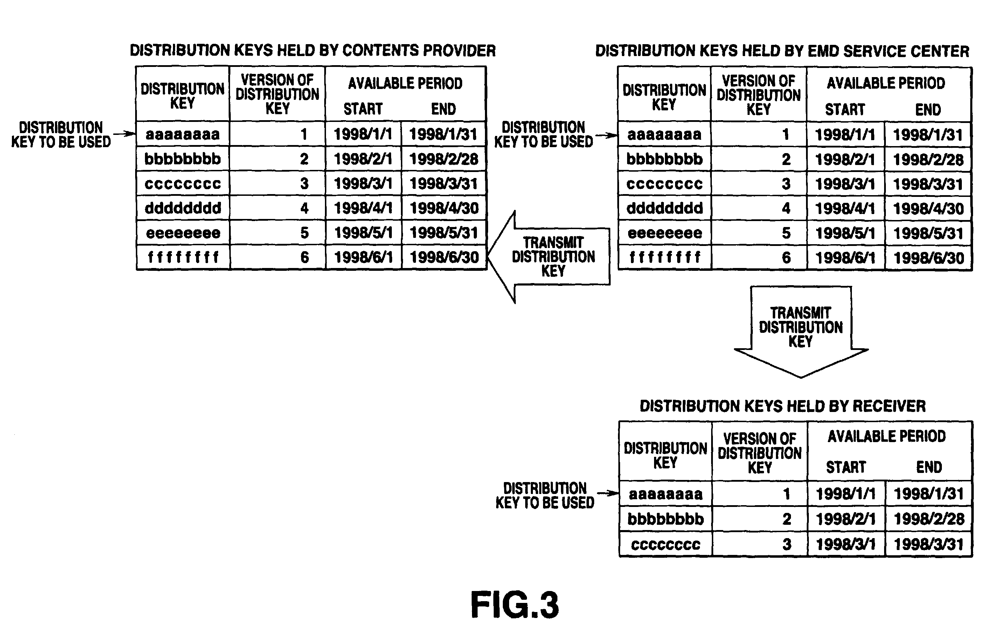

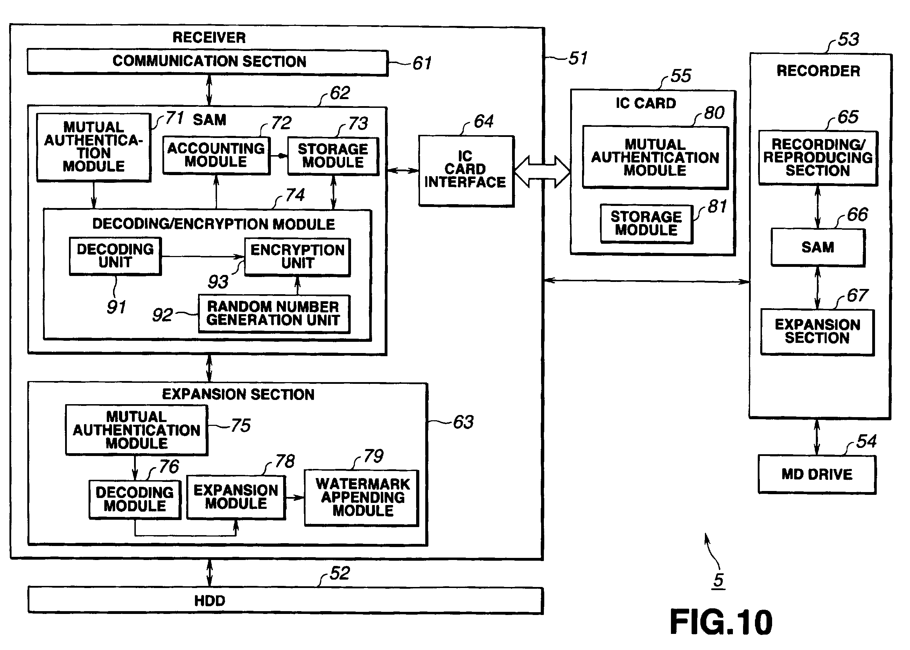

An example of periodical transmission of the distribution key Kd from the EMD service center 1 to the contents provider 2 and a receiver 51 constituting the user home network 5 (later described in detail with reference to Fig. 10) will be described with reference Figs.3 to 6. Fig.3 shows the distribution key Kd held by the EMD service center 1, the distribution key held by the contents provider 2 and the distribution key Kd held by the receiver 5, of January 1998, for the contents provider 2 to start providing the contents and for the receiver 51 constituting the user home network 5 to start using the contents.

In the example of Fig.3, the distribution key Kd is available from the first day to the last day of the calendar month. For example, a distribution key Kd of version 1 having a value of "aaaaaaaa", which is a random number consisting of a predetermined number of bits, is available from January 1, 1998 to January 31, 1998. (That is, a contents key Kco for encrypting the contents distributed from the service provider 3 to the user home network 5 during the period from January 1, 1998 to January 31, 1998 is encrypted with the distribution key Kd of version 1.) Also, a distribution key Kd of version 2 having a value of "bbbbbbbb", which is a random number consisting of a predetermined number of bits, is available from February 1, 1998 to February 28, 1998. (That is, a contents key Kco for encrypting the contents distributed from the service provider 3 to the user home network 5 during that period is encrypted with the distribution key Kd of version 2.) Similarly, a distribution key Kd of version 3 is available in March 1998. A distribution key Kd of version 4 is available in April 1998. A distribution key Kd of version 5 is available in May 1998. A distribution key Kd of version 6 is available in June 1998.

Before the contents provider 2 starts providing the contents, the EMD service center 1 transmits six distribution keys Kd of versions 1 to 6, which are available from January 1998 to June 1998, to the contents provider 2. The contents provider 2 receives and stores the six distribution keys Kd. The reason for storing the distribution keys Kd for six months is that the contents provider 2 needs a predetermined period in preparation for encryption of the contents and contents key before providing the contents.

Before the receiver 51 starts using the contents, the EMD service center 1 transmits three distribution keys Kd of versions 1 to 3, which are available from January 1998 to March 1998, to the receiver 51. The receiver 51 receives and stores the three distribution keys Kd. The purpose of storing the distribution keys Kd for three months is for the receiver 51 to avoid such a situation that the contents cannot be used even during a contract period in which the contents are usable, because of a trouble such as failure to connect to the EMD service center 1. Also, the purpose of storing the distribution keys Kd for three months is to lower the frequency of connection to the EMD service center 1 and to reduce the load on the user home network 5.

During the period from January 1, 1998 to January 31, 1998, the distribution key Kd of version 1 is used by the EMD service center 1, the contents provider 2, and the receiver 51 constituting the user home network 5.

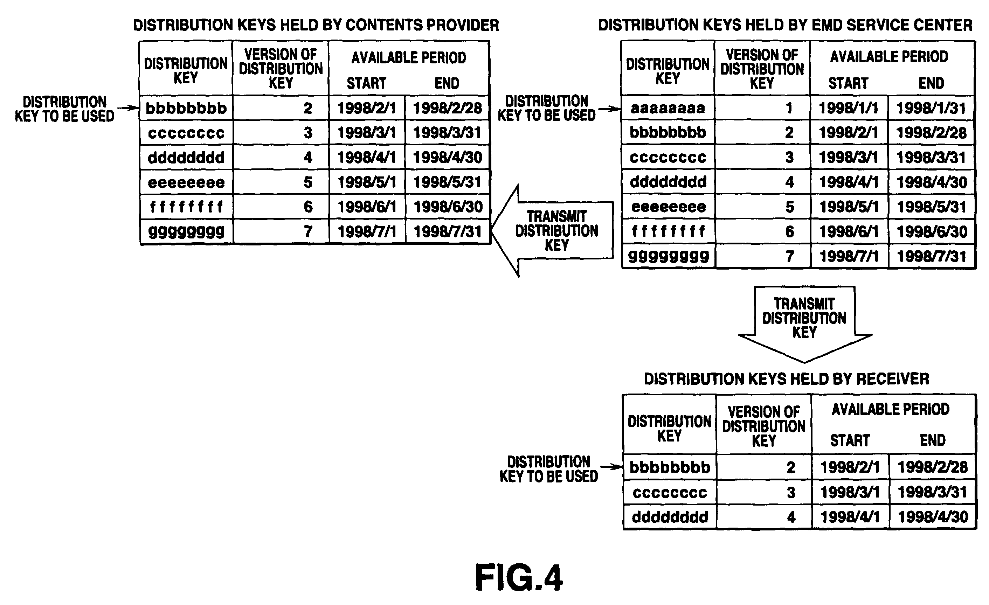

Transmission of the distribution key Kd from the EMD service center 1 to the contents provider 2 and the receiver 51 on February 1, 1998 will now be described with reference to Fig.4. The EMD service center 1 transmits six distribution keys Kd of versions 2 to 7, which are available from February 1998 to July 1998, to the contents provider 2. The contents provider 2 receives the six distribution keys Kd, then overwrites the distribution keys Kd stored before this reception, and thus stores the new distribution keys Kd. The EMD service center 1 transmits three distribution keys Kd of versions 2 to 4, which are available from February 1998 to April 1998, to the receiver 51. The receiver 51 receives the three distribution keys Kd, then overwrites the distribution keys Kd stored before this reception, and thus stores the new distribution keys Kd. The EMD service center 1 stores the distribution key Kd of version 1 as it is. This is because the distribution key that was used in the past is to be made available when any unexpected trouble occurs or when an unauthorized action is generated or discovered.

During the period from February 1, 1998 to February 28, 1998, the distribution key Kd of version 2 is used by the EMD service center 1, the contents provider 2, and the receiver 51 constituting the user home network 5.

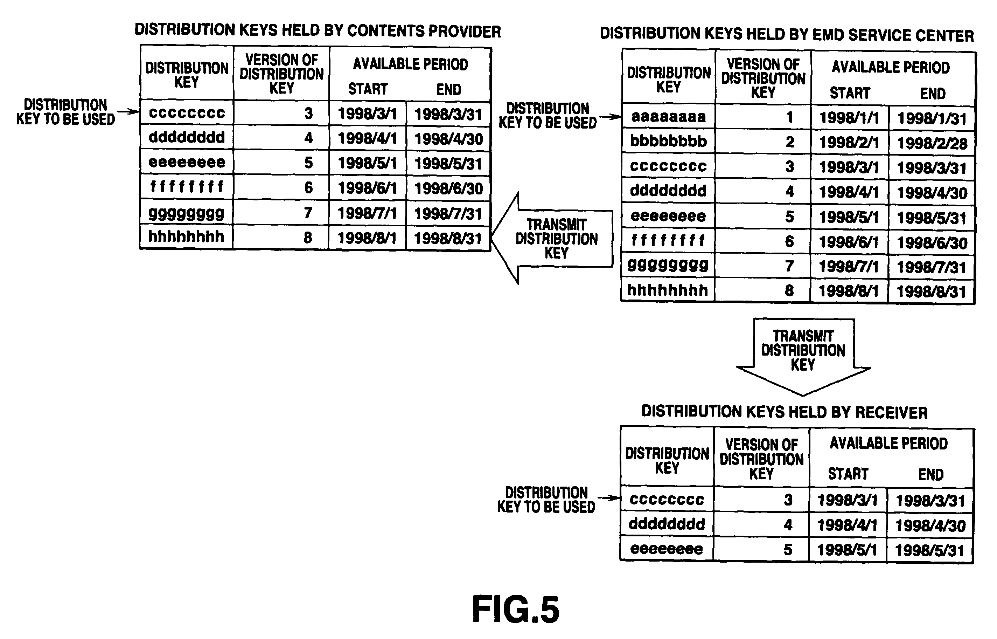

Transmission of the distribution key Kd from the EMD service center 1 to the contents provider 2 and the receiver 51 on March 1, 1998 will now be described with reference to Fig.5. The EMD service center 1 transmits six distribution keys Kd of versions 3 to 8, which are available from March 1998 to August 1998, to the contents provider 2. The contents provider 2 receives the six distribution keys Kd, then overwrites the distribution keys Kd stored before this reception, and thus stores the new distribution keys Kd. The EMD service center 1 transmits three distribution keys Kd of versions 3 to 5, which are available from March 1998 to May 1998, to the receiver 51. The receiver 51 receives the three distribution keys Kd, then overwrites the distribution keys Kd stored before this reception, and thus stores the new distribution keys Kd. The EMD service center 1 directly stores the distribution key Kd of version 1 and the distribution key Kd of version 2.

During the period from March 1, 1998 to March 31, 1998, the distribution key Kd of version 3 is used by the EMD service center 1, the contents provider 2, and the receiver 51 constituting the user home network 5.

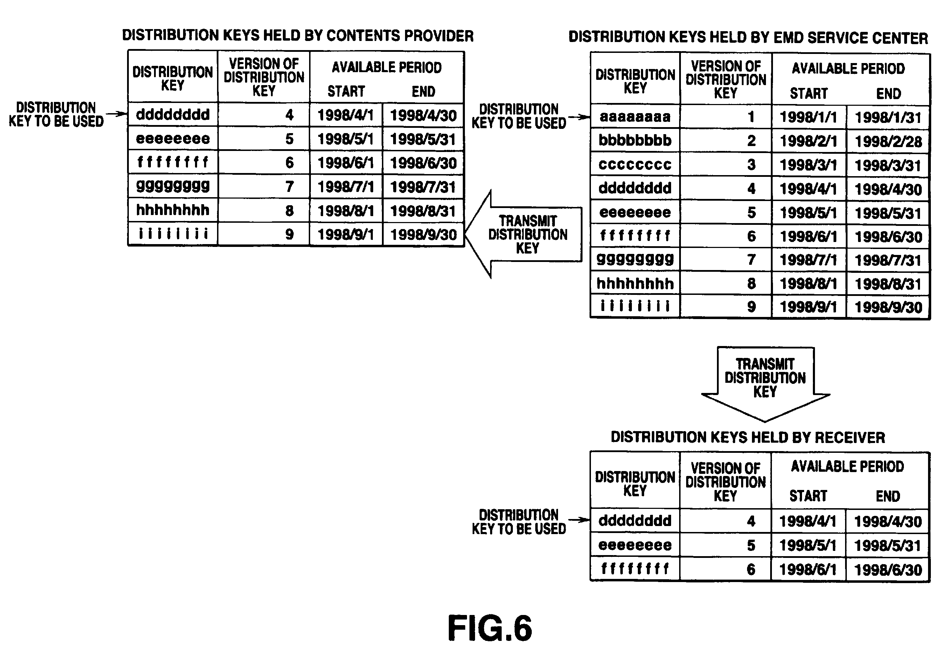

Transmission of the distribution key Kd from the EMD service center 1 to the contents provider 2 and the receiver 51 on April 1, 1998 will now be described with reference to Fig.6. The EMD service center 1 transmits six distribution keys Kd of versions 4 to 9, which are available from April 1998 to September 1998, to the contents provider 2. The contents provider 2 receives the six distribution keys Kd, then overwrites the distribution keys Kd stored before this reception, and thus stores the new distribution keys Kd. The EMD service center 1 transmits three distribution keys Kd of versions 4 to 6, which are available from April 1998 to June 1998, to the receiver 51. The receiver 51 receives the three distribution keys Kd, then overwrites the distribution keys Kd stored before this reception, and thus stores the new distribution keys Kd. The EMD service center 1 directly stores the distribution key Kd of version 1, the distribution key Kd of version 2 and the distribution key Kd of version 3.

During the period from April 1, 1998 to April 30, 1998, the distribution key Kd of version 4 is used by the EMD service center 1, the contents provider 2, and the receiver 51 constituting the user home network 5.

Thus, as the distribution keys Kd for the subsequent months are distributed in advance, the user can access the center to receive the key at user's convenience even though the user has never accessed the center for the past one or two months.

A profit distribution section 16 calculates the profit of the EMD service center 1, the contents provider 2 and the service provider 3 on the basis of the accounting information, price information and handling policy supplied from the historical data management section 15. A mutual authentication section 17 carries out mutual authentication with the contents provider 2, the service provider 3 and a predetermined equipment of the user home network 5 as will be described later.

The user management section 18 has a user registration database. When registration of the equipment of the user home network 5 is requested, the user management section 18 retrieves the user registration database and carries out processing to register that equipment in accordance with the recorded contents or to reject the registration. In the case where the user home network 5 is constituted by a plurality of equipments having functions to enable connection with the EMD service center 1, the user management section 18 designates an equipment for settlement in accordance with the result of processing to discriminate whether registration is possible or not, and transmits a registration list prescribing the condition for the use of the contents to the predetermined equipment of the user home network 5.

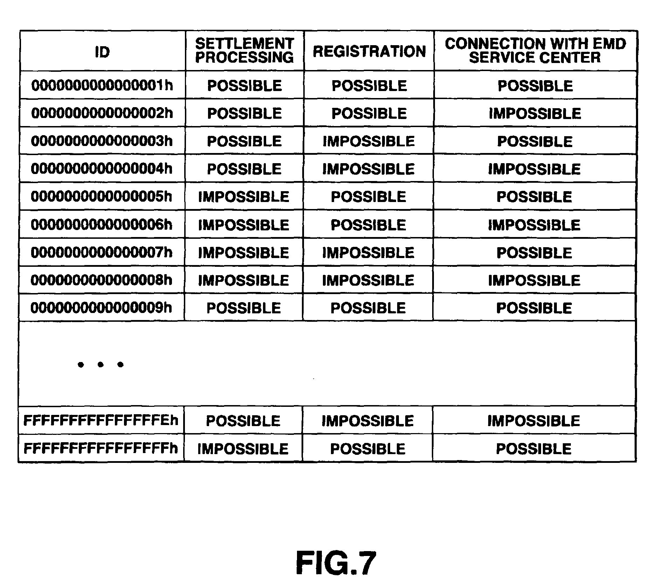

In an example of the user registration database shown in Fig.7, ID (identification data) consisting of 64 bits proper to the equipment of the user home network 5 is recorded, and in accordance with the ID (that is, for each equipment having that ID), information is recorded such as whether settlement processing is possible or not, whether registration is possible or not, and whether connection with the EMD service center 1 is possible or not. The information as to whether registration is possible or not, which is recorded on the user registration database, is updated at a predetermined time interval on the basis of information on arrears and unauthorized processing supplied from the settlement institution (e.g., bank) or the service provider 3. With respect to the request for registration of an equipment having the ID recorded as being non-registrable, the user management section 18 rejects the registration and the equipment of the rejected registration no longer can use the contents of this system.

The information as to whether settlement processing is possible or not, which is recorded on the user registration database, indicates whether the equipment can carry out settlement. In the case where the user home network 5 is constituted by a plurality of equipments that can reproduce or copy the contents, one of these equipments which can carry out settlement processing outputs the accounting information, price information and handling policy of all the equipments of the user home network 5 that are registered to the EMD service center 1. The information as to whether connection with the EMD service center 1 is possible or not, which is recorded on the user registration database, indicates whether the equipment can be connected with the EMD service center 1 or not. An equipment recorded as being non-connectable outputs the accounting information and the like to the EMD service center 1 via another equipment of the user home network 5.

Also, the user management section 18 is supplied with the accounting information, price information and handling policy from the equipment of the user home network 5, and outputs the information to the historical data management section 15. The user management section 18 further supplies the distribution key Kd to the equipment of the user home network 5 through predetermined processing (at predetermined timing).

An accounting and charging section 19 calculates the charge to the user on the basis of the accounting information, price information and handling policy supplied from the historical data management section 15, and supplies the result of calculation to a receipt and disbursement section 20. The receipt and disbursement section 20 communicates with an external bank or the like, not shown, and executes settlement processing on the basis of the disbursement to the contents provider 2 and the service provider 3 and the use fee to be collected from the user. An audit section 21 audits the validity (that is, absence of unauthorized actions) of the accounting information, price information and handling policy supplied from the equipment of the user home network 5.

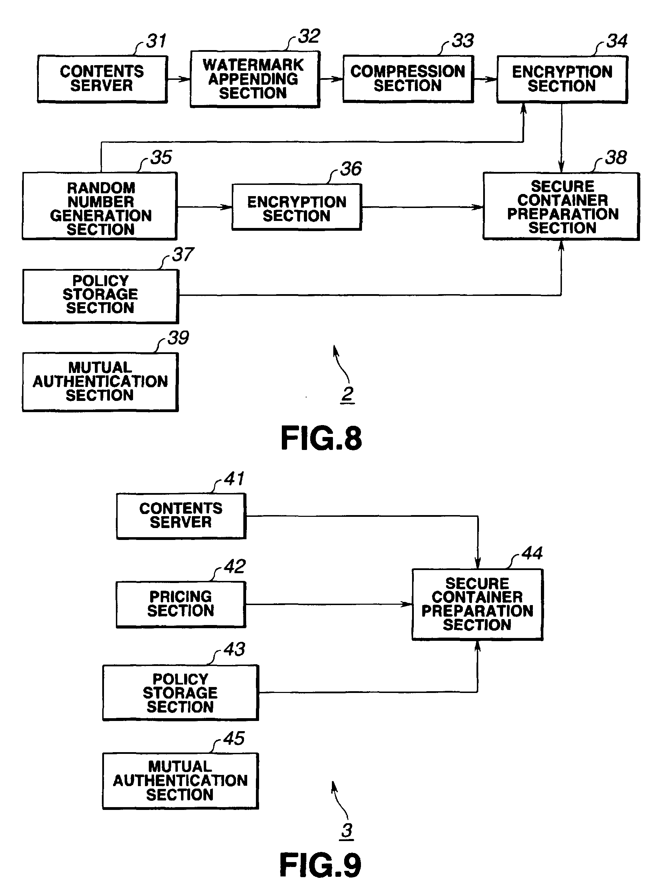

Fig.8 is a block diagram showing the functional structure of the contents provider 2. A contents server 31 stores the contents to be supplied to the user and supplies the contents to a watermark appending section 32. The watermark appending section 32 appends a watermark to the contents supplied from the contents server 31 and supplies the contents to a compression section 33. The compression section 33 compresses the contents supplied from the watermark appending section 32 in accordance with a system such as ATRAC (Adaptive Transform Acoustic Coding 2: trademark) and supplies the resultant contents to an encryption section 34. The encryption section 34 encrypts the contents compressed by the compression section 33, using a random number generated by a random number generation section 35 as a key (this random number is hereinafter referred to as a contents key Kco), and outputs the result to a secure container preparation section 38.

Although in this embodiment, the contents are compressed in accordance with the ATRAC system, the compression system is not limited to the ATRAC system. If the contents are music or the like, a compression system such as ACC (Advanced Audio Coding) or MP3 (MPEG-1 Audio Layer 3) is used. If the contents are images or the like, a compression system such as MPEG (Moving Picture Experts Group) or JPEG (Joint Photographic Coding Experts Group) is used.

The random number generation section 35 supplies a random number consisting of a predetermined number of bits as a contents key to the encryption section 34 and an encryption section 36. The encryption section 36 encrypts the contents key Kco with the distribution key Kd supplied from the EMD service center 1 in accordance with a common key encryption system such as DES, and outputs the result to the secure container preparation section 38.

DES is an encryption system for processing 64 bits of a plaintext as one block using a 56-bit common key. The DES processing includes a part (data stirring part) for stirring a plaintext to transform it to a cryptogram, and a part (key processing part) for generating a key (enlargement key) used by the data stirring part from the common key. Since all the algorithms of DES are made public, the basic processing of the data stirring part is briefly described here.

First, 64 bits of a plaintext is split into H0 of upper 32 bits and L0 of lower 32 bits. A 48-bit enlargement key K1 supplied from the key processing part and L0 of lower 32 bits are used as inputs, and an output of an F-function obtained by stirring L0 of lower 32 bits is calculated. The F-function includes two types of basic transform, that is, "substitution" for substituting the numeric value in accordance with predetermined rules, and "transposition" for transposing the bit position in accordance with predetermined rules. Subsequently, an exclusive OR of H0 of upper 32 bits and the output of the F-function is calculated, and the result thereof is set as L1. L0 is changed to H1.

The foregoing processing is repeated 16 times on the basis of H0 of upper 32 bits and L0 of lower 32 bits, and the resultant H16 of upper 32 bits and L16 of lower 32 bits are outputted as a cryptogram. Decoding is realized by inversely following the foregoing procedure using the common key used for encryption.

A policy storage section 37 stores the handling policy for the contents and outputs the handling policy to the secure container preparation section 38 in accordance with the contents to be encrypted. The secure container preparation section 38 prepares a contents provider secure container which includes the encrypted contents, the encrypted contents key Kco, the handling policy, a signature prepared by calculating a hash value of these data, and a certificate of a public key Kpcp of the contents provider 2, and supplies the contents provider secure container to the service provider 3. A mutual authentication section 39 carries out mutual authentication with the EMD service center 1 before receiving the distribution key Kd supplied from the EMD service center 1, and carries out mutual authentication with the service provider 3 before transmitting the contents provider secure container to the service provider 3.

The signature is appended to the data or a certificate, which will be described later, and is intended to carry out check of any tampering and authentication of a producer. The signature is prepared by calculating a hash value using a hash function based on the data to be transmitted and then encrypting the hash value with a secret key for public key encryption.

The collation of the hash function and the signature will now be described. The hash function is a function for using predetermined data to be transmitted as an input, then compressing the data to data of a predetermined bit length, and outputting the resultant data as a hash value. In the hash function, it is difficult to predict the input from the hash value (output). When one bit of the data inputted to the hash function is changed, a number of bits of the hash value change and it is difficult to find out input data having the same hash value.

A receiver who has received the signature and data decodes the signature with the public key for public key encryption, and thus obtains the result (hash value). Moreover, the hash value of the received data is calculated and it is determined whether or not the calculated hash value is equal to the hash value obtained by decoding the signature. If it is determined that the hash value of the transmitted data and the decoded hash value are equal to each other, it is understood that the received data has not been tampered and is the data transmitted from a transmitter who holds the secret key corresponding to the public key. As the hash function of the signature, MD4, MD5, SHA-1 and the like are used.

Public key encryption will now be described. The public key encryption system uses different keys for encryption and for decoding, while the common key encryption system uses the same key (common key) for encryption and decoding. In the case where public key encryption is employed, one of the keys can be kept secret though the other one is made public. The key which may be made public is referred to as public key, and the key which should be kept secret is referred to as secret key.

RSA (Rivest-Shamir-Adleman) encryption, which is typical public key encryption, will be briefly described. First, two sufficiently large prime numbers "p" and "q" are found, and the product "n" of "p" and "q" is found. The least common multiple L of(p-1) and (q-1) is calculated, and a number "e" which is not less than 3 and less than L and which is a prime with respect to L is found. (That is, the only number that can divide both "e" and "L" is 1.)

Next, a multiplication inverse element "d" of "e" related to multiplication using L is found. Specifically, "

$$ed \equiv 1 \bmod L$$

" holds with respect to "d", "e" and "L". "d" can be calculated by the Euclidean algorithm. In this case, "n" and "e" are made public keys, and "p", "q" and "d" are made secret keys.

A cryptogram C is calculated by processing an equation (1) from a plaintext M.

$$C = M^e \bmod n \qquad (1)$$

The cryptogram C is decoded to the plaintext M by processing an equation (2).

$$M = C^d \bmod n \qquad (2)$$

Although proof is not given, the transform of a plaintext to a cryptogram by RSA encryption and decoding thereof are based on the Fermat's theorem, which leads to the following equation (3).

$$M = C^d = (M^e)^d = M^{(ed)} \bmod n \qquad (3)$$

If the secret keys "p" and "q" are known, the secret key "d" can be calculated from the public key "e". However, if the number of digits of the public key "n" is increased to such an extent that resolution into prime factors of the public key "n" is difficult in terms of computational complexity, knowing the public key "n" alone is not enough to calculate the secret key "d" from the public key "e" and therefore decoding cannot be carried out. As described above, in RSA encryption, the key used for encryption and the key for decoding can be made different.

Another example of public key encryption, that is, elliptic curve encryption, will be briefly described. A point on an elliptic curve "$y^2 = x^3 + ax + b$" is referred to as B. Addition of the point on the elliptic curve is defined, and nB expresses the result of addition of B for n times. Subtraction is similarly defined. It is proven to be difficult to calculate "n" from B and nB. B and nB are made public keys and "n" is made a secret key. Using a random number "r", cryptograms C1 and C2 are calculated from the plaintext M by processing equations (4) and (5) with the public keys.

$$C1 = M + rnB \qquad (4)$$

$$C2 = rB \qquad (5)$$

The cryptograms C1 and C2 are decoded to the plaintext M by processing an equation (6).

$$M = C1 - nC2 \qquad (6)$$

Only the cryptogram having the secret key "n" can be decoded. As described above, in elliptic curve encryption, similar to RSA encryption, the key used for encryption and the key for decoding can be made different.

Fig.9 is a block diagram showing the functional structure of the service provider 3. A contents server 41 stores the encrypted contents supplied from the contents provider 2, and supplies the contents to a secure container preparation section 44. A pricing section 42 prepares price information based on the handling policy corresponding to the contents and supplies the price information to the secure container preparation section 44. A policy storage section 43 stores the handling policy for the contents supplied from the contents provider 2, and supplies the handling policy to the secure container preparation section 44. A mutual authentication section 45 carries out mutual authentication with the contents provider 2 before receiving the contents provider secure container supplied from the contents provider 2, and carries out mutual authentication with the user home network 5 before transmitting the service provider secure container to the user home network 5. In the case where the contents provider 2 encrypts the handling policy with the distribution key Kd and then supplies the handling policy, the mutual authentication section 45 carries out mutual authentication with the EMD service center 1 before receiving the distribution key Kd supplied from the EMD service center 1.

Fig. 10 is a block diagram showing the structure of the user home network 5. The receiver 51 receives the service provider secure container including the contents from the service provider 3 via the network 4, and decodes and expands the contents so as to reproduce the contents.

A communication section 61 communicates with the service provider 3 or the EMD service center 1 via the network 4, and receives or transmits predetermined information. A SAM (secure application module) 62 carries out mutual authentication with the service provider 3 or the EMD service center 1, decodes encrypted contents or encrypts contents, and stores the distribution key Kd and the like. An expansion section 63 decodes encrypted contents, expands the contents in accordance with the ATRAC system, and inserts a predetermined watermark into the contents. An IC (integrated circuit) card interface 64 changes a signal from the SAM 62 to a predetermined format and outputs the resultant signal to an IC card 55 loaded in the receiver 51. The IC card interface 64 also changes a signal from the IC card 55 to a predetermined format and outputs the resultant signal to the SAM 62.

The SAM 62, which carries out mutual authentication with the service provider 3 or the EMD service center 1, which carries out accounting, which decodes and encrypts the contents key Kco, and which stores predetermined data such as use permission information, includes a mutual authentication module 71, an accounting module 72, a storage module 73, and a decoding/encryption module 74. This SAM 62 is constituted by a single-chip dedicated IC for encryption processing, having a multilayer structure in which an internal memory cell is held between dummy layers such as aluminum layers. Also, the SAM 62 has a characteristic (tamper resistance) such as a narrow width of operating voltage or frequency, which prevents unauthorized data reading from outside.

The mutual authentication module 71 carries out mutual authentication with the service provider 3 or the EMD service center 1, and if necessary, supplies a temporary key Ktemp (session key) to the decoding/encryption module 74. The accounting module 72 generates the use permission information and accounting information from the handling policy and price information included in the service provider secure container received from the service provider 3, and outputs the use permission information and accounting information to the storage module 73 or an HDD (hard disk drive) 52. The storage module 73 stores the data such as the accounting information and the distribution key Kd supplied from the accounting module 72 or the decoding/encryption module 74, and supplies the data such as the distribution key Kd when another functional block executes predetermined processing.

The decoding/encryption module 74 includes a decoding unit 91, a random number generation unit 92, and an encryption unit 93. The decoding unit 91 decodes the encrypted contents key Kco with the distribution key Kd and outputs the decoded contents key Kco to the encryption unit 93. The random number generation unit 92 generates a random number of a predetermined number of digits and outputs it as a save key Ksave to the encryption unit 93 and the storage module 73. However, if the random number is once generated and held, generation of the random number is no longer necessary. The encryption unit 93 re-encrypts the decoded contents key Kco with the save key Ksave and outputs the re-encrypted contents key Kco to the HDD 52. When transmitting the contents key Kco to the expansion section 63, the encryption unit 93 encrypts the contents key Kco with the temporary key Ktemp.

The expansion section 63, which decodes and expands the contents and which appends a predetermined watermark to the contents, includes a mutual authentication module 75, a decoding module 76, an expansion module 78, and a watermark appending module 79. The mutual authentication module 75 carries out mutual authentication with the SAM 62 and outputs the temporary key Ktemp to the decoding module 76. The decoding module 76 decodes the contents key Kco which is outputted from the SAM 62 and encrypted with the temporary key Ktemp, with the temporary key Ktemp. Moreover, the decoding module 76 decodes the contents recorded on the HDD 52 with the contents key Kco and outputs the decoded contents to the expansion module 78. The expansion module 78 expands the decoded contents in accordance with the ATRAC system or the like and outputs the expanded contents to the watermark appending module 79. The watermark appending module 79 inserts into the contents a predetermined watermark specifying the receiver 51, and outputs the resultant contents to a recorder 53 or a speaker not shown, so as to reproduce music.

The HDD 52 records the contents supplied from the service provider 3. Although the HDD 52 is described as being independent in Fig. 10, it may be integrally formed as a matter of course. The recorder 53, which records and reproduces the contents supplied from the service provider 3 to and from an optical disc (not shown) loaded therein, includes a recording/reproducing section 65, a SAM 66, and an expansion section 67. The recording/reproducing section 65 has an optical disc loaded thereon, and records contents to and reproduces contents from the optical disc. The SAM 66 has the same function as the SAM 62 and therefore will not be described further in detail. The expansion section 67 has the same function as the expansion section 63 and therefore will not be described further in detail. An MD (Mini Disk: trademark) driver 54 records and reproduces the contents supplied from the service provider 3 to and from an MD loaded thereon, not shown.

The IC card 55 is loaded on the receiver 51 and stores predetermined data such as the distribution key Kd stored in the storage module 73 and the equipment ID. For example, in the case where the user wants to purchase a new receiver 51 to substitute for the receiver 51 that has been used, the user first stores onto the IC card 55 the predetermined data such as the distribution key Kd stored in the storage module 73 of the receiver 51 that has been used. Then, the user loads the IC card 55 onto the new receiver 51 and operates the receiver 51 to register the new receiver 51 to the user management section 18 of the EMD service center 1. The user management section 18 of the EMD service center 1 retrieves data such as the user's name and the credit card number used for payment of the fee from the database held in the user management section 18 on the basis of the data (such as ID of the receiver 51 that has been used) stored on the IC card 55, and executes registration processing on the basis of the retrieved data. Therefore, the user need not carry out troublesome input of data. The IC card 55 includes a mutual authentication module 80 and a storage module 81. The mutual authentication module 80 carries out mutual authentication with the SAM 62. The storage module 81 stores the data supplied from the SAM 62 via the IC card interface 64 and outputs the stored data to the SAM 62.

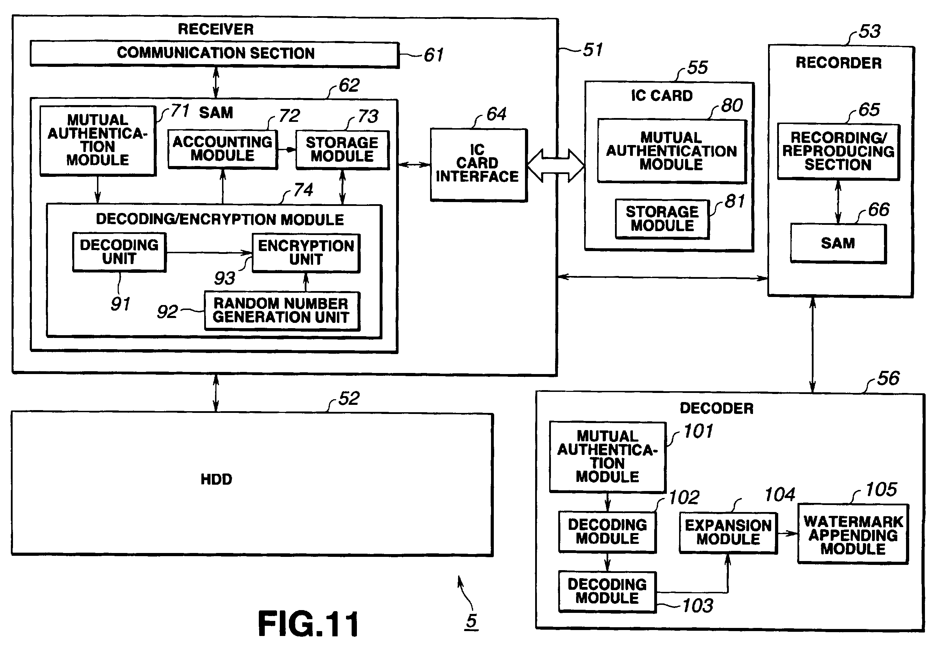

Fig. 11 is a block diagram showing another exemplary structure of the user home network 5. In a receiver 51 and a recorder 53 of this structure, the expansion section 63 of the receiver 51 and the expansion section 67 of the recorder 53 shown in Fig. 10 are not provided. Instead, a decoder 56 connected to the recorder 53 has the same function as the expansion section 63 or the expansion section 67. The other parts of the structure are the same as those shown in Fig. 10.

The decoder 56, which decodes and expands the contents and which appends a predetermined watermark to the contents, includes a mutual authentication module 101, a decoding module 102, a decoding module 103, an expansion module 104, and a watermark appending module 105. The mutual authentication module 101 carries out mutual authentication with the SAM 62 or the SAM 66 and outputs the temporary key Ktemp to the decoding module 102. The decoding module 102 decodes the contents key Kco which is outputted from the SAM 62 and encrypted with the temporary key Ktemp, with the temporary key Ktemp, and outputs the decoded contents key Kco to the decoding module 103. The decoding module 103 decodes the contents recorded on the HDD 52 with the contents key Kco and outputs the decoded contents to the expansion module 104. The expansion module 104 expands the decoded contents in accordance with the ATRAC system or the like and outputs the expanded contents to the watermark appending module 105. The watermark appending module 105 inserts into the contents a predetermined watermark specifying the decoder 56, and outputs the resultant contents to the recorder 53 or a speaker not shown, so as to reproduce music.

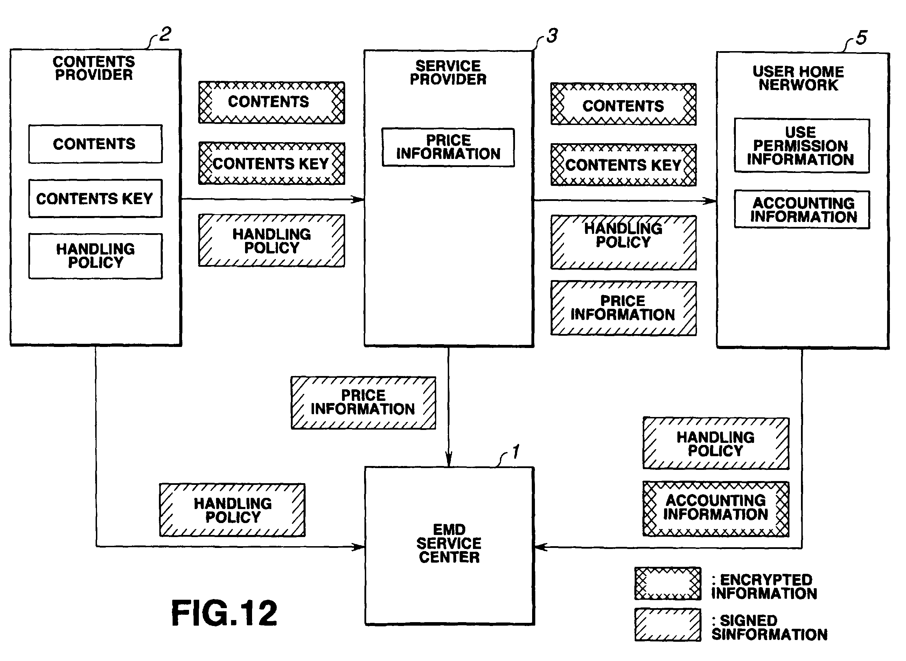

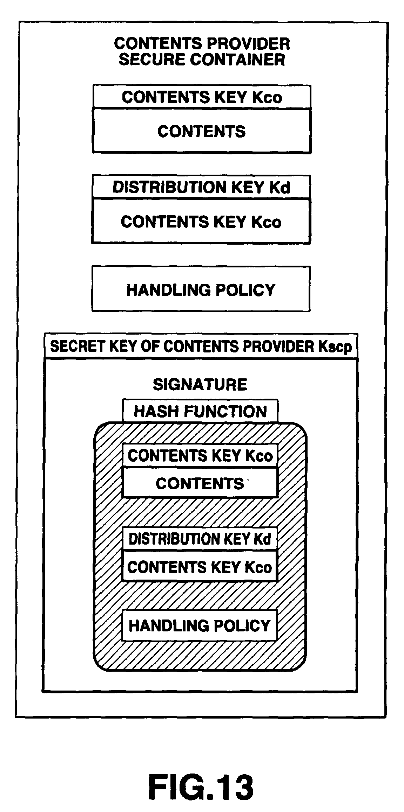

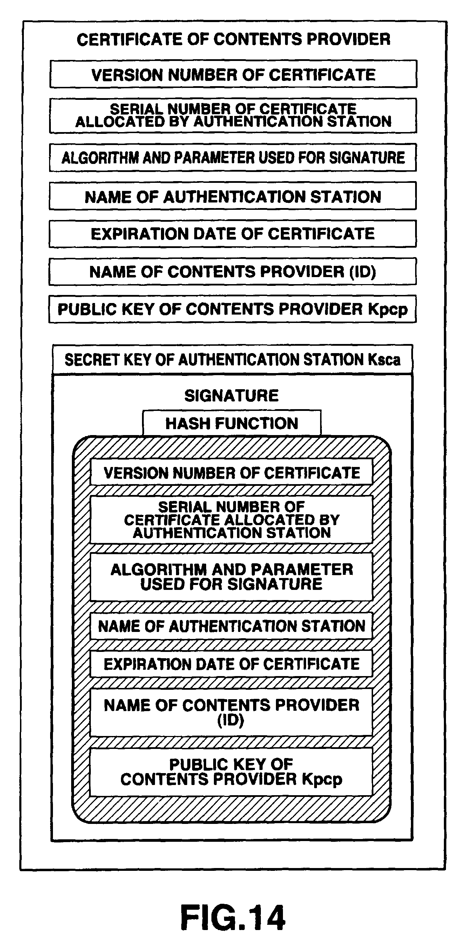

Fig. 12 illustrates information transmitted and received among the EMD service center 1, the contents provider 2, the service provider 3 and the user home network 5. The contents provider 2 stores the encrypted contents, encrypted contents key Kco, handling policy and signature into the contents provider secure container (which will be later described in detail with reference to Fig. 13). Also, the contents provider 2 appends a certificate of the contents provider 2 (which will be later described in detail with reference to Fig. 14) to the contents provider secure container, and transmits the resultant contents provider secure container to the service provider 3. The contents provider 2 also appends a certificate of the contents provider 2 to the handling policy and signature, if necessary, and transmits the resultant information to the EMD service center 1.

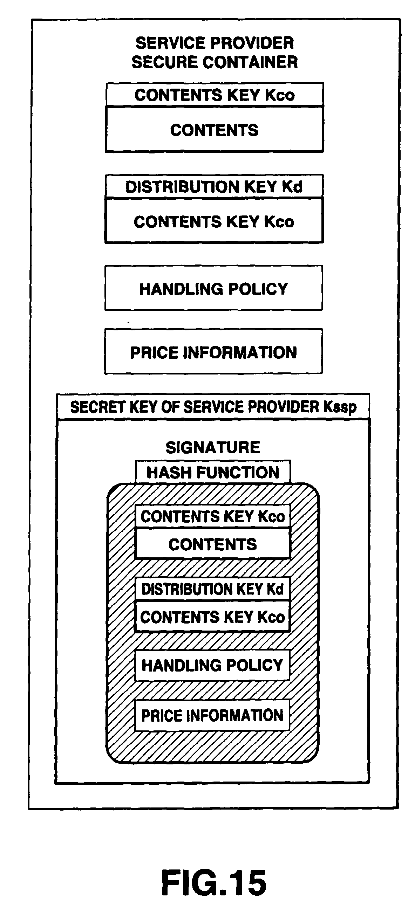

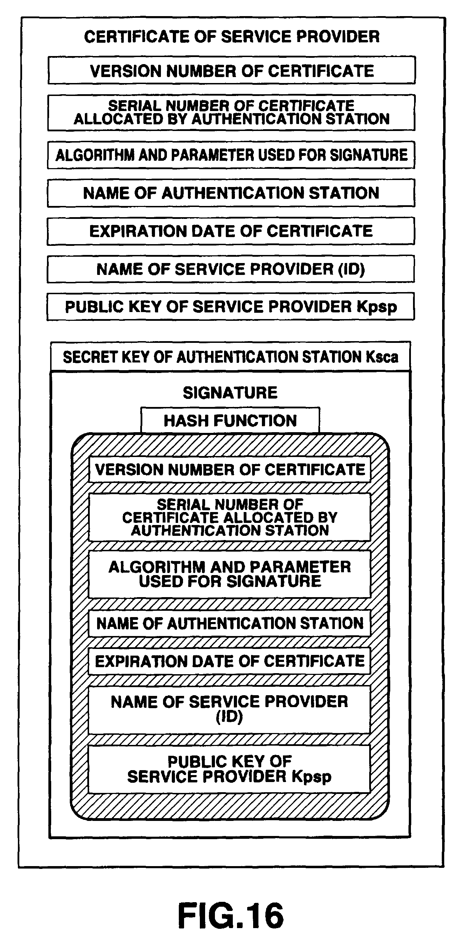

The service provider 3 verifies the received certificate of the contents provider 2, obtains the public key Kpcp of the contents provider 2, and verifies the signature of the received contents provider secure container. After succeeding in verification of the signature, the service provider 3 takes out the handling policy from the contents provider secure container and generates price information based on the handling policy. Further, the service provider 3 stores the encrypted contents, encrypted contents key Kco, handling policy, price information and signature into the service provider secure container (which will be later described in detail with reference to Fig. 15). Also, the service provider 3 appends a certificate of the service provider 3 (which will be later described in detail with reference to Fig. 16) to the service provider secure container, and transmits the resultant service provider secure container to the user home network 5. In addition, the service provider 3 appends a certificate of the service provider 3 to the price information and signature and transmits the resultant information the EMD service center 1.

After verifying the received service provider secure container, the user home network 5 carries out purchase processing based on the handling policy and price information included in the secure container. The user home network 5 selects a purchase mode from the handling policy, then generates portable use permission information, and generates and saves accounting information corresponding thereto into the storage module in the SAM. The use permission information is saved into an external memory of the receiver together with the encrypted contents and the contents key which is decoded and re-encrypted with save key Ksave of the receiver. The accounting information is encrypted and signed at predetermined timing, and is transmitted to the EMD service center 1 together with the handling policy and price information, if necessary.

The EMD service center 1 calculates the use fee based on the accounting information and price information, and also calculates the profits of the EMD service center 1, the contents provider 2 and the service provider 3. The EMD service center 1 compares the handling policy received from the contents provider 2, the price information received from the service provider 3 and the accounting information and handling policy received from the user home network 5, and audits whether there is no unauthorized action in the service provider 3 or the user home network 5 such as tampering of the handling policy and appendage of an unfair price. Although the non-encrypted handling policy and price information are transmitted in Fig.12, such information may be encrypted before transmission. If the information is encrypted, the safety against attacks from outside of the system is improved.

Fig. 13 illustrates the contents provider secure container. The contents provider secure container contains the contents encrypted with the contents key Kco, the contents key Kco encrypted with the distribution key Kd, and the handling policy and signature. The signature is data obtained by encrypting, with the secret key Kscp of the contents provider 2, a hash value generated by applying a hash function to the contents encrypted with the contents key Kco, the contents key Kco encrypted with the distribution key Kd and the handling policy.

Fig. 14 illustrates the certificate of the contents provider 2. The certificate of the contents provider 2 contains the version number of the certificate, the serial number of the certificate allocated to the contents provider 2 from an authentication station, the algorithm and parameter used for the signature, the name of the authentication station, the expiration date of the certificate, the name of the contents provider 2, the public key Kpcp of the contents provider and the signature. The signature is data obtained by encrypting, with the secret key Ksca of the authentication station, a hash value generated by applying a hash function to the version number of the certificate, the serial number of the certificate allocated to the contents provider 2 from the authentication station, the algorithm and parameter used for the signature, the name of the authentication station, the expiration date of the certificate, the name of the contents provider 2, and the public key Kpcp of the contents provider.

Fig. 15 illustrates the service provider secure container. The service provider secure container contains the contents encrypted with the contents key Kco, contents key Kco encrypted with the distribution key Kd, handling policy, price information and signature. The signature is data obtained by encrypting, with the secret key Kssp of the service provider 3, a hash value generated by applying a hash function to the contents encrypted with the contents key Kco, contents key Kco encrypted with the distribution key Kd, handling policy and price information.

Fig. 16 illustrates the certificate of the service provider 3. The certificate of the service provider 3 contains the version number of the certificate, the serial number of the certificate allocated to the service provider 3 from an authentication station, the algorithm and parameter used for the signature, the name of the authentication station, the expiration date of the certificate, the name of the service provider 3, the public key Kpsp of the service provider and the signature. The signature is data obtained by encrypting, with the secret key Ksca of the authentication station, a hash value generated by applying a hash function to the version number of the certificate, the serial number of the certificate allocated to the service provider 3 from the authentication station, the algorithm and parameter used for the signature, the name of the authentication station, the expiration date of the certificate, the name of the service provider 3, and the public key Kpsp of the service provider.

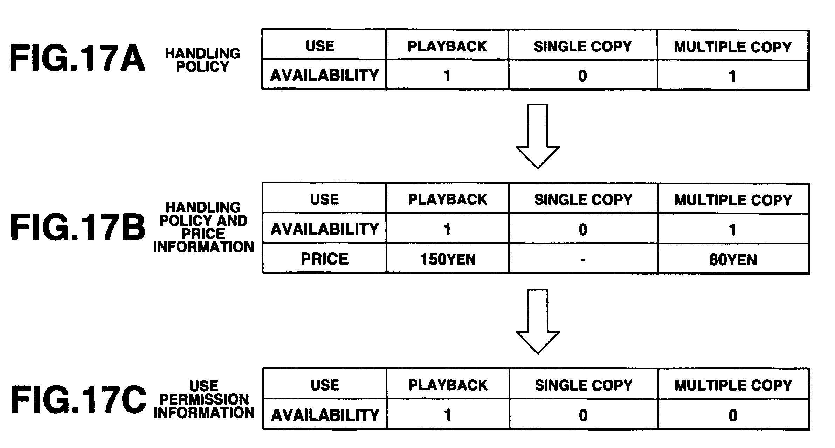

Figs.17(A), 17(B) and 17(C) illustrate the handling policy, price information and use permission information. The handling policy (Fig. 17(A)) held by the contents provider 2 is prepared for each contents and indicates available use items to the user home network 5. For example, the handling policy of Fig. 17(A) permits the user home network 5 to carry out reproduction and multiple copy of the contents, but does not permit single copy.

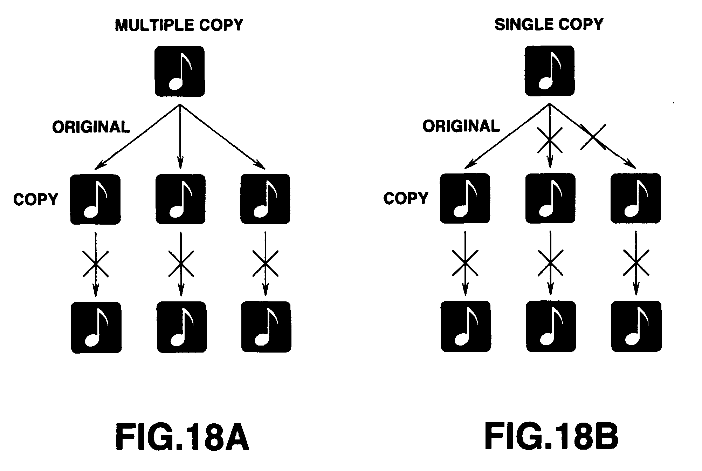

Figs. 18(A) and 18(B) illustrate single copy and multiple copy. Multiple copy is preparation of a plurality of copies from the contents in the case where the use permission condition is purchased with respect to the contents for which copy permission is provided in the use permission information. However, as shown in Fig.18(A), further copying of the copy cannot be carried out (or is not permitted). Single copy is preparation of one copy from the contents in the case where the use permission condition is purchased with respect to the contents for which copy permission is provided in the use permission information. In the case of the single copy, too, further copying of the copy cannot be carried out (or is not permitted), as shown in Fig.18(B).

The service provider 3 adds the price information to the handling policy (Fig. 17(A)) from the contents provider 2, as shown in Fig. 17(B). For example, the price information of Fig.17(B) indicates that the fee for reproduction of the contents is 150 yen and that the fee for multiple copy of the contents is 80 yen. Although not shown in Figs. 17(A) to 17(C), the price information of single copy represents the fee for each copying. For example, for copying three times, the fee three times that for single copy is to be paid. The contents for which multiple copy or single copy is permitted are limited to the contents in the case where the use permission condition is purchased with respect to the contents for which copy permission is provided in the use permission information.

The user home network 5 stores the use permission information (Fig. 17(C)) indicating the use item selected by the user from the available use items (Fig. 17(B)) of the contents indicated by the handling policy supplied from the service provider 3. For example, the use permission information of Fig. 17(C) indicates that the contents can be reproduced for use and that single copy and multiple copy cannot be carried out.

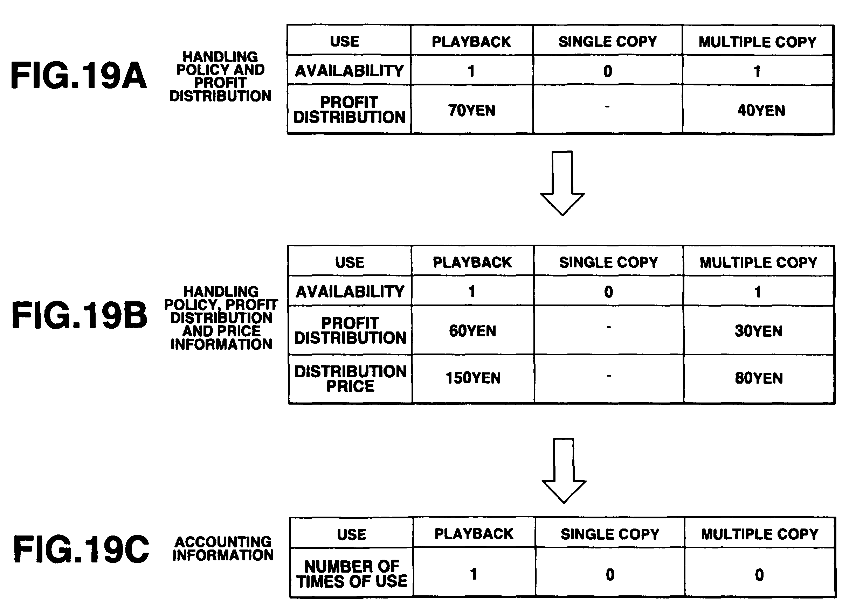

Figs. 19(A), 19(B) and 19(C) illustrate the handling policy and price information in the case where the contents provider 2 adds the profit distribution information to the handling policy and where the service provider 3 adds the profit distribution information to the price information, compared with the examples of Figs. 17(A), 17(B) and 17(C). In the examples of Figs.19(A), 19(B) and 19(C), in comparison with the examples of Figs.17(A), 17(B) and 17(C), information is added which indicates that the profit of the contents provider 2 is 70 yen for reproduction of the contents and 40 yen for multiple copy of the contents (Fig. 19(A)). Moreover, as the profit distribution information, information is added which indicates that the profit of the service provider 3 is 60 yen for reproduction of the contents and 30 yen for multiple copy (Fig.19(B)). The price is 50 yen for reproduction and 80 yen for multiple copy, similarly to the case of Fig.17(A). The amount (for example, 20 yen) obtained by subtracting the profit (for example, 70 yen) of the contents provider 2 and the profit (for example, 60 yen) of the service provider 3 from the price (for example, 150 yen) is the profit of the EMD service center 1. The EMD service center 1 can calculate the profits of the contents provider 2, the service provider 3 and the EMD service center 1 by obtaining the handling policy, profit distribution rate and price information via the user home network 5 as well as the accounting information (Fig.19(C)) indicating the result of use of the contents by the user home network 5.

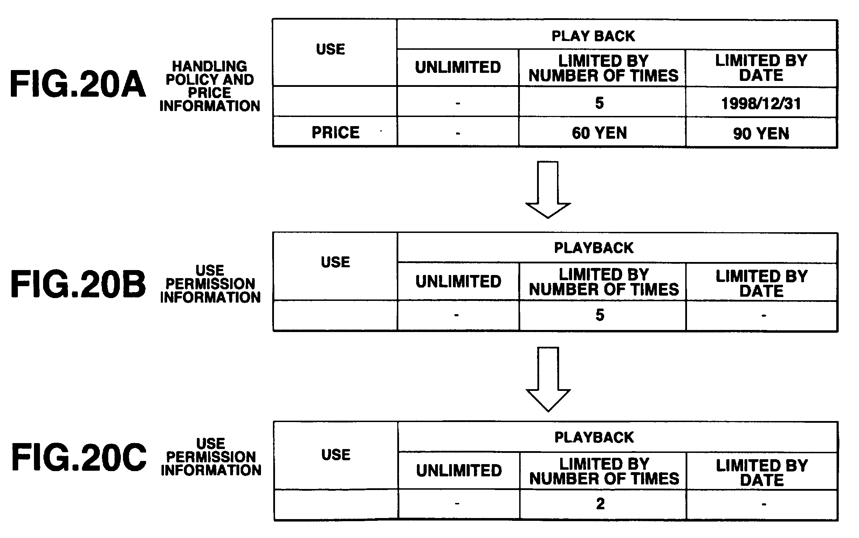

Figs.20(A), 20(B) and 20(C) illustrate the handling policy, price information and use permission information in the case where a plurality of modes are set for the use of contents reproduction. In the example of Fig.20(A), in the service provider 3, unlimited reproduction, reproduction limited by the number of times (in this example, 5 times) and reproduction limited by date (in this example, until December 31, 1998) are set for the use of contents reproduction, as the handling policy and price information. In the case where the user selects the reproduction limited by the number of times of 5 so as to use the contents, when the user has received but has never reproduced the contents, a value of "5" is recorded as the value corresponding to the limitation by the number of times of the use permission information for the user home network 5, as shown in Fig.20(B). The value corresponding to the limitation by the number of times is decremented every time the contents are reproduced (used) in the user home network 5. For example, after the contents are reproduced three times, the value is decremented to "2" as shown in Fig.20(C). If the value corresponding to the limitation by the number of times becomes "0", the user home network 5 no longer can reproduce and use the contents.

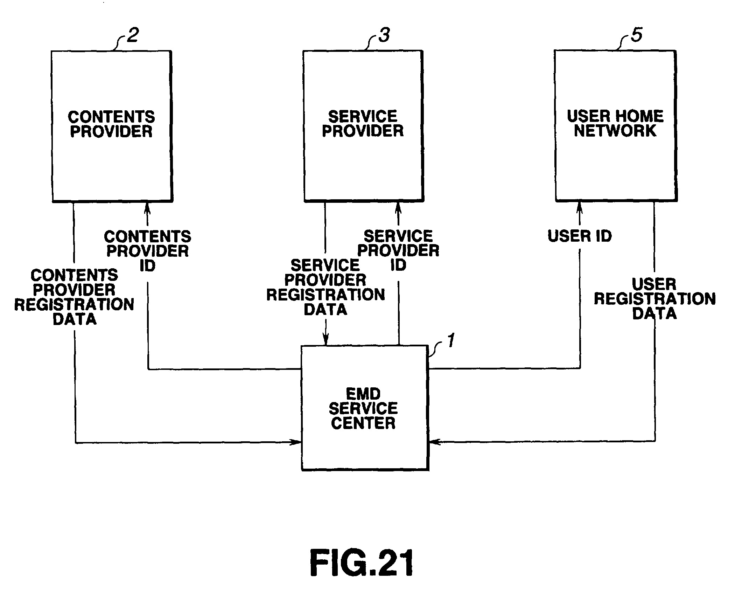

Fig.21 illustrates another operation of the EMD service center 1 to collect necessary data for settlement processing from the contents provider 2, the service provider 3 and the user home network 5. The contents provider 2 transmits contents provider registration data made up of the name of the contents provider 2, the contents ID, the profit of an entitled organization corresponding to the contents ID and the bank account number of the contents provider 2 to the EMD service center 1. The contents provider management section 12 of the EMD service center 1 receives the contents provider registration data. Having received the contents provider registration data, the contents provider management section 12 of the EMD service center 1 generates contents provider ID, then registers the contents provider registration data together with the contents provider ID to a profit distribution database, and transmits the contents provider ID to the contents provider 2. The contents provider 2 receives and stores the contents provider ID.

The service provider 3 transmits service provider registration data made up of the name of the service provider 3, the contents ID and the bank account number of the service provider 3 to the EMD service center 1. The service provider management section 11 of the EMD service center 1 receives the service provider registration data. Having received the service provider registration data, the service provider management section 11 of the EMD service center 1 generates service provider ID and transmits the service provider ID to the service provider 3. The service provider 3 receives and stores the service provider ID.

The user home network 5 transmits user registration data made up of the name of the user and the bank account number of the user to the EMD service center 1. The user management section 18 of the EMD service center 1 receives the user registration data. Having received the user registration data, the user management section 18 of the EMD service center 1 generates user ID, then stores the user registration data together with the user ID, and transmits the user ID to the user home network 5. The user home network 5 receives and stores the user ID.

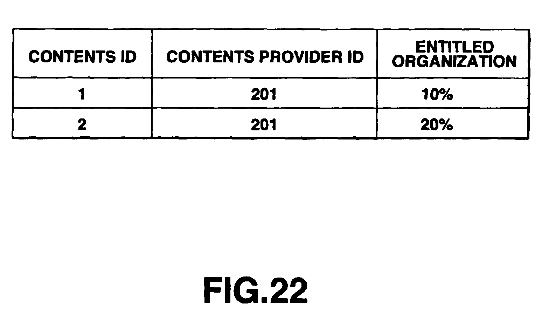

Fig.22 shows an example of the profit distribution database held by the profit distribution section 16 of the EMD service center 1. In the profit distribution database, data indicating the profit distribution to the entitled organization corresponding to the contents ID are stored. The data indicating the profit distribution to the entitled organization corresponding to the contents ID shows the rate of profit distribution to the entitled organization which is generated when the contents corresponding to the contents ID are used by the user.

In the example of the profit distribution database of Fig.22, if the contents having the contents ID of 1 are provided to the user from the service provider 3, 10% of the profit generated from the use of the contents by the user is distributed to the entitled organization. Similarly, with respect to the contents having the contents ID of 2, 20% of the profit generated by the use of the contents by the user is distributed to the entitled organization.

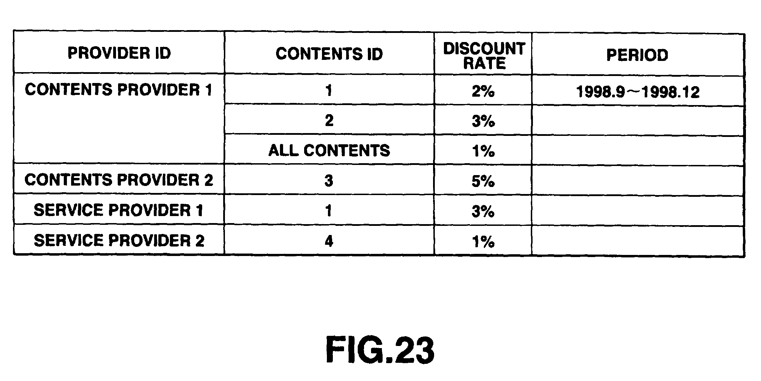

Fig.23 shows an example of a contents use fee discount table stored in the profit distribution section 16 of the EMD service center 1. In the contents use fee discount table, the contents ID and the discount rate of the use fee for the user corresponding to the contents provider ID are stored. In the discount table, information on the period during which the discount rate is applicable can also be stored.

The use fee of the contents which has the contents ID of 1 and which is supplied from the contents provider 2 having the contents provider ID of 1 is discounted by 2% during the period from September 1998 to December 1998. The use fee of the contents which has the contents ID of 2 and which is supplied from the contents provider 2 having the contents provider ID of 1 is discounted by 3%. The use fee of the contents which has the contents ID other than 1 and 2 and which is supplied from the contents provider 2 having the contents provider ID of 1 is discounted by 1%. The use fee of the contents which has the contents ID of 3 and which is supplied from the contents provider 2 having the contents provider ID of 2 is discounted by 5%. The use fee of the contents which has the contents ID of 1 and which is supplied from the service provider 3 having the service provider ID of 1 is discounted by 3%. The use fee of the contents which has the contents ID of 4 and which is supplied from the service provider 3 having the service provider ID of 2 is discounted by 1%.

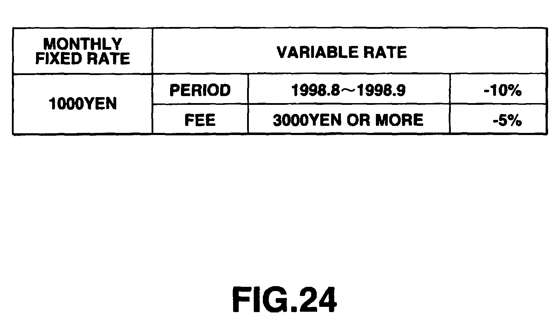

Fig.24 shows an example of a user's use fee table which is stored in the accounting and charging section 19 of the EMD service center 1 and in which the use fee of the EMD service center 1 with respect to the user is stored. The monthly fixed rate in the user's use fee table represents the amount of fixed use fee which the user pays to the EMD service center 1 every month. The variable rate represents the discount rate of the monthly fixed rate during a predetermined period which is especially determined by the EMD service center 1 or the discount rate of the monthly fixed rate in the case where the use fee including the contents use fee is not less than a predetermined amount.

In the example of the user's use fee table shown in Fig.24, the monthly fixed rate is 1,000 yen and the monthly fixed rate is discounted by 10% during the period from August 1998 to September 1998. In the case where the use fee including the contents use fee is not less than 3,000 yen, the monthly fixed rate is discounted by 5%.

The contents use fee is calculated from the profit distribution database or the accounting information, and the discount amount based on the discount table is subtracted from the contents use fee. The use fee of the EMD service center 1 stored in the user's use fee table is added to the resultant amount, thus calculating the user's use fee.

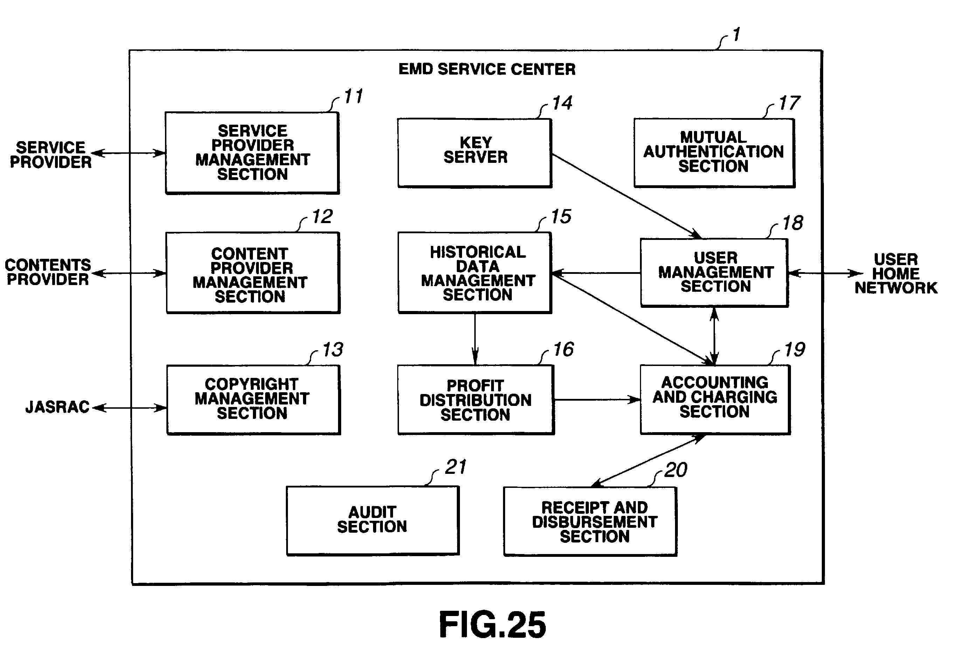

Fig.25 illustrates the operation of the EMD service center 1 to receive the accounting information from the user home network 5. The mutual authentication section 17 of the EMD service center 1 carries out mutual authentication with the user home network 5 and then shares the temporary key Ktemp. The user home network 5 encrypts the accounting information and, if necessary, the handling policy with the shared temporary key Ktemp, then appends the signature data thereto and transmits the resultant information to the EMD service center 1. The user management section 18 of the EMD service center 1 verifies the received signature data. If there is no tampering, the user management section 18 decodes the received accounting information with the shared temporary key Ktemp and transmits the decoded accounting information to the historical data management section 15.

The user management section 18 receives the distribution key Kd from the key server 14, encrypts the distribution key Kd with the shared temporary key Ktemp, appends the signature data thereto, and prepares registration information from the user registration database. The user management section 18 then transmits the distribution key Kd encrypted with the temporary key Ktemp, the signature data and the registration information to an equipment capable of settlement in the user home network 5. The preparation of the registration information is as described with reference to Fig.7 and therefore will not be described further in detail.

If it is determined that settlement is to be executed, the historical data management section 15 transmits the received accounting information to the profit distribution section 16 and further transmits the received accounting information and handling policy to the accounting and charging section 19. The profit distribution section 16 calculates the amount charged and the amount to be paid to the contents provider 2, the service provider 3 and the EMD service center 1 itself The accounting and charging section 19 calculates the amount to be paid by the user and transmits the information to the receipt and disbursement section 20. The receipt and disbursement section 20 communicates with an external bank, not shown, and executes settlement processing. In this case, if information on unpaid fee of the user is provided, such information is transmitted in the form of settlement report to the accounting and charging section 19 and the user management section 18. The information on the unpaid fee is reflected on the user registration database and will be referred to at the time of subsequent user registration processing and settlement processing.

The equipment capable of settlement in the user home network 5, which has received the distribution key Kd encrypted with the temporary key Ktemp and having the signature data appended thereto and the registration information, updates the registration information which has been stored, and verifies the signature data. After that, the equipment decodes the distribution key Kd with the temporary key Ktemp, updates the distribution key Kd stored in the storage module inside the encryption processing section, and deletes the accounting information in the storage module.

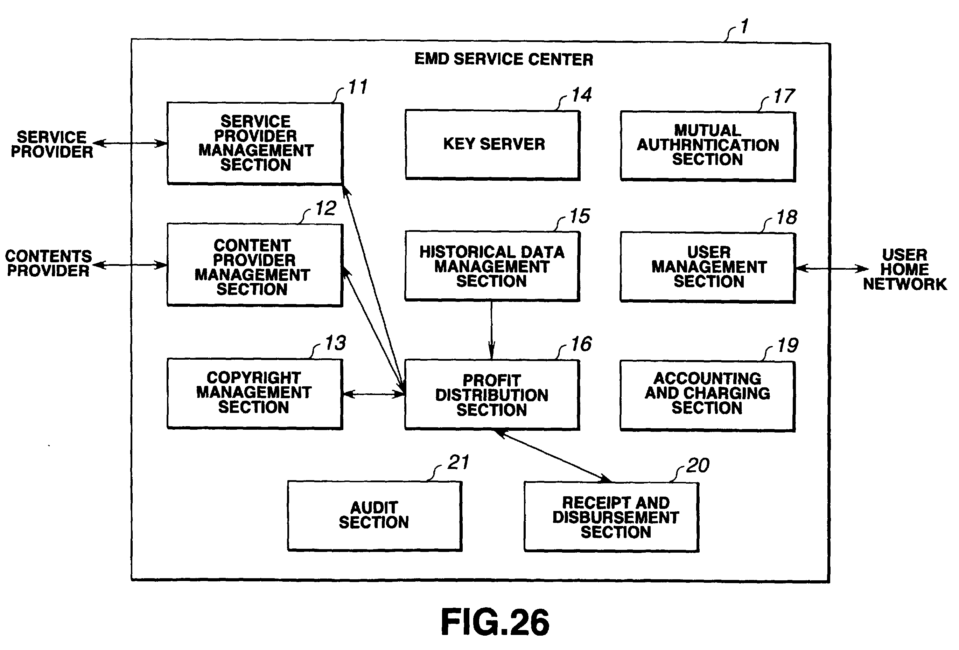

Fig.26 illustrates the operation of profit distribution processing of the EMD service center 1. The historical data management section 15 transmits the accounting information indicating the result of contents use by the user, the handling policy and the price information to the profit distribution section 16. On the basis of this information, the profit distribution section 16 calculates the profits of the contents provider 2, the service provider 3 and the EMD service provider 1, respectively, and transmits the calculation results to the service provider management section 11, the contents provider management section 12, the receipt and disbursement section 20 and the copyright management section 13. The receipt and disbursement section 20 communicates with an external bank, not shown, and executes settlement processing. The service provider management section 11 transmits the information on the profit of the service provider 3 to the service provider 3. The contents provider management section 12 transmits the information on the profit of the contents provider 2 to the contents provider 2. The audit section 21 audits the validity of the accounting information, price information and handling policy supplied from the equipment of the user home network 5.

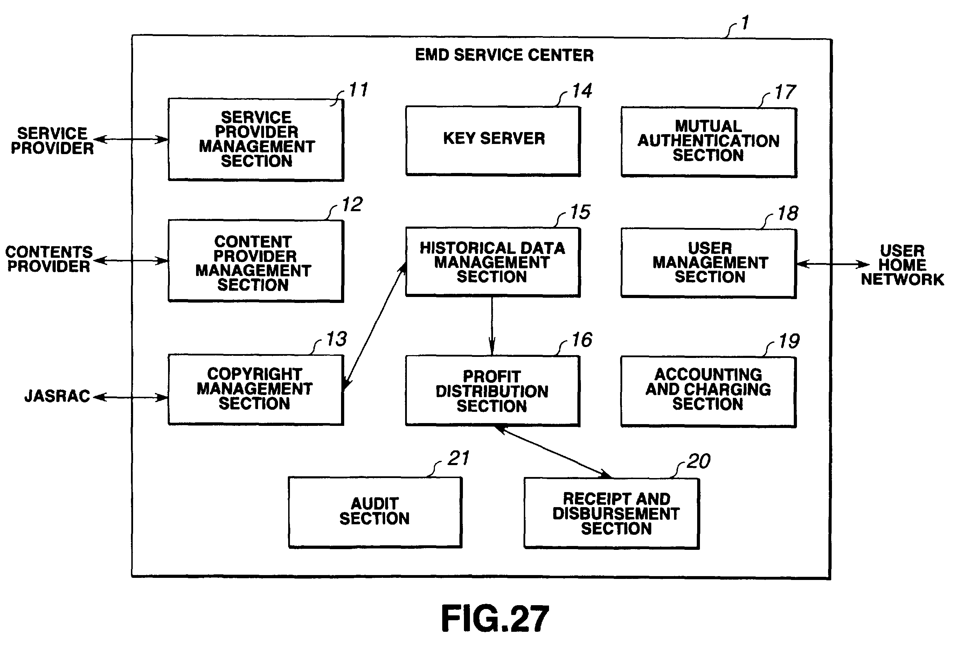

Fig.27 illustrates the operation of processing in which the EMD service center 1 transmits the information on the result of contents use to the JASRAC. The historical data management section 15 transmits the accounting information indicating the result of contents use by the user to the copyright management section 13 and the profit distribution section 16. The profit distribution section 16 calculates the amount charged and the amount to be paid to the JASRAC, and transmits the information to the receipt and disbursement section 20. The receipt and disbursement section 20 communicates with an external bank, not shown, and executes settlement processing. The copyright management section 13 transmits the result of contents use by the user to the JASRAC.

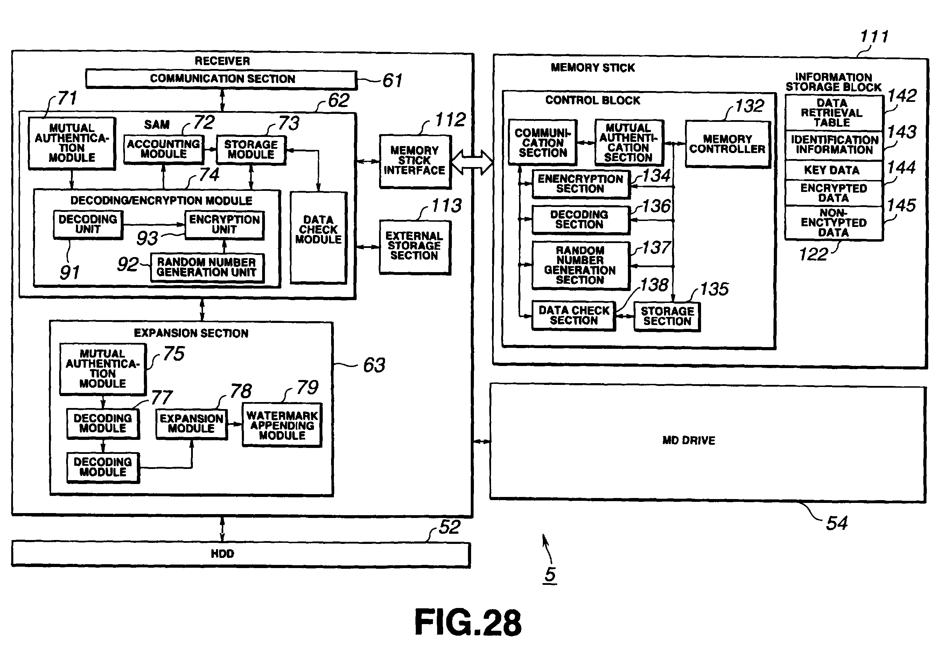

Fig.28 shows the structure of an embodiment of the user home network 5 which enables storage of supplied and encrypted contents to a memory stick, prevention of an unauthorized actions, and use of the contents by another reproducing device. Portions similar to those of Fig. 10 are denoted by the same numerals and will not be described further in detail. In Fig.28, the IC card interface 64 and the IC card 55 are not shown.

A memory stick 111 loaded in the receiver 51 for storing the contents includes a control block 121 for controlling storage of the contents or the like, and an information storage block 122 for actually storing the contents. The control block 121 is constituted by a single-chip dedicated IC for encryption processing, having a multilayer structure in which an internal memory cell is held between dummy layers such as aluminum layers. The control block 121 also has tamper resistance such as a narrow width of operating voltage or frequency, which prevents unauthorized data reading from outside.

The control block 121 includes a communication section 131, a memory controller 132, a mutual authentication section 133, an encryption section 134, a storage section 135, a decoding section 136, a random number generation section 137, and a data check section 138. The communication section 131 receivers the encrypted contents or encrypted contents key Kco from the receiver 51. The communication section 131 also transmits the encrypted contents or encrypted contents key Kco to the receiver 51. The memory controller 132 writes the encrypted contents or encrypted contents key Kco received by the communication section 131 to the information storage block 122. The memory controller 132 also reads out the contents written in the information storage block 122 and supplies the contents to the communication section 131 or the like. The mutual authentication section 133 carries out mutual authentication with the mutual authentication module 71 of the receiver 51 by mutual authentication processing, and after mutual authentication, generates the temporary key Ktemp to be used for a predetermined period in the communication with the receiver 51.

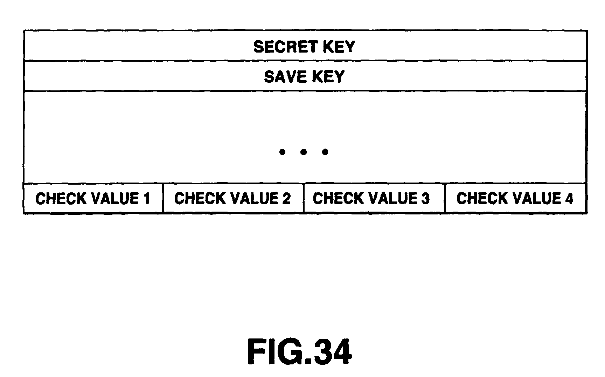

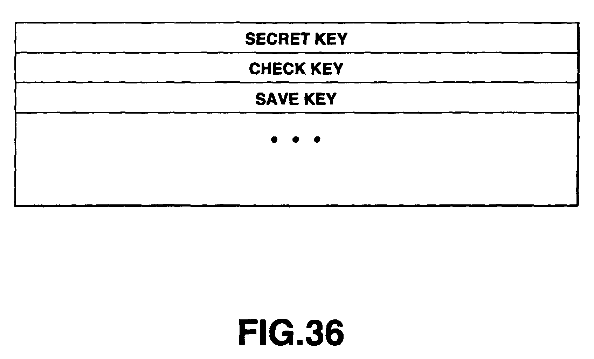

The encryption section 134 once encrypts the contents key Kco decoded by the decoding section 136 with the save key Ksave, and supplies the encrypted contents key Kco to the memory controller 132. The decoding section 136 decodes the contents key Kco encrypted with the temporary key Ktemp or the contents key Kco encrypted with the save key Ksave, and supplies the decoded contents key to the encryption section 134 or the communication section 131. The storage section 135 stores the save key Ksave and the check key Kch which have a value proper to the memory stick 111 (that is, a different value for each memory stick 111), and supplies the keys to the encryption section 134 or the decoding section 136. The storage mode of the storage section 135 will be described in detail with reference to Figs.34 and 36.

The random number generation section 137 generates a random number consisting of a predetermined number of digits, which is a necessary key for encrypting inside the memory stick 111 the contents of a plaintext (not encrypted) stored in the information storage block 122 later described. The data check section 38 compares a predetermined check value (data for check) stored in the storage section 135 and a hash value of predetermined data stored as key data 143, thereby checking whether the contents key Kco and use permission information stored in the information storage block 122 have been tampered or not. Also, when shifting the contents stored in the information storage block 122 or when writing the contents into the information storage block 122, the data check section 138 generates a predetermined check value and stores it to the storage section 135.

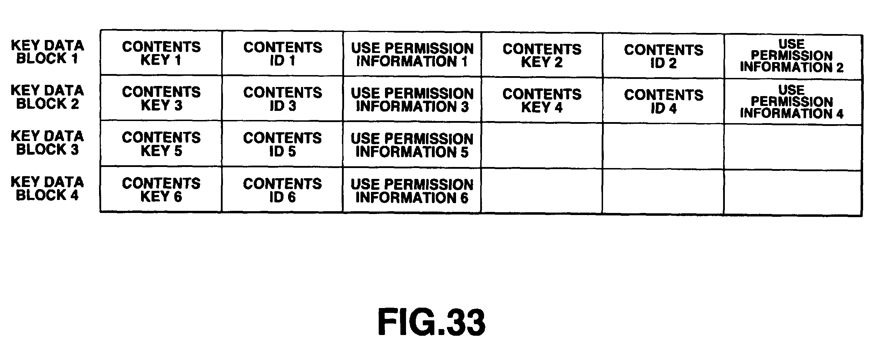

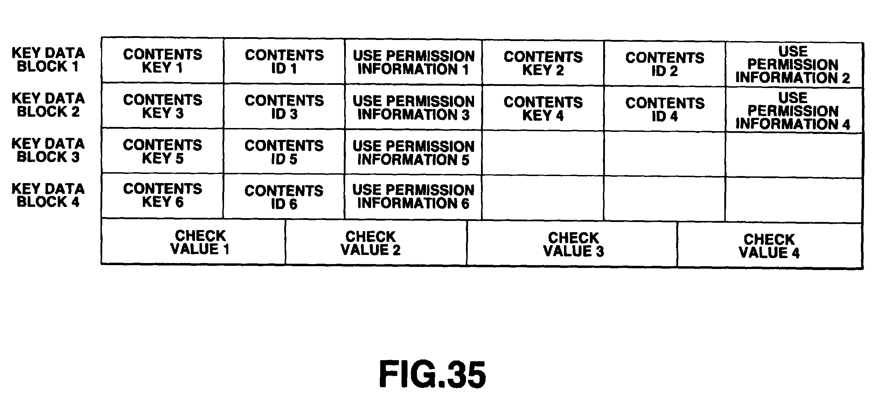

The information storage block 122 is made up of a general-purpose non-volatile memory which enables electric rewriting of storage contents such as an EEPROM (electrically erasable programmable read-only memory), a flash memory, or a ferroelectric memory. In the information storage block 122, a data retrieval table 141, identification information 142, key data 143, encrypted data 144 and non-encrypted data 145 are stored. In the data retrieval table 141, data indicating the contents of information stored as the key data 143, encrypted data 144 and non-encrypted data 145 and the recording positions thereof are stored. As the identification information 142, data indicating whether the contents of stored information have been encrypted or not is stored. As the key data 143, the contents key Kco, contents ID and use permission information are stored for each contents stored as the encrypted data 144. The storage mode of the key data 143 will be described in detail with reference to Figs.33 and 35. As the encrypted data 144, the encrypted contents are stored. As the non-encrypted data 145, the non-encrypted contents and the use permission information thereof are stored.

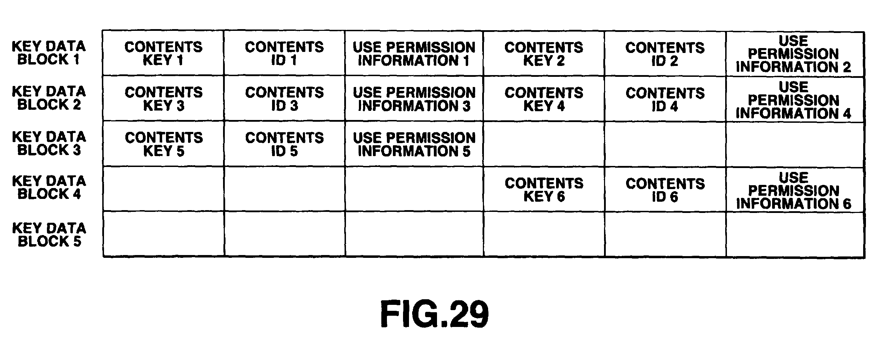

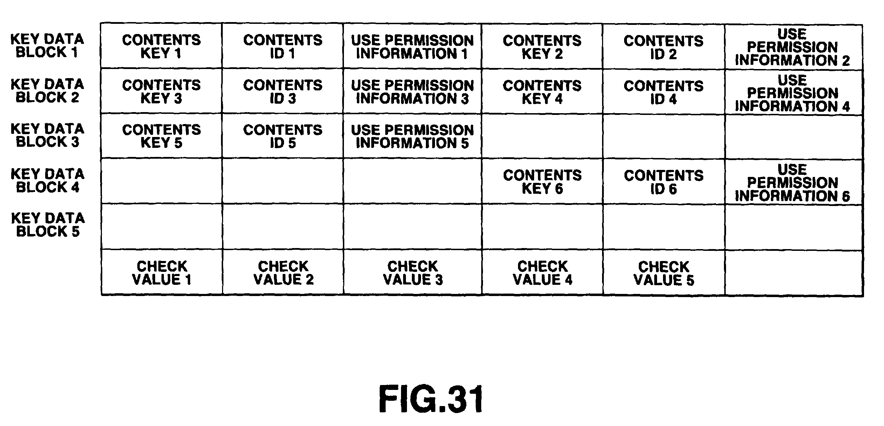

The receiver 51 of Fig.28 has such a structure that a memory stick interface 112 and an external storage section 113 are added to the receiver 51 of Fig.10. The memory stick interface 112 changes a signal from the SAM 62 to a predetermined format and outputs the resultant signal to the memory stick 111 loaded in the receiver 51. Also, the memory stick interface 112 changes a signal from the memory stick 111 to a predetermined format and outputs the resultant signal to the SAM 62. The external storage section 113 is made up of a general-purpose non-volatile memory for storing the contents key Kco supplied from the SAM 62 and for outputting the stored contents key Kco to the SAM 62. The storage mode of the external storage section 113 will be described in detail with reference to Figs.29 and 31.

The SAM 62 of Fig.28 has such as structure that a data check module 114 is provided in the SAM 62 of Fig.10. The data check module 114 compares predetermined check data stored in the storage module 73 and a hash value of predetermined data stored in the external storage section 113, thereby checking whether the contents key Kco and use permission information stored in the external storage section 113 have been tampered or not. When shifting the contents stored on the HDD 52 or writing the contents to the HDD 52, the data check module 114 generates a predetermined check value and stores it to the storage module 73.

The storage mode of the external storage section 113 will now be described with reference to Fig.29. The storage area of the external storage section 113 is divided into a predetermined number of key data blocks. (In Fig.29, it is divided into five key data blocks.) In each key data block, for example, two sets of contents key Kco, contents ID and use permission information can be stored. One set of contents key Kco, contents ID and use permission information stored in the key data block correspond to the contents stored on the HDD 52 specified by the contents ID. When the contents corresponding to the contents key Kco, contents ID and use permission information which have been stored in the former half of the key data block 4 are shifted to the memory stick 111 from the HDD 52, the contents key Kco, contents ID and use permission information which have been stored in the former half of the key data block 4 are erased so that no contents key Kco and the like are stored in the former half of the key data block 4, as shown in Fig.29. By similar operation, the contents key Kco and the like are not stored in the latter half of the key data block 3 of Fig.29.

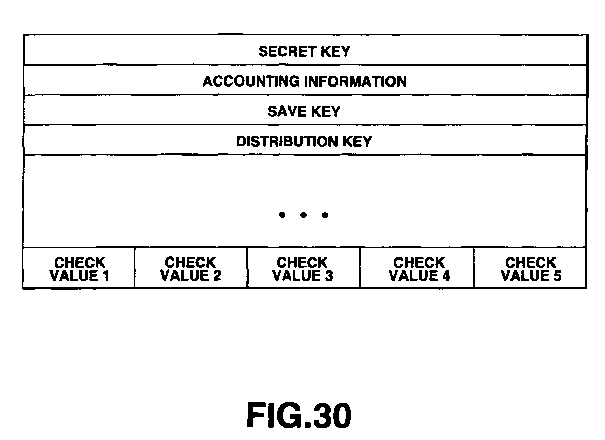

Fig.30 illustrates the storage mode of the storage module 73 in the case where the user home network 5 has the structure shown in Fig.28. The storage module 73 of Fig.30 stores check values corresponding to the key data blocks of the external storage section 113, described with reference to Fig.29, in addition to the secret key Ksu of the user, the accounting information, the save key Ksave and the distribution key Kd. For example, the check value 1 of the storage module 73 is obtained as the data check module 114 applied a hash function to the data of the key data block 1 of the external storage section 113 (that is, contents key Kco1, contents ID1, use permission information 1, contents key Kco2, contents ID2, use permission information 2). Similarly, the check value 2 is obtained as the data check module 114 applied a hash function to the data of the key data block 2. Similarly, the check value 3, check value 4 and check value 5 correspond to the key data block 3, key data block 4 and key data block 5, respectively.

That is, if the hash value obtained by applying the hash function to the key data block 3 is coincident with the check value 3, it can be seen that the contents key Kco5, contents ID5 and use permission information 5 stored in the key data block 3 have not been tampered. On the other hand, if the hash value obtained by applying the hash function to the key data block 3 is not coincident with the check value 3, it can be determined that any of the contents key Kco5, contents ID5 and use permission information 5 stored in the key data block 3 has been tampered.

Since the check values are stored in the tamper-resistant storage module 73 of the SAM 62 and are difficult to read out by an unauthorized access from outside, tampering is prevented. Therefore, the contents key Kco stored in the receiver 51 of Fig.28 and the contents stored on the HDD 52 have extremely high resistance against unauthorized actions.

Fig.31 illustrates another storage mode of the external storage section 113. In the case of Fig.31, the external storage section 113 stores check values corresponding to the key data blocks in addition to the sets of contents key Kco, contents ID and use permission information. For example, the check value 1 of the external storage section 113, shown in Fig.31, is a value which is obtained by encrypting a value obtained as the data check module 114 applied a hash function to the data of the key data block 1 of the external storage section 113 (that is, contents key Kco1, contents ID1, use permission information 1, contents key Kco2, contents ID2 and use permission information 2) with the check key Kch stored in the storage module 73 and having the value proper to the receiver 51. Similarly, the check value 2, check value 3, check value 4, and check value 5 correspond to the key data block 2, key data block 3, key data block 4, and key data block 5, respectively.

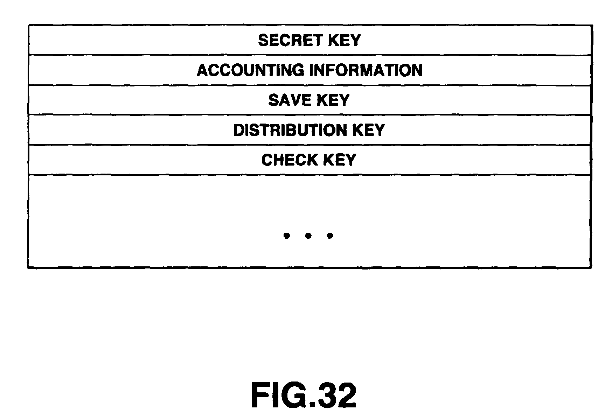

Fig.32 illustrates the storage mode of the storage module 73 in the case where the user home network 5 has the structure of Fig.28 and where the external storage section 113 has the storage mode of Fig.31. The storage module 73 of Fig.32 stores the check key Kch in addition to the secret key Ksu of the receiver 51 (user), the accounting information, the save key Ksave and the distribution key Kd.

That is, if the hash value obtained by applying the hash function to the key data block 3 of the external storage section 113 is coincident with the value obtained by decoding the check value 3 of the external storage section 113 with the check key Kch, it can be seen that the contents key Kco5, contents ID5 and use permission information 5 stored in the key data block 3 of the external storage section 113 have not been tampered. On the other hand, if the hash value obtained by applying the hash function to the key data block 3 of the external storage section 113 is not coincident with the value obtained by decoding the check value 3 of the external storage section 113 with the check key Kch, it can be determined that any of the contents key Kco5, contents ID5 and use permission information 5 stored in the key data block 3 of the external storage section 113 has been tampered.

In the external storage section 113 shown in Fig.31 and the storage module 73 shown in Fig.32, compared with the case shown in Figs.29 and 30, since the check values are stored in the general-purpose memory which is less expensive than the tamper-resistant memory, the receiver 51 capable of storing the check values corresponding to a large volume of contents can be realized inexpensively.

The storage mode of the key data 143 will now be described with reference to Fig.33. The storage area of the key data 143 is divided into a predetermined number of key data blocks. (In Fig.33, it is divided into four key data blocks.) Each key data block is capable of storing, for example, two sets of contents key Kco, contents ID and use permission information. One set of contents key Kco, contents ID and use permission information stored in the key data block correspond to the contents stored as the encrypted data specified by the contents ID. When the contents corresponding to the contents key Kco, contents ID and use permission information which have been stored in the latter half of the key data block 3 are shifted from the memory stick 111 to the HDD 52, the contents key Kco, contents ID and use permission information which have been stored in the latter half of the key data block 4 are deleted so that no contents key Kco and the like are stored in the latter half of the key data block 4 as shown in Fig.33.

Fig.34 illustrates the storage mode of the storage section 135 in the case where the user home network 5 has the structure shown in Fig.28. The storage section 135 stores the secret key Ksu of the user, the save key Ksave, the check value corresponding to the key data block of the key data 143 described with reference to Fig.33, and if necessary, the accounting information. For example, the check value 1 of the storage section 135 is a value which is obtained as the data check section 138 applied a hash function to the data of the key data block 1 of the key data 143 (that is, contents key Kco1, contents ID1, use permission information 1, contents key Kco2, contents ID2 and use permission information 2). Similarly, the check value 2 is a value which is obtained as the data check section 138 applied a hash function to the data of the key data block 2. Similarly, the check value 3 and check value 4 correspond to the key data block 3 and key data block 4, respectively.

That is, if the hash value obtained by applying the hash function to the key data block 3 of the key data 143 is coincident with the check value 3 of the storage section 135, it can be seen that the contents key Kco5, contents ID5 and use permission information 5 stored in the key data block 3 of the key data 143 have not been tampered. On the other hand, if the hash value obtained by applying the hash function to the key data block 3 is not coincident with the check value 3, it can be determined that any of the contents key Kco5, contents ID5 and use permission information 5 stored in the key data block 3 has been tampered.

Similar to the case of the receiver 51, since the check values of the memory stick 111 are stored in the storage section 135 of the tamper-resistant control block 121 and are difficult to read out by an unauthorized access from outside, tampering is prevented. Therefore, the contents key Kco and contents stored in the memory stick 111 of Fig.28 have extremely high resistance against unauthorized actions.

Fig.35 illustrates another storage mode of the key data 143. In the case of Fig.35, the key data 143 stores check values corresponding to the key data blocks in addition to the sets of contents key Kco, contents ID and use permission information. For example, the check value 1 of the key data 143, shown in Fig.35, is a value which is obtained by encrypting a value obtained as the data check section 138 applied a hash function to the data of the key data block 1 of the key data 143 (that is, contents key Kco1, contents ID1, use permission information 1, contents key Kco2, contents ID2 and use permission information 2) with the check key Kch stored in the storage section 135 and having the value proper to the memory stick 111. (Therefore, this check key has a value different from that of the check key stored in the storage module 73 of the receiver 51.) Similarly, the check value 2, check value 3, and check value 4 correspond to the key data block 2, key data block 3, and key data block 4, respectively.

Fig.36 illustrates the storage mode of the storage section 135 in the case where the user home network 5 has the structure of Fig.28 and where the key data 143 of the memory stick 111 has the storage mode of Fig.35. The storage section 135 of Fig.36 stores the check key Kch in addition to the secret key Ksu2 of the memory stick 111 and the save key Ksave.

That is, if the hash value obtained by applying the hash function to the key data block 3 of the key data 143 is coincident with the value obtained by decoding the check value 3 of the key data 143 with the check key Kch, it can be seen that the contents key Kco5, contents ID5 and use permission information 5 stored in the key data block 3 of the key data 143 have not been tampered. On the other hand, if the hash value obtained by applying the hash function to the key data block 3 of the key data 143 is not coincident with the value obtained by decoding the check value 3 of the key data 143 with the check key Kch, it can be determined that any of the contents key Kco5, contents ID5 and use permission information 5 stored in the key data block 3 of the key data 143 has been tampered.

In the key data 143 shown in Fig.35 and the storage section 135 shown in Fig.36, since the check values are stored in the general-purpose memory which is less expensive than the tamper-resistant memory, the memory stick 111 capable of storing the check values corresponding to a large volume of contents can be realized inexpensively.

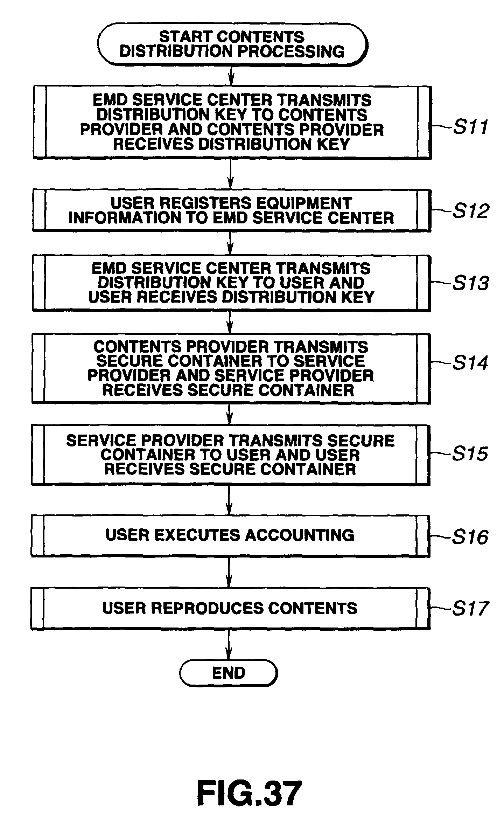

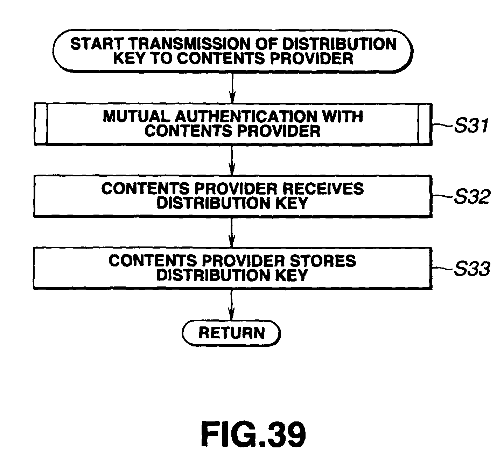

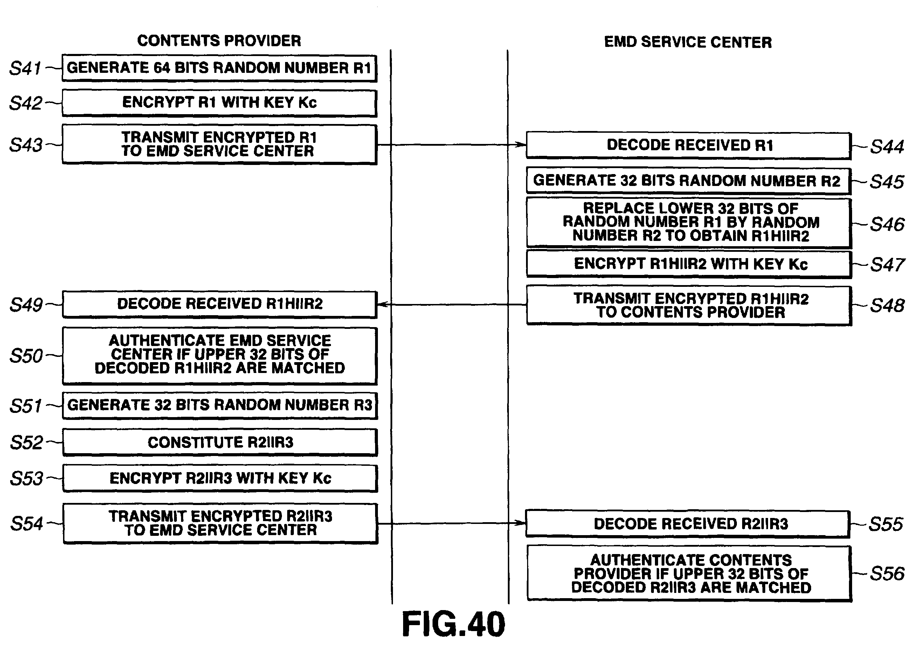

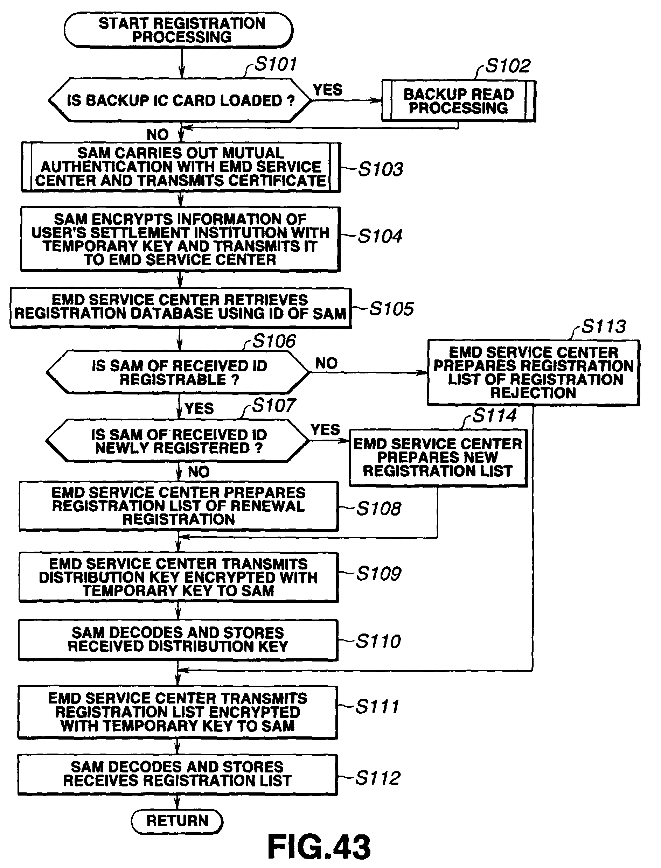

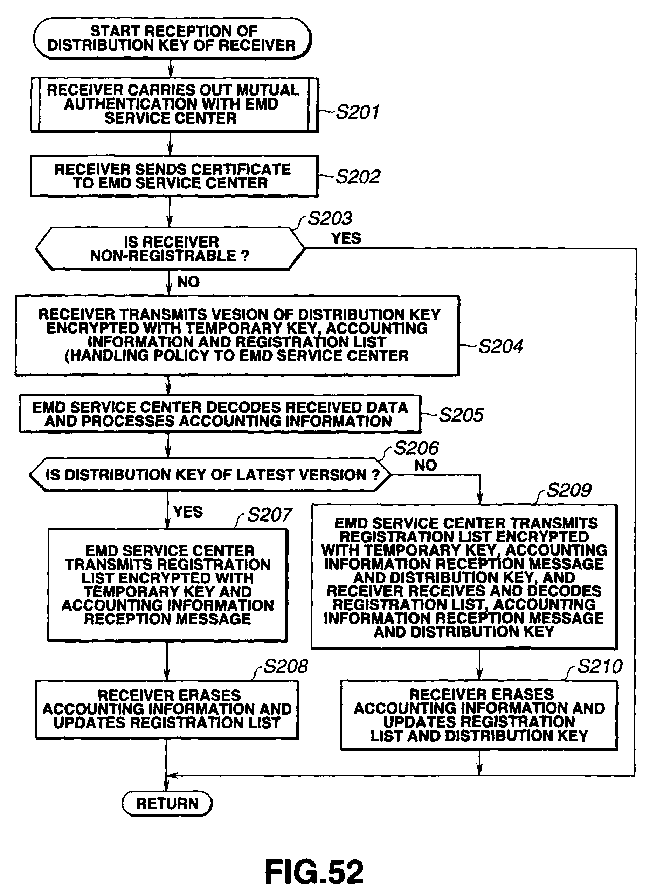

The processing in the EMD system will now be described. Fig.37 is a flowchart illustrating the processing for contents distribution and reproduction in this system. At step S11, the contents provider management section 12 of the EMD service center 1 transmits the distribution key Kd to the contents provider 2, and the contents provider 2 receives the distribution key Kd. The details of this processing will be described later with reference to the flowchart of Fig.39. At step S12, the user operates the equipment (for example, the receiver 51 of Fig. 10) of the user home network 5 and registers the equipment of the user home network 5 to the user management section 18 of the EMD service center 1. The details of the registration processing will be described later with reference to the flowchart of Fig.43. At step S13, the user management section 18 of the EMD service center 1 carries out mutual authentication with the user home network 5 as shown in Figs.40 to 42, and then transmits the distribution key Kd to the equipment of the user home network 5. The user home network 5 receives this key. The details of this processing will be described later with reference to the flowchart of Fig.52.

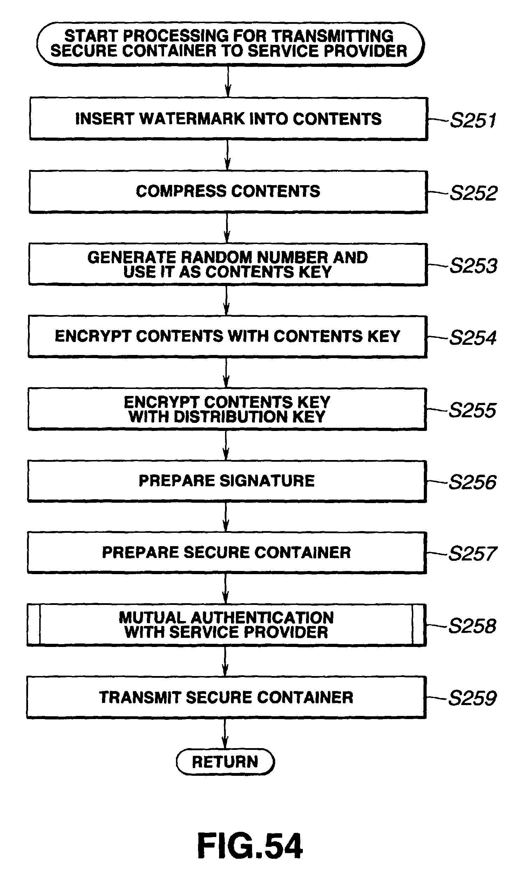

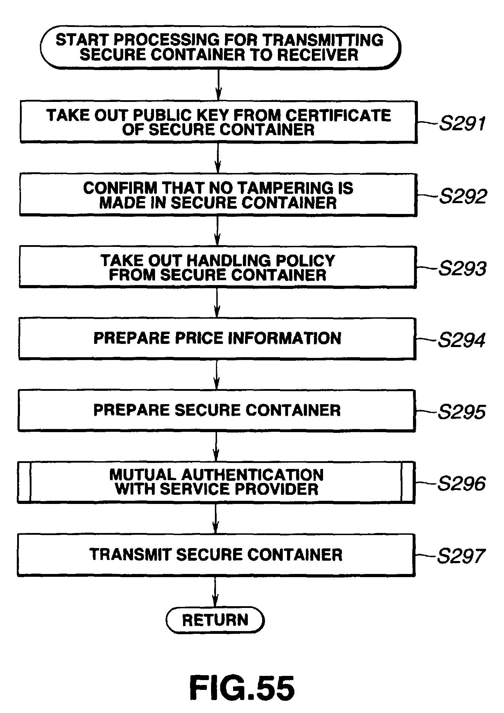

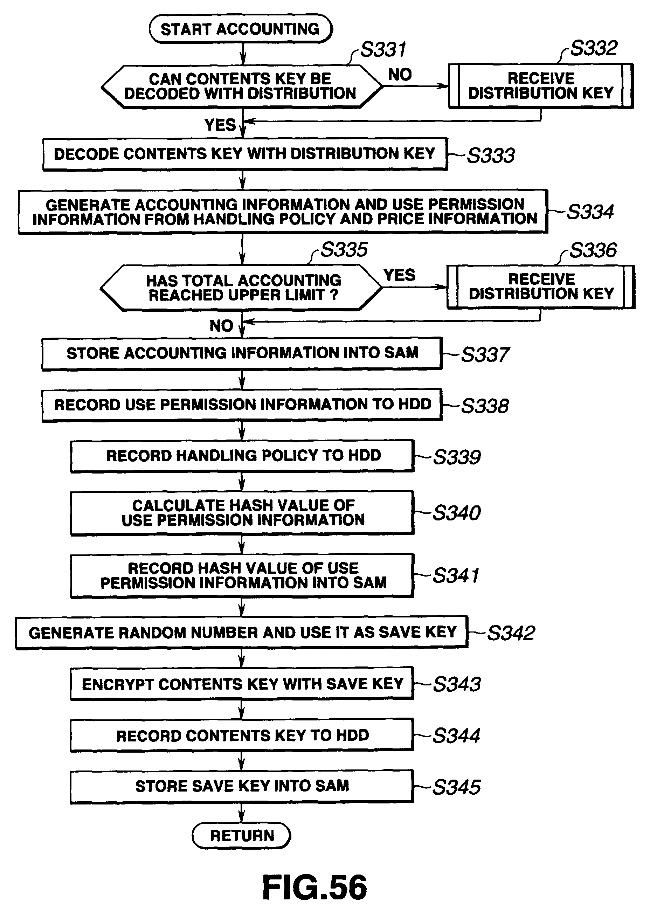

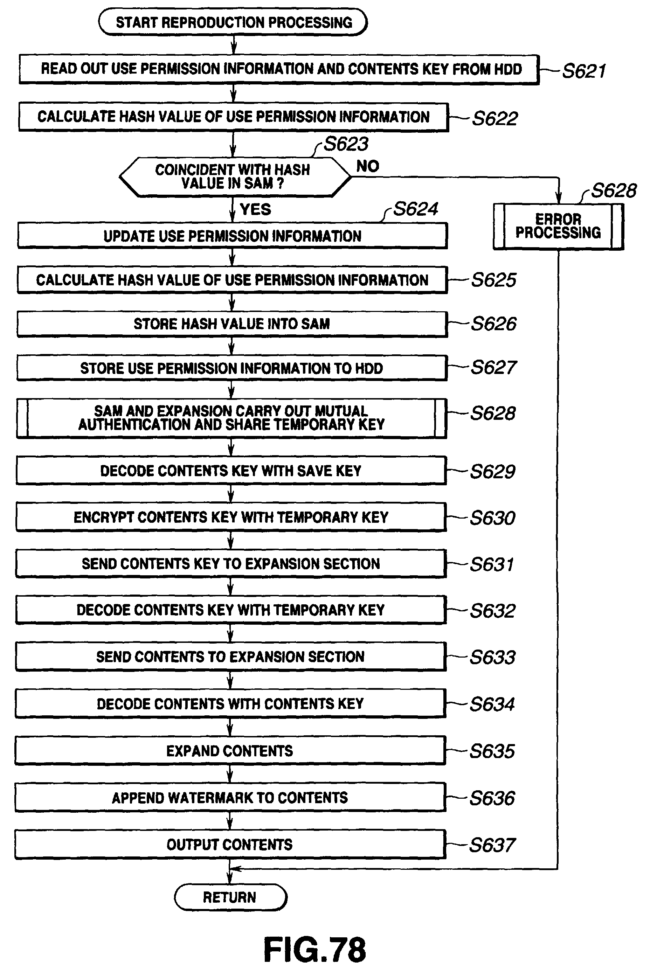

At step S14, the secure container preparation section 38 of the contents provider 2 transmits the contents provider secure container to the service provider 3. The details of this processing will be described later with reference to the flowchart of Fig. 54. At step S15, the secure container preparation section 44 of the service provider 3 transmits the service provider secure container to the user home network 5 via the network 4 in response to the request from the user home network 5. The details of this transmission processing will be described later with reference to the flowchart of Fig.55. At step S16, the accounting module 72 of the user home network 5 carries out accounting. The details of the accounting will be described later with reference to the flowchart of Fig.56. At step S17, the user reproduces the contents by the equipment of the user home network 5. The details of the reproduction processing will be described later with reference to the flowchart of Fig.78.

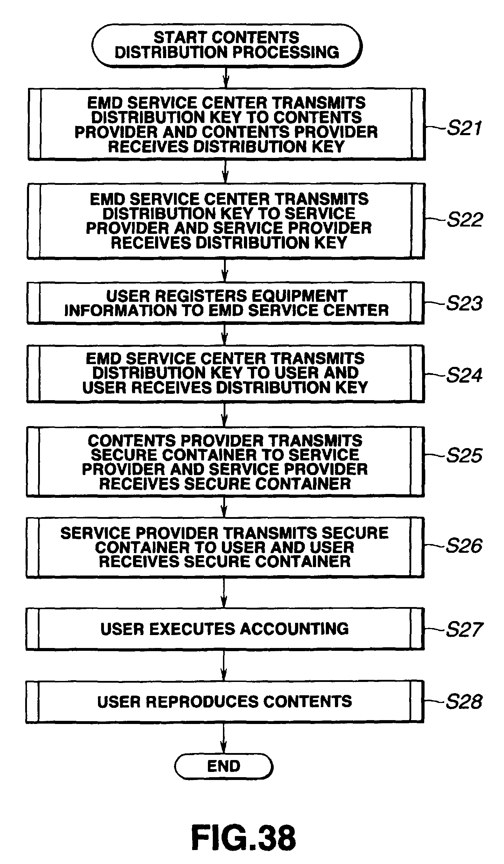

Meanwhile, the processing in which the contents provider 2 encrypts and then transmits the handling policy will now be described with reference to the flowchart of Fig.38. At step S21, the contents provider management section 12 of the EMD service center 1 transmits the distribution key Kd to the contents provider 2. At step S22, the service provider management section 11 of the EMD service center 1 transmits the distribution key Kd to the service provider 3. The processing of the subsequent steps S23 to S28 is similar to the processing of steps S12 to S17 of Fig.37 and therefore will not be described further in detail.

Fig.39 is a flowchart illustrating the details of the processing corresponding to step S11 of Fig.37 and step S21 of Fig.38, in which the EMD service center 1 transmits the distribution key Kd to the contents provider 2 and in which the contents provider 2 receives the distribution key Kd. At step S31, the mutual authentication section 17 of the EMD service center 1 carries out mutual authentication with the mutual authentication section 39 of the contents provider 2. The details of this mutual authentication processing will be described later with reference to Fig.40. When it is confirmed by the mutual authentication processing that the contents provider 2 is a valid provider, the encryption section 34 and the encryption section 36 of the contents provider 2, at step S32, receives the distribution key Kd transmitted from the contents provider management section 12 of the EMD service center 1. At step S33, the encryption section 34 of the contents provider 2 stores the received distribution key Kd.

The contents provider 2 thus receives the distribution key Kd from the EMD service center 1. Similarly, in the case of the processing of the flowchart shown in Fig.38, the service provider 3 as well as the contents provider 2 receives the distribution key Kd from the EMD service center 1 through the processing similar to that of Fig.39.

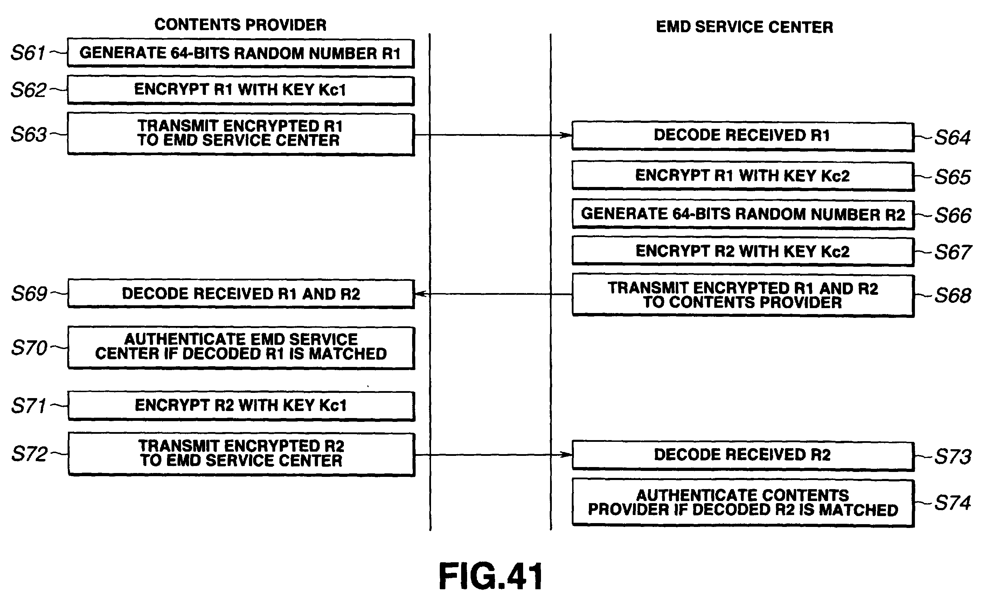

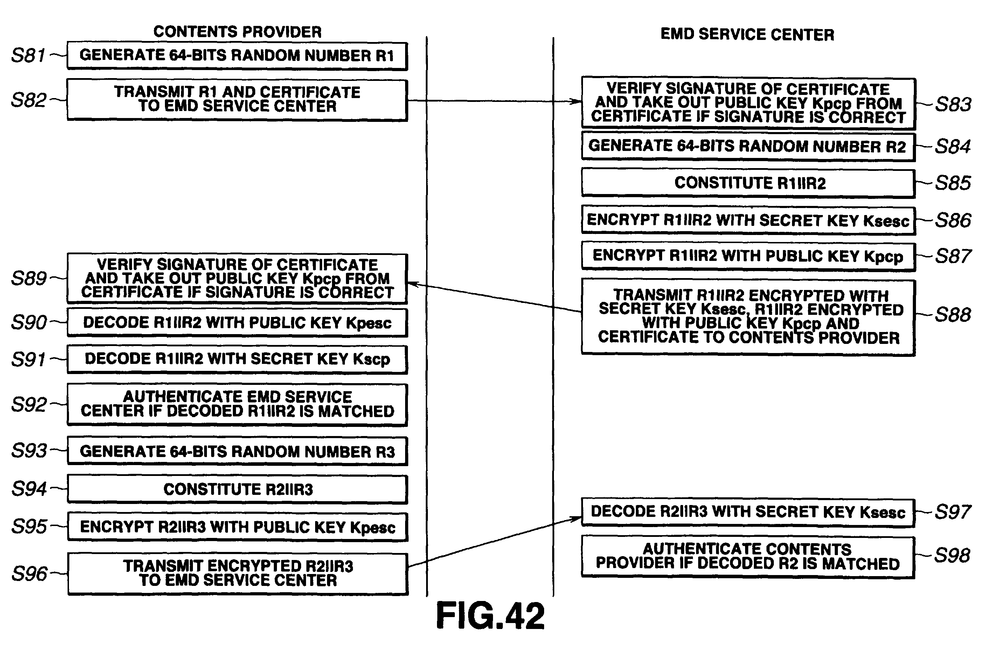

The mutual authentication processing at step S31 of Fig.39 for confirming the absence of so-called disguise will now be described with reference to examples in which one common key is used (Fig.40), two common keys are used (Fig.41), and public key encryption is used (Fig.42).

Fig.40 is a flowchart illustrating the operation of mutual authentication between the mutual authentication section 39 of the contents provider 2 and the mutual authentication section 17 of the EMD service center 1, using one common key and DES as common key encryption. At step S41, the mutual authentication section 39 of the contents provider 2 generates a 64-bit random number R1. (The random number generation section 35 may be caused to generate the random number.) At step S42, the mutual authentication section 39 of the contents provider 2 encrypts the random number R1 with the pre-stored common key Kc using DES. (The encryption section 36 may be caused to carry out encryption.) At step S43, the mutual authentication section 39 of the contents provider 2 transmits the encrypted random number R1 to the mutual authentication section 17 of the EMD service center 1.

At step S44, the mutual authentication section 17 of the EMD service center 1 decodes the received random number R1 with the pre-stored common key Kc. At step S45, the mutual authentication section 17 of the EMD service center 1 generates a 32-bit random number. At step S46, the mutual authentication section 17 of the EMD service center 1 replaces the lower 32 bits of the decoded 64-bit random number R1 by the random number R2, and thus generates concatenated $R1H||R2$. It is to be noted that RiH represents the upper bits of Ri and that $A||B$ represents concatenation of A and B (i.e., m-bit B is connected to the lower side of n-bit A to generate (n+m) bits). At step S47, the mutual authentication section 17 of the EMD service center 1 encrypts $R1H||R2$ with the common key Kc using DES. At step S48, the mutual authentication section 17 of the EMD service center 1 transmits the encrypted $R1H||R2$ to the contents provider 2.

At step S49, the mutual authentication section 39 of the contents provider 2 decodes the received R1H||R2 with the common key Kc. At step S50, the mutual authentication section 39 of the contents provider 2 checks the upper 32 bits, R1H, of the decoded R1H||R2, and authenticates the EMD service center 1 as a valid center if R1H is coincident with the upper 32 bits, R1H, of the random number R1 generated at step S41. If the generated random number R1H is not coincident with the received R1H, the processing ends. If both R1Hs are coincident with each other, the mutual authentication section 39 of the contents provider 2 at step S51 generates a 32-bit random number R3. At step S52, the mutual authentication section 39 of the contents provider 2 sets the received and decodes 32-bit random number R2 on the upper side and sets the generated random number R3 on the lower side, thus generated concatenated R2||R3. At step S53, the mutual authentication section 39 of the contents provider 2 encrypts the concatenated R2||R3 with the common key Kc using DES. At step S54, the mutual authentication section 39 of the contents provider 2 transmits the encrypted concatenated R2||R3 to the mutual authentication section 17 of the EMD service center 1.

At step S55, the mutual authentication section 17 of the EMD service center 1 decodes the received concatenated R2||R3 with the common key Kc. At step S56, the mutual authentication section 17 of the EMD service center 1 checks the upper 32 bits of the decoded concatenated R2||R3, and authenticates the contents provider 2 as a valid provider if the upper 32 bits are coincident with the random number R2. If the upper 32 bits are not coincident with the random number R2, the contents provider 2 is regarded as an unauthorized provider and the processing ends.

Fig.41 is a flowchart illustrating the operation of mutual authentication between the mutual authentication section 39 of the contents provider 2 and the mutual authentication section 17 of the EMD service center 1, using two common keys Kc1, Kc2 and DES as common key encryption. At step S61, the mutual authentication section 39 of the contents provider 2 generates a 64-bit random number R1. At step S62, the mutual authentication section 39 of the contents provider 2 encrypts the random number R1 with the pre-stored common key Kc1 using DES. At step S63, the mutual authentication section 39 of the contents provider 2 transmits the encrypted random number R1 to the EMD service center 1.

At step S64, the mutual authentication section 17 of the EMD service center 1 decodes the received random number R1 with the pre-stored common key Kc1. At step S65, the mutual authentication section 17 of the EMD service center 1 encrypts the random number R1 with the pre-stored common key Kc2. At step S66, the mutual authentication section 17 of the EMD service center 1 generates a 64-bit random number R2. At step S67, the mutual authentication section 17 of the EMD service center 1 encrypts the random number R2 with the common key Kc2. At step S68, the mutual authentication section 17 of the EMD service center 1 transmits the encrypted random number R1 and random number R2 to the mutual authentication section 39 of the contents provider 2.

At step S69, the mutual authentication section 39 of the contents provider 2 decodes the received random number R1 and random number R2 with the pre-stored common key Kc2. At step S70, the mutual authentication section 39 of the contents provider 2 checks the decoded random number R1, and authenticates the EMD service center 1 as a valid center if R1 is coincident with the random number R1 generated at step S61 (i.e., random number R1 before encryption). If R1 is not coincident, the EMD service center 1 is regarded as an unauthorized center and the processing ends. At step S71, the mutual authentication section 39 of the contents provider 2 encrypts the decoded random number R2 with the common key Kc1. At step S72, the mutual authentication section 39 of the contents provider 2 transmits the encrypted random number R2 to the EMD service center 1.

At step S73, the mutual authentication section 17 of the EMD service center 1 decodes the received random number R2 with the common key Kc1. At step S74, the mutual authentication section 17 of the EMD service center 1 authenticates the contents provider 2 as a valid provider if the decoded random number R2 is coincident with the random number R2 generated at step S66 (i.e., random number R2 before encryption). If the decoded random number R2 is not coincident with the random number R2 generated at step S66, the contents provider 2 is regarded as an unauthorized provider and the processing ends.

Fig.42 is a flowchart illustrating the operation of mutual authentication between the mutual authentication section 39 of the contents provider 2 and the mutual authentication section 17 of the EMD service center 1, using elliptic curve encryption of 160-bit length as public key encryption. At step S81, the mutual authentication section 39 of the contents provider 2 generates a 64-bit random number R1. At step S82, the mutual authentication section 39 of the contents provider 2 transmits a certificate (obtained in advance from the authentication station) including its own public key Kpcp, and the random number R1, to the mutual authentication section 17 of the EMD service center 1.

At step S83, the mutual authentication section 17 of the EMD service center 1 decodes the signature of the received certificate (encrypted with the secret key Ksca of the authentication station) with the public key Kpca of the authentication station that is obtained in advance. The mutual authentication section 17 of the EMD service center 1 thus takes out the public key Kpcp of the contents provider 2 and the hash value of the name of the contents provider 2, and also takes out the public key Kpcp of the contents provider 2 and the name of the contents provider 2 which are stored as a plaintext in the certificate. If the certificate is the valid one that is issued by the authentication station, the signature of the certificate can be decoded, and the public key Kpcp and the hash value of the name of the contents provider 2 obtained by decoding will be coincident with the public key Kpcp of the contents provider 2 stored as a plaintext in the certificate and the hash value obtained by applying the hash function to the name of the contents provider 2. Thus, the public key Kpcp is authenticated as a valid key that has not been tampered. If the signature cannot be decoded or if the signature can be decoded but the hash value is not coincident, the public key or the contents provider is not valid. In this case, the processing ends.

If the authentication result as being valid is obtained, the mutual authentication section 17 of the EMD service center 1 at step S84 generates a 64-bit random number R2. At step S85, the mutual authentication section 17 of the EMD service center 1 generates concatenated R1||R2 of the random number R1 and the random number R2. At step S86, the mutual authentication section 17 of the EMD service center 1 encrypts the concatenated R1||R2 with its own secret key Ksesc. At step S87, the mutual authentication section 17 of the EMD service center 1 encrypts the concatenated R1||R2 with the public key Kpcp of the contents provider 2 obtained at step S83. At step S88, the mutual authentication section 17 of the EMD service center 1 transmits the concatenated R1||R2 encrypted with the secret key Ksesc, the concatenated R1||R2 encrypted with the public key Kpcp, and the certificate including its own public key Kpesc (obtained in advance from the authentication station) to the mutual authentication section 39 of the contents provider 2.

At step S89, the mutual authentication section 39 of the contents provider 2 decodes the signature of the received certificate with the public key Kpca of the authentication station that is obtained in advance, and takes out the public key Kpesc from the certificate if the certificate is correct. The processing of this case is similar to step S83 and therefore will not be described further in detail. At step S90, the mutual authentication section 39 of the contents provider 2 decodes the concatenated R1||R2 encrypted with the secret key Ksesc of the EMD service center 1, with the public key Kpsec obtained at step S89. At step S91, the mutual authentication section 39 of the contents provider 2 decodes the concatenated R1||R2 encrypted with its own public key Kpcp, with its own secret key Kscp. At step S92, the mutual authentication section 39 of the contents provider 2 compares the concatenated R1||R2 decoded at step S90 with the concatenated R1||R2 decoded at step S91, and authenticates the EMD service center 1 as a valid center if both are coincident with each other. If not coincident, the EMD service center 1 is regarded as an inappropriate center and the processing ends.

If the authentication result as being valid is obtained, the mutual authentication section 39 of the contents provider 2 at step S93 generates a 64-bit random number R3. At step S94, the mutual authentication section 39 of the contents provider 2 generates concatenated R2||R3 of the random number R2 obtained at step S90 and the generated random number R3. At step S95, the mutual authentication section 39 of the contents provider 2 encrypts the concatenated R2||R3 with the public key Kpesc obtained at step S89. At step S96, the mutual authentication section 39 of the contents provider 2 transmits the encrypted concatenated R2||R3 to the mutual authentication section 17 of the EMD service center 1.

At step S97, the mutual authentication section 17 of the EMD service center 1 decodes the encrypted concatenated R2||R3 with its own secret key Ksesc. At step S98, the mutual authentication section 17 of the EMD service center 1 authenticates the contents provider 2 as an appropriate provider if the decoded random number R2 is coincident with the random number R2 generated at step S84 (i.e., random number R2 before encryption). If not coincident, the contents provider 2 is regarded as an inappropriate provider and the processing ends.

As described above, the mutual authentication section 17 of the EMD service center 1 and the mutual authentication section 39 of the contents provider 2 carry out mutual authentication. The random numbers used for mutual authentication are used as the temporary key Ktemp which is effective only for the processing subsequent to the mutual authentication.

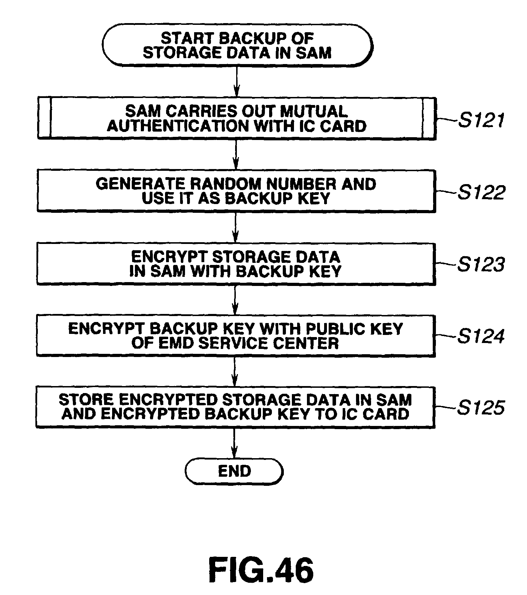

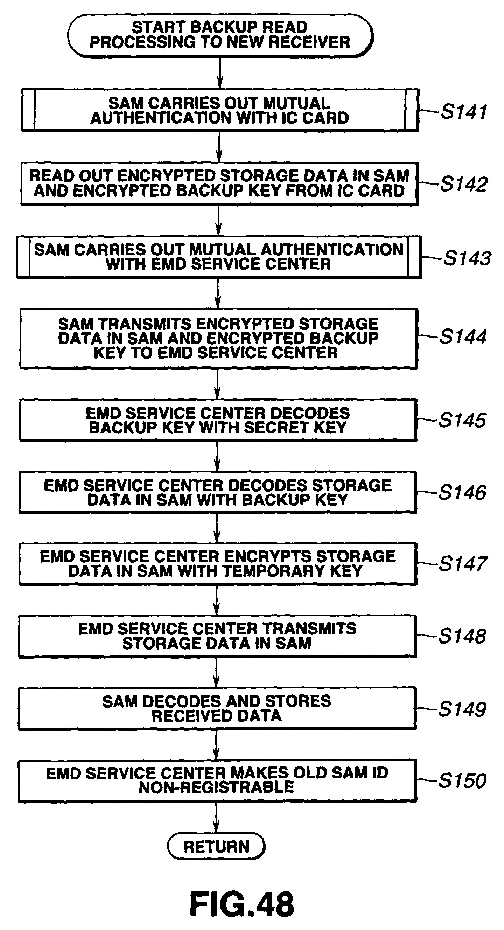

Fig.43 is a flowchart illustrating the processing corresponding to step S12 of Fig.37 and step S23 of Fig.38, in which the receiver 51 makes registration to the user management section 18 of the EMD service center 1. At step S101, the SAM 62 of the receiver 51 determines whether a backup IC card 55 is loaded in the receiver 51 or not. If it is determined that the backup IC card 55 is loaded (e.g., if the receiver 51 is changed to a new receiver 51, and the data of the original receiver 51 is stored for backup on the backup IC card 55 so as to hand over the data of the original receiver 51 to the new receiver 51), the processing goes to step S102 and processing for reading the backup data stored on the IC card 55 is executed. The details of this processing will be described later with reference to the flowchart of Fig.48. Of course, to execute the read processing, it is necessary to store the backup data onto the IC card 55 in advance. This processing will be described later with reference to Fig.46.

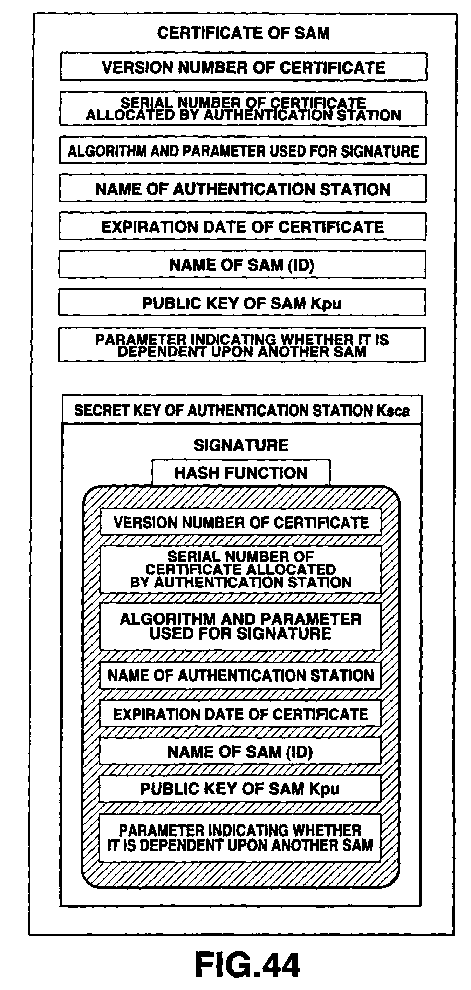

If it is determined at step S101 that the backup IC card 55 is not loaded, the processing goes to step S103. At step S103, the mutual authentication module 71 of the SAM 62 carries out mutual authentication with the mutual authentication section 17 of the EMD service center 1, and the SAM 62 transmits the certificate to the user management section 18 of the EMD service center 1. This authentication processing is similar to the processing described with reference to Figs.40 to 42 and therefore will not be described further in detail. The certificate transmitted from the SAM 62 to the user management section 18 of the EMD service center 1 at step S103 includes the data shown in Fig.44. The certificate transmitted from the SAM 62 has a structure similar that of the certificate of the contents provider 2 shown in Fig. 14, but further includes data indicating whether it is dependent upon another SAM or not. At step S104, the SAM 62 transmits the information of the settlement institution such as the user's bank, encrypted with the temporary key Ktemp, to the user management section 18 of the EMD service center 1 through the communication section 61.

At step S105, the user management section 18 of the EMD service center 1 retrieves the user registration database shown in Fig.7 on the basis of the received ID of the SAM 62. At step S106, the user management section 18 of the EMD service center 1 determines whether the SAM 62 having the received ID is registrable or not. If it is determined that the SAM 62 having the received ID is registrable, the processing goes to step S107 to determine whether the registration of the SAM 62 having the received ID is new registration or not. If it is determined at step S107 that the registration of the SAM 62 having the received ID is not new registration, the processing goes to step S108.

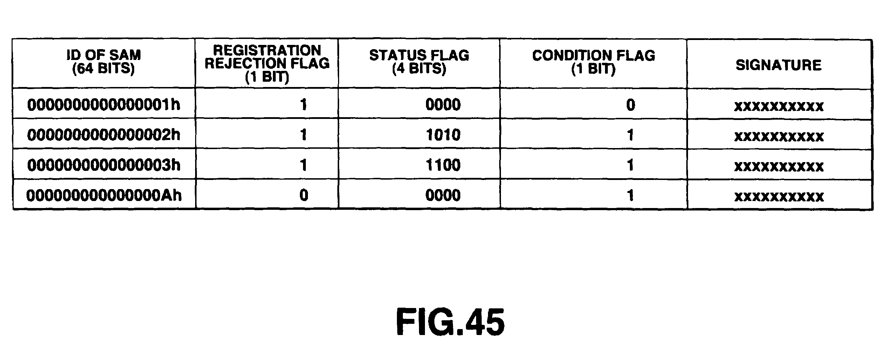

At step S108, the user management section 18 of the EMD service center 1 carries out renewal registration, retrieves the user registration database on the basis of the received ID, and prepares a registration list. This registration list has a structure, for example, as shown in Fig.45, including a registration rejection flag indicating whether the user management section 18 of the EMD service center 1 has rejected the registration or not, a status flag indicating the use condition for the contents key Kco in the case of a subordinate equipment, a condition flag indicating whether the equipment is a subordinate equipment or not, and signature obtained by encrypting a hash value generated by applying a hash function to the registration rejection flag, status flag and condition flag, with the secret key Ksesc of the EMD service center 1, in accordance with the ID of the SAM of the equipment.

The ID of the SAM of the equipment indicates ID consisting of 64 bits proper to the equipment. (In Fig.45, the ID is expressed by hexadecimal.) The registration rejection flag "1" indicates that the user management section 18 of the EMD service center 1 has registered the equipment having the corresponding ID. The registration rejection flag "0" indicates that the user management section 18 of the EMD service center 1 has rejected the registration of the equipment having the corresponding ID.

The MSB (most significant bit) "1" of the status flag indicates that the contents key Kco can be provided from the primary equipment (e.g., receiver 51) to which the secondary equipment (e.g., recorder 53) of the corresponding ID is subordinate. The MSB "0" of the status flag indicates that the contents key Kco cannot be provided from the primary equipment to which the secondary equipment of the corresponding ID is subordinate. The second most significant bit "1" of the status flag indicates that the contents key Kco encrypted with the save key Ksave of the primary equipment can be provided from the primary equipment to which the secondary equipment of the corresponding ID is subordinate. The third most significant bit "1" indicates that the contents key Kco encrypted with the distribution key Kd can be provided from the primary equipment to which the secondary equipment of the corresponding ID is subordinate. The LSB (least significant bit) "1" of the status flag indicates that the primary equipment to which the secondary equipment is subordinate purchases the contents key Kco encrypted with the distribution key Kd, then encrypts the contents key Kco with the temporary key Ktemp, and provides the resultant contents key Kco to the secondary equipment of the corresponding ID.

The condition flag "0" indicates that the equipment having the corresponding ID can directly communicate with the user management section 18 of the EMD service center 1 (i.e., the equipment is the primary equipment such as the receiver 51). The condition flag "1 "indicates that the equipment having the corresponding ID cannot directly communicate with the user management section 18 of the EMD service center 1 (i.e., the equipment is the secondary equipment such as the recorder 53). Whenever the condition flag is "0", the status flag is set to "0000".

At step S109, the user management section 18 of the EMD service center 1 transmits the distribution key Kd which is encrypted with the temporary key Ktemp supplied from the mutual authentication section 17 and which is supplied from the key server 14, to the SAM 62 of the receiver 51. At step S110, the SAM 62 of the receiver 51 decodes the received distribution key Kd with the temporary key Ktemp and causes the storage module 73 store the decoded distribution key Kd.

At step S111, the user management section 18 of the EMD service center 1 transmits the registration list encrypted with the temporary key Ktemp to the SAM 62 of the receiver 51. At step S112, the SAM 62 of the receiver 51 decodes the received registration list with the temporary key Ktemp and causes the storage module 73 to store the decoded registration list. The processing then ends.

If it is determined at step S107 that the registration of the SAM 62 having the received ID is new registration, the processing goes to step S114. The user management section 118 of the EMD service center 1 executes new registration, then prepares a registration list, and proceeds to step S109.

If it is determined at step S106 that the SAM 62 having the received ID is not registrable, the processing goes to step S113. The user management section 18 of the EMD service center 1 prepares a registration list of registration rejection and proceeds to step S111.

The receiver 51 is thus registered to the EMD service center 1.

The details of the processing for storing, onto the IC card 55, predetermined data such as the distribution key Kd stored in the storage module 73 of the receiver 51 that has been used, will now be described with reference to the flowchart of Fig.46. At step S121, the mutual authentication module 71 of the SAM 62 carries out mutual authentication with the mutual authentication module 80 of the IC card 55. This authentication processing is similar to the processing described with reference to Figs.40 to 42 and therefore will not be described further in detail. At step S122, the random number generation unit 92 of the SAM 62 generates a random number used as a backup key Kic. At step S123, the encryption unit 93 of the SAM 62 encrypts the ID number of the SAM, save key Ksave and ID of the HDD 52 stored in the storage module 73, with the backup key Kic. At step S124, the encryption unit 93 of the SAM 62 encrypts the backup key Kic with the public key Kpesc of the EMD service center 1. (The SAM 62 obtained the public key Kpesc of the EMD service center 1 in the authentication processing (step S89 of Fig.42) with the EMD service center 1.) At step S125, the SAM 62 of the receiver 51 transmits the encrypted ID number of the SAM, save key Ksave and ID of the HDD 52, and the encrypted backup key Kic, to the IC card 55 via the IC card interface 64, and causes the storage module 81 to store these data.

As described above, the ID number of the SAM, save key Ksave and ID of the HDD 52 stored in the storage module 73 of the SAM 62 are encrypted with the backup key Kic, and stored into the storage module 81 of the IC card 55 together with the backup key Kic encrypted with the public key Kpesc of the EMD service center 1.

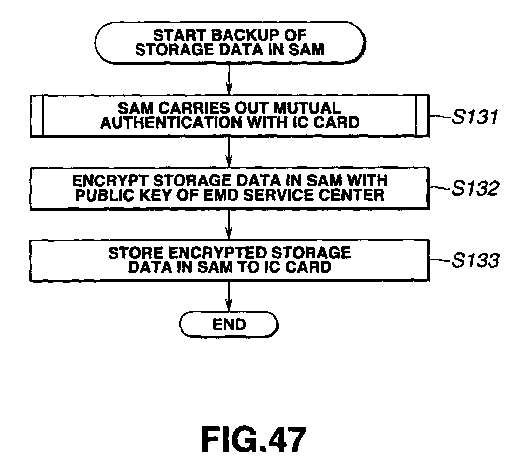

The details of another processing example for storing, onto the IC card 55, predetermined data such as the distribution key Kd stored in the storage module 73 of the receiver 51 that has been used, will now be described with reference to the flowchart of Fig.47. At step S131, the mutual authentication module 71 of the SAM 62 carries out mutual authentication with the mutual authentication module 80 of the IC card 55. At step S132, the encryption unit 93 of the SAM 62 encrypts the ID number of the SAM, save key Ksave and ID of the HDD 52 stored in the storage module 73, with the public key Kpesc of the EMD service center 1. At step S133, the SAM 62 of the receiver 51 transmits the encrypted ID number of the SAM, save key Ksave and ID of the HDD 52 to the IC card 55 via the IC card interface 64, and causes the storage module 81 to store these data.

In accordance with the processing shown in Fig.47, the ID number of the SAM, save key Ksave and ID of the HDD 52 encrypted with the public key Kpesc of the EMD service center 1 are stored into the storage module 81 of the IC card 55 by more simple processing than that of Fig.46.

The backup data thus stored on the IC card 55 are read into the new receiver 51 in the processing of step S102 of Fig.43. Fig.48 is a flowchart illustrating the processing for reading out the backup data stored in the processing of Fig.46. At step S141, the mutual authentication module 71 of the SAM 62 of the new receiver 51 carries out mutual authentication with the mutual authentication module 80 of the IC card 55. This authentication processing is similar to the processing described with reference to Figs.40 to 42 and therefore will not be described further in detail.

At step S142, the SAM 62 reads out, via the IC card interface 64, the data of the storage module 73 of the old receiver 51 (i.e., backup data indicating the ID number of the SAM, save key Ksave and ID of the HDD 52) encrypted with the backup key Kic and the backup key Kic encrypted with the public key Kpesc of the EMD service center 1, which are stored in the storage module 81. At step S143, the mutual authentication module 71 of the SAM 62 carries out mutual authentication with the mutual authentication section 17 of the EMD service center 1 via the communication section 61. This authentication processing is similar to the processing described with reference to Figs.40 to 42 and therefore will not be described further in detail. At step S144, the SAM 62 transmits the data of the storage module 73 encrypted with the backup key Kic and the backup key Kic encrypted with the public key Kpesc of the EMD service center 1 to the user management section 18 of the EMD service center 1 via the communication section 61.

At step S145, the user management section 18 of the EMD service center 1 decodes the received backup key Kic with its own secret key Ksesc. At step S146, the user management section 18 of the EMD service center 1 decodes the received backup data with the backup key Kic. At step S147, the user management section 18 of the EMD service center 1 re-encrypts the decoded backup data with the temporary key Ktemp supplied from the mutual authentication section 17. At step S148, the user management section 18 of the EMD service center 1 transmits the backup data encrypted with the temporary key Ktemp to the communication section 61 of the receiver 51.

At step S149, the communication section 61 of the receiver 51 transmits to the SAM 62 the data received from the user management section 18 of the EMD service center 1, and the SAM 62 decodes the data and then stores the data to the storage module 73. At step S150, the user management section 18 of the EMD service center 1 sets the data of the user registration database (Fig.7) corresponding to the ID of the SAM 62 of the old equipment the data of which is stored on the IC card 55, as being non-registrable, and the processing ends.

The new receiver 51 thus reads the backup data of the IC card 55.

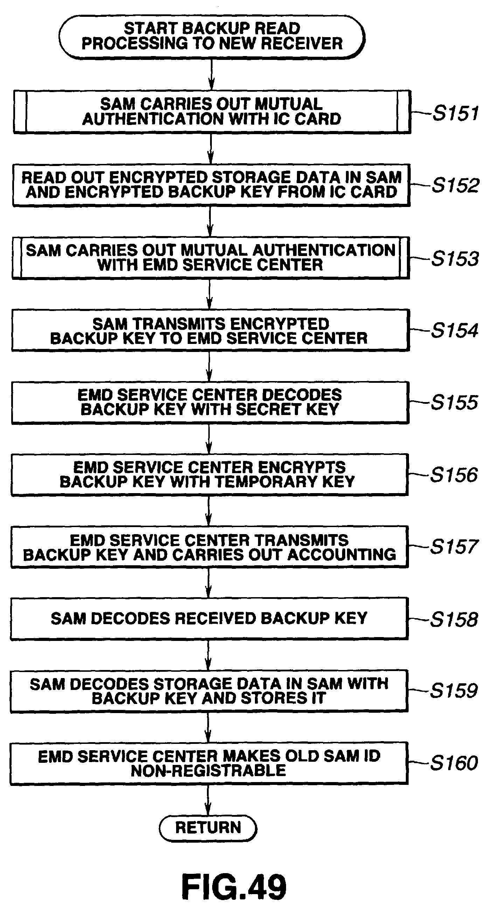

The processing of step S102 of Fig.43 may also be the processing as described with reference to the flowchart of Fig.49. Steps S151 to S153 are similar to steps S141 to S143 of Fig.48 and therefore will not be described further in detail. At step S154, the SAM 62 transmits the backup key Kic encrypted with the public key Kpesc of the EMD service center 1 to the user management section 18 of the EMD service center 1 via the communication section 61.

At step S155, the user management section 18 of the EMD service center 1 decodes the received backup key Kic with its own secret key Ksesc. At step S156, the user management section 18 of the EMD service center 1 re-encrypts the decoded backup key Kic with the temporary key Ktemp supplied from the mutual authentication section 17. At step S157, the user management section 18 of the EMD service center 1 transmits the backup key Kic encrypted with the temporary key Ktemp to the communication section 61 of the receiver 51, and carries out processing for accounting with respect to the service of decoding the backup key Kic to the user.

At step S158, the communication section 61 of the receiver 51 transmits to the SAM 62 the backup key Kic encrypted with the temporary key Ktemp received from the user management section 18 of the EMD service center 1, and the SAM 62 decodes the encrypted backup key Kic with the temporary key Ktemp. At step S159, the SAM 62 decodes the data of the storage module 73 of the old receiver 51 (i.e., backup data indicating the ID number of the SAM, save key Ksave and ID of the HDD 52) read out from the IC card 55 at step S152, with the decoded backup key Kic, and stores the resultant data to the storage module 73. At step S160, the user management section 18 of the EMD service center 1 sets the user registration database (Fig.7) corresponding to the ID of the SAM 62 of the old equipment the data of which is stored on the IC card 55, as being non-registrable, and the processing ends.

The read processing shown in Fig.49 enables reduction in the quantity of data transmitted between the receiver 51 and the EMD service center 1 and thus enables reduction in the communication time, compared with the processing of Fig.43. At step S148 of Fig.48, similar to step S157 of Fig.49, the EMD service center 1 may carry out the processing for accounting.

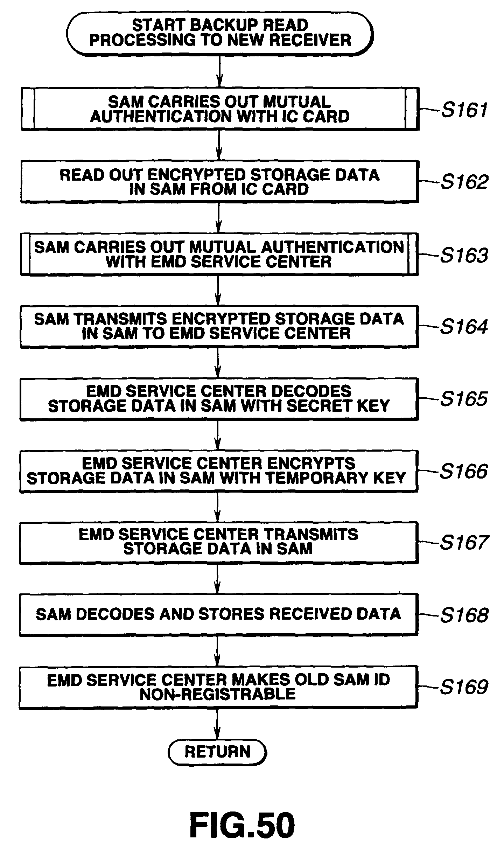

The processing for reading out the backup data stored in the processing of Fig.47 will now be described with reference to the flowchart of Fig.50. At step S161, the mutual authentication module 71 of the SAM 62 of the new receiver 51 carries out mutual authentication with the mutual authentication module 80 of the IC card 55. This authentication processing is similar to the processing described with reference to Figs.40 to 42 and therefore will not be described further in detail. At step S162, the SAM 62 reads out the data of the storage module 73 of the old receiver 51 (i.e., backup data indicating the ID number of the SAM, save key Ksave and ID of the HDD 52) encrypted with the public key Kpesc of the EMD service center 1, via the IC card interface 64.

At step S163, the mutual authentication module 71 of the SAM 62 carries out mutual authentication with the mutual authentication section 17 of the EMD service center 1 via the communication section 61. This authentication processing is similar to the processing described with reference to Figs.40 to 42 and therefore will not be described further in detail. At step S164, the SAM 62 transmits the data of the storage module 73 encrypted with the public key Kpesc of the EMD service center 1 to the user management section 18 of the EMD service center 1 via the communication section 61.

At step S165, the user management section 18 of the EMD service center 1 decodes the received data of the storage module 73 with its own secret key Ksesc. At step S166, the user management section 18 of the EMD service center 1 re-encrypts the decoded backup data with the temporary key supplied from the mutual authentication section 17. At step S167, the user management section 18 of the EMD service center 1 transmits the backup data encrypted with the temporary key Ktemp to the communication section 61 of the receiver 51.

At step S168, the communication section 61 of the receiver 51 transmits the data received from the user management section 18 of the EMD service center 1 to the SAM 62, and the SAM 62 decodes the data and then stores the data to the storage module 73. At step S169, the user management section 18 of the EMD service center 1 sets the data of the user registration database (Fig.7) corresponding the ID of the SAM 62 of the old equipment the data of which is stored on the IC card 55, as being non-registrable.

Thus, in the backup processing using the processing of Fig.47, the new receiver 51 reads the backup data on the IC card 55 through the processing of Fig. 50.

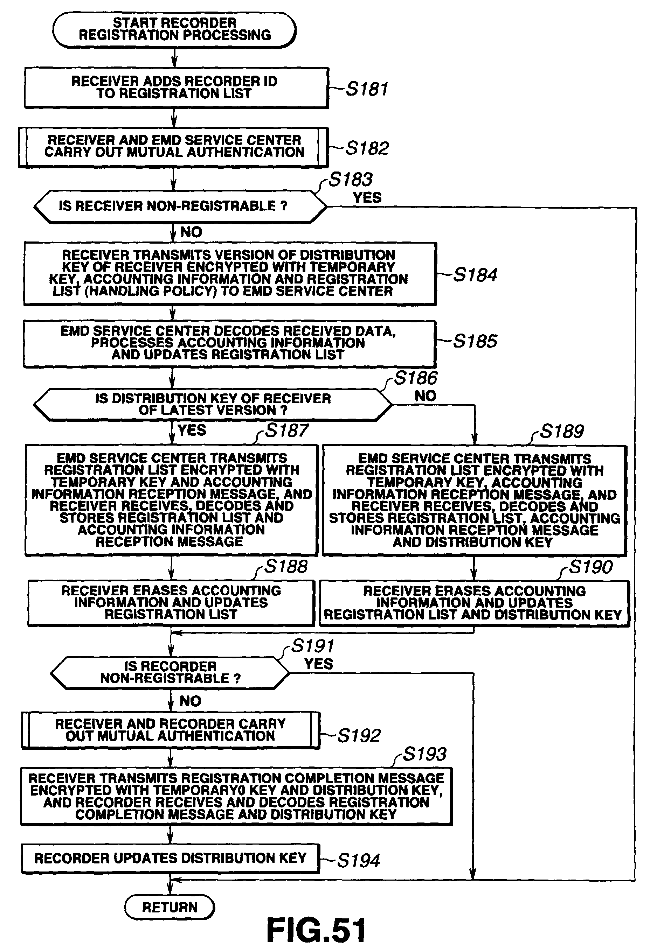

When registering itself (i.e., executing the processing corresponding to step S12 of Fig.37), the receiver 51 executes the processing shown in the flowchart of Fig.43. However, when registering the recorder 53 dependent upon the receiver 51 to the EMD service center 1, the receiver 51 executes the processing shown in the flowchart of Fig.51. At step S181, the SAM 62 of the receiver 51 writes the ID of the recorder 53 to the registration list stored in the storage module 73. At step S182, the mutual authentication module 71 of the receiver 51 carries out mutual authentication with the mutual authentication section 17 of the EMD service center 1. This authentication processing is similar to the case described with reference to Figs.40 to 42 and therefore will not be described further in detail.

At step S183, the user management section 18 of the EMD service center 1 retrieves the user registration database on the basis of the ID of the receiver 51 (i.e., ID of the SAM 62 included in the certificate of the SAM 62 shown in Fig.44), and determined whether the receiver 51 is non-registrable or not. If it is determined that the receiver 51 is not non-registrable. The processing goes to step S184 and the SAM 62 of the receiver 51 encrypts the version of the distribution key Kd stored in the storage module 73, the accounting information (stored in the processing of step S337 of the flowchart of Fig.56), the registration list, and if necessary, the handling policy with the temporary key Ktemp, and transmits the resultant data to the user management section 18 of the EMD service center 1 via the communication section 61. At step S185, the user management section 18 of the EMD service center 1 decodes the received data and then processes the accounting information. Then, the user management section 18 of the EMD service center 1 updates the data portions such as the registration rejection flag and status flag related to the recorder 53 of the registration list received from the receiver 51, described with reference to Fig.45, and appends the signature for the data corresponding to the receiver 51. Although, in this case, the data are encrypted with the temporary key Ktemp and then transmitted, encryption need not be carried out as a matter of course.

At step S186, the user management section 18 of the EMD service center 1 determines whether the distribution key Kd held by the receiver 51 is of the latest version or not. If it is determined that the distribution key Kd held by the receiver 51 is of the latest version, the processing goes to step S187. The updated registration list and accounting information reception message, encrypted with the temporary key Ktemp, are transmitted to the receiver 51, and the receiver 51 receives the updated registration list and accounting information reception message and then decodes and stores these data. At step S188, the receiver 51 erases the accounting information stored in the storage module 73, then updates the registration list to the registration list received at S187 from the user management section 18 of the EMD service center 1, and then proceeds to step S191.

If it is determined at step S186 that the distribution key Kd held by the receiver 51 is not of the latest version, the processing goes to step S189. The user management section 18 of the EMD service center 1 transmits the distribution key Kd of the latest version and the updated registration list and accounting information reception message, which are encrypted with the temporary key Ktemp, to the receiver 51. The receiver 51 receives the distribution key Kd of the latest version and the updated registration list and accounting information reception message, and then decodes and stores these data. At step S190, the receiver 51 erases the accounting information stored in the storage module 73, then updates the registration list to the registration list received at S189 from the user management section 18 of the EMD service center 1, then updates the distribution key Kd to the distribution key Kd of the latest version, and proceeds to step S191.

At step S191, the SAM 62 of the receiver 51 determines whether the recorder 53 is non-registrable or not, with reference to the updated registration list. If it is determined that the recorder 53 is not non-registrable, the processing goes to step S192. The receiver 51 and the recorder 53 carry out mutual authentication and share the temporary key Ktemp. This authentication processing is similar to the processing described with reference to Figs.40 to 42 and therefore will not be described further in detail. At step S193, the registration completion message and distribution key Kd, encrypted with the temporary key Ktemp, are transmitted to the recorder 53. The recorder 53 receives and decodes the registration completion message and distribution key Kd. At step S194, the recorder 53 updates the distribution key Kd and the processing ends.

If it is determined at step S183 that the receiver 51 is non-registrable, or if it is determined at step S191 that the recorder 53 is non-registrable, the processing ends.

The recorder 53 dependent on the receiver 51 is thus registered to the EMD service center 1 via the receiver 51.

Fig.52 is a flowchart illustrating the details of the processing in which the receiver 51 receives the distribution key Kd transmitted from the EMD service center 1 at step S13 of Fig.37. At step S201, the mutual authentication module 71 of the receiver 51 carries out mutual authentication with the mutual authentication section 17 of the EMD service center 1. This authentication processing is similar to the processing described with reference to Figs.40 to 42 and therefore will not be described further in detail. At step S202, the SAM 62 of the receiver 51 transmits the certificate to the user management section 18 of the EMD service center 1 via the communication section 61, and the user management section 18 of the EMD service center 1 receives the certificate. The processing of steps S203 to S210 is similar to the processing of steps S183 to S190 of Fig.51 and therefore will not be described further in detail.

The receiver 51 thus receives the distribution key Kd from the user management section 18 of the EMD service center 1 and transmits the accounting information of the receiver 51 to the user management section 18 of the EMD service center 1.

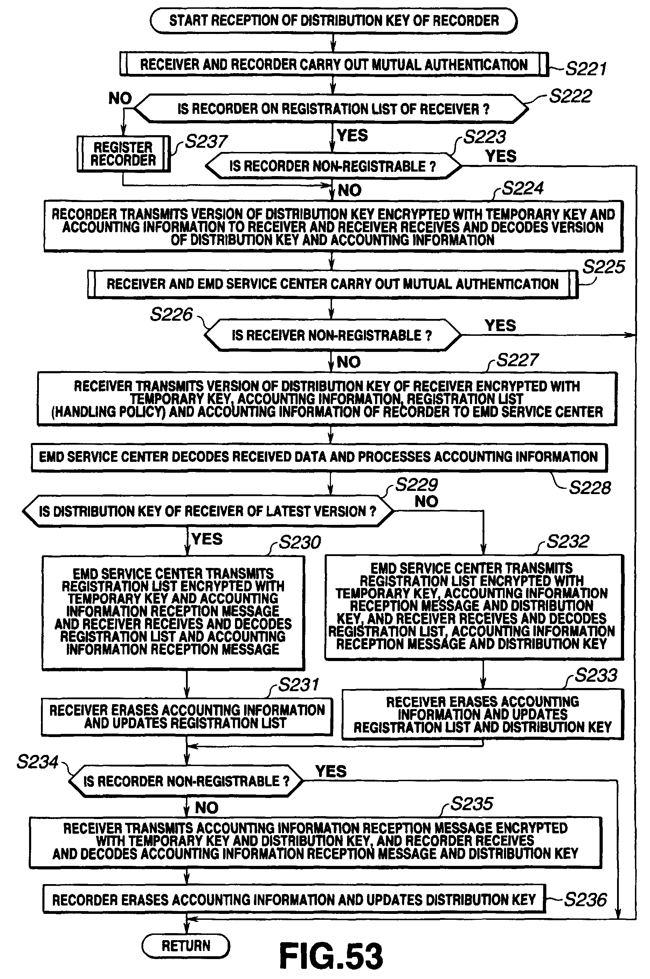

The processing for receiving the distribution key Kd by the recorder 53 dependent on the receiver 51 (i.e., the status flag of Fig.45 has a value permitting the reception of the distribution key Kd by the recorder 53) in the case where the user network 5 has the structure shown in Fig. 10 or Fig. 11 will now be described with reference to the flowchart of Fig.53. At step S221, the mutual authentication module 71 of the receiver 51 and a mutual authentication module, not shown, of the recorder 53 carry out mutual authentication. This authentication processing is similar to the processing described with reference to Figs.40 to 42 and therefore will not be described further in detail.

At step S222, the receiver 51 determines whether or not the data of the recorder 53 is on the registration list to be stored in the storage module 73 of the receiver 51. If it is determined that the data of the recorder 53 is on the registration list to be stored in the storage module 73 of the receiver 51, the processing goes to step S223 and it is determined whether the recorder 53 is non-registrable or not on the basis of the registration list to be stored in the storage module 73 of the receiver 51. If it is determined at step S223 that the recorder 53 is not non-registrable, the processing goes to step S224. The SAM 66 of the recorder 53 encrypts the version of the distribution key Kd (received from the receiver 51 at step S235 of Fig.53, later described) stored in the built-in storage module and the accounting information (stored in the processing corresponding to step S337 of the processing corresponding to Fig.56, later described) with the temporary key Ktemp, and transmits the resultant data. The SAM 62 of the receiver 51 receives and decodes the version of the distribution key Kd and the accounting information.

At step S225, the mutual authentication module 71 of the receiver 51 carries out mutual authentication with the mutual authentication section 17 of the EMD service center 1 via the communication section 61. This authentication processing is similar to the processing described with reference to Figs.40 to 42 and therefore will not be described further in detail. At step S226, the user management section 18 of the EMD service center 1 retrieves the user registration database on the basis of the ID of the receiver 51, and determines whether the receiver 51 is non-registrable or not. If it is determined that the receiver 51 is not non-registrable, the processing goes to step S227 and the SAM 62 of the receiver 51 transmits the version of the distribution key Kd stored in the storage module 73, the accounting information, the registration list, and if necessary, the handling policy and the accounting information of the recorder 53, to the user management section 18 of the EMD service center 1 via the communication section 61. At step S228, the user management section 18 of the EMD service center 1 decodes the received data, then processes the accounting information, then updates the data portions such as the registration rejection flag and status flag related to the recorder 53 of the registration list received from the receiver 51, described with reference to Fig.45, and then appends the signature for to the data corresponding to the receiver 51.

The processing of steps 229 to S234 is similar to the processing of steps S186 to S191 of Fig.51 and therefore will not be described further in detail.

At step S234, the SAM 62 of the receiver 51 determines whether the recorder 53 is non-registrable or not, with reference to the updated registration list. If it is determined that the recorder 53 is not non-registrable, the processing goes to step S235. The accounting information reception message and distribution key Kd , encrypted with the temporary key Ktemp, are transmitted to the recorder 53. The recorder 53 receives and decodes the accounting information reception message and distribution key Kd. At step S236, the SAM 66 of the recorder 53 erases the accounting information stored in the built-in storage module and updates the distribution key Kd to the latest version.

If it is determined at step S222 that the data of the recorder 53 is not on the registration list to be stored in the storage module 73 of the receiver 51, the processing goes to step S237 to execute the registration processing of the recorder 53 shown in Fig.51. The processing then goes to step S224.

If it is determined at step S223 that the recorder 53 is non-registrable, or if it is determined at step S226 that the receiver 51 is non-registrable, or if it is determined at step S234 that the recorder 53 is non-registrable, the processing ends.

The recorder 53 dependent on the receiver 51 thus receives the distribution key Kd via the receiver 51.

The processing corresponding to step S14 of Fig.37 in which the contents provider 2 transmits the contents provider secure container to the service provider 3 will now be described with reference to the flowchart of Fig.54. At step S251, the watermark appending section 32 of the contents provider 2 appends predetermined data indicating the contents provider 2 (such as the contents provider ID) as a watermark to the contents read out from the contents server 31, and supplies the resultant data to the compression section 33. At step S252, the compression section 33 of the contents provider 2 compresses the contents having the watermark inserted therein, in accordance with a predetermined system such as ATRAC, and supplies the compressed contents to the encryption section 34. At step S253, the random number generation section 35 generates a random number to be used as the contents key Kco and supplies it to the encryption section 34. At step S254, the encryption section 34 of the contents provider 2 encrypts the compressed contents having the watermark inserted therein, using the contents key Kco in accordance with a predetermined system such as DES.

At step S255, the encryption section 36 encrypts the contents key Kco with the distribution key Kd supplied from the EMD service center 1, through the processing of step S11 of Fig.37, in accordance with a predetermined system such as DES. At step S256, the secure container preparation section 38 of the contents provider 2 calculates a hash value by applying a hash function to the encrypted contents, the encrypted contents key Kco and the handling policy supplied from the policy storage section 37, and then encrypts the hash value with its own secret key Kscp, thus preparing the signature as shown in Fig.13. At step S257, the secure container preparation section 38 of the contents provider 2 prepares the contents provider secure container, as shown in Fig. 13, including the encrypted contents, the encrypted contents key Kco, the handling policy supplied from the policy storage section 37 and the signature generated at step S256.

At step S258, the mutual authentication section 39 of the contents provider 2 carries out mutual authentication with the mutual authentication section 45 of the service provider 3. This authentication processing is similar to the processing described with reference to Figs.40 to 42 and therefore will not be described further in detail. At step S259, the secure container preparation section 38 of the contents provider 2 appends the certificate issued in advance from the authentication station to the contents provider secure container, and transmits the resultant contents provider secure container to the service provider 3. Then, the processing ends.

The contents provider 2 thus transmits the contents provider secure container to the service provider 3.

The details of the processing corresponding to step S15 of Fig.37 in which the service provider 3 transmits the service provider secure container to the receiver 51 will now be described with reference to the flowchart of Fig.55. At step 291, the pricing section 42 of the service provider 3 confirms the signature included in the certificate appended to the contents provider secure container transmitted from the secure container preparation section 38 of the contents provider 2, and takes out the public key Kpcp of the contents provider 2 if there is no tampering in the certificate. The confirmation of the certificate is similar to the processing of step S83 of Fig.42 and therefore will not be described further in detail.

At step S292, the pricing section 42 of the service provider 3 decodes the signature of the contents provider secure container transmitted from the secure container preparation section 38 of the contents provider 2 with the public key Kpcp of the contents provider 2, and confirming that the resultant hash value is coincident with the hash value obtained by applying the hash function to encrypted contents, encrypted contents key Kco and handling policy, thus confirming that there is no tampering made in the contents provider secure container. If tampering is found, the processing ends.

If there is no tampering made in the contents provider secure container, the pricing section 42 of the service provider 3 at step S293 takes out the handling policy from the contents provider secure container. At step S294, the pricing section 42 of the service provider 3 prepares the price information described with reference to Fig.17, on the basis of the handling policy. At step S295, the secure container preparation section 44 of the service provider 3 encrypts the encrypted contents, encrypted contents key Kco, handling policy and price information, and the hash value obtained by applying the hash function to these data, with its own secret key Kssp, and uses the resultant value as the signature so as to prepare the service provider secure container as shown in Fig.15.

At step S296, the mutual authentication section 45 of the service provider 3 carries out mutual authentication with the mutual authentication module 71 of the receiver 51. This authentication processing is similar to the processing described with reference to Figs.40 to 42 and therefore will not be described further in detail. At step S297, the secure container preparation section 44 of the service provider 3 transmits the service provider secure container with the certificate appended thereto to the communication section 61 of the receiver 51, and the processing ends.

The service provider 32 thus transmits the service provider secure container to the receiver 51.

The details of the accounting of the receiver 51 after receiving the appropriate service provider secure container, corresponding to step S16 of Fig.37, in the case where the user network 5 has the structure of Fig. 10 or Fig. 11, will now be described with reference to the flowchart of Fig.56. At step S331, the decoding/encryption module 74 of the receiver 51 determines whether the contents key Kco can be decoded with the distribution key Kd or not. If it is determined that the contents key Kco cannot be decoded with the distribution key Kd, the receiver 51 at step S332 carries out the processing for receiving the distribution key Kd described with reference to Fig.52 and proceeds to step S333. If it is determined at step S331 that the contents key Kco can be decoded with the distribution key Kd, the processing goes to step S333. At step S333, the decoding unit 91 of the receiver 51 decodes the contents key Kco with the distribution key Kd stored in the storage module 73 in accordance with the processing of step S13 of Fig.37.

At step S334, the accounting module 72 of the receiver 51 takes out the handling policy and price information included in the service provider secure container, and generates the accounting information and use permission information described with reference to Figs.19 and 20. At step S335, the accounting module 72 of the receiver 51 determines whether or not the current accounting is equal to or more than the upper limit of accounting, from the accounting information stored in the storage module 73 and the accounting information calculated at step S334. If it is determined that the current accounting is equal to or more than the upper limit of accounting, the processing goes to step S336. The receiver 51 carries out the processing for receiving the distribution key Kd described with reference to Fig.52, then receives the new distribution key Kd, and advances to step S337. If it is determined at step S335 that the current accounting is less than the upper limit of accounting, the processing goes to step S337.

At step S337, the accounting module 72 of the receiver 51 stores the accounting information to the storage module 73. At step S338, the accounting module 72 of the receiver 51 records the use permission generation information generated at step S334 to the HDD 52. At step S339, the SAM 62 of the receiver 51 records the handling policy taken out from the service provider secure container to the HDD 52.

At step S340, the decoding/encryption module 74 of the receiver 51 applies the hash function to the use permission information so as to calculate the hash value. At step S341, the storage module 73 of the receiver 51 stores the hash value of the use permission information. If the save key Ksave is not stored in the storage module 73, the random number generation unit 92 of the receiver 51 at step S342 generates a random number, which is the save key Ksave, and the processing goes to step S343. If the save key Ksave is stored in the storage module 73, the processing goes to step S343.

At step S343, the encryption unit 93 of the receiver 51 encrypts the contents key Kco with the save key Ksave. At step S344, the SAM 62 of the receiver 51 stores the encrypted contents key Kco to the HDD 52. If the save key Ksave is not stored in the storage module 73, the decoding/encryption module 74 of the receiver 51 at step S345 stores the save key Ksave to the storage module 73 and the processing ends. If the save key Ksave is stored in the storage module 73, the processing ends.

As described above, the receiver 51 stores the accounting information to the storage module 73, decodes the contents key Kco with the distribution key Kd, re-encrypts the contents key Kco with the save key Ksave, and records the encrypted contents key Kco to the HDD 52. The save key Ksave is stored into the storage module 73.

In accordance with the similar processing, the recorder 53 stores the accounting information to the storage module in the SAM 66, decodes the contents key Kco with the distribution key Kd, re-encrypts the contents key Kco with the save key Ksave, and records the encrypted contents key Kco to the HDD 52. The save key Ksave is stored into the storage module in the SAM 66. The save keys Ksave held by the receiver 51 and the recorder 53 are usually different key data.

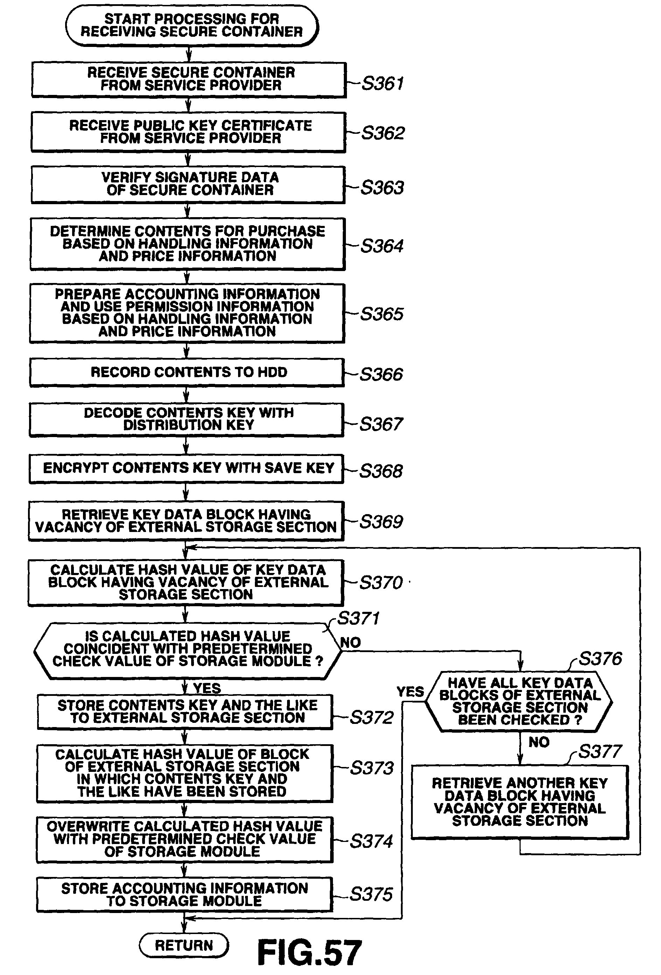

The details of the processing corresponding to steps S15 and S16 of Fig.37 in which the receiver 51 receives the appropriate service provider secure container and carries out accounting, in the case where the user network 5 has the structure of Fig.28 and stores the check value to the storage module 73, will now be described with reference to the flowchart of Fig.57. At step S361, the mutual authentication module 71 of the receiver 51 carries out mutual authentication with the mutual authentication section 44 of the service provider 3 via the communication section 61, and when the mutual authentication is done, the communication section 61 receives the service provider secure container from the mutually authenticated service provider 3. If the mutual authentication cannot be carried out, the processing ends. At step S362, the communication section 61 receives the public key certificate from the service provider 3 which is mutually authenticated at step S361.

At step S363, the decoding/encryption module 62 verifies the signature data included in the service provider secure container received at step S361, thus checking whether there is no tampering. If tampering is found, the processing ends. At step S364, the receiver 51 displays the handling information and price information included in the received service provider secure container to a display section, not shown, and the user determines the purchase item such as contents reproduction or copy and indicates that item to the receiver 51. At step 365, the accounting module 72 of the receiver 51 generates the accounting information and use permission information based on the handling information, price information and purchase item.

At step S366, the SAM 62 records the contents encrypted with the contents key Kco included in the service provider secure container, to the HDD 52. At step S367, the decoding unit 91 of the decoding/encryption unit 74 decodes the contents key Kco encrypted with the distribution key Kd included in the service provider secure container, with the distribution key Kd stored in the storage module 73 at step S110 of Fig.43 or at step S210 of Fig.52. At step S368, the encryption unit 93 encrypts the contents key decoded at step S367, with the save key Ksave stored in the storage module 73.

At step S369, the data check module 114 retrieves a key data block having vacancy of the external storage section 113. At step S370, the data check module 114 applies a hash function to the data (such as contents key Kco and contents ID) stored in the key data block retrieved at step S369, thus obtaining a hash value. At step S371, the data check module 114 compares the hash value obtained at step S370 with the check value corresponding to the key data block retrieved at step S369 and stored in the storage module 73, and determines whether these values are coincident with each other. If it is determined that these values are coincident, the data of the key data block has not been tampered. Therefore, the processing goes to step S372 and the SAM 62 stores the contents key Kco encrypted at step S368 into the key data block having vacancy of the external storage section 113.

At step S373, the decoding/encryption module 74 applies a hash function to the data stored in the key data block in which the contents key Kco is stored, of the external storage section 113, thus obtaining a hash value. At step S374, the decoding/encryption module 74 overwrites the check value corresponding to the key data block in which the contents key Kco is stored, of the storage module 73, with the hash value calculated at step S373. At step S375, the accounting module 72 stores the accounting information prepared at step S365 to the storage module 73 and the processing ends.

If it is determined at step S371 that the hash value obtained at step S370 and the check value corresponding to the key data block retrieved at step S369, stored in the storage module 73, are not coincident with each other as a result of comparison, the key data block has been tampered and therefore the processing goes to step S376. The data check module 114 determines whether all the key data blocks of the external storage section 113 have been checked or not. If it is determined that all the key data blocks of the external storage section 113 have not been checked, the processing goes to step S377. The data check module 114 retrieves another key data block having vacancy of the external storage section 113, then returns to step S370 and repeats the processing.

If it is determined at step S376 that all the key data blocks of the external storage section 113 have been checked, there is not key data block in which the contents key Kco can be stored. Therefore, the processing ends.

In this manner, the receiver 51 of Fig.28 checks tampering of the key data block in which the contents key Kco and the like are stored, of the external storage section 113, and stores the new contents key Kco only to the key data block in which no tampering has been made.

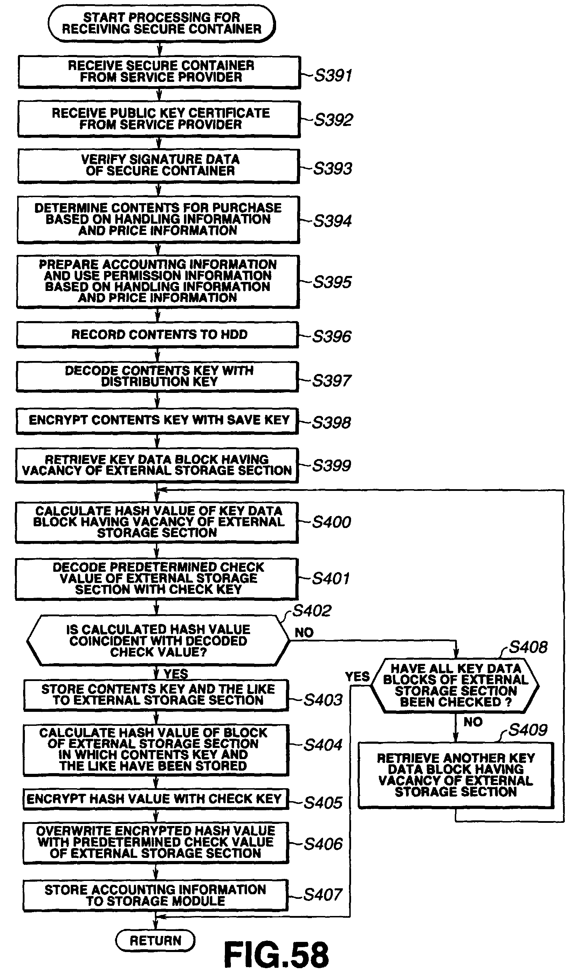

The details of the processing corresponding to steps S15 and S16 of Fig.37 in which the receiver 51 receives the appropriate service provider secure container and carries out accounting, in the case where the user network 5 has the structure of Fig.28 and stores the check value to the external storage section 113, will now be described with reference to the flowchart of Fig.58. The processing of steps S391 to S400 is similar to the processing of steps S361 to S370 of Fig.57 and therefore will not be described further in detail.

At step S401, the decoding unit 91 decodes the check value corresponding to the key data block retrieved at step S399, stored in the external storage section 113, with the check key Kch to be stored in the storage module 73. At step S402, the data check module 114 compares the hash value obtained at step S400 with the check value decoded at step S401. If it is determined that these values are coincident with each other, the data of the key data block has not been tampered and therefore the processing advances to step S403.

The processing of steps S403 and S404 is similar to the processing of step S372 and S373 of Fig.57 and therefore will not be described further in detail.

At step S405, the encryption unit 93 encrypts the hash value obtained at step S404 with the check value Kch to be stored in the storage module 73. At step S406, the decoding/encryption module 74 overwrites the check value corresponding to the key data block in which the contents key Kco is stored, of the storage module 73, with the hash value encrypted at step S405.

The processing of steps S407 to S409 is similar to the processing of steps S375 to 377 of Fig.57 and therefore will not be described further in detail.

Thus, in the processing of Fig.58, too, the receiver 51 of Fig.28 checks tampering of the key data block in which the contents key Kco and the like are stored, of the external storage section 113, and stores the new contents key Kco only to the key data block in which no tampering has been made.

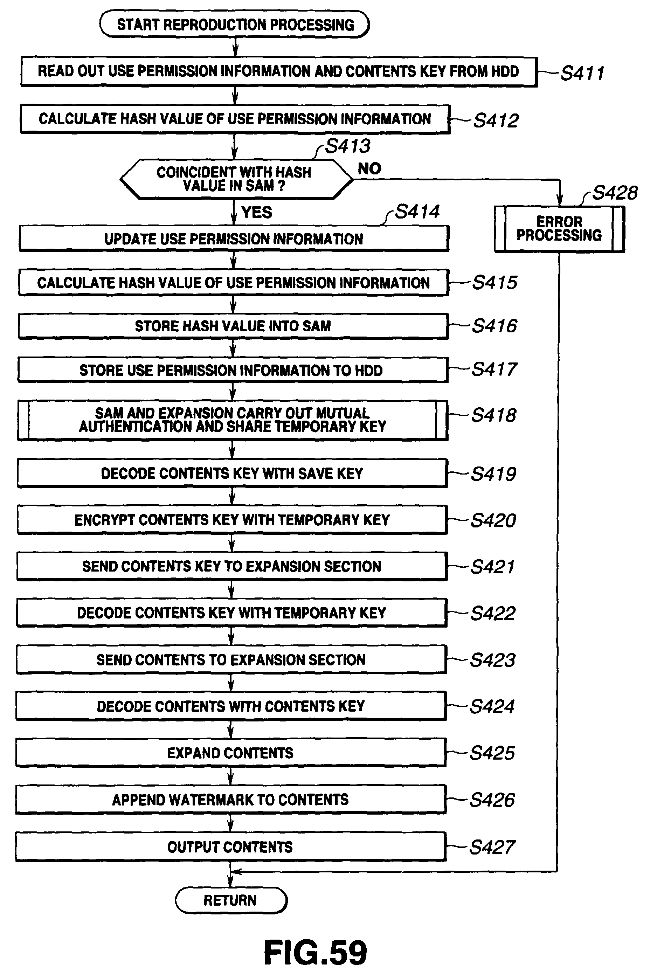

The details of the processing corresponding to step S17 of Fig.37 in which the receiver 51 reproduces the contents will now be described with reference to the flowchart of Fig.59. At step S411, the decoding/encryption module 74 of the receiver 51 reads out the use permission information stored at step S338 of Fig.56 and the encrypted contents key Kco stored at step S344, from the HDD 52. At step S412, the decoding/encryption module 74 of the receiver 51 applies a hash function to the use permission information so as to calculate a hash value.

At step S413, the decoding/encryption module 74 of the receiver 51 determines whether or not the hash value calculated at step S412 is coincident with the hash value stored in the storage module 73 at step S340 of Fig.56. If it is determined that the hash value calculated at step S412 is coincident with the hash value stored in the storage module 73, the processing goes to step S414 and predetermined information such as the value of the number of times of use included in the use permission information is updated. At step S415, the decoding/encryption module 74 of the receiver 51 applies a hash function to the updated use permission information so as to calculate a hash value. At step S416, the storage module 73 of the receiver 51 stores the hash value of the use permission information calculated at step S415. At step S417, the decoding/encryption module 74 of the receiver 51 records the updated use permission information to the HDD 52.

At step S418, the mutual authentication module 71 of the SAM 62 and the mutual authentication module 75 of the expansion section 63 carry out mutual authentication, and the SAM 62 and the expansion section 63 store the temporary key Ktemp. This authentication processing is similar to the processing described with reference to Figs.40 to 42 and therefore will not be described further in detail. The random number R1, R2 or R3 used for mutual authentication is used as the temporary key Ktemp. At step S419, the decoding unit 91 of the decoding/encryption module 74 decodes the contents key Kco recorded on the HDD 52 at step S344 of Fig.56, with the save key Ksave stored in the storage module 73. At step S420, the encryption unit 93 of the decoding/encryption module 74 encrypts the decoded contents key Kco with the temporary key Ktemp. At step S421, the SAM 62 transmits the contents key Kco encrypted with the temporary key Ktemp to the expansion section 63.

At step S422, the decoding module 76 of the expansion section 63 decodes the contents key Kco with the temporary key Ktemp. At step S423, the SAM 62 reads out the contents recorded on the HDD 52 and transmits the contents to the expansion section 63. At step S424, the decoding module 76 of the expansion section 63 decodes the contents with the contents key Kco. At step S425, the expansion module 78 of the expansion section 63 expands the decoded contents in accordance with a predetermined system such as ATRAC. At step S426, the watermark appending module 79 of the expansion section 63 inserts a predetermined watermark specifying the receiver 51 into the expanded contents. At step S427, the receiver 51 outputs the reproduced contents to a speaker, not shown, and the processing ends.

If it is determined at step S413 that the hash value calculated at step S412 and the hash value stored in the storage module 73 are not coincident with each other, the SAM 62 at step S428 carries out predetermined error processing such as displaying an error message on a display unit, not shown, and the processing ends.

The receiver 51 thus reproduces the contents.

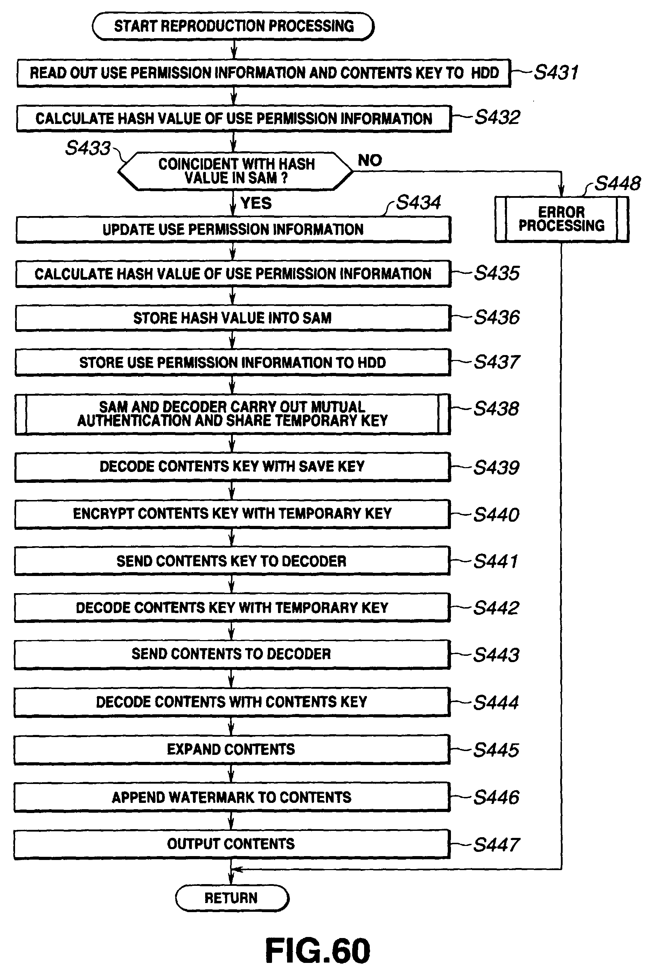

Fig.60 is a flowchart illustrating the processing in which the receiver 51 causes the decoder 56 to reproduce the contents, in the user home network 5 having the structure of Fig. 11. The processing of steps S431 to S437 is similar to the processing of steps S411 to S417 of Fig.59 and therefore will not be described further in detail.

At step S438, the mutual authentication module 71 of the SAM 62 and the mutual authentication module 101 of the decoder 56 carry out mutual authentication and share the temporary key Ktemp. This authentication processing is similar to the processing described with reference to Figs.40 to 42 and therefore will not be described further in detail. The random number R1, R2 or R3 used for mutual authentication is used as the temporary key Ktemp. At step S439, the decoding unit 91 of the decoding/encryption module 74 decodes the contents key Kco recorded on the HDD 52 with the save key Ksave stored in the storage module 73. At step S440, the encryption unit 93 of the decoding/encryption module 74 encrypts the decoded contents key Kco with the temporary key Ktemp. At step S441, the SAM 62 transmits the contents key Kco encrypted with the temporary key Ktemp to the decoder 56.

At step S442, the decoding module 102 of the decoder 56 decodes the contents key Kco with the temporary key Ktemp. At step S443, the SAM 62 reads out the contents recorded on the HDD 52 and transmits the contents to the decoder 56. At step S444, the decoding module 103 of the decoder 56 decodes the contents with the contents key Kco. At step S445, the expansion module 104 of the decoder 56 expands the decoded contents in accordance with a predetermined system such as ATRAC. At step S446, the watermark appending module 105 of the decoder 56 inserts a predetermined watermark specifying the decoder 56 into the expanded contents. At step S447, the decoder 56 outputs the reproduced contents to a speaker, not shown, and the processing ends.

The processing of step S448 is similar to the processing of step S428 of Fig.59 and therefore will not be described further in detail.

In this manner, in the case where the user home network has the structure shown in Fig. 11, the contents received by the receiver 51 are reproduced by the decoder 56.

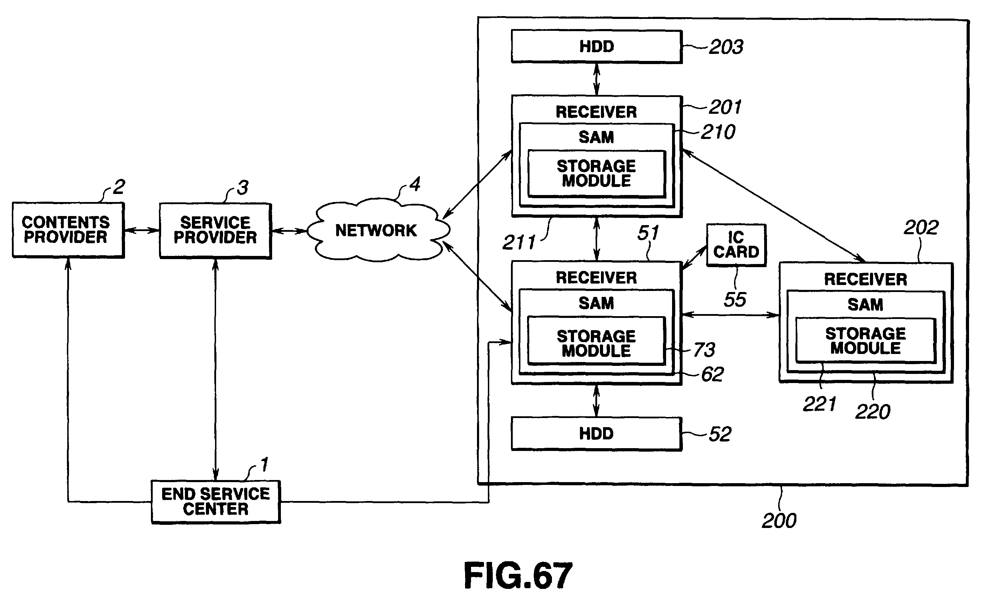

Fig.67 shows another exemplary structure of the EMD system to which the present invention is applied. In Fig.67, the portions corresponding to those of Fig. 1 and Fig.10 are denoted by the same numerals. That is, in this example, a user home network 200 is provided in place of the user home network 5, and in the user home network 200, a receiver 201 and a receiver 202 instead of the recorder 53 are subordinate (connected) to the receiver 51.

The receiver 201 has a structure similar to that of the receiver 51, having a SAM 210 and a storage module 211 corresponding to the SAM 62 and the storage module 73 of the receiver 51, respectively, and is connected to an HDD 203. The receiver 202, too, has a structure similar to that of the receiver 51, having a SAM 220 and a storage module 221. The receiver 202 is also connected (subordinate) to the receiver 201. However, the receiver 202 is not connected to any recording medium such as an HDD.

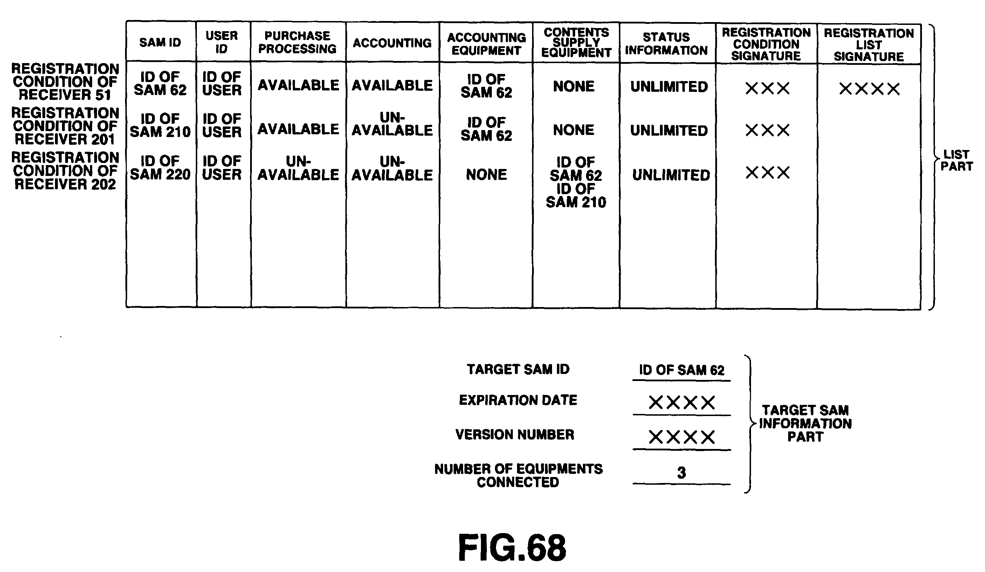

The receiver 51 has the structure shown in Fig. 10. However, in this example, a registration list as shown in Fig.68 instead of the registration list shown in Fig.45 is stored in the storage module 73 of the SAM 62. This registration list includes a list part in which information is stored as a table, and a target SAM information part in which predetermined information about the equipment holding the registration list is stored.

In the target SAM information part, the SAM ID of the equipment holding this registration list, that is, in this case, the ID of the SAM 62 of the receiver 51, is stored (in the section of "target SAM ID"). Also, in the target SAM information part, the expiration date of this registration list is stored (in the section of "expiration date"), and the version number of the registration list is stored (in the section of "version number"). Also, the number of connected equipments (including itself) is stored (in the section of "number of equipments connected"). That is, in this case, since the two equipments of the receiver 201 and the receiver 202 are connected to the receiver 51, the total value of 3 including itself is stored.

The list part includes 9 items, that is, "SAM ID", "user ID", "purchase processing", "accounting", "accounting equipment", "contents supply equipment", "status information", "registration condition signature", and "registration list signature". In this example, as the registration condition of the receiver 51, the registration condition of the receiver 201 and the registration condition of the receiver 202, predetermined information is stored in the respective sections.

In the section of "SAM ID", the ID of the SAM of the equipment is stored. In this example, the ID of the SAM 62 of the receiver 51, the ID of the SAM 210 of the receiver 201 and the ID of the SAM 220 of the receiver 202 are stored. In the section of "user ID", the user ID of the user of the corresponding equipment (receiver 51, receiver 201, receiver 202) is stored.

In the section of "purchase processing", information ("available" or "unavailable") indicating whether the corresponding equipment can carry out the processing for purchasing the contents (specifically, for purchasing the use permission condition and the contents key Kco) is stored. In this example, since the receiver 51 and the receiver 201 can carry out the processing for purchasing the contents, "available" is stored in the corresponding section of "purchase processing". Since the receiver 202 is not connected to any recording medium such as HDD for recording the purchased contents and therefore cannot carry out the processing for purchasing the contents, "unavailable" is stored in the section of "purchase processing" corresponding to the receiver 202.

In the section of "accounting", information ("available" or "unavailable") indicating whether the corresponding equipment can carry out accounting with the EMD service center 1 is stored. Whether accounting can be carried out or not is determined when registering the equipment to the EMD system in the EMD service center 1. In this example, since the receiver 51 is registered as an equipment that can carry out accounting, "available" is stored in the corresponding section of "accounting". On the other hand, since the receiver 201 and the receiver 202 in this example are registered as equipment that cannot carry out accounting, "unavailable" is stored in the section of "accounting" corresponding to the receiver 201 and the receiver 202. With respect to the receiver 202, since the purchase of contents is not carried out, no charge is summed up and accounting itself is not necessary.

In the section of "accounting equipment", the ID of the SAM of the equipment which carries out accounting with respect to the charges summed up in the corresponding equipment is stored. In this example, since the receiver 51 (SAM 62) can carry out accounting with respect to the charges to itself, the ID of the SAM 62 of the receiver 51 is stored in the corresponding section of "accounting equipment". The receiver 51 also carries out accounting with respect to the charges summed up by the receiver 201, in place of the receiver 201 which cannot carry out accounting. Therefore, the ID of the SAM 62 of the receiver 51 is stored in the section of "accounting equipment" corresponding to the receiver 201. With respect to the receiver 202, since the contents are not purchased and no charge is summed up as described above, accounting for the receiver 202 is not necessary. Therefore, in the section of "accounting equipment" corresponding to the receiver 202, information ("none") indicating that there is no equipment for carrying out accounting is stored.

In the section of "contents supply equipment", there is stored the ID of the SAM of the equipment which can supply the contents in the case where the corresponding equipment receives the contents supply not from the service provider 3 but from another connected equipment. In this example, since the receiver 51 and the receiver 201 receive the contents supply from the service provider 3, information ("none") indicating that there is no equipment supplying the contents is stored in the corresponding section of "contents supply equipment". Since the receiver 202 is not connected to the network 4 and therefore cannot receive the contents supply from the service provider 3, it receives the contents supply from the receiver 51 or the receiver 201. Therefore, in the section of "contents supply equipment" corresponding to the receiver 202, the ID of the SAM 62 of the receiver 51 and the ID of the SAM 210 of the receiver 201 are stored.

In the section of "status information", the operation limitation condition for the corresponding equipment is stored. If there is no limitation, information ("unlimited") indicating that there is no limitation is stored. If a predetermined limitation is set, information ("limited") indicating that a predetermined limitation is set is stored. If the operation is to be stopped, information ("stop") indicating that the operation is to be stopped is stored. For example, if accounting did not succeed, "limited" is set in the section of "status information" corresponding to that equipment. (This will be later described in detail.) In this case, with respect to the equipment for which "limited" is set in the section of "status information", the processing for reproducing (decoding) the contents which have already been purchased is carried out, but the processing for purchasing new contents will not be executed. That is, a predetermined limitation is put on the equipment. On the other hand, if a violation such as unauthorized duplication of the contents is discovered, "stop" is set in the section of "status information" and the operation of the equipment is stopped. Thus, the equipment will be able to receive no service at all from the EMD system.

In this example, as it is assumed that no limitation is put on the receiver 51, the receiver 201 and the receiver 202, "unlimited" is set in the corresponding section of "status information".

In the section of "registration condition signature", there is stored the signature of the EMD service center 1 with respect to the information stored in the sections of "SAM ID", "purchase processing", "accounting", "accounting equipment", "contents supply equipment", "status information" and "public key" as the registration conditions of each equipment (receiver 51, receiver 201 and receiver 202) as described above.

In the section of "registration list signature", the signature of the EMD service center 1 with respect to all the data set in the registration list is stored.

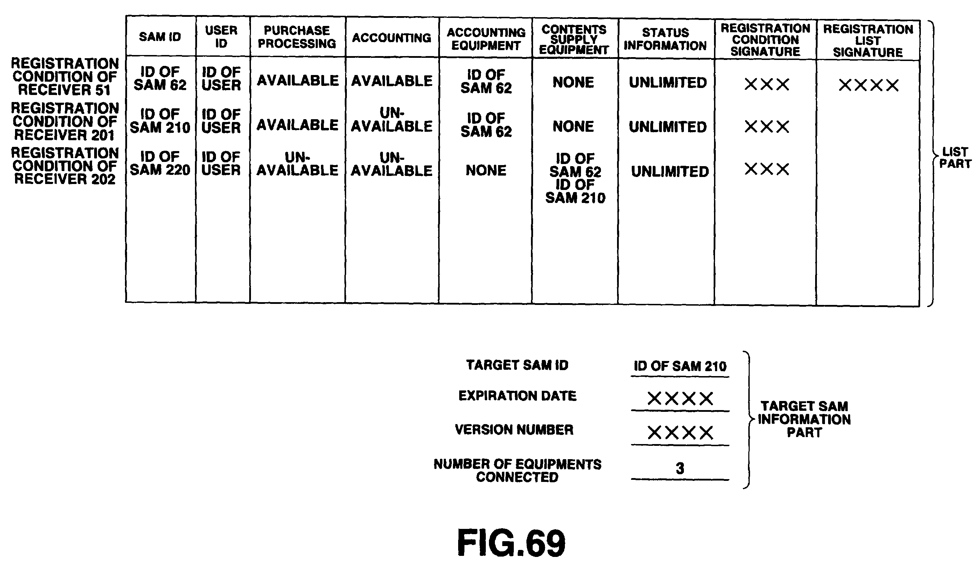

Fig.69 shows the registration list of the receiver 201, stored in the storage module 211 of the SAM 210 of the receiver 201. In the target SAM information part of this registration list, the ID of the SAM 210 of the receiver 201, the expiration date of the registration list, version number, and the number of equipments connected (in this example, since the two equipments of the receiver 51 and the receiver 202 are connected to the receiver 201, the total number of 3 including itself) are stored. In the list part, the same information as in the list part of the registration list of the receiver 51 shown in Fig.68 is stored.

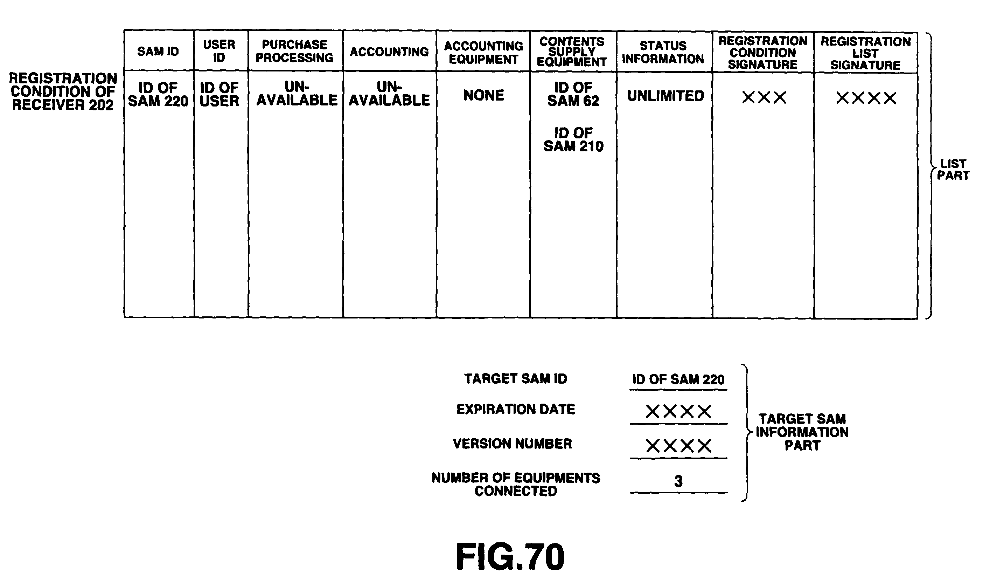

Fig.70 shows the registration list of the receiver 202, stored in the storage module 221 of the SAM 220 of the receiver 202. In the target SAM information part of this registration list, the ID of the SAM 220 of the receiver 201, the expiration date of the registration list, version number, and the number of equipments connected (in this example, since the two equipments of the receiver 51 and the receiver 201 are connected to the receiver 202, the total number of 3 including itself) are stored. In the list part in this example, only the registration condition of the receiver 202 is stored, of the registration conditions of the receiver 51, the receiver 201 and the receiver 202 registered to the list part of the registration lists of Figs.68 and 69.

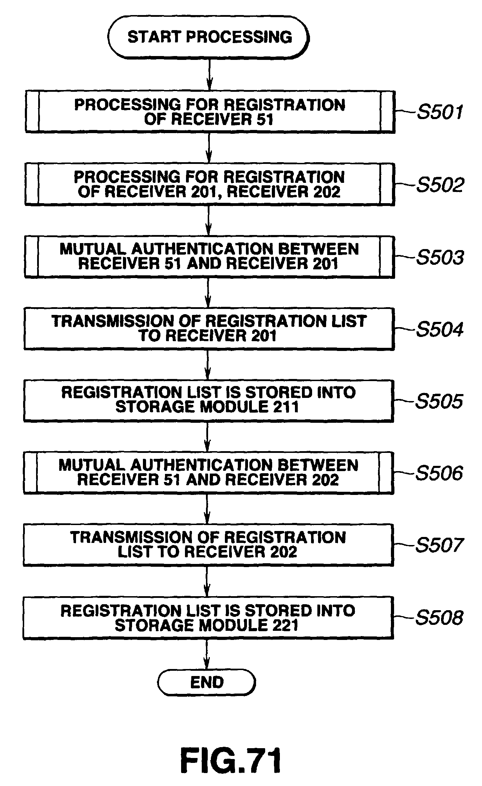

The processing procedure for storing the registration lists of Figs.68, 69 and 70 to the storage module 73 of the receiver 51, the storage module 211 of the receiver 201 and the storage module 221 of the receiver 202 will now be described with reference to the flowchart of Fig.71.

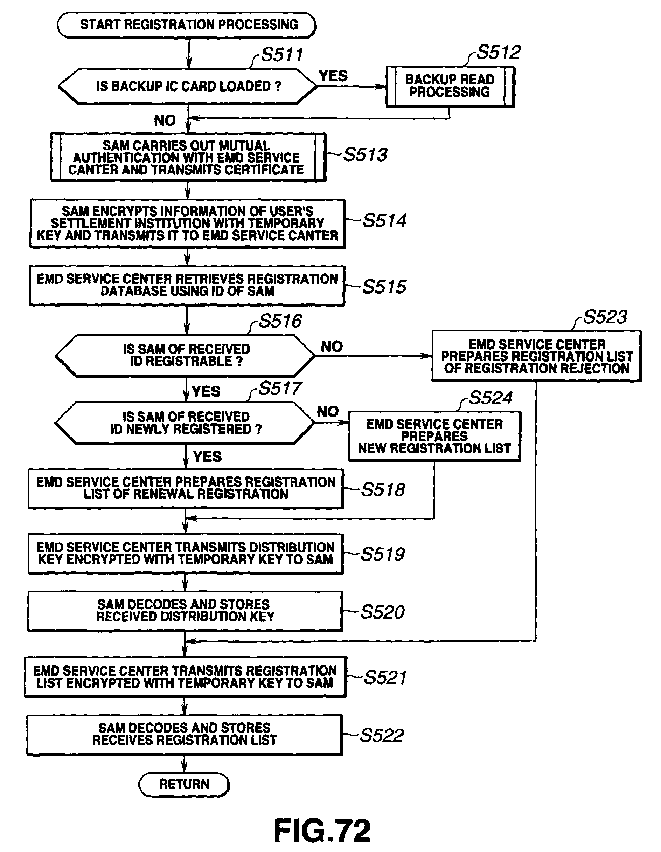

At step S501, the registration processing of the receiver 51 is carried out. The details of the registration processing at step S501 are shown in the flowchart of Fig. 72.

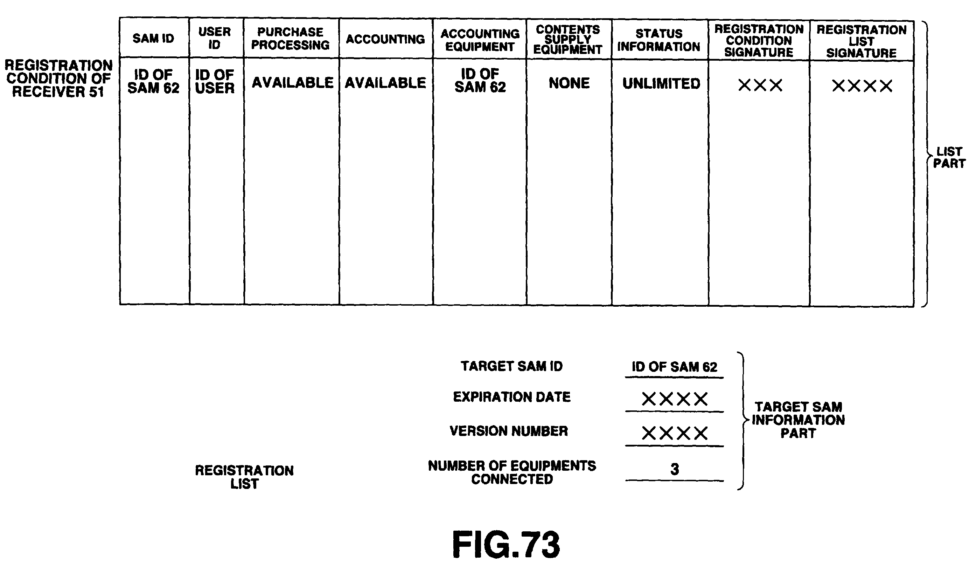

The processing of steps S511 to S518 is similar to the processing of steps S101 to S108 of Fig.43 and therefore will not be described further in detail. At step S518, the user management section 18 of the EMD service center 1 prepares a registration list as shown in Fig. 73 on the basis of the user registration database. The registation list prepared in this case corresponds to the registration list shown in Fig.68 in which only the registration condition of the receiver 51 is registered.

The processing of steps S519 to S524 is similar to the processing of steps S109 to S114 of Fig.43 and therefore will not be described further in detail. At step S522, the SAM 62 of the receiver 51 decodes the registration list transmitted from the EMD service center 1 at step S521, with the temporary key Ktemp, and stores the decoded registration list to the storage module 73. Thus, when the registration list shown in Fig.73 is stored in the storage module 73 of the receiver 51, the processing ends and the processing of step S502 of Fig.71 starts.

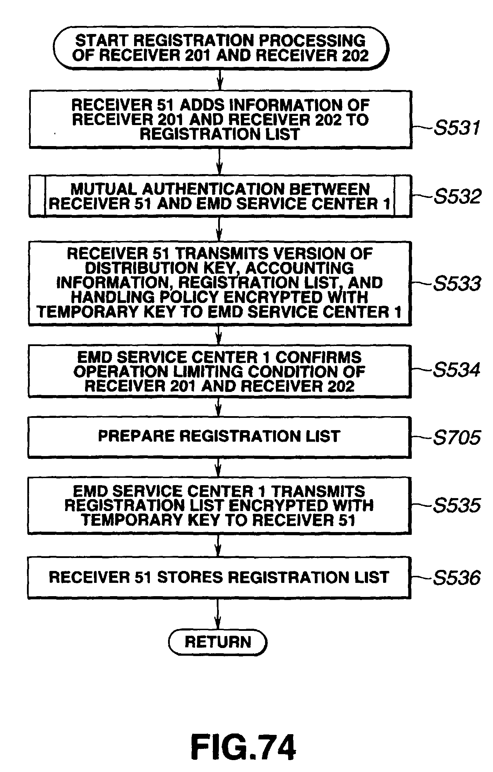

At step S502, the registration processing of the receiver 201 and the receiver 202 is carried out. The details of the registration processing at step S502 are shown in the flowchart of Fig.74.

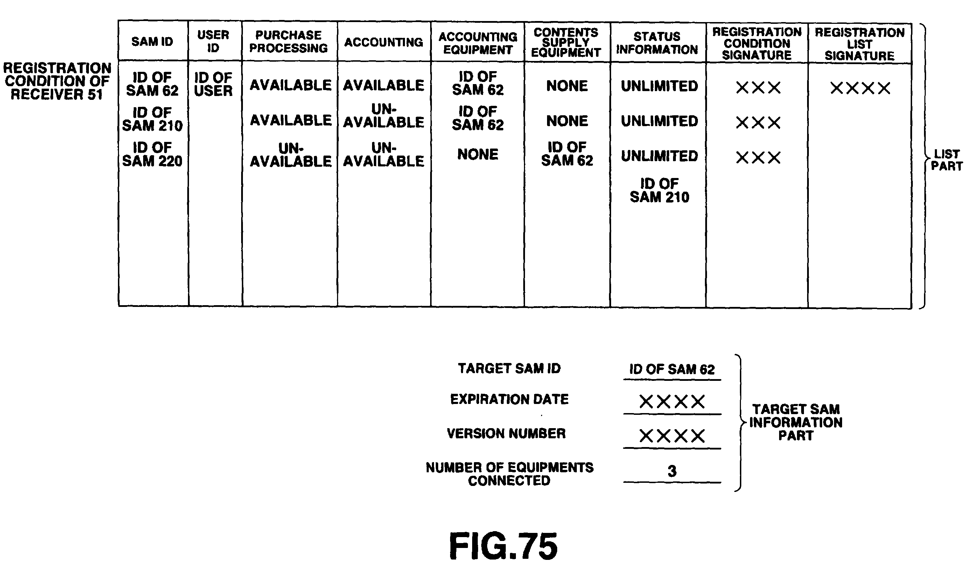

At step S531, the SAM 62 of the receiver 51 additionally writes the ID of the SAM 210 of the receiver 201 and the ID of the SAM 220 of the receiver 202 into the section of "SAM ID" in the registration list (Fig. 73) stored on the HDD 52, as shown in Fig. 75, and writes predetermined information in the respective sections of "purchase processing", "accounting", "accounting equipment" and "contents supply equipment" in accordance with the added IDs.

In this example, in accordance with "SAM ID" in which the ID of the SAM 210 of the receiver 201 is written, "available" is written in the section of "purchase processing", "unavailable" is written in the section of "accounting", the ID of the SAM 62 of the receiver 51 is written in the section of "accounting equipment", and "none" is written in the section of "contents supply equipment". Also, in accordance with "SAM ID" in which the ID of the SAM 220 of the receiver 202 is written, "unavailable" is written in the section of "purchase processing", "unavailable" is written in die section of "accounting", "none" is written in the section of "accounting equipment", and the ID of the SAM 62 of the receiver 51 or the ID of the SAM 210 of the receiver 201 is written in the section of "contents supply equipment". In this case, the information written in the respective sections of "purchase processing", "accounting", "accounting equipment" and "contents supply equipment" is determined, for example, in accordance with the conditions set when the receiver 201 and the receiver 202 are connected to the receiver 51.

Next, at step S532, mutual authentication between the receiver 51 and the EMD service center 1 is carried out. This mutual authentication is similar to the processing described with reference to Figs.40 to 42 and therefore will not be described further in detail.

At step S533, the SAM 62 of the receiver 51 encrypts the handling policy associated with the accounting information, stored on the HDD 52, with the temporary key Ktemp, and transmits the encrypted handling policy together with the registration list having the new information added thereto at step S531 and the version of the distribution key Kd and the accounting information stored in the storage module 73, to the EMD service center 1.

At step S534, the user management section 18 of the EMD service center 1 receives and decodes the information transmitted from the receiver 51 at step S533. After that, the user management section 18 of the EMD service center 1 confirms whether or not there is an unauthorized action in the receiver 201 and the receiver 202 so that "stop" should be set in the section of "status information" in the registration list.

Next, at step S535, the user management section 18 of the EMD service center 1 sets the registration conditions of the receiver 201 and the receiver 202 into the list part of the registration list on the basis of the user registration database and the result of confirmation by the user management section 18 at step S534. Then, the user management section 18 of the EMD service center 1 appends the signature to the resultant data so as to prepare the registration list (Fig.68) of the receiver 51, and stores the information of the list part.

At step S536, the user management section 18 of the EMD service center 1 encrypts the registration list prepared at step S535 (i.e., the registration list of the receiver 51) with the temporary key Ktemp, and transmits the encrypted registration list to the receiver 51.

At step S537, the SAM 62 of the receiver 51 receives and decodes the registration list transmitted from the EMD service center 1 at step S536, and then stores it to the storage module 73. Thus, the registration list (Fig.68) of the receiver 51 transmitted at step S536 is stored in the storage module 73, in place of the registration list of Fig.73 stored at step S522 (Fig.72). The processing ends and step S503 of Fig.71 starts.

At step S503, the receiver 51 and the receiver 201 carry out mutual authentication. This mutual authentication processing is similar to the processing described with reference to Figs.40 to 42 and therefore will not be described further in detail.

Next, at step S504, the SAM 62 of the receiver 51 generates the registration list (Fig.69) of the receiver 201 from the registration list stored in the storage module 73 at step S537, and transmits the resultant registration list to the receiver 201.

At step S505, the SAM 210 of the receiver 201 receives and decodes the registration list transmitted from the receiver 51 at step S504, and then stores it to the storage module 211. Thus, the registration list shown in Fig.69 is stored in the storage module 211.

At step S506, the receiver 51 and the receiver 202 carry out mutual authentication, This mutual authentication processing is similar to the processing described with reference to Figs.40 to 42 and therefore will not be described further in detail.

At step S507, the SAM 62 of the receiver 51 transmits the registration list of the receiver 202 (i.e., the registration list (Fig.70) in which only the registration condition of the receiver 202 is stored), of the registration lists stored in the storage module 73 at step S537, to the receiver 202.

Next, at step S508, the SAM 220 of the receiver 202 receives and decodes the registration list transmitted from the receiver 51 at step S507, and then stores it to the storage module 221. Thus, the registration list shown in Fig.70 is stored in the storage module 221. Then, the processing ends.

In the above-described manner, the receiver 51, the receiver 201 and the receiver 202 obtain and hold their respective registration lists.

The method for using the registration lists, which are prepared as described above and held by the respective receivers, will now be described in association with the processing for accounting described with reference to Fig.56.

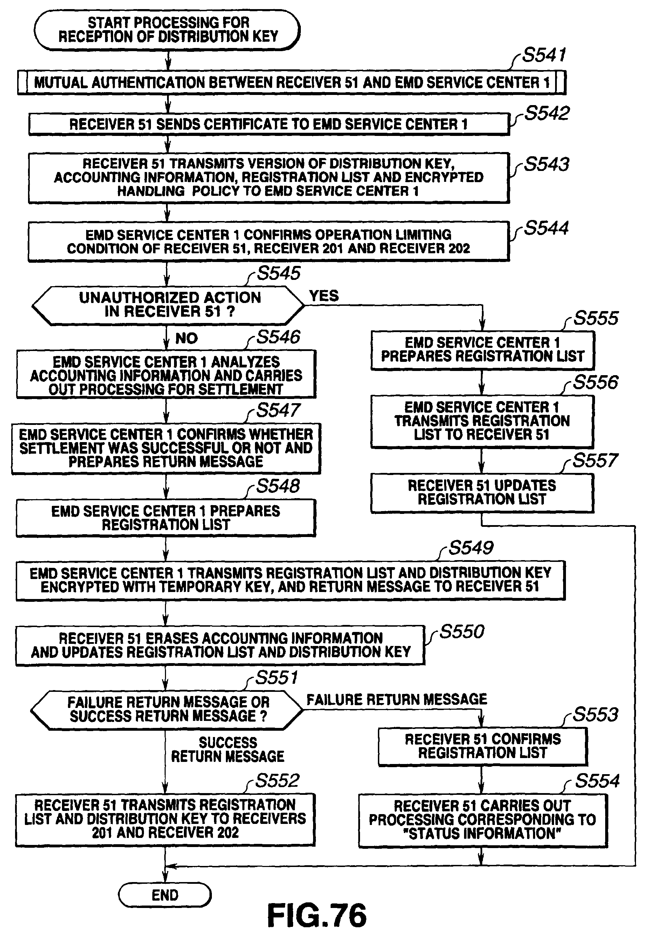

In the processing for accounting described with reference to the flowchart of Fig.56, if it is determined at step S335 that the current total charge is equal to or more than a predetermined upper limit, the processing goes to step S336 and the processing for receiving the distribution key Kd is carried out. In this example, the processing is carried out in accordance with the procedure shown in the flowchart of Fig. 76, instead of the procedure shown in the flowchart of Fig.52.

Specifically, at step S541, mutual authentication between the receiver 51 and the EMD service center 1 is carried out. This mutual authentication processing is similar to the processing described with reference to Figs.40 to 42 and therefore will not be described further in detail.

At step S542, the SAM 62 of the receiver 51 transmits the certificate to the user management section 18 of the EMD service center 1, if necessary. At step S543, the SAM 62 of the receiver 51 encrypts the handling policy associated with the accounting, stored on the HDD 52, with the temporary key Ktemp, and transmits the encrypted handling policy together with the version of the distribution key Kd, accounting information and registration list stored in the storage module 73 to the EMD service center 1.

At step S544, the user management section 18 of the EMD service center 1 receives and decodes the information transmitted from the receiver 51 at step S543, and then the audit section 21 of the EMD service center 1 confirms whether or not there is an unauthorized action made in the receiver 51, the receiver 201 and the receiver 202 so that "stop" should be set in the section of "status information" of the registration list.

Next, at step S545, the user management section 18 of the EMD service center 1 determines whether or not there is an unauthorized action in the receiver 51 on the basis of the result of confirmation of step S544. If it is determined that there is no unauthorized action in the receiver 51, the processing goes to step S546.

At step S546, the accounting and charging section 19 of the EMD service center 1 analyzes the accounting information received at step S543 and carries out the processing for calculating the amount to be paid by the user. At step S547, the user management section 18 of the EMD service center 1 confirms whether the settlement has succeeded or not by the processing of step S546, and prepares a return message based on the result of confirmation. In this case, when the settlement with respect to the charges to both the receiver 51 and the receiver 201 has succeeded (that is, the settlement with respect to all the equipments has succeeded), a success return message is prepared. When the settlement with respect to the charge to either the receiver 51 or the receiver 201 has failed or when the settlement with respect to the charge to both the receiver 51 and the receiver 201 has failed (that is, the settlement with respect to all the equipments has failed), a failure return message is prepared.

At step S548, the user management section 18 of the EMD service center 1 sets the registration conditions of the receiver 51, the receiver 201 and the receiver 202 on the basis of the user registration database, the result of confirmation as to whether there is an unauthorized action at step S544 and the result of confirmation as to whether there is an unauthorized action at step S547. The user management section 18 of the EMD service center 1 appends the signature to the registration conditions so as to prepare the registration lists.

For example, if an unauthorized action is confirmed in the receiver 201 or the receiver 202 at step S544, "stop" is set in the corresponding section of "status information" and the entire processing is stopped in this case. That is, no service from the EMD system can be received at all. If the failure in the settlement is confirmed at step S547, "limited" is set in the section of "status information". In this case, the processing for reproducing the contents that have already been purchased is possible, but the processing for purchasing new contents cannot be carried out.

Next, at step S549, the user management section 18 of the EMD service center 1 encrypts the distribution key Kd of the latest version (distribution key Kd of the latest version for March shown in Fig.3) and the registration list prepared at step S548, with the temporary key Ktemp, and transmits the resultant information together with the return message prepared at step S547 to the receiver 51.

At step S550, the SAM 62 of the receiver 51 receives and decodes the information transmitted from the EMD service center 1 at step S549, and then stores it to the storage module 73. In this case, the accounting information stored in the storage module 73 is erased, and its own registration list and the distribution key Kd are updated.

At step S551, the SAM 62 of the receiver 51 determines whether the return message received at step S550 is a success return message or a failure return message. If it is determined that the message is a success return message, the processing goes to step S552.

At step S552, the SAM 62 of the receiver 51 carries out the mutual authentication processing (processing described with reference to Figs.40 to 42) with the receiver 201 and the receiver 202, and then transmits the respective registration lists and the distribution key Kd to the receiver 201 and the receiver 202.

If it is determined at step S551 that the return message received at step S550 is a failure return message, the SAM 62 of the receiver 51 proceeds to step S553 to detect the receiver for which "limited" is set in the section of "status information" (in this case, the receiver 51 itself or the receiver 201) with reference to the registration list (updated registration list) stored in the storage module 73 at step S541.

At step S554, the SAM 62 of the receiver 51 executes predetermined processing (revoke processing) with respect to the receiver detected at step S553 and limits the processing which is carried out in the receiver. That is, in this case, the execution of the processing for purchasing new contents is made impossible.

If an unauthorized action in the receiver 51 is confirmed at step S545, the processing goes to step S555. The EMD service center 1 sets "stop" in all the sections of "status information" corresponding to the receiver 51, the receiver 201 and the receiver 202, then prepares the registration list, and transmits the registration list to the receiver 51 at step S556. As the registration processing shown in the flowchart of Fig.43 is carried out with respect to the receiver 201 or the receiver 202, the use of the contents in the receiver 201 or the receiver 202 is made possible.

At step S557, the receiver 51 receives the registration list transmitted from the EMD service center 1 at step S556 and updates the registration list. Specifically, in this case, the distribution key Kd is not supplied to the receiver 51, the receiver 201 and the receiver 202, and the receiver 51, the receiver 201 and the receiver 202 no longer can reproduce the contents supplied thereto. As a result, the receiver 51, the receiver 201 and the receiver 202 can receive no service at all in the EMD system.

If the registration list and the distribution key Kd are transmitted to the receiver 201 and the receive 202 at step S552, or if the revoke processing is carried out with respect to the receiver for which "limited" is set in the section of "status information" at step S554, or if the registration list is updated to the registration list such that "stop" is set in the section of "status information" at step S557, the processing ends and step S337 of Fig.56 starts.

The processing of steps S337 to S345 is already described and therefore will not be described further.

As described above, as the registration list is transmitted to the EMD service center 1 (step S543 of Fig.76), an unauthorized action in the receiver is confirmed and whether the processing (in this case, the settlement processing) has succeeded or not is confirmed (step S547) in the EMD service center 1. On the basis of the results of confirmation, the registration list is updated. Moreover, since the registration list thus updated is held by each receiver, the operation of each receiver can be controlled.

In the above description, if the summed charge exceeds the predetermined upper limit at step S335, the processing goes to step S336 and the processing for receiving the distribution key Kd is carried out. However, it is also possible to proceed to step S336 in the case where the upper limit of the number of contents to be purchased is set and the number of purchased contents exceeds the upper limit.

In the above description, the method for using the registration list in the case of the processing for accounting is described. However, also when the version of the contents key Kco included in the handling policy is newer than the version of the distribution key Kd held by the SAM 62 of the receiver 51 in the case where the contents are decoded, the registration list is transmitted to the EMD service center 1 from the receiver 51. In this case, too, the registration list is prepared in the EMD service center 1 and distributed in each receiver, as described above.

In the above description, the registration list is transmitted together with the accounting information to the EMD service center 1 at the timing when the equipment (e.g., receiver 51 or receiver 201) is connected. However, it is also possible to transmit only the registration list. In the above description, when the equipment is registered, the accounting information is transmitted to the EMD service center 1. However, the accounting information may also be transmitted to the EMD service center 1 at other timing.

In this specification, the system represents an entire apparatus including a plurality of devices.

As providing medium for providing a computer program for carrying out the above-described processing to the user, a communication medium such as a network or a satellite as well as a recording medium such as a magnetic disk, a CD-ROM or a solid state memory can be used.

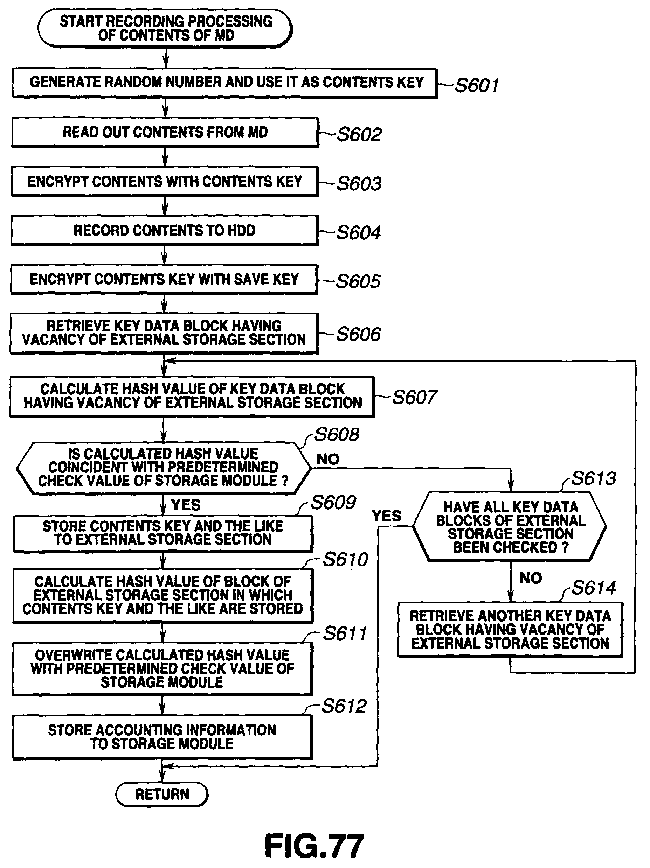

The details of the processing for encrypting the non-encrypted contents supplied from the MD drive 54 and recording the encrypted contents in the case where the user network 5 has the structure of Fig.28 will now be described with reference to the flowchart of Fig.77. At step S601, the random number generation unit 92 of the SAM 62 generates a random number and uses it as the contents key Kco. At step S602, the communication section 61 receives the contents recorded on an MD loaded in the MD driver 54, from the MD drive 54. At step S603, the encryption unit 93 of the SAM 62 encrypts the contents received at step S602 with the contents key Kco generated at step S601. At step S604, the SAM 62 records the encrypted contents onto the HDD 52. At step S605, the encryption unit 93 of the SAM 62 encrypts the contents key Kco with the save key Ksave stored in the storage module 73.

The processing of steps S606 to S614 is equivalent to the processing of steps S369 to S377 of Fig.57 and therefore will not be described further in detail.

In this manner, the receiver 51 encrypts the non-encrypted contents supplied from the MD driver 54 and records the encrypted contents onto the HDD 52.

The details of the processing corresponding to step S17 of Fig.37 in which the receiver 51 reproduces the contents will now be described with reference to the flowchart of Fig.78. At step S621, the decoding/encryption module 74 of the receiver 51 reads out the use permission information stored at step S338 of Fig.56 and the encrypted contents key Kco stored at step S344. At step S622, the decoding/encryption module 74 of the receiver 51 applies a hash function to the use permission information so as to calculate a hash value.

At step S623, the decoding/encryption module 74 of the receiver 51 determines whether or not the hash value calculated at step S622 is coincident with the hash value stored in the storage module 73 at step S340 of Fig.56. If it is determined that the hash value calculated at step S622 is coincident with the hash value stored in the storage module 73, the processing goes to step S624 to update predetermined information such as the number of times of use included in the use permission information. At step S625, the decoding/encryption module 74 of the receiver 51 applies a hash function to the updated use permission information so as to calculate a hash value. At step S626, the storage module 73 of the receiver 51 stores the hash value of the use permission information calculated at step S625. At step S627, the decoding/encryption module 74 of the receiver 51 records the updated use permission information to the HDD 52.

At step S628, the mutual authentication module 71 of the SAM 62 and the mutual authentication module 75 of the expansion section 63 carry out mutual authentication, and the SAM 62 and the expansion section 63 store the temporary key. This authentication processing is similar to the processing described with reference to Figs.40 to 42 and therefore will not be described further in detail. The random number R1, R2 or R3 used for mutual authentication is used as the temporary key Ktemp. At step S629, the decoding unit 91 of the decoding/encryption module 74 decodes the contents key Kco recorded on the HDD 52 at step S344 of Fig. 56, with the save key Ksave stored in the storage module 73. At step S630, the encryption unit 93 of the decoding/encryption module 74 encrypts the decoded contents key Kco with temporary key Ktemp. At step S631, the SAM 62 transmits the contents key Kco encrypted with the temporary key Ktemp to the expansion section 63.

At step S632, the decoding module 76 of the expansion section 63 decodes the contents key Kco with the temporary key Ktemp. At step S633, the SAM 62 reads out the contents recorded on the HDD 52 and transmits the contents to the expansion section 63. At step S634, the decoding module 76 of the expansion section 63 decodes the contents with the contents key Kco. At step S635, the expansion module 78 of the expansion section 63 expands the decoded contents in accordance with a predetermined system such as ATRAC. At step S636, the watermark appending module 79 of the expansion section 63 inserts a predetermined watermark specifying the receiver 51 into the expanded contents. At step S637, the receiver 51 outputs the reproduced contents to a speaker, not shown, and the processing ends. If it is determined at step S623 that the hash value calculated at step S622 is not coincident with the hash value stored in the storage module 73, the SAM 62 at step S638 carries out predetermined error processing such as displaying an error message on a display unit, not shown, and the processing ends.

In this manner, the receiver 51 reproduces the contents.

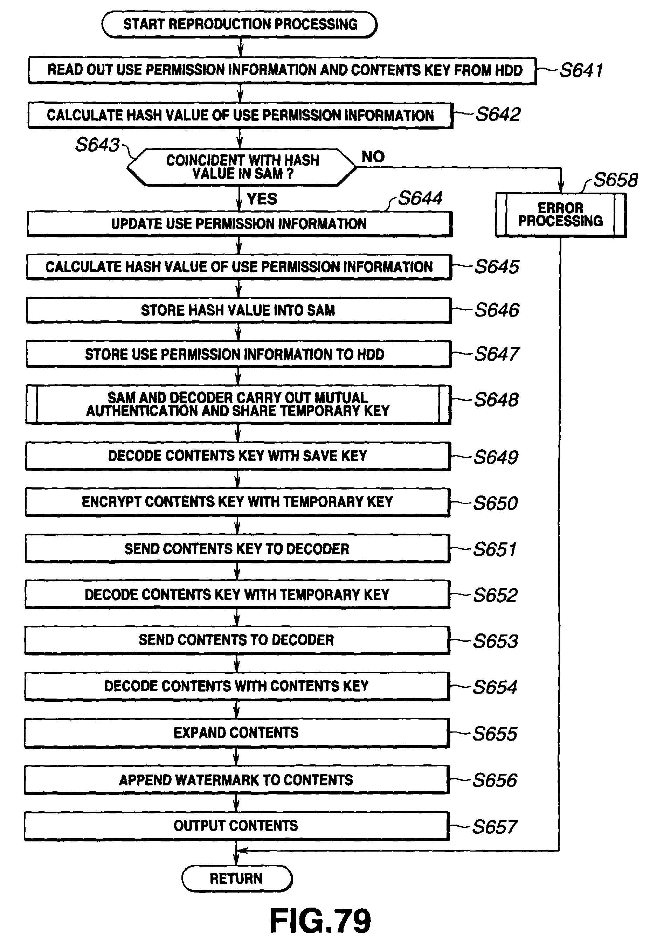

Fig.79 is a flowchart illustrating the processing in which the receiver 51 causes the decoder 56 to reproduce the contents in the user home network 5 having the structure of Fig.11. The processing of steps S641 to S647 is similar to the processing of steps S621 to S627 of Fig.78 and therefore will not be described further in detail.

At step S648, the mutual authentication module 71 of the SAM 62 and the mutual authentication module 101 of the decoder 56 carry out mutual authentication and share the temporary key. This authentication processing is similar to the processing described with reference to Figs.40 to 42 and therefore will not be described further in detail. The random number R1, R2 or R3 used for mutual authentication is used as the temporary key Ktemp. At step S649, the decoding unit 91 of the decoding/encryption module 74 decodes the contents key Kco recorded on the HDD 52 with the save key Ksave stored in the storage module 73. At step S650, the encryption unit 93 of the decoding/encryption module 74 encrypts the decoded contents key Kco with temporary key Ktemp. At step S651, the SAM 62 transmits the contents key Kco encrypted with the temporary key Ktemp to the decoder 56.

At step S652, the decoding module 101 of the decoder 56 decodes the contents key Kco with the temporary key Ktemp. At step S653, the SAM 62 reads out the contents recorded on the HDD 52 and transmits the contents to the decoder 56. At step S654, the decoding module 103 of the decoder 56 decodes the contents with the contents key Kco. At step S655, the expansion module 104 of the decoder 56 expands the decoded contents in accordance with a predetermined system such as ATRAC. At step S656, the watermark appending module 105 of the decoder 56 inserts a predetermined watermark specifying the decoder 56 into the expanded contents. At step S657, the decoder 56 outputs the reproduced contents to a speaker, not shown, and the processing ends.

The processing of step S658 is similar to the processing of step S638 of Fig.78 and therefore will not be described further in detail.

As described above, in the case where the user home network has the structure of Fig. 11, the contents received by the receiver 51 are reproduced by the decoder 56.

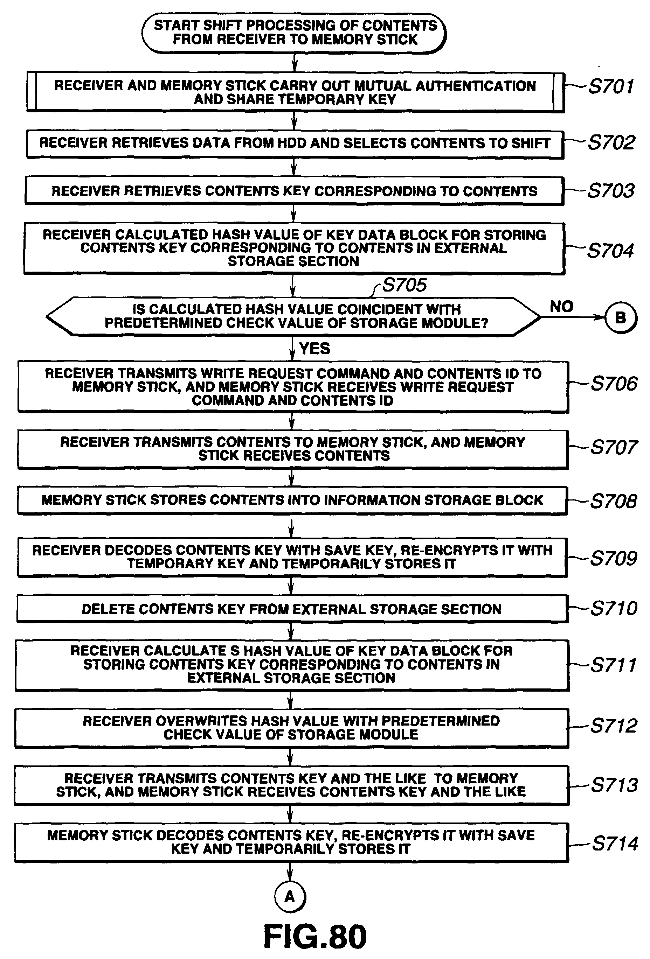

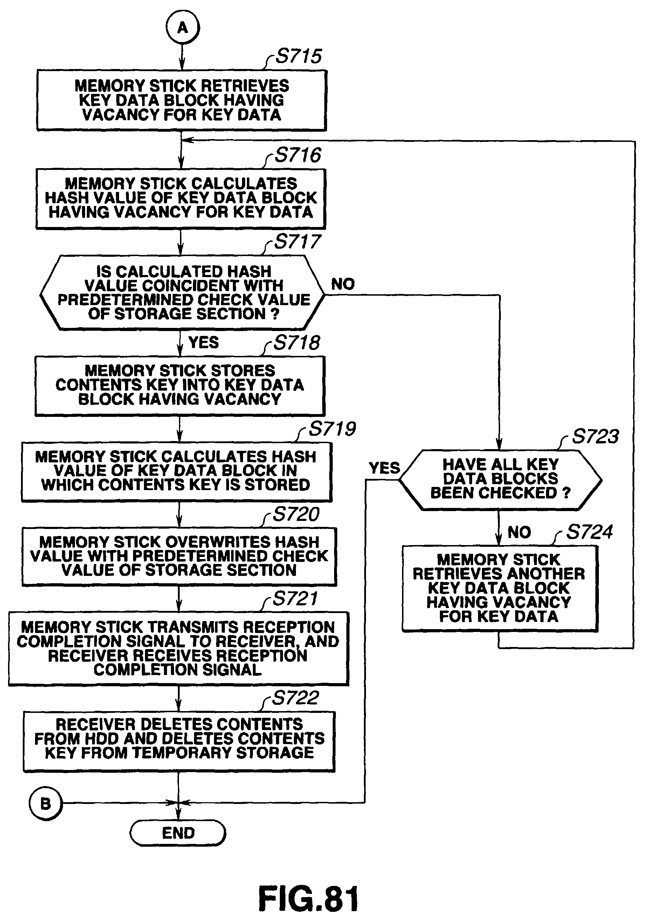

The processing for shifting the contents recorded on the HDD 52 to the memory stick 111 loaded in the receiver 51, in the case where the user network 5 has the structure of Fig.28 and where the check values are stored in the storage module 73 and the storage section 135, will now be described with reference to the flowcharts of Figs.80 and 81. At step S701, the mutual authentication module 71 of the receiver 51 carries out mutual authentication with the mutual authentication section 133 of the memory stick 111 loaded in the receiver 51 and shares the temporary key Ktemp. This authentication processing is similar to the processing described with reference to Figs.40 to 42 and therefore will not be described further in detail.

At step S702, the receiver 51 retrieves the data related to the contents from the HDD 52 and displays the data onto a display unit, not shown. The user selects the contents to shift to the memory stick 111 and inputs predetermined data to the receiver 51 by a switch, not shown. At step S703, the SAM 62 of the receiver 51 retrieves the contents key corresponding to the selected contents from the external storage section 113. At step S704, the data check module 114 of the receiver 51 applies a hash function to the data (such as contents key Kco and contents ID) stored in the key data block of the external storage section 113, which stores the contents key Kco corresponding to the contents to shift, thus obtaining a hash value. At step S705, the data check module 114 compares the hash value obtained at step S704 with the check value corresponding to the key data block storing the contents key Kco, stored in the storage module 73, and determines whether these values are coincident with each other or not. If it is determined that these values are coincident, the data of the key data block has not been tampered and therefore the processing goes to step S706. The communication section 61 of the receiver 51 transmits the write request command and contents ID to the communication section 131 of the memory stick 111, and communication section 131 of the memory stick 111 receives the write request command and contents ID.

At step S707, the communication section 61 of the receiver 51 transmits the contents selected at step S702 to the communication section 131 of the memory stick 111, and the communication section 131 of the memory stick 111 receives the contents. At step S708, the memory controller 132 of the memory stick 111 stores the contents received by the communication section 131 to the information storage block 122 as encrypted data 144.

At step S709, the decoding unit 91 of the receiver 51 decodes the contents key Kco with the save key Ksave stored in the storage module 73, and the encryption unit 93 re-encrypts the decoded contents key Kco with the temporary key Ktemp and temporarily stores it to a register, not shown, in the SAM 62. At step S710, the SAM 62 deletes the contents key Kco corresponding to the contents to shift and stored in the external storage section 113. At step S711, the decoding/encryption module 74 of the receiver 51 applies a hash function to the data stored in the key data block of the external storage section 113 from which the contents key Kco corresponding to the contents to shift has been deleted, thus obtaining a hash value. At step S712, the decoding/encryption module 74 overwrites the check value corresponding to the key data block from the contents key Kco has been deleted, in the storage module 73, with the hash value calculated at step S711.

At step S713, the communication section 61 of the receiver 51 transmits the contents key Kco, contents ID and use permission information to the communication section 131 of the memory stick 111, and the communication section 131 of the memory stick 111 receives the contents key Kco, contents ID and use permission information. At step S714, the decoding section 136 of the memory stick 111 decodes the contents key Kco received by the communication section 131 with the temporary key Ktemp, and the encryption section 134 encrypts the decoded contents key Kco with the save key Ksave stored in the storage section 135 and temporarily stores it to a register, not shown, in the control block 121.

At step S715, the data check section 138 retrieves the key data block having vacancy of the key data 143. At step S716, the data check section 138 applies a hash function to the data (such as contents key Kco and contents ID) stored in the key data block retrieved at step S715, thus obtaining a hash value. At step S717, the data check section 138 compares the hash value calculated at step S716 with the check value corresponding to the key data block retrieved at step S715, stored in the storage section 135, and determines whether these values are coincident with each other or not. If it is determined that these values are coincident, the processing goes to step S718 and the memory controller 132 stores the contents key Kco temporarily stored in the register, into the key data block having vacancy of the key data 143.

At step S719, the data check section 138 applies a hash function to the data stored in the key data block in which the contents key Kco is stored of the key data 143, thus obtaining a hash value. At step S720, the data check section 138 overwrites the check value corresponding to the key data block in which the contents key Kco is stored of the storage section 135, with the hash value calculated at step S719.

At step S721, the communication section 131 of the memory stick 111 transmits a reception completion signal to the communication section 61 of the receiver 51, and the communication section 61 of the receiver 51 receives the reception completion signal. At step S722, the SAM 62 of the receiver 51 deletes the contents from the HDD 52 and deletes the contents key Kco from the register. Then, the processing ends.

If it is determined at step S717 that the hash value obtained at step S716 and the check value corresponding to the key data block retrieved at step S713, stored in the storage section 135, are not coincident with each other as a result of comparison, the data of the key data block has been tampered. Therefore, the processing goes to step S723 and the data check section 135 determines whether all the key data blocks of the key data 143 have been checked or not. If it is determined that all the key data blocks of the key data 143 have not been checked, the processing goes to step S724. The data check section 135 retrieves another key data block having vacancy of the key data 143, then returns to step S716 and repeats the processing.

If it is determined at step S723 that all the key data blocks of the key data have been checked, there is no key data block left for storing the contents key Kco and therefore the processing ends.

If it is determined at step S705 that the hash value obtained at step S704 and the check value corresponding to the key data block storing the contents key Kco, stored in the storage module 73, are not coincident with each other by the data check module 114, the contents to shift have been tampered and therefore the processing ends.

In this manner, the contents stored on the HDD 52 are shifted to the memory stick 111.

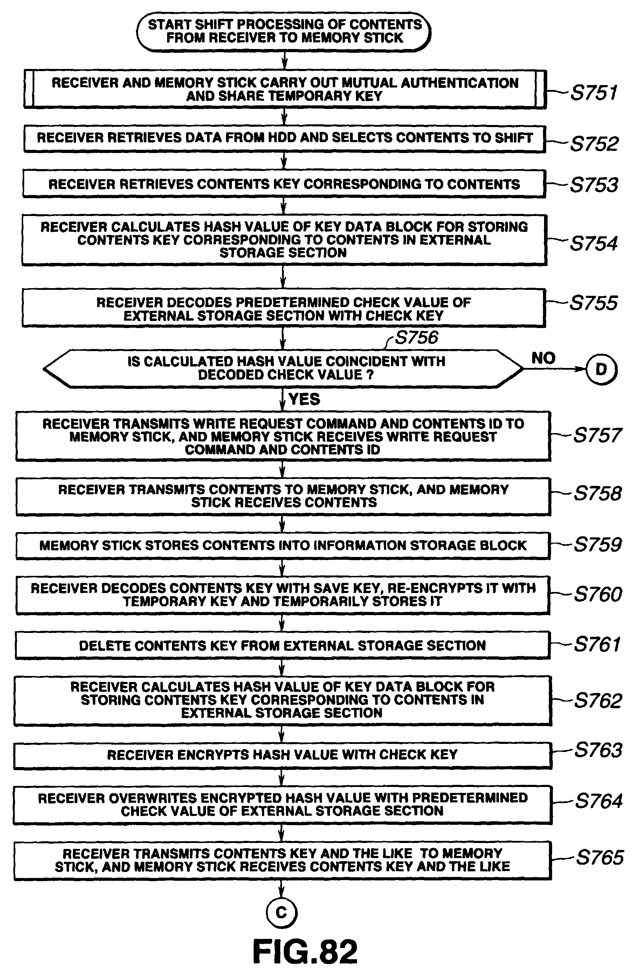

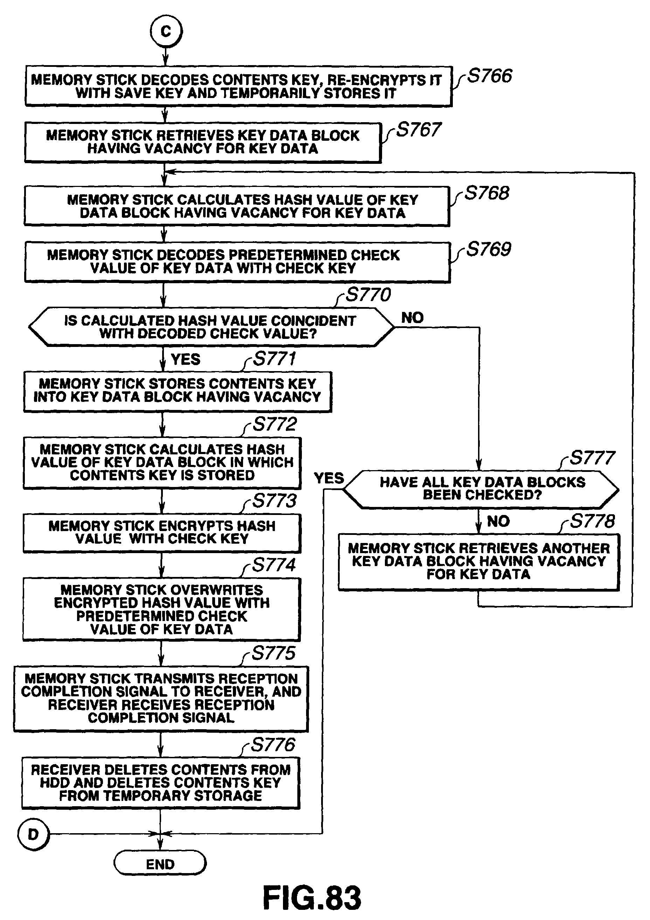

The processing for shifting the contents recorded on the HDD 52 to the memory stick 111 loaded in the receiver 51, in the case where the user network 5 has the structure of Fig.28 and where the check values are stored in the external storage section 113 and the key data 143, will now be described with reference to the flowcharts of Figs.82 and 83. The processing of steps S751 to S754 is similar to the processing of steps S701 to S704 of Fig.80 and therefore will not be described further in detail.

At step S755, the data check module 114 decodes the check value corresponding to the key data block storing the contents key Kco, with the check key Kch stored in the storage module 73. At step S756, the data check module 114 compares the hash value obtained at step S754 with the check value decoded at step S755 and determines whether these values are coincident with each other or not. If it is determined that these values are coincident, the data of the key data block has not been tampered and therefore the processing goes to step S757.

The processing of steps S757 to S762 is similar to the processing of steps S706 to S711 of Fig. 80 and therefore will not described further in detail.

At step S763, the encryption unit 93 encrypts the hash value calculated at step S762 with the check key Kch stored in the storage module 73. At step S764, the decoding/encryption module 74 overwrites the check value corresponding to the key data block from the contents key Kco has been deleted, in the external storage section 113, with the hash value encrypted at step S763.

The processing of steps S765 to S768 is similar to the processing of steps S713 to S716 of Fig.80 or 81 and therefore will not be described further in detail.

At step S769, the decoding section 136 decodes the check value corresponding to the key data block retrieved at step S767 with the check key Kch stored in the storage section 135. At step S770, the data check section 138 compares the hash value obtained at step S768 with the check value decoded at step S769 and determines whether these values are coincident with each other or not. If it is determined that these values are coincident, the data of the key data block has not been tampered and therefore the processing goes to step S771.

The processing of steps S771 and S772 is similar to the processing of steps S718 and S719 of Fig.81 and therefore will not be described further in detail.

At step S773, the data check section 138 encrypts the hash value calculated at step S772 with the check value Kch stored in the storage section 135. At step S774, the data check section 138 overwrites the check value corresponding to the key data block in which the contents key Kco is stored of the key data 143, with the hash value encrypted at step S773.

The processing of steps S775 to S778 is similar to the processing of steps S721 to S724 of Fig.81 and therefore will not be described further in detail.

If it is determined at step S756 that the hash value obtained at step S754 and the check value decoded at step S755 are not coincident with each other as a result of comparison by the data check module 114, the contents to shift have been tampered and therefore the processing ends.

In this manner, the contents stored on the HDD 52 are shifted to the memory stick 111.

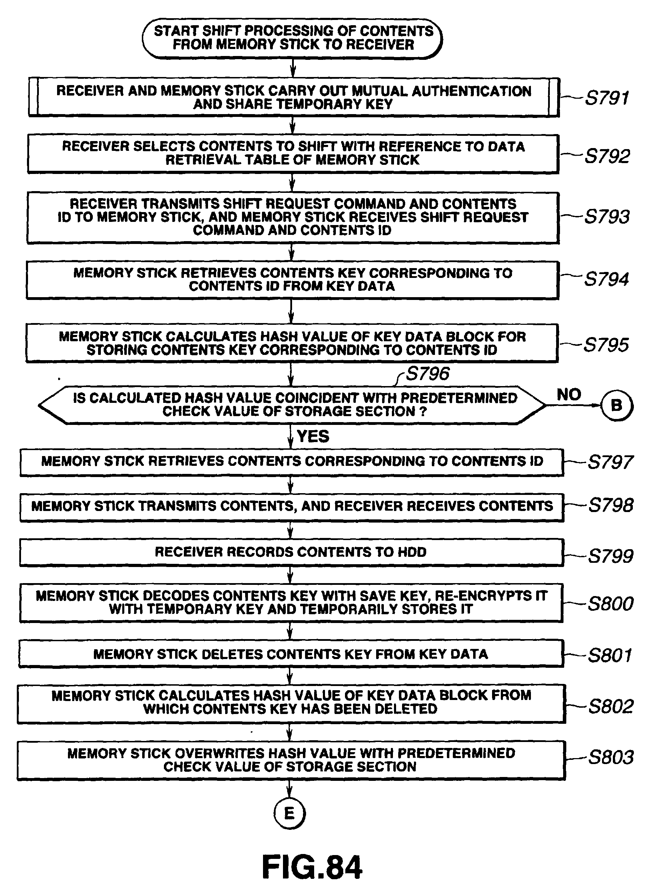

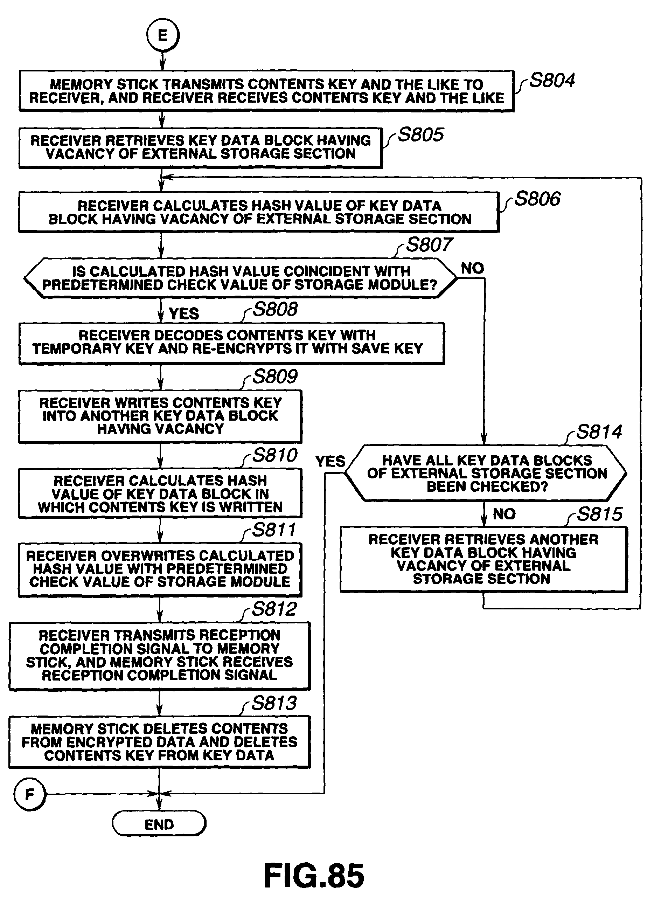

The processing for shifting the contents stored in the memory stick 111 loaded in the receiver 51 to the HDD 52, in the case where the user network 5 has the structure of Fig.28 and where check values are stored in the storage module 73 and the storage section 135, will now be described with reference to the flowcharts of Figs. 84 and 85. At step S791, the mutual authentication module 71 of the receiver 51 carries out mutual authentication with the mutual authentication section 133 of the memory stick 111 loaded in the receiver 51 and shares the temporary key Ktemp. This authentication processing is similar to the processing described with reference to Figs.40 to 42 and therefore will not be described further in detail.

At step S792, the receiver 51 retrieves the data related to the contents from the data retrieval table of the memory stick 111 via the communication section 61 and displays the data onto a display unit, not shown, and the user selects the contents to shift to the HDD 52 and inputs predetermined data to the receiver 51 by a switch, not shown. At step S793, the communication section 61 of the receiver 51 transmits the shift request command and contents ID to the communication section 131 of the memory stick 111 and the communication section 131 of the memory stick 111 receives the shift request command and contents ID.

At step S794, the memory controller 132 of the memory stick 111 retrieves the contents key Kco corresponding to the received contents ID from the key data 143. At step S795, the data check section 138 applies a hash function to the data (such as contents key Kco and contents ID) stored in the key data block storing the contents key Kco corresponding to the contents ID, thus obtaining a hash value. At step S796, the data check section 138 compares the hash value calculated at step S795 with the check value corresponding to the key data block storing the contents key Kco corresponding to the contents ID, stored in the storage section 135, and determines whether these values are coincident with each other or not. If it is determined that these values are coincident, there is no tampering made in the contents key Kco and the like and therefore the processing goes to step S797. The memory controller 132 retrieves the contents corresponding to the contents ID from the encrypted data 144 with reference to the data retrieval table 141.

At step S798, the communication section 131 of the memory stick 111 transmits the contents retrieved at step S797 to the communication section 61 of the receiver 51, and the communication section 61 of the receiver 51 receives the contents. At step S799, the SAM 62 stores the contents received by the communication section 61 to the HDD 52.

At step S800, the decoding section 136 of the memory stick 111 decodes the contents key Kco with the save key Ksave stored in the storage section 135, and the encryption section 134 re-encrypts the decoded contents key Kco with the temporary key Ktemp and temporarily stores it to a register, not shown, in the control block 121. At step S801, the memory controller 132 deletes the contents key Kco stored in the key data 143 corresponding to the content to shift. At step S802, the data check section 138 of the control block 121 applies a hash function to the data stored in the key data block of the key data 143 from which the contents key Kco corresponding to the contents to shift has been deleted, thus obtaining a hash value. At step S803, the data check section 138 overwrites the check value corresponding to the key data block from which the contents key Kco has been deleted, of the key data 143, with the hash value calculated at step S802.

At step S804, the communication section 131 of the memory stick 111 transmits the contents key Kco, contents ID and use permission information to the communication section 61 of the receiver 51, and the communication section 61 of the receiver 51 receives the contents key Kco, contents ID and use permission information. At step S805, the data check module 114 of the receiver 51 retrieves the key data block having vacancy of the external storage section 113. At step S806, the data check module 114 applies a hash function to the data stored in the key data block retrieved at step S805, thus obtaining a hash value. At step S807, the data check module 114 compares the hash value obtained at step S806 with the check value corresponding to the key data block retrieved at step S805, stored in the storage module 73, and determines whether these values are coincident with each other or not. If it is determined that these values are coincident, the data of the key data block has not been tampered and therefore the processing goes to step S808. The decoding unit 91 of the receiver 51 decodes the contents key Kco received by the communication section 61 with the temporary key Ktemp, and the encryption unit 93 encrypts the decoded contents key Kco with the save key Ksave stored in the storage module 73. At step S809, the SAM 62 stores the contents key Kco encrypted at step S807 to the key data block having vacancy of the external storage section 113.

At step S810, the decoding/encryption module 74 applies a hash function to the data stored in the key data block in which the contents key Kco is stored, of the external storage section 113, thus obtaining a hash value. At step S811, the decoding/encryption module 74 overwrites the check value corresponding to the key data block in which the contents key Kco is stored, of the storage module 73, with the hash value calculated at step S810. At step S812, the communication section 61 of the receiver 51 transmits a reception completion signal to the communication section 131 of the memory stick 111, and the communication section 131 of the memory stick 111 receives the reception completion signal. At step S813, the memory controller 132 of the memory stick 111 deletes the contents transmitted from the encrypted data 144 and deletes the corresponding contents key Kco from the key data 143. Then, the processing ends.

If it is determined at step S807 that the hash value obtained at step S806 and the check value corresponding to the key data block retrieved at step S805, stored in the storage module 73, are not coincident with each other as a result of comparison, the data of the key data block has been tampered. Therefore, the processing goes to step S814 and the data check module 114 determines whether all the key data blocks of the external storage section 113 have been checked or not. If it is determined that all the key data blocks of the external storage section 113 have not been checked, the processing goes to step S815. The data check module 114 retrieves another key data block having vacancy of the external storage section 113, then returns to step S806 and repeats the processing.

If it is determined at step S814 that all the key data blocks of the external storage section 113 have been checked, there is no key data block left for storing the contents key Kco and therefore the processing ends.

If it is determined at step S796 that the hash value obtained at step S795 and the check value corresponding to the key data block storing the contents key Kco, stored in the storage section 135, are not coincident with each other as a result of comparison, there is tampering in the contents key Kco or the like of the contents to transmit and therefore the processing ends.

In this manner, the contents are shifted from the memory stick 111 to the receiver 51.

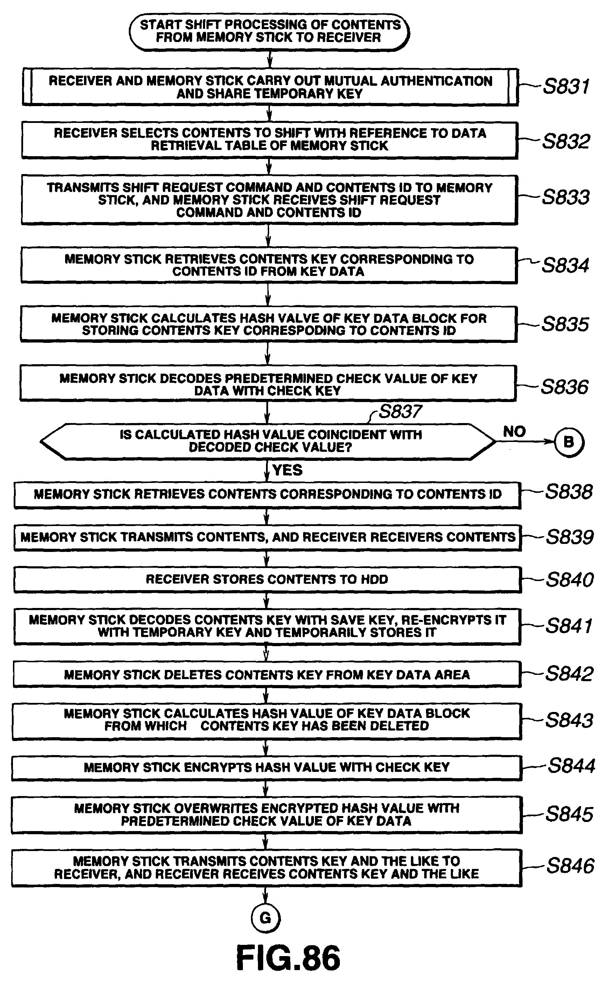

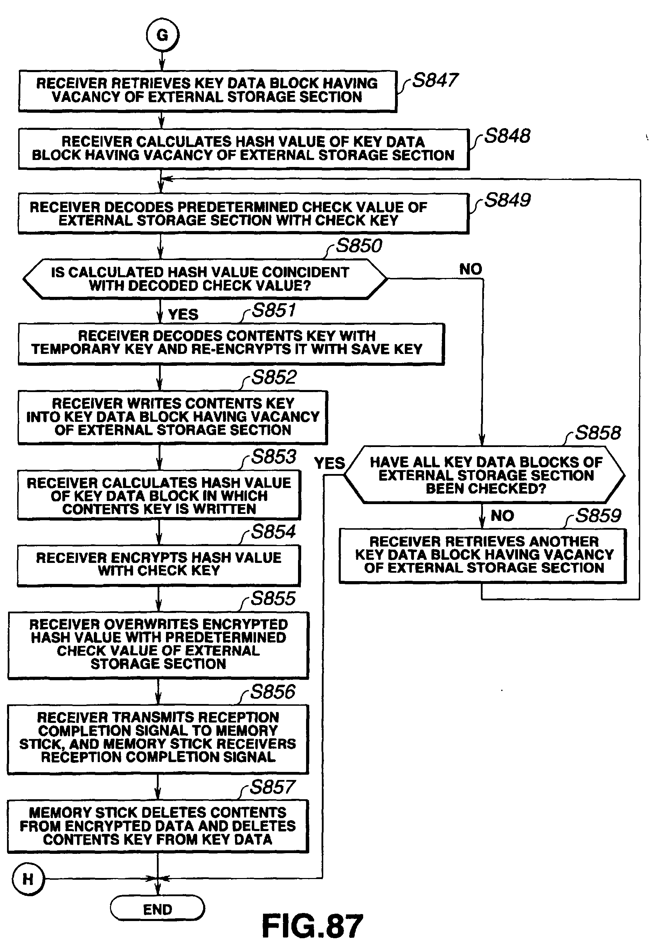

The processing for shifting the contents stored in the memory stick 111 loaded in the receiver 51 to the HDD 52, in the case where the user network 5 has the structure of Fig.28 and where check values are stored in the external storage section 113 and the key data 143, will now be described with reference to the flowcharts of Figs.86 and 87. The processing of steps S831 to S835 is similar to the processing of steps S791 to S795 of Fig. 84 and therefore will not described further in detail.

At step S836, the decoding section 136 decodes the check value corresponding to the key data block storing the contents key Kco with the check key Kch stored in the storage section 135. At step S837, the data check section 138 compares the hash value obtained at step S835 with the check value decoded at step S836 and determines whether these values are coincident with each other or not. If it is determined that these values are coincident, there is no tampering made in the data of the key data block and therefore the processing goes to step S838.

The processing of steps S838 to S843 is similar to the processing of steps S797 to S802 of Fig.84 and therefore will not be described further in detail.

At step S844, the data check section 138 encrypts the hash value calculated at step S843 with the check key Kch stored in the storage section 135. At step S845, the data check section 138 overwrites the check value corresponding to the key data block from which the contents key Kco has been deleted, of the key data 143, with the hash value encrypted at step S844.

The processing of steps S846 and S847 is similar to the processing of steps S804 and S805 of Fig.85 and therefore will not be described further in detail.

At step S849, the data check module 114 decodes the check value corresponding to the key data block retrieved at step S847 with the check key Kch stored in the storage section 135. At step S850, the data check module 114 compares the hash value obtained at step S848 with the check value decoded at step S849 and determines whether these values are coincident with each other or not. If it is determined that these values are coincident, the data of the key data block has not been tampered and therefore the processing goes to step S851.

The processing of steps S851 to S853 is similar to the processing of steps S808 to S810 of Fig.85 and therefore will not be described further in detail.

At step S854, the encryption unit 93 encrypts the hash value calculated at step S855 with the check value Kch stored in the storage module 73. At step S855, the decoding/encryption module 74 overwrites the check value corresponding to the key data block in which the contents key Kco is stored, of the external storage section 113, with the hash value encrypted at step S854.

The processing of steps S856 to S859 is similar to the processing of steps S812 to S815 of Fig.85 and therefore will not be described further in detail.

In this manner, even in the case where the check values are stored in the external storage section 113 and the key data 143, the contents are shifted from the memory stick 111 to the receiver 51.

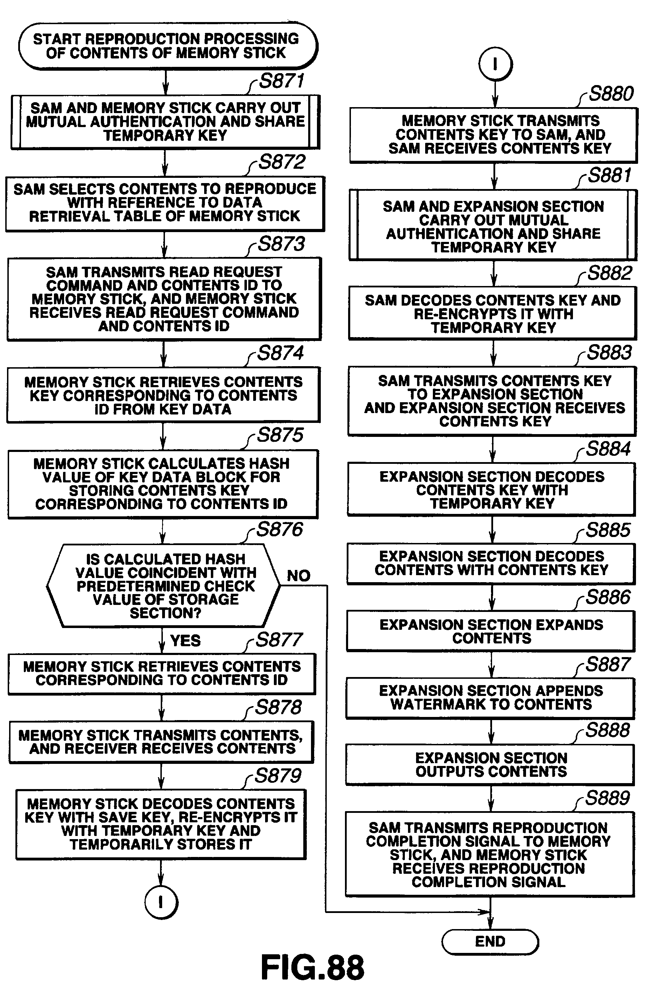

The processing in which the receiver 51 reproduces the contents stored in the memory stick 111 loaded in the receiver 51, in the case where the user network 5 has the structure of Fig.28 and where the check values are stored in the storage section 135, will now be described with reference to the flowchart of Fig.88. At step S871, the mutual authentication module 71 of the SAM 62 carries out mutual authentication with the mutual authentication section 133 of the memory stick 111 loaded in the receiver 51 and shares the temporary key Ktemp. This authentication processing is similar to the processing described with reference to Figs.40 to 42 and therefore will not be described further in detail. The key used for the mutual authentication at step S871 in the contents reproduction may be different from the key used for the mutual authentication at step S791 in the contents shift shown in Fig.84.

At step S872, the SAM 62 of the receiver 51 retrieves the data related to the contents from the data retrieval table of the memory stick 111 via the communication section 62 and displays the data onto a display unit, not shown, and the user selects the contents to reproduce and inputs predetermined data to the receiver 51 by a switch, not shown. At step S873, the SAM 62 of the receiver 51 transmits the read request command and contents ID to the communication section 131 of the memory stick 111 via the communication section 61, and the communication section 131 of the memory stick 111 receives the read request command and contents ID.

At step S874, the memory controller 132 of the memory stick 111 retrieves the contents key Kco corresponding to the received contents ID from the key data 143. At step S875, the data check section 138 applies a hash function to the data (such as contents key Kco and contents ID) stored in the key data block storing the contents key Kco corresponding to the contents ID, thus obtaining a hash value. At step S876, the data check section 138 compares the hash value calculated at step S875 with the check value corresponding to the key data block storing the contents key Kco corresponding to the contents ID, stored in the storage section 135, and determines whether these values are coincident with each other or not. If it is determined that these values are coincident, there is no tampering made in the contents key Kco or the like and therefore the processing goes to step S877. The memory controller 132 retrieves the contents corresponding to the contents ID from the encrypted data 144 with reference to the data retrieval table 141.

At step S878, the communication section 131 of the memory stick 111 transmits the contents retrieved at step S877 to the communication section 61 of the receiver 51, and the communication section 61 of the receiver 51 receives the contents. At step S879, the decoding section 136 of the memory stick 111 decodes the contents key Kco with the save key Ksave stored in the storage section 135, and the encryption section 134 re-encrypts the decoded contents key Kco with the temporary key Ktemp and temporarily stores it to a register, not shown, in the control block 121. At step S880, the communication section 131 of the memory stick 111 transmits the contents key Kco, contents ID and use permission information to the SAM 62 of the receiver 51, and the SAM 62 of the receiver 51 receives the contents key Kco, contents ID and use permission information.

At step S881, the mutual authentication module 71 of the SAM 62 carries out mutual authentication with the mutual authentication module 75 of the expansion section 63 and shares the temporary key Ktemp (which is different from the temporary key Ktemp shared at step S871). This authentication processing is similar to the processing described with reference to Figs.40 to 42 and therefore will not be described further in detail.

At step S882, the decoding unit 91 of the SAM 62 decodes the contents key Kco with the temporary key Ktemp shared with the memory stick 111, and the encryption unit 93 re-encrypts the decoded contents key Kco with the temporary key Ktemp shared with the expansion section 63. At step S883, the SAM 62 transmits the contents key Kco encrypted with the temporary key Ktemp shared with the expansion section 63, to the expansion section 63, and the expansion section 63 receives the encrypted contents key Kco.

At step S884, the decoding module 76 of the expansion section 63 decodes the contents key Kco received by the communication section 61 with the temporary key Ktemp shared with the SAM 62. At step S885, the decoding module 76 of the expansion section 63 decodes the contents received at step S878 with the contents key Kco decoded at step S884. At step S886, the expansion module 78 of the expansion section 63 expands the decoded contents in accordance with a predetermined system such as ATRAC. At step S887, the watermark appending module 79 inserts a predetermined watermark specifying the receiver 51 into the expanded contents. At step S888, the expansion section 63 outputs the reproduced contents to a speaker, not shown. At step S889, the SAM 62 of the receiver 51 transmits a reproduction completion signal to the communication section 131 of the memory stick 111, and the control block 121 of the memory stick 111 receives the reproduction completion signal. Then, the processing ends.

If it is determined at step S876 that the hash value calculated at step S875 and the check value corresponding to the key data block storing the contents key Kco corresponding to the contents ID, stored in the storage section 135, are not coincident with each other as a result of comparison, there is tampering made in the contents key Kco or the like and therefore the processing ends.

In this manner, only when there is no tampering in the key data block, the receiver 51 reproduces the contents stored in the memory stick 111 loaded in the receiver 51. At step S871, the expansion section 63 and the memory stick 111 may carry out mutual authentication so that the memory stick 111 may directly transmit the contents key Kco to the expansion section 63, which then may receive the contents key Kco.

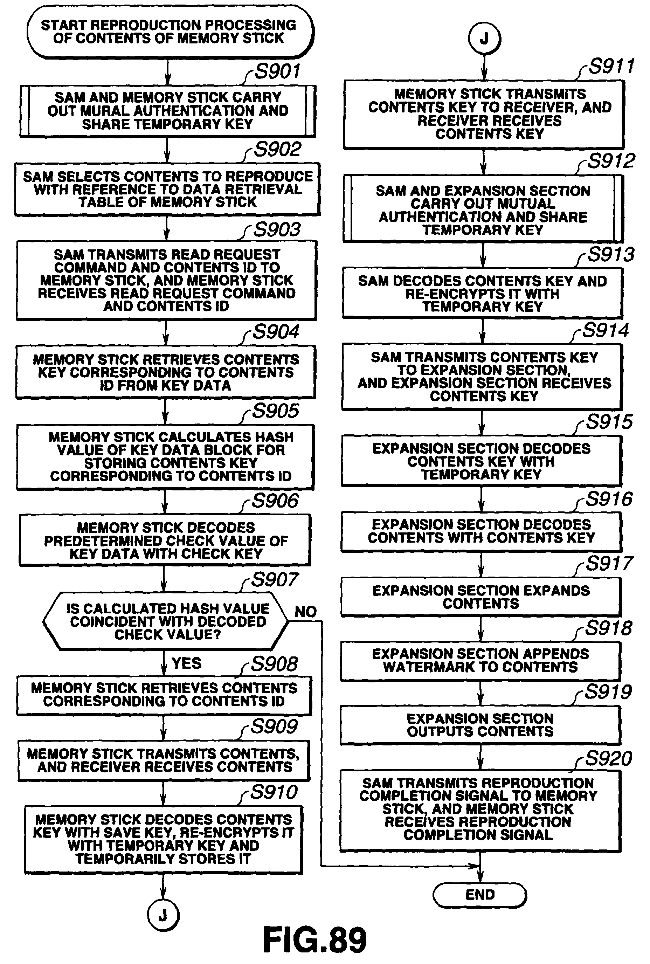

The processing in which the receiver 51 reproduces the contents stored in the memory stick 111 loaded in the receiver 51, in the case where the user network 5 has the structure of Fig.28 and where the check values are stored in the key data 143, will now be described with reference to the flowchart of Fig.89. The processing of steps S901 to S905 is similar to the processing of steps S871 to S875 of Fig.88 and therefore will not be described further in detail.

At step 906, the decoding section 136 of the memory stick 111 decodes the check value corresponding to the key data block storing the contents key Kco with the check key Kch stored in the storage section 135. At step S907, the data check section 138 compares the hash value obtained at step S905 with the check value decoded at step S906 and determines whether these values are coincident with each other or not. If it is determined that these values are coincident, the data of the key data block has not been tampered and therefore the processing goes to step S908.

The processing of steps S908 to S920 is similar to the processing of steps S877 to S889 of Fig.88 and therefore will not be described further in detail.

If it is determined at step S907 that the hash value obtained at step S905 and the check value decoded at step S906 are not coincident with each other as a result of comparison, the data of the key data block has been tampered and therefore the processing ends.

In this manner, also in the case where the encrypted check value is stored in the key data 143, only when there is no tampering in the key data block, the receiver 51 reproduces the contents stored in the memory stick 111 loaded in the receiver 51.

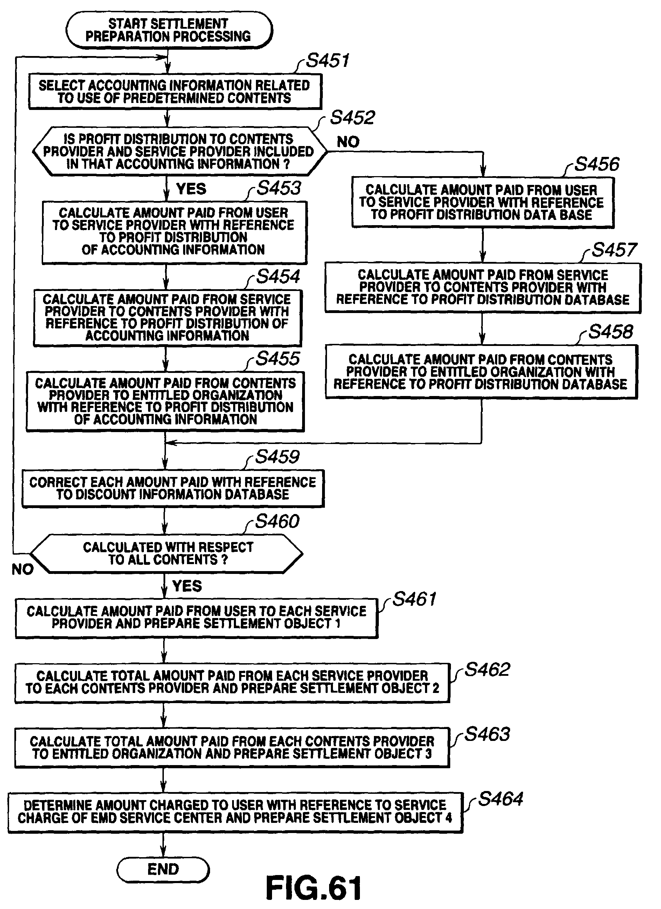

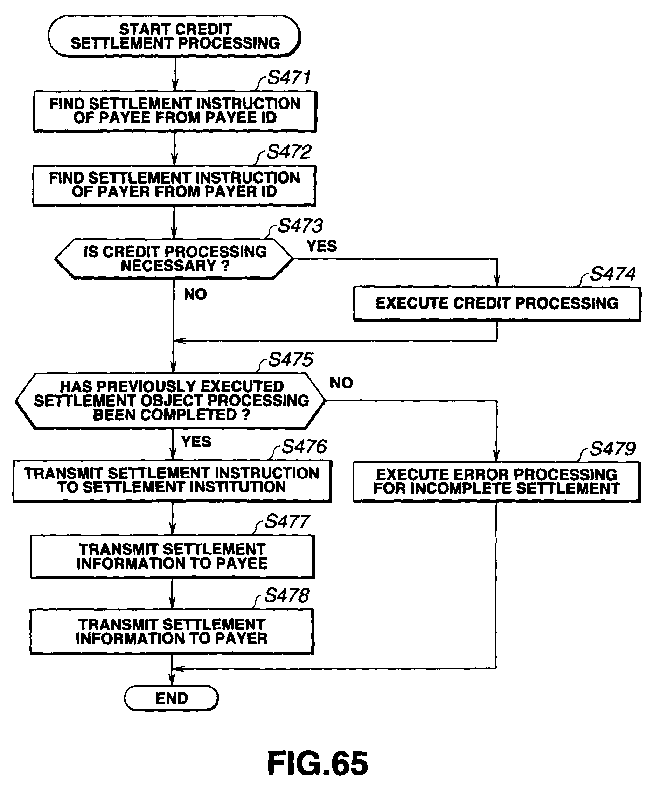

The processing for preparing the settlement object of the EMD service center 1 before the settlement processing, which will be later described with reference to Fig.65, will now be described with reference to the flowchart of Fig.61. At step S451, the historical data management section 15 of the EMD service center 1 selects the accounting information related to the use of predetermined contents from the accounting information received and stored from the user home network 5, and transmits the selected accounting information to the profit distribution section 16. At step S452, the profit distribution section 16 determines whether or not the data indicating the profit distribution to the contents provider 2 and the service provider 3 is included in the accounting information received from the historical data management section 15. If it is determined that the data indicating the profit distribution to the contents provider 2 and the service provider 3 is included in the accounting information received from the historical data management section 15, the processing goes to step S453.

At step S453, the profit distribution section 16 calculates the amount to be paid to the service provider 3 from the user who used the predetermined contents, with reference to the data indicating the profit distribution included in the accounting information. At step S454, the profit distribution section 16 calculates the amount to be paid from the service provider 3 to the contents provider 2, with reference to the data indicating the profit distribution included in the accounting information. At step S455, the profit distribution section 16 calculates the amount to be paid from the contents provider 2 to an entitled organization, with reference to the data indicating the profit distribution included in the accounting information. Then, the processing goes to step S459.

If it is determined at step S452 that the data indicating the profit distribution to the contents provider 2 and the service provider 3 is not included in the accounting information received from the historical data management section 15, the processing goes to step S456, and the profit distribution section 16 calculates the amount to be paid to the service provider 3 from the user who used the predetermined contents, with reference to the profit distribution database stored in the profit distribution section 16. At step S457, the profit distribution section 16 calculates the amount to be paid from the service provider 3 to the contents provider 2, with reference to the profit distribution database stored in the profit distribution section 16. At step S458, the profit distribution section 16 calculates the amount to be paid from the contents provider 2 to the entitled organization, with reference to the profit distribution database stored in the profit distribution section 16. The processing then goes to step S459.

At step S459, the profit distribution section 16 corrects the amount to be paid from the predetermined user to the service provider 3, the amount to be paid from the service provider 3 to the contents provider 2 and the amount to be paid from the contents provider 2 to the entitled organization, with reference to data of the discount information database stored in the profit distribution section 16.

At step S460, the historical data management section 15 determines whether or not the calculation of steps S453 to S459 has been carried out with respect to all the contents. If it is determined that the calculation of steps S453 to S459 has not been carried out with respect to all the contents, the processing returns to step S451 and the subsequent processing is repeated. If it is determined at step S460 that the calculation of steps S453 to S459 has been carried out with respect to all the contents, the processing goes to step S461.

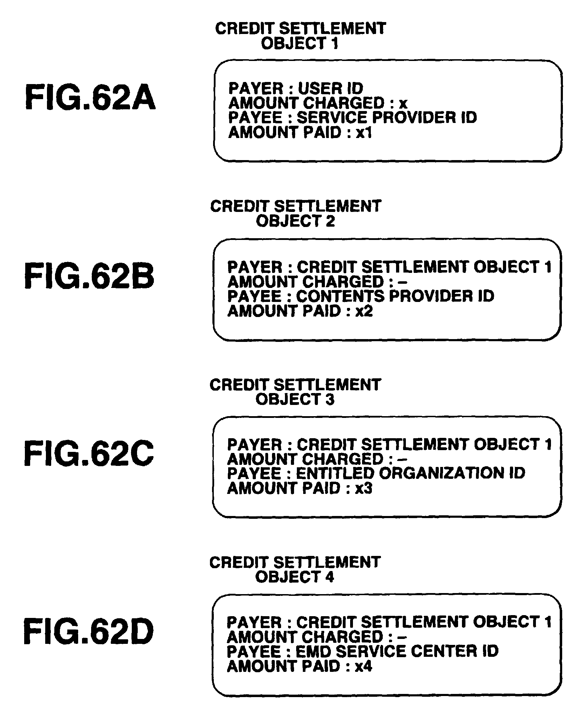

At step S461, the profit distribution section 16 calculates the amount to be paid to each service provider 3 from each user, and prepares a credit settlement object 1 (e.g., in the case where the user pays the fee with a credit card, a credit settlement object 1 shown in Fig.62(A)). In the credit settlement object 1, the user's ID is set for the payer, the ID of the service provider 3 is set for the payee, and the amount to be paid to the service provider 3 is set for the amount paid. At step S462, the profit distribution section 16 calculates the amount to be paid to each contents provider 2 from each service provider 3, and prepares a credit settlement object 2 (e.g., in the case where the user pays the fee with a credit card, a credit settlement object 2 shown in Fig.62(B)). In the credit settlement object 2, the credit settlement object 1 is set for the payer, the ID of the contents provider 2 is set for the payee, and the amount to be paid to the contents provider 2 is set for the amount paid.

At step S463, the profit distribution section 16 calculates the amount to be paid to the entitled organization from each contents provider 2, and prepares a credit settlement object 3 (e.g., in the case where the user pays the fee with a credit card, a credit settlement object 3 shown in Fig.62(C)). In the credit settlement object 3, the credit settlement object 1 is set for the payer, the ID of the entitled organization is set for the payee, and the amount to be paid to the entitled organization is set for the amount paid. At step S464, the accounting and charging section 19 calculates the amount charged to the user with reference to the user use fee table storing the fee for the use of the EMD service center 1 by the user, stored in the accounting and charging section 19, and prepares a credit settlement object 4 (e.g., in the case where the user pays the fee with a credit card, a credit settlement object 4 shown in Fig.62(D)). Then, the amount charged to the credit settlement object 1 is set and the processing ends. In the credit settlement object 4, the credit settlement object 1 is set for the payer, the ID of the EMD service center 1 is set for the payee, and the amount to be paid to the EMD service center 1 is set for the amount paid.

In the above-described manner, the EMD service center 1 prepares the settlement objects.

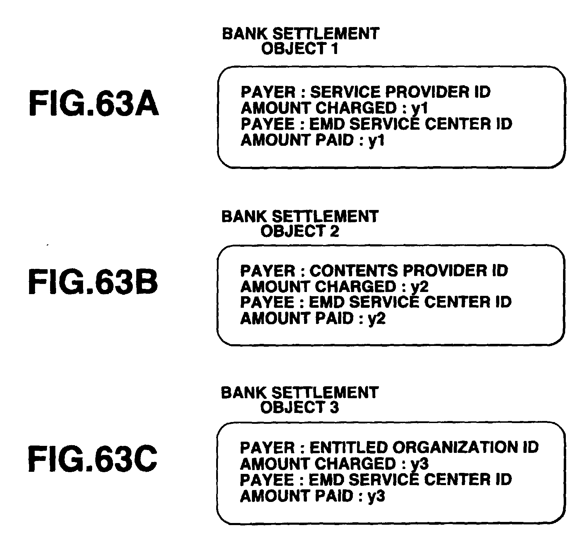

Figs. 63(A) to 63(C) show examples of bank settlement objects in the case where the service provider 3, the contents provider 2 and the entitled organization pay the service charge to the EMD service center 1. In a bank settlement object 1 of Fig.63(A), the ID of the service provider 3 is set for the payer, the amount charged to the service provider 3 is set for the amount charged, the ID of the EMD service center 1 is set for the payee, and the amount to be paid to the EMD service center 1 (equal to the amount charged) is set for the amount paid. In a bank settlement object 2 of Fig.63(B), the ID of the contents provider 2 is set for the payer, the amount charged to the contents provider 2 is set for the amount charged, the ID of the EMD service center 1 is set for the payee, and the amount to be paid to the EMD service center 1 (equal to the amount charged) is set for the amount paid. In a bank settlement object 3 of Fig.63(C), the ID of the entitled organization is set for the payer, the amount charged to the entitled organization is set for the amount charged, the ID of the EMD service center 1 is set for the payee, and the amount to be paid to the EMD service center 1 (equal to the amount charged) is set for the amount paid.

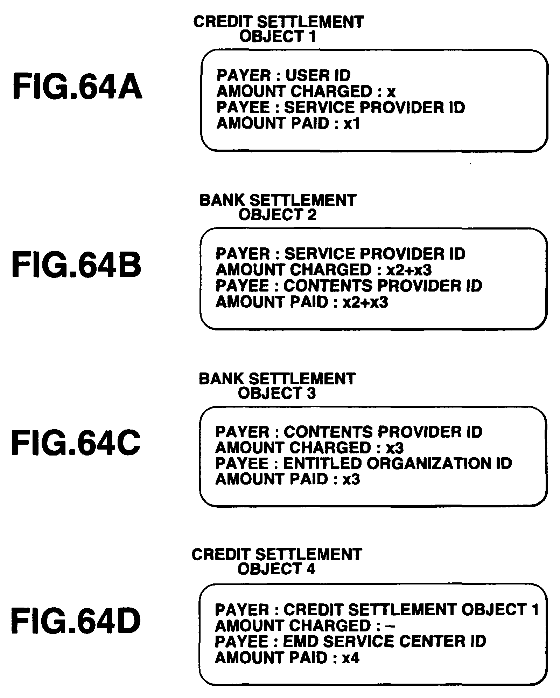

Figs.64(A) to 64(D) show examples of settlement objects in the case where the user pays the fee with a credit card while the service provider 3 and the contents provider 2 carry out settlement through their bank accounts. Credit settlement objects of Figs.64(A) and 64(D) are similar to the credit settlement objects of Figs.62(A) and 62(D) and therefore will not be described further in detail. In a band settlement object 2 of Fig.64(B), the ID of the service provider 3 is set for the payer, the amount from the service provider 3 including the amount to be paid to the contents provider 2 and the amount to be paid to the entitled organization is set for the amount charged, the ID of the contents provider 2 is set for the payee, and the amount to be paid to the contents provider 2 (equal to the amount charged) is set for the amount paid. In a band settlement object 3 of Fig.64(C), the ID of the contents provider 2 is set for the payer, the amount charged to the contents provider 2 is set for the amount charged, the ID of the entitled organization is set for the payee, and the amount to be paid to the entitled organization (equal to the amount charged) is set for the amount paid.

As the settlement is carried out on the basis of the payers, amounts charged, payees and amounts paid described in the settlement objects of Figs.62(A) to 62(D), Figs.63(A) to 63(C) and Figs.64(A) to 64(D), the predetermined amounts are paid to the EMD service center 1, the contents provider 2, the service provider 3 and the entitle organization. The settlement processing using the credit settlement object of the EMD service center 1 will now be described with reference to the flowchart of Fig.65. At step S471, the receipt and disbursement section 20 of the EMD service center 1 finds the settlement institution such as the back of the payee, from the ID described as the payee in the credit settlement object. At step S472, the receipt and disbursement section 20 of the EMD service center 1 finds the settlement institution such as the credit company of the payer, from the ID described as the payer in the credit settlement object. At step S473, the receipt and disbursement section 20 determines whether credit processing of the payer is necessary or not from the pre-stored information. If it is determined that the credit processing is necessary, the credit processing is executed at step S474. If it is determined in the credit processing of step S474 that the payer cannot pay the fee, the processing ends. If it is determined in the credit processing of step S474 that the payer can pay the fee, the processing goes to step S475.

If it is determined at step S473 that the credit processing of the payer is not necessary, the processing goes to step S475.

At step S475, the receipt and disbursement section 20 determines whether the previously executed settlement object processing has been completed or not. If it is determined that the previously executed settlement object processing has been completed, the processing goes to step S476 so as to transmit a settlement instruction corresponding to the amount charged and the amount paid described in the credit settlement object, to the settlement institutions found at steps S471 and S472. At step S477, the information of the settlement processing executed at step S476 is transmitted to the payee corresponding to the ID described as the payee in the credit settlement object. At step S478, the information of the settlement processing executed at step S476 is transmitted to the payer corresponding to the ID described as the payer in the credit settlement object. Then, the processing ends.

If it is determined at step S475 that the previously executed settlement object processing has not been completed, the processing goes to step S479 and the receipt and disbursement section 20 carries out predetermined error processing for incomplete settlement such as transmitting a predetermined message to the payer described in the settlement object for which the processing has not been completed. Then, the processing ends.

In the above-described manner, the settlement processing using the credit settlement object is carried out.

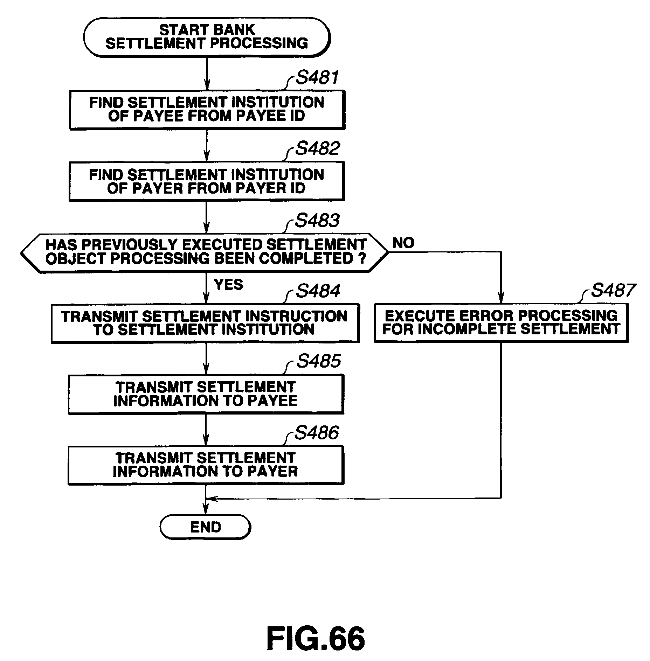

Fig.66 is a flowchart illustrating the settlement processing using the bank settlement object of the EMD service center 1. The settlement processing using the bank settlement object is similar to the settlement processing using the credit settlement object of Fig.65 from which the credit processing of steps S471 and S474 is eliminated. The processing of steps S481 and S482 is similar to the processing of steps S471 and S472 of Fig.65 and therefore will not be described further in detail. The processing of steps S483 to S487 is similar to the processing of steps S475 to S479 of Fig.65 and therefore will not be described further in detail.

In the above-described manner, the settlement processing using the bank settlement object is carried out. Then, along the settlement processing using the credit settlement object, the predetermined amounts are collected from the user, the contents provider 2, the service provider 3 and the entitled organization, and the predetermined amounts are received by the EMD service center 1, the contents provider 2, the service provider 3 and the entitled organization.

As the contents, music data are used in the above description. However, not only music data but also dynamic image data, still image data, text data or program data may be used. In such cases, a system suitable for the type of contents is used for compression. For example, MPEG (Moving Picture Experts Group) is used for images. As for the watermark, a watermark of a format suitable for the type of contents is used.

As the common key encryption, DES, which is block encryption, is used in the above description. However, FEAL proposed by NTT (trademark), IDEA (International Data Encryption Algorithm), or stream encryption for encrypting every one to several bits may be employed.

In the description of the encryption of the contents and contents key Kco, the common key encryption system is used. However, the public key encryption system may also be used.

At step S184 of Fig.51, step S204 of Fig.52 and step S227 of Fig.53 in the above description, the receiver 51 transmits the accounting information to the EMD service center 1. However, all or a part of the use permission information may be transmitted. Since the use permission information includes what right the user has purchased, the EMD service center 1 can carry out the settlement processing by confirming the information included in the use permission information, price information and handling policy.

At step S706 of Fig.80, step S757 of Fig.82, step S793 of Fig.84, step S833 of Fig.86, step S873 of Fig.88 and step S903 of Fig.89 in the above description, the receiver 51 may append the signature encrypted with the secret key of the receiver 51 to the command to be transmitted to the memory stick 111 and transmit the resultant command to the memory stick 111 so that the memory stick 111 may check the signature, thus reinforcing the resistance against unauthorized actions.

Moreover, in the processing for shifting the contents shown in Figs.80 to 87, the contents key Kco is re-encrypted and temporarily stored and then deleted. However, in order to avoid inconvenience such that the receiving side of the contents key Kco deletes the contents key Kco and therefore cannot receive the contents key Kco because of the absence of any contents key storage area, the transmitting side of the contents key Kco may temporarily make the contents key Kco unavailable (i.e., defining the flag indicating the status of the contents key Kco and using that flag) until the reception completion signal is received, and may carry out processing for making the contents key Kco available again when the reception completion signal cannot be received.

In this specification, the system means the entire apparatus including a plurality of devices.

As a providing medium for providing a computer program for carrying out the above-described processing, a communication medium such as a network, a satellite or a cable, as well as a recording medium such as a magnetic disk, a CD-ROM or a solid state memory can be used.

As described above, according to the present invention, the first key is decoded with the second key, and when the first key cannot be decoded with the second key, transmission of the second key is requested. Therefore, even in the case where the data providing side has changed the key at arbitrary timing, the user can securely decode encrypted information at any time.

Also, according to the present invention, when the accounting value has reached a predetermined value, transmission of the second key is requested. Therefore, even in the case where the data providing side has changed the key at arbitrary timing, the user can securely decode encrypted information at any time.

Moreover, according to the present invention, the data specifying the information processing device is stored and transmitted to the management device, and when transmitting the data specifying the information processing device, transmission of the second key is requested. Therefore, even in the case where the data providing side has changed the key at arbitrary timing, the user can securely decode encrypted information at any time.

According to the present invention, mutual authentication is carried out and the temporary key is generated. Then, the first key is decoded with the second key and the first is encrypted with the temporary key. The first key is decoded with the temporary key and the information is decoded with the first key. Therefore, in decoding the information, the key for encrypting the information is not read out.

According to the present invention, the information providing device appends the information indicating the handling of information to the encrypted information and transmits the resultant information to the information distribution device. The information distribution device calculates the use fee for the information on the basis of the information indicating the handling of the information transmitted from the information providing device, then appends the use fee to the encrypted information, and transmits the resultant information to the information processing device. The information processing device prepares the accounting information corresponding to the use of information on the basis of the use fee, and transmits to the management device the accounting information together with a part of or all of the information indicating the handling of information and the use fee. The management device detects an unauthorized action from the accounting information and a part of or all of the information indicating the handling of information and the use fee. Therefore, unauthorized actions can be detected such as unfair pricing by a person having a valid key and tampering of the information indicating the handling.

Also, according to the present invention, the information indicating the handling of information is appended to encrypted information and then transmitted to the information distribution device. The received encrypted information and information indicating the handling of information are transmitted, and use permission information corresponding to the use of information is prepared on the basis of the information indicating the handling of information. The use permission information is transmitted together with a part of or all of the information indicating the handling of information, and an unauthorized action is detected from the use permission information and a part of or all of the information indicating the handling of information. Therefore, unauthorized actions can be detected such as unfair pricing by a person having a valid key and tampering of the information indicating the handling.

According to the present invention, the ID of the information processing device and the data indicating the registrability corresponding to the ID are provided, and the information processing device is registered on the basis of the ID of the information processing device. Therefore, the possibility of a contract with a user can be quickly determined.

Also, according to the present invention, since registration of another information subordinate to the information processing device is requested, a user having a plurality of information processing devices can easily carry out processing for a contract.

Also, according to the present invention, the management device has the data indicating the ID of the information processing device and the data indicating the registrability corresponding to the ID, and registers the information processing device on the basis of the ID of the information processing device. The information processing device requests registration of another information processing device subordinate to the information processing device. Therefore, the possibility of a contract by a user can be quickly determined and a user having a plurality of information processing devices can easily carry out processing for a contract.

In addition, according to the present invention, since the registration conditions are stored, the operation in the case where a certain violation has occurred can be easily and securely controlled (limited).

Moreover, according to the present invention, in executing predetermined processing, the registration conditions are prepared. Therefore, the operation in the case where a certain violation has occurred can be easily and securely controlled (limited).

According to the present invention, information indicating the use permission condition of the information and information authentication information indicating the permission condition are generated, and the authentication information is stored. Therefore, rewrite of the use permission condition of the information can be detected and suitable measures can be taken.

Also, according to the present invention, authentication information of related information necessary for the use of information is generated and stored, and another authentication information is generated from the related information. The coincidence between the generated authentication information and the stored authentication information is verified and mutual authentication with an information storage medium is carried out. Therefore, rewrite of the related information of the information can be detected and suitable measures can be taken.

Also, according to the present invention, the authentication information generation means generates authentication information of related information necessary for the use of information, and the storage means stores the authentication information. The verification means generates another authentication information from the related information and verifies the coincidence with the authentication information stored in the storage means. The mutual authentication means carries out mutual authentication with the information processing device. Therefore, rewrite of the related information of the information can be detected and suitable measures can be taken.

According to the present invention, the data specifying the information and the data indicating the amount to be paid to the information provider for the use of the information are stored, and the sum of the amount to be paid to each information provider is calculated on the basis of the stored data. The settlement institution is instructed to carry out settlement for each information provider on the basis of the profit of each information provider. Therefore, settlement processing and processing for calculating the profit can be efficiently carried out.

According to the present invention, mutual authentication with a loaded external storage medium is carried out and predetermined information is encrypted with a predetermined key. Therefore, it is possible to externally store necessary information while maintaining the security against unauthorized actions.

Also, according to the present invention, since data stored in an external storage medium loaded in the information processing device is decoded, it is possible to externally store necessary information while maintaining the security against unauthorized actions.

Also, according to the present invention, the information processing device carries out mutual authentication with an external storage medium loaded therein and encrypts predetermined information with the public key of the management device. The management device decodes the data stored in the external storage medium. Therefore, it is possible to externally store necessary information while maintaining the security against unauthorized actions.

Moreover, according to the present invention, since mutual authentication with the information processing device is carried out, unauthorized reading can be prevented.

**Claims**

1. An information processing device for receiving encrypted information, an encrypted first key for decoding the information and a second key for decoding the first key so as to decode the information, the device comprising:

   decoding means for decoding the first key with the second key; and
   request means for requesting transmission of the second key when the decoding means cannot decode the first key.

2. An information processing method for receiving encrypted information, an encrypted first key for decoding the information and a second key for decoding the first key so as to decode the information, the method comprising:

   a decoding step of decoding the first key with the second key; and
   a request step of requesting transmission of the second key when the first key cannot be decoded at the decoding step.

3. A program providing medium for providing a computer-readable program which causes an information processing device for receiving encrypted information, an encrypted first key for decoding the information and a second key for decoding the first key so as to decode the information, to execute processing comprising:

   a decoding step of decoding the first key with the second key; and

a request step of requesting transmission of the second key when the first key cannot be decoded at the decoding step.

4. An information processing device for receiving encrypted information, an encrypted first key for decoding the information and a second key for decoding the first key so as to decode the information, the device comprising:

accounting means for executing processing for accounting; and
request means for requesting transmission of the second key when an accounting value obtained by the accounting means has reached a predetermined value.

5. An information processing method for receiving encrypted information, an encrypted first key for decoding the information and a second key for decoding the first key so as to decode the information, the method comprising:

an accounting step of executing processing for accounting; and
a request step of requesting transmission of the second key when an accounting value at the accounting step has reached a predetermined value.

6. An information providing medium for providing a computer-readable program which causes an information processing device for receiving encrypted information, an encrypted first key for decoding the information and a second key for decoding the first key so as to decode the information, to execute processing comprising:

an accounting step of executing processing for accounting; and
a request step of requesting transmission of the second key when an accounting value at the accounting step has reached a predetermined value.

7. An information processing device for receiving encrypted information, an encrypted first key for decoding the information and a second key for decoding the first key from a system managed by a predetermined management device so as to decode the information, the device comprising:

storage means for storing data specifying the information processing device;
transmission means for transmitting the data specifying the information processing device to the management device; and

request means for requesting transmission of the second key when the data specifying the information processing device is transmitted.

8. An information processing method for receiving encrypted information, an encrypted first key for decoding the information and a second key for decoding the first key from a system managed by a predetermined management device so as to decode the information, the method comprising:

a storage step of storing data specifying an information processing device;
a transmission step of transmitting the data specifying the information processing device to the management device; and
a request step of requesting transmission of the second key when the data specifying the information processing device is transmitted.

9. A program providing medium for providing a computer-readable program which causes an information processing device for receiving encrypted information, an encrypted first key for decoding the information and a second key for decoding the first key from a system managed by a predetermined management device so as to decode the information, to execute processing comprising:

a storage step of storing data specifying the information processing device;
a transmission step of transmitting the data specifying the information processing device to the management device; and
a request step of requesting transmission of the second key when the data specifying the information processing device is transmitted.

10. An information processing device having first storage means and first decoding means for using encrypted information, an encrypted first key for decoding the information and a second key for decoding the first key so as to decode the information,

the first storage means comprising first mutual authentication means for carrying out mutual authentication with the first decoding means and generating a temporary key, second storage means for storing the second key, second decoding means for decoding the first key with the second key, and encryption means for encrypting the first key with the temporary key, the first decoding means comprising second mutual authentication means for carrying out mutual authentication with the first storage means and generating a temporary key, third decoding means for decoding the first key with the temporary key, and fourth decoding means for decoding the information with the first key.

11. An information processing method for an information processing device having storage means and decoding means for using encrypted information, an encrypted first key for decoding the information and a second key for decoding the first key so as to decode the information,

the storage means including a first mutual authentication step of carrying out mutual authentication with the decoding means and for generating a temporary key,
a storage step of storing the second key,
a first decoding step of decoding the first key with the second key, and
an encryption step of encrypting the first key with the temporary key,
the decoding means including a second mutual authentication step of carrying out mutual authentication with the first storage means and for generating a temporary key,
a second decoding step of decoding the first key with the temporary key, and
a third decoding step of decoding the information with the first key.

12. A program providing medium for providing a computer-readable program with respect to an information processing device having storage means and decoding means for using encrypted information, an encrypted first key for decoding the information and a second key for decoding the first key so as to decode the information,

the program causing the storage means to execute processing comprising:
a first mutual authentication step of carrying out mutual authentication with the decoding means and for generating a temporary key;
a storage step of storing the second key;
a first decoding step of decoding the first key with the second key; and
an encryption step of encrypting the first key with the temporary key;
the program causing the decoding means to execute processing comprising:
a second mutual authentication step of carrying out mutual authentication with the first storage means and for generating a temporary key;
a second decoding step of decoding the first key with the temporary key; and
a third decoding step of decoding the information with the first key.

13. An information providing system comprising an information providing device for providing encrypted information, an information distribution device for distributing the provided information, an information processing device for decoding and using the distributed information, and a management device for managing the information providing device, the information distribution device and the information processing device,

the information providing device having first transmission means for appending information indicating the handling of information to the encrypted information and for transmitting the resultant information to the information distribution device,
the information distribution device having calculation means for calculating the use fee of the information on the basis of the information indicating the handling of the information transmitted from the information providing device, and second transmission means for appending the use fee to the encrypted information and for transmitting the resultant information to the information processing device,
the information processing device having accounting information preparation means for preparing accounting information corresponding to the use of the information on the basis of the use fee, and third transmission means for transmitting the accounting information together with a part of or all of the information indicating the handling of information and the use fee to the management device,
the management device having detection means for detecting an unauthorized action from a part of or all of the accounting information, the information indicating the handling of information and the use fee.

14. The information providing system as claimed in claim 13, wherein the accounting information and the information indicating the handling of information are signed and then transmitted.

15. The information providing system as claimed in claim 13, wherein the accounting information and the information indicating the handling of information are encrypted and then transmitted.

16. An information providing method for an information providing system comprising an information providing device for providing encrypted information, an information distribution device for distributing the provided information, an information processing device for decoding and using the distributed information, and a management device for managing the information providing device, the information distribution device and the information processing device,

the information providing method for the information providing device including a first transmission step of appending information indicating the handling of information to the encrypted information and transmitting the resultant information to the information distribution device,

the information providing method for the information distribution device including a calculation step of calculating the use fee of the information on the basis of the information indicating the handling of the information transmitted from the information providing device, and a second transmission step of appending the use fee to the encrypted information and transmitting the resultant information to the information processing device,

the information providing method for the information processing device including an accounting information preparation step of preparing accounting information corresponding to the use of the information on the basis of the use fee, and a third transmission step of transmitting the accounting information together with a part of or all of the information indicating the handling of information and the use fee to the management device,

the information providing method for the management device including a detection step of detecting an unauthorized action from a part of or all of the accounting information, the information indicating the handling of information and the use fee.

17. A program providing medium for providing a computer-readable program with respect to an information providing system comprising an information providing device for providing encrypted information, an information distribution device for distributing the provided information, an information processing device for decoding and using the distributed information, and a management device for managing the information providing device, the information distribution device and the information processing device,

the program causing the information providing device to execute processing including a first transmission step of appending information indicating the handling of information to the encrypted information and transmitting the resultant information to the information distribution device,

the program causing the information distribution device to execute processing including a calculation step of calculating the use fee of the information on the basis of the information indicating the handling of the information transmitted from the information providing device, and a second transmission step of appending the use fee to the encrypted information and transmitting the resultant information to the information processing device,

the program causing the information processing device to execute processing including an accounting information preparation step of preparing accounting information corresponding to the use of the information on the basis of the use fee, and a third transmission step of transmitting the accounting information together with a part of or all of the information indicating the handling of information and the use fee to the management device,

the program causing the management device to execute processing including a detection step of detecting an unauthorized action from a part of or all of the accounting information, the information indicating the handling of information and the use fee.

18. An information providing system comprising an information providing device for providing encrypted information, an information distribution device for distributing the provided information, an information processing device for decoding and using the distributed information, and a management device for managing the information providing device, the information distribution device and the information processing device,

the information providing device having first transmission means for appending information indicating the handling of information to the encrypted information and then transmitting the resultant information to the information distribution device,

the information distribution device having second transmission means for transmitting the encrypted information received from the information providing device and the information indicating the handling of information to the information processing device,

the information processing device having use permission information preparation means for preparing use permission information corresponding to the use of the information on the basis of the information indicating the handling of information, and third transmission means for transmitting the use permission information together with a part of or all of the information indicating the handling of information to the management device,

the management device having detection means for detecting an unauthorized action from a part of or all of the use permission information and the information indicating the handling of information.

19. The information providing system as claimed in claim 18, wherein the use permission information and the information indicating the handling of information are signed and then transmitted.

20. The information providing system as claimed in claim 18, wherein the use permission information and the information indicating the handling of information are encrypted and then transmitted.

21. An information providing method for an information providing system comprising an information providing device for providing encrypted information, an information distribution device for distributing the provided information, an information processing device for decoding and using the distributed information, and a management device for managing the information providing device, the information distribution device and the information processing device,

the information providing method for the information providing device including a first transmission step of appending information indicating the handling of information to the encrypted information and then transmitting the resultant information to the information distribution device,
the information providing method for the information distribution device including a second transmission step of transmitting the encrypted information received from the information providing device and the information indicating the handling of information to the information processing device,
the information providing method for the information processing device including a use permission information preparation step of preparing use permission information corresponding to the use of the information on the basis of the information indicating the handling of information, and
a third transmission step of transmitting the use permission information together with a part of or all of the information indicating the handling of information to the management device,
the information providing method for the management device including a detection step of detecting an unauthorized action from a part of or all of the use permission information and the information indicating the handling of information.

22. A program providing medium for providing a computer-readable program with respect to an information providing system comprising an information providing device for providing encrypted information, an information distribution device for distributing the provided information, an information processing device for decoding and using the distributed information, and a management device for managing the information providing device, the information distribution device and the information processing device,

the program causing the information providing device to execute processing including a first transmission step of appending information indicating the handling of information to the encrypted information and then transmitting the resultant information to the information distribution device,
the program causing the information distribution device to execute processing including a second transmission step of transmitting the encrypted information received from the information providing device and the information indicating the handling of information to the information processing device,
the program causing the information processing device to execute processing including a use permission information preparation step of preparing use permission information corresponding to the use of the information on the basis of the information indicating the handling of information, and
a third transmission step of transmitting the use permission information together with a part of or all of the information indicating the handling of information to the management device,
the program causing the management device to execute processing including a detection step of detecting an unauthorized action from a part of or all of the use permission information and the information indicating the handling of information.

23. A management device for managing an information providing device for providing encrypted information and an information processing device for using the information, the management device comprising

registration means having ID of the information processing device and data indicating the availability of registration with respect to that ID, for registering the information processing device on the basis of the ID of the information processing device.

24. The management device as claimed in claim 23, wherein the data includes data indicating the possibility of settlement corresponding to the ID.

**25.** The management device as claimed in claim 23, wherein the registration means registers another information management device subordinate to the information management device communicating with the management device.

**26.** A management method for managing an information providing device for providing encrypted information and an information processing device for using the information, the management method comprising

a registration step of having ID of the information processing device and data indicating the availability of registration with respect to that ID and registering the information processing device on the basis of the ID of the information processing device.

**27.** A program providing medium for providing a computer-readable program which causes a management device for managing an information providing device for providing encrypted information and an information processing device for using the information, to execute processing including

a registration step of having ID of the information processing device and data indicating the availability of registration with respect to that ID and registering the information processing device on the basis of the ID of the information processing device.

**28.** An information processing device which is registered to a management device and which uses encrypted information provided from an information providing device, the information processing device comprising

registration request means for requesting registration of another information processing device subordinate to the information processing device.

**29.** The information processing device as claimed in claim 28, further comprising settlement agency means for carrying out settlement processing for another information processing device subordinate to the information processing device.

**30.** An information processing method for an information providing device which is registered to a management device and which uses encrypted information provided from an information providing device, the method comprising

a registration request step of requesting registration of another information processing device subordinate to the information processing device.

**31.** A program providing medium for providing a computer-readable program which causes an information providing device which is registered to a management device and which uses encrypted information provided from an information providing device to execute processing including

a registration request step of requesting registration of another information processing device subordinate to the information processing device.

**32.** An information utilization system comprising an information processing device for decoding information encrypted and provided thereto and a management device for managing the information processing device,

the management device having registration means having ID of the information processing device and data indicating availability of registration with respect to that ID for registering the information processing device on the basis of the ID of the information processing device, the information processing device having registration request means for requesting registration of another information processing device subordinate to the information processing device.

**33.** An information processing device which is managed by a management device and is connected to another information processing device and which decodes and uses encrypted information, the information processing device comprising:

mutual authentication means for carrying out mutual authentication with the management device and said another information processing device;
decoding means for decoding predetermined information;
transmission/reception means for transmitting/receiving a registration condition prepared by the management device;
storage means for storing the registration condition transmitted/received by the transmission/reception means; and
control means for controlling the operation on the basis of the registration condition stored by the storage means.

**34.** An information processing method for an information processing device which is managed by a management device and is connected to another information processing device and which decodes and uses encrypted information, the method comprising:

a mutual authentication step of carrying out mutual authentication with the management device and said another information processing device;

a decoding step of decoding predetermined information;

a transmission/reception step of transmitting/receiving a registration condition prepared by the management device;

a storage step of storing the registration condition transmitted/received at the transmission/reception step; and

a control step of controlling the operation on the basis of the registration condition stored at the storage step.

35. A program providing medium for providing a computer-readable program which causes an information processing device which is managed by a management device and is connected to another information processing device and which decodes and uses encrypted information, to execute processing comprising:

a mutual authentication step of carrying out mutual authentication with the management device and said another information processing device;

a decoding step of decoding predetermined information;

a transmission/reception step of transmitting/receiving a registration condition prepared by the management device;

a storage step of storing the registration condition transmitted/received at the transmission/reception step; and

a control step of controlling the operation on the basis of the registration condition stored at the storage step.

36. A management device for managing an information processing device which decodes and uses encrypted information, the management device comprising:

encryption means for encrypting data to be supplied to the information processing device;

execution means for executing predetermined processing when a registration condition is transmitted from the information processing device;

preparation means for preparing the registration condition of the information processing device when executing the predetermined processing by the execution means; and

transmission means for transmitting the registration condition prepared by the preparation means to the information processing device.

37. A management method for a management device for managing an information processing device which decodes and uses encrypted information, the method comprising:

an encryption step of encrypting data to be supplied to the information processing device;

an execution step of executing predetermined processing when a registration condition is transmitted from the information processing device;

a preparation step of preparing the registration condition of the information processing device when executing the predetermined processing at the execution step; and

a transmission step of transmitting the registration condition prepared at the preparation step to the information processing device.

38. A program providing medium for providing a computer-readable program which causes a management device for managing an information processing device which decodes and uses encrypted information, to execute processing comprising:

an encryption step of encrypting data to be supplied to the information processing device;

an execution step of executing predetermined processing when a registration condition is transmitted from the information processing device;

a preparation step of preparing the registration condition of the information processing device when executing the predetermined processing at the execution step; and

a transmission step of transmitting the registration condition prepared at the preparation step to the information processing device.

39. An information processing device for decoding and using encrypted information, the device comprising:

permission information generation means for generating information indicating a permission condition for the use of the information;

authentication information generation means for generating authentication information of the information indicating the permission condition; and

storage means for storing the authentication information.

**40.** The information processing device as claimed in claim 39, wherein the storage means has a tamper-resistant structure.

**41.** An information processing method for decoding and using encrypted information, the method comprising:

a permission information generation step of generating information indicating a permission condition for the use of the information;
an authentication information generation step of generating authentication information of the information indicating the permission condition; and
a storage step of storing the authentication information.

**42.** A program providing medium for providing a computer-readable program which causes an information processing device for decoding and using encrypted information to execute processing comprising:

a permission information generation step of generating information indicating a permission condition for the use of the information;
an authentication information generation step of generating authentication information of the information indicating the permission condition; and
a storage step of storing the authentication information.

**43.** An information processing device for storing information to a loaded information storage medium and using the information, the device comprising:

authentication information generation means for generating authentication information of related information necessary for the use of the information;
storage means for storing the authentication information;
verification means for generating another authentication information from the related information and verifying coincidence with the authentication information stored by the storage means; and
mutual authentication means for carrying out mutual authentication with the information storage medium.

**44.** The information processing device as claimed in claim 43, further comprising encryption means for encrypting the information.

**45.** The information processing device as claimed in claim 43, further comprising encryption means for encrypting the authentication information.

**46.** The information processing device as claimed in claim 45, further comprising decoding means for decoding the encrypted authentication information stored by the storage means.

**47.** An information processing method for an information processing device for storing information to a loaded information storage medium and using the information, the method comprising:

an authentication information generation step of generating authentication information of related information necessary for the use of the information;
a storage step of storing the authentication information;
a verification step of generating another authentication information from the related information and verifying coincidence with the authentication information stored at the storage step; and
a mutual authentication step of carrying out mutual authentication with the information storage medium.

**48.** A program providing medium for providing a computer-readable program which causes an information processing device for storing information to a loaded information storage medium and using the information, to execute processing comprising:

an authentication information generation step of generating authentication information of related information necessary for the use of the information;
a storage step of storing the authentication information;
a verification step of generating another authentication information from the related information and verifying coincidence with the authentication information stored at the storage step; and
a mutual authentication step of carrying out mutual authentication with the information storage medium.

**49.** An information storage medium for storing encrypted information and being loaded on an information processing device, the medium comprising:

authentication information generation means for generating authentication information of related information necessary for the use of the information;

storage means for storing the authentication information;

verification means for generating another authentication information from the related information and verifying coincidence with the authentication information stored by the storage means; and

mutual authentication means for carrying out mutual authentication with the information processing device.

50. The information storage medium as claimed in claim 49, further comprising encryption means for encrypting the authentication information.

51. The information storage medium as claimed in claim 49, further comprising decoding means for decoding the encrypted authentication information stored in the storage means.

52. An information processing device for collecting instead of an information provider the use fee from a user of information provided by the information provider and distributing the profit to the information provider, the device comprising:

storage means for storing data specifying the information and data indicating an amount to be paid to the information provider for the use of the information;

calculation means for calculating the total amount to be paid to each information provider on the basis of the data stored by the storage means; and

settlement instruction means for instructing a settlement institution to settle an account for each information provider on the basis of the profit of each information provider.

53. The information processing device as claimed in claim 52, wherein the calculation means calculates the total amount to be paid between the information providers.

54. The information processing device as claimed in claim 52, wherein the storage means further stores information related to the amount to be paid to an organization charging for the copyright of the information,

the calculation means further calculating the total amount to be paid to the organization, the settlement instruction means further instructing the settlement institution to carry out settlement for the organization.

55. The information processing device as claimed in claim 52, wherein the storage means further stores data about discount of the use fee for the information.

56. The information processing device as claimed in claim 52, wherein the settlement instruction means stores information related to the settlement institution for each information provider.

57. An information processing method for collecting instead of an information provider the use fee from a user of information provided by the information provider and distributing the profit to the information provider, the method comprising:

a storage step of storing data specifying the information and data indicating an amount to be paid to the information provider for the use of the information;

a calculation step of calculating the total amount to be paid to each information provider on the basis of the data stored at the storage step; and

a settlement instruction step of instructing a settlement institution to settle an account for each information provider on the basis of the profit of each information provider.

58. A program providing medium for providing a computer-readable program which causes an information processing device for collecting instead of an information provider the use fee from a user of information provided by the information provider and distributing the profit to the information provider, to execute processing comprising:

a storage step of storing data specifying the information and data indicating an amount to be paid to the information provider for the use of the information;

a calculation step of calculating the total amount to be paid to each information provider on the basis of the data stored at the storage step; and

a settlement instruction step of instructing a settlement institution to settle an account for each information provider on the basis of the profit of each information provider.

59. An information processing device for storing predetermined information to an external storage medium loaded therein, and for decoding encrypted information and using the decoded information, the device comprising:

mutual authentication means for carrying out mutual authentication with the external storage medium loaded therein; and

encryption means for encrypting predetermined information with a predetermined key.

**60.** The information processing device as claimed in claim 59, wherein the predetermined key is a public key of a management device managing the information processing device.

**61.** An information processing method for an information processing device for storing predetermined information to an external storage medium loaded therein, and for decoding encrypted information and using the decoded information, the method comprising:

a mutual authentication step of carrying out mutual authentication with the external storage medium loaded therein; and
an encryption step of encrypting predetermined information with a predetermined key.

**62.** A program providing medium for providing a computer-readable program which causes an information processing device for storing predetermined information to an external storage medium loaded therein and for decoding encrypted information and using the decoded information, to execute processing comprising:

a mutual authentication step of carrying out mutual authentication with the external storage medium loaded therein; and
an encryption step of encrypting predetermined information with a predetermined key.

**63.** A management device for managing an information processing device for decoding and using encrypted information, the management device comprising

decoding means for decoding data stored in an external storage medium loaded on the information processing device.

**64.** A management method for managing an information processing device for decoding and using encrypted information, the method comprising

a decoding step of decoding data stored in an external storage medium loaded on the information processing device.

**65.** A program providing medium for providing a computer-readable program which causes a management device for managing an information processing device for decoding and using encrypted information to execute processing comprising

a decoding step of decoding data stored in an external storage medium loaded on the information processing device.

**66.** An information utilization system comprising an information processing device for storing predetermined information to an external storage medium loaded thereon and for decoding and using encrypted information, and a management device for managing the information processing device,

the information processing device having mutual authentication means for carrying out mutual authentication with the external storage medium loaded thereon, and encryption means for encrypting predetermined information with a public key of the management device,
the management device having decoding means for decoding data stored in the external storage medium.

**67.** An external storage medium loaded on an information processing device for decoding and using encrypted information, the external storage medium comprising

mutual authentication means for carrying out mutual authentication with the information processing device.

FIG.1

**FIG.2**

EP 1 039 392 A1

**DISTRIBUTION KEYS HELD BY CONTENTS PROVIDER**

DISTRIBUTION KEY TO BE USED →

| DISTRIBUTION KEY | VERSION OF DISTRIBUTION KEY | AVAILABLE PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

TRANSMIT DISTRIBUTION KEY

**DISTRIBUTION KEYS HELD BY EMD SERVICE CENTER**

DISTRIBUTION KEY TO BE USED →

| DISTRIBUTION KEY | VERSION OF DISTRIBUTION KEY | AVAILABLE PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

TRANSMIT DISTRIBUTION KEY

**DISTRIBUTION KEYS HELD BY RECEIVER**

DISTRIBUTION KEY TO BE USED →

| DISTRIBUTION KEY | VERSION OF DISTRIBUTION KEY | AVAILABLE PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |

# FIG.3

EP 1 039 392 A1

DISTRIBUTION KEYS HELD BY CONTENTS PROVIDER

| DISTRIBUTION KEY | VERSION OF DISTRIBUTION KEY | AVAILABLE PERIOD | |
|---|---|---|---|
| | | START | END |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |

DISTRIBUTION KEY TO BE USED →

DISTRIBUTION KEYS HELD BY EMD SERVICE CENTER

DISTRIBUTION KEY TO BE USED →

| DISTRIBUTION KEY | VERSION OF DISTRIBUTION KEY | AVAILABLE PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |

TRANSMIT DISTRIBUTION KEY

TRANSMIT DISTRIBUTION KEY

DISTRIBUTION KEYS HELD BY RECEIVER

| DISTRIBUTION KEY | VERSION OF DISTRIBUTION KEY | AVAILABLE PERIOD | |
|---|---|---|---|
| | | START | END |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |

DISTRIBUTION KEY TO BE USED →

## FIG.4

EP 1 039 392 A1

**DISTRIBUTION KEYS HELD BY CONTENTS PROVIDER**

| DISTRIBUTION KEY | VERSION OF DISTRIBUTION KEY | AVAILABLE PERIOD | |
|---|---|---|---|
| | | START | END |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| ggggggg | 7 | 1998/7/1 | 1998/7/31 |
| hhhhhhhh | 8 | 1998/8/1 | 1998/8/31 |

DISTRIBUTION KEY TO BE USED →

**DISTRIBUTION KEYS HELD BY EMD SERVICE CENTER**

| DISTRIBUTION KEY | VERSION OF DISTRIBUTION KEY | AVAILABLE PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| ccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| ggggggg | 7 | 1998/7/1 | 1998/7/31 |
| hhhhhhhh | 8 | 1998/8/1 | 1998/8/31 |

DISTRIBUTION KEY TO BE USED →

TRANSMIT DISTRIBUTION KEY

TRANSMIT DISTRIBUTION KEY

**DISTRIBUTION KEYS HELD BY RECEIVER**

| DISTRIBUTION KEY | VERSION OF DISTRIBUTION KEY | AVAILABLE PERIOD | |
|---|---|---|---|
| | | START | END |
| ccccccc | 3 | 1998/3/1 | 1998/3/31 |
| dddddddd | 4 | 1998/4/1 | 1998/4/30 |
| eeeeeeee | 5 | 1998/5/1 | 1998/5/31 |

DISTRIBUTION KEY TO BE USED →

**FIG.5**

EP 1 039 392 A1

**DISTRIBUTION KEYS HELD BY CONTENTS PROVIDER**

DISTRIBUTION KEY TO BE USED →

| DISTRIBUTION KEY | VERSION OF DISTRIBUTION KEY | AVAILABLE PERIOD | |
|---|---|---|---|
| | | START | END |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |
| iiiiiiii | 9 | 1998/9/1 | 1998/9/30 |

← DISTRIBUTION KEY TO BE USED

TRANSMIT DISTRIBUTION KEY

**DISTRIBUTION KEYS HELD BY EMD SERVICE CENTER**

| DISTRIBUTION KEY | VERSION OF DISTRIBUTION KEY | AVAILABLE PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |
| iiiiiiii | 9 | 1998/9/1 | 1998/9/30 |

TRANSMIT DISTRIBUTION KEY

**DISTRIBUTION KEYS HELD BY RECEIVER**

DISTRIBUTION KEY TO BE USED →

| DISTRIBUTION KEY | VERSION OF DISTRIBUTION KEY | AVAILABLE PERIOD | |
|---|---|---|---|
| | | START | END |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

# FIG.6

EP 1 039 392 A1

| ID | SETTLEMENT PROCESSING | REGISTRATION | CONNECTION WITH EMD SERVICE CENTER |
|---|---|---|---|
| 0000000000000001h | POSSIBLE | POSSIBLE | POSSIBLE |
| 0000000000000002h | POSSIBLE | POSSIBLE | IMPOSSIBLE |
| 0000000000000003h | POSSIBLE | IMPOSSIBLE | POSSIBLE |
| 0000000000000004h | POSSIBLE | IMPOSSIBLE | IMPOSSIBLE |
| 0000000000000005h | IMPOSSIBLE | POSSIBLE | POSSIBLE |
| 0000000000000006h | IMPOSSIBLE | POSSIBLE | IMPOSSIBLE |
| 0000000000000007h | IMPOSSIBLE | IMPOSSIBLE | POSSIBLE |
| 0000000000000008h | IMPOSSIBLE | IMPOSSIBLE | IMPOSSIBLE |
| 0000000000000009h | POSSIBLE | POSSIBLE | POSSIBLE |
| . . . | | | |
| FFFFFFFFFFFFFFFEh | POSSIBLE | IMPOSSIBLE | IMPOSSIBLE |
| FFFFFFFFFFFFFFFFh | IMPOSSIBLE | POSSIBLE | POSSIBLE |

# FIG.7

**FIG.8**

**FIG.9**

**FIG.10**

EP 1 039 392 A1

**FIG.11**

**FIG.12**

CONTENTS PROVIDER 2

CONTENTS

CONTENTS KEY

HANDLING POLICY

CONTENTS

CONTENTS KEY

HANDLING POLICY

SERVICE PROVIDER 3

PRICE INFORMATION

CONTENTS

CONTENTS KEY

HANDLING POLICY

PRICE INFORMATION

USER HOME NERWORK 5

USE PERMISSION INFORMATION

ACCOUNTING INFORMATION

PRICE INFORMATION

HANDLING POLICY

HANDLING POLICY

ACCOUNTING INFORMATION

EMD SERVICE CENTER 1

: ENCRYPTED INFORMATION

: SIGNED SINFORMATION

EP 1 039 392 A1

CONTENTS PROVIDER
SECURE CONTAINER

CONTENTS KEY Kco

CONTENTS

DISTRIBUTION KEY Kd

CONTENTS KEY Kco

HANDLING POLICY

SECRET KEY OF CONTENTS PROVIDER Kscp

SIGNATURE

HASH FUNCTION

CONTENTS KEY Kco

CONTENTS

DISTRIBUTION KEY Kd

CONTENTS KEY Kco

HANDLING POLICY

# FIG.13

CERTIFICATE OF CONTENTS PROVIDER

VERSION NUMBER OF CERTIFICATE

SERIAL NUMBER OF CERTIFICATE
ALLOCATED BY AUTHENTICATION STATION

ALGORITHM AND PARAMETER USED FOR SIGNATURE

NAME OF AUTHENTICATION STATION

EXPIRATION DATE OF CERTIFICATE

NAME OF CONTENTS PROVIDER (ID)

PUBLIC KEY OF CONTENTS PROVIDER Kpcp

SECRET KEY OF AUTHENTICATION STATION Ksca

SIGNATURE

HASH FUNCTION

VERSION NUMBER OF CERTIFICATE

SERIAL NUMBER OF
CERTIFICATE ALLOCATED BY
AUTHENTICATION STATION

ALGORITHM AND PARAMETER
USED FOR SIGNATURE

NAME OF AUTHENTICATION STATION

EXPIRATION DATE OF CERTIFICATE

NAME OF CONTENTS PROVIDER
(ID)

PUBLIC KEY OF
CONTENTS PROVIDER Kpcp

# FIG.14

SERVICE PROVIDER
SECURE CONTAINER

CONTENTS KEY Kco

CONTENTS

DISTRIBUTION KEY Kd

CONTENTS KEY Kco

HANDLING POLICY

PRICE INFORMATION

SECRET KEY OF SERVICE PROVIDER Kssp

SIGNATURE

HASH FUNCTION

CONTENTS KEY Kco

CONTENTS

DISTRIBUTION KEY Kd

CONTENTS KEY Kco

HANDLING POLICY

PRICE INFORMATION

FIG.15

**CERTIFICATE OF SERVICE PROVIDER**

VERSION NUMBER OF CERTIFICATE

SERIAL NUMBER OF CERTIFICATE
ALLOCATED BY AUTHENTICATION STATION

ALGORITHM AND PARAMETER USED FOR SIGNATURE

NAME OF AUTHENTICATION STATION

EXPIRATION DATE OF CERTIFICATE

NAME OF SERVICE PROVIDER (ID)

PUBLIC KEY OF SERVICE PROVIDER Kpsp

SECRET KEY OF AUTHENTICATION STATION Ksca

**SIGNATURE**

HASH FUNCTION

VERSION NUMBER OF CERTIFICATE

SERIAL NUMBER OF
CERTIFICATE ALLOCATED BY
AUTHENTICATION STATION

ALGORITHM AND PARAMETER
USED FOR SIGNATURE

NAME OF AUTHENTICATION STATION

EXPIRATION DATE OF CERTIFICATE

NAME OF SERVICE PROVIDER
(ID)

PUBLIC KEY OF
SERVICE PROVIDER Kpsp

# FIG.16

**FIG.17A** HANDLING POLICY

| USE | PLAYBACK | SINGLE COPY | MULTIPLE COPY |
|---|---|---|---|
| AVAILABILITY | 1 | 0 | 1 |

**FIG.17B** HANDLING POLICY AND PRICE INFORMATION

| USE | PLAYBACK | SINGLE COPY | MULTIPLE COPY |
|---|---|---|---|
| AVAILABILITY | 1 | 0 | 1 |
| PRICE | 150YEN | - | 80YEN |

**FIG.17C** USE PERMISSION INFORMATION

| USE | PLAYBACK | SINGLE COPY | MULTIPLE COPY |
|---|---|---|---|
| AVAILABILITY | 1 | 0 | 0 |

EP 1 039 392 A1

FIG.18A

FIG.18B

EP 1 039 392 A1

**FIG.19A** HANDLING POLICY AND PROFIT DISTRIBUTION

| USE | PLAYBACK | SINGLE COPY | MULTIPLE COPY |
|---|---|---|---|
| AVAILABILITY | 1 | 0 | 1 |
| PROFIT DISTRIBUTION | 70YEN | - | 40YEN |

**FIG.19B** HANDLING POLICY, PROFIT DISTRIBUTION AND PRICE INFORMATION

| USE | PLAYBACK | SINGLE COPY | MULTIPLE COPY |
|---|---|---|---|
| AVAILABILITY | 1 | 0 | 1 |
| PROFIT DISTRIBUTION | 60YEN | - | 30YEN |
| DISTRIBUTION PRICE | 150YEN | - | 80YEN |

**FIG.19C** ACCOUNTING INFORMATION

| USE | PLAYBACK | SINGLE COPY | MULTIPLE COPY |
|---|---|---|---|
| NUMBER OF TIMES OF USE | 1 | 0 | 0 |

EP 1 039 392 A1

**FIG.20A** HANDLING POLICY AND PRICE INFORMATION

| USE | PLAY BACK | | |
|---|---|---|---|
| | UNLIMITED | LIMITED BY NUMBER OF TIMES | LIMITED BY DATE |
| | - | 5 | 1998/12/31 |
| PRICE | - | 60 YEN | 90 YEN |

**FIG.20B** USE PERMISSION INFORMATION

| USE | PLAYBACK | | |
|---|---|---|---|
| | UNLIMITED | LIMITED BY NUMBER OF TIMES | LIMITED BY DATE |
| | - | 5 | - |

**FIG.20C** USE PERMISSION INFORMATION

| USE | PLAYBACK | | |
|---|---|---|---|
| | UNLIMITED | LIMITED BY NUMBER OF TIMES | LIMITED BY DATE |
| | - | 2 | - |

**FIG.21**

| CONTENTS ID | CONTENTS PROVIDER ID | ENTITLED ORGANIZATION |
|:-----------:|:--------------------:|:---------------------:|
| 1 | 201 | 10% |
| 2 | 201 | 20% |

# FIG.22

| PROVIDER ID | CONTENTS ID | DISCOUNT RATE | PERIOD |
|---|---|---|---|
| CONTENTS PROVIDER 1 | 1 | 2% | 1998.9~1998.12 |
| | 2 | 3% | |
| | ALL CONTENTS | 1% | |
| CONTENTS PROVIDER 2 | 3 | 5% | |
| SERVICE PROVIDER 1 | 1 | 3% | |
| SERVICE PROVIDER 2 | 4 | 1% | |

FIG.23

| MONTHLY FIXED RATE | VARIABLE RATE | | |
|---|---|---|---|
| 1000YEN | PERIOD | 1998.8~1998.9 | -10% |
| | FEE | 3000YEN OR MORE | -5% |

# FIG.24

FIG.25

EMD SERVICE CENTER — 1

SERVICE PROVIDER MANAGEMENT SECTION — 11

CONTENT PROVIDER MANAGEMENT SECTION — 12

COPYRIGHT MANAGEMENT SECTION — 13

KEY SERVER — 14

HISTORICAL DATA MANAGEMENT SECTION — 15

PROFIT DISTRIBUTION SECTION — 16

MUTUAL AUTHENTICATION SECTION — 17

USER MANAGEMENT SECTION — 18

ACCOUNTING AND CHARGING SECTION — 19

RECEIPT AND DISBURSEMENT SECTION — 20

AUDIT SECTION — 21

SERVICE PROVIDER

CONTENTS PROVIDER

JASRAC

USER HOME NETWORK

EP 1 039 392 A1

EMD SERVICE CENTER

SERVICE
PROVIDER ←→ SERVICE PROVIDER MANAGEMENT SECTION *11*

KEY SERVER *14*

MUTUAL AUTHRNTICATION SECTION *17*

CONTENTS PROVIDER ←→ CONTENT PROVIDER MANAGEMENT SECTION *12*

HISTORICAL DATA MANAGEMENT SECTION *15*

USER MANAGEMENT SECTION *18* ←→ USER HOME NETWORK

COPYRIGHT MANAGEMENT SECTION *13*

PROFIT DISTRIBUTION SECTION *16*

ACCOUNTING AND CHARGING SECTION *19*

AUDIT SECTION *21*

RECEIPT AND DISBURSEMENT SECTION *20*

# FIG.26

**FIG.27**

EP 1 039 392 A1

**FIG.28**

| | | | | | | |
|---|---|---|---|---|---|---|
| KEY DATA BLOCK 1 | CONTENTS KEY 1 | CONTENTS ID 1 | USE PERMISSION INFORMATION 1 | CONTENTS KEY 2 | CONTENTS ID 2 | USE PERMISSION INFORMATION 2 |
| KEY DATA BLOCK 2 | CONTENTS KEY 3 | CONTENTS ID 3 | USE PERMISSION INFORMATION 3 | CONTENTS KEY 4 | CONTENTS ID 4 | USE PERMISSION INFORMATION 4 |
| KEY DATA BLOCK 3 | CONTENTS KEY 5 | CONTENTS ID 5 | USE PERMISSION INFORMATION 5 | | | |
| KEY DATA BLOCK 4 | | | | CONTENTS KEY 6 | CONTENTS ID 6 | USE PERMISSION INFORMATION 6 |
| KEY DATA BLOCK 5 | | | | | | |

# FIG.29

EP 1 039 392 A1

| SECRET KEY | | | | |
|---|---|---|---|---|
| ACCOUNTING INFORMATION | | | | |
| SAVE KEY | | | | |
| DISTRIBUTION KEY | | | | |
| • • • | | | | |
| CHECK VALUE 1 | CHECK VALUE 2 | CHECK VALUE 3 | CHECK VALUE 4 | CHECK VALUE 5 |

# FIG.30

| | | | | | | |
|---|---|---|---|---|---|---|
| KEY DATA BLOCK 1 | CONTENTS KEY 1 | CONTENTS ID 1 | USE PERMISSION INFORMATION 1 | CONTENTS KEY 2 | CONTENTS ID 2 | USE PERMISSION INFORMATION 2 |
| KEY DATA BLOCK 2 | CONTENTS KEY 3 | CONTENTS ID 3 | USE PERMISSION INFORMATION 3 | CONTENTS KEY 4 | CONTENTS ID 4 | USE PERMISSION INFORMATION 4 |
| KEY DATA BLOCK 3 | CONTENTS KEY 5 | CONTENTS ID 5 | USE PERMISSION INFORMATION 5 | | | |
| KEY DATA BLOCK 4 | | | | CONTENTS KEY 6 | CONTENTS ID 6 | USE PERMISSION INFORMATION 6 |
| KEY DATA BLOCK 5 | | | | | | |
| | CHECK VALUE 1 | CHECK VALUE 2 | CHECK VALUE 3 | CHECK VALUE 4 | CHECK VALUE 5 | |

# FIG.31

| SECRET KEY |
|---|
| ACCOUNTING INFORMATION |
| SAVE KEY |
| DISTRIBUTION KEY |
| CHECK KEY |
| • • • |

# FIG.32

| | | | | | |
|---|---|---|---|---|---|
| KEY DATA BLOCK 1 | CONTENTS KEY 1 | CONTENTS ID 1 | USE PERMISSION INFORMATION 1 | CONTENTS KEY 2 | CONTENTS ID 2 | USE PERMISSION INFORMATION 2 |
| KEY DATA BLOCK 2 | CONTENTS KEY 3 | CONTENTS ID 3 | USE PERMISSION INFORMATION 3 | CONTENTS KEY 4 | CONTENTS ID 4 | USE PERMISSION INFORMATION 4 |
| KEY DATA BLOCK 3 | CONTENTS KEY 5 | CONTENTS ID 5 | USE PERMISSION INFORMATION 5 | | | |
| KEY DATA BLOCK 4 | CONTENTS KEY 6 | CONTENTS ID 6 | USE PERMISSION INFORMATION 6 | | | |

FIG.33

| SECRET KEY | | | |
|---|---|---|---|
| SAVE KEY | | | |
| • • • | | | |
| CHECK VALUE 1 | CHECK VALUE 2 | CHECK VALUE 3 | CHECK VALUE 4 |

# FIG.34

| | | | | | | |
|---|---|---|---|---|---|---|
| KEY DATA BLOCK 1 | CONTENTS KEY 1 | CONTENTS ID 1 | USE PERMISSION INFORMATION 1 | CONTENTS KEY 2 | CONTENTS ID 2 | USE PERMISSION INFORMATION 2 |
| KEY DATA BLOCK 2 | CONTENTS KEY 3 | CONTENTS ID 3 | USE PERMISSION INFORMATION 3 | CONTENTS KEY 4 | CONTENTS ID 4 | USE PERMISSION INFORMATION 4 |
| KEY DATA BLOCK 3 | CONTENTS KEY 5 | CONTENTS ID 5 | USE PERMISSION INFORMATION 5 | | | |
| KEY DATA BLOCK 4 | CONTENTS KEY 6 | CONTENTS ID 6 | USE PERMISSION INFORMATION 6 | | | |
| | CHECK VALUE 1 | | CHECK VALUE 2 | | CHECK VALUE 3 | CHECK VALUE 4 |

# FIG.35

| SECRET KEY |
| CHECK KEY |
| SAVE KEY |
| • • • |

# FIG.36

START CONTENTS
DISTRIBUTION PROCESSING

EMD SERVICE CENTER TRANSMITS
DISTRIBUTION KEY TO CONTENTS
PROVIDER AND CONTENTS PROVIDER
RECEIVES DISTRIBUTION KEY — S11

USER REGISTERS EQUIPMENT
INFORMATION TO EMD SERVICE CENTER — S12

EMD SERVICE CENTER TRANSMITS
DISTRIBUTION KEY TO USER AND
USER RECEIVES DISTRIBUTION KEY — S13

CONTENTS PROVIDER TRANSMITS
SECURE CONTAINER TO SERVICE
PROVIDER AND SERVICE PROVIDER
RECEIVES SECURE CONTAINER — S14

SERVICE PROVIDER TRANSMITS SECURE
CONTAINER TO USER AND USER
RECEIVES SECURE CONTAINER — S15

USER EXECUTES ACCOUNTING — S16

USER REPRODUCES CONTENTS — S17

END

# FIG.37

```
        ┌─────────────────────────────┐
        │      START CONTENTS         │
        │  DISTRIBUTION PROCESSING    │
        └─────────────────────────────┘
                     │
                     ▼
   ┌──────────────────────────────────────┐
   │  EMD SERVICE CENTER TRANSMITS         │
   │  DISTRIBUTION KEY TO CONTENTS         │ ─ S21
   │  PROVIDER AND CONTENTS PROVIDER       │
   │  RECEIVES DISTRIBUTION KEY            │
   └──────────────────────────────────────┘
                     │
                     ▼
   ┌──────────────────────────────────────┐
   │  EMD SERVICE CENTER TRANSMITS         │
   │  DISTRIBUTION KEY TO SERVICE          │ ─ S22
   │  PROVIDER AND SERVICE PROVIDER        │
   │  RECEIVES DISTRIBUTION KEY            │
   └──────────────────────────────────────┘
                     │
                     ▼
   ┌──────────────────────────────────────┐
   │  USER REGISTERS EQUIPMENT             │ ─ S23
   │  INFORMATION TO EMD SERVICE CENTER    │
   └──────────────────────────────────────┘
                     │
                     ▼
   ┌──────────────────────────────────────┐
   │  EMD SERVICE CENTER TRANSMITS         │
   │  DISTRIBUTION KEY TO USER AND         │ ─ S24
   │  USER RECEIVES DISTRIBUTION KEY       │
   └──────────────────────────────────────┘
                     │
                     ▼
   ┌──────────────────────────────────────┐
   │  CONTENTS PROVIDER TRANSMITS          │
   │  SECURE CONTAINER TO SERVICE          │ ─ S25
   │  PROVIDER AND SERVICE PROVIDER        │
   │  RECEIVES SECURE CONTAINER            │
   └──────────────────────────────────────┘
                     │
                     ▼
   ┌──────────────────────────────────────┐
   │  SERVICE PROVIDER TRANSMITS SECURE    │
   │  CONTAINER TO USER AND USER           │ ─ S26
   │  RECEIVES SECURE CONTAINER            │
   └──────────────────────────────────────┘
                     │
                     ▼
   ┌──────────────────────────────────────┐
   │  USER EXECUTES ACCOUNTING             │ ─ S27
   └──────────────────────────────────────┘
                     │
                     ▼
   ┌──────────────────────────────────────┐
   │  USER REPRODUCES CONTENTS             │ ─ S28
   └──────────────────────────────────────┘
                     │
                     ▼
               ┌──────────┐
               │   END    │
               └──────────┘
```

# FIG.38

START TRANSMISSION OF DISTRIBUTION
KEY TO CONTENTS PROVIDER

MUTUAL AUTHENTICATION WITH
CONTENTS PROVIDER — S31

CONTENTS PROVIDER RECEIVES
DISTRIBUTION KEY — S32

CONTENTS PROVIDER STORES
DISTRIBUTION KEY — S33

RETURN

# FIG.39

S41 — GENERATE 64 BITS RANDOM NUMBER R1

S42 — ENCRYPT R1 WITH KEY Kc

S43 — TRANSMIT ENCRYPTED R1 TO EMD SERVICE CENTER → DECODE RECEIVED R1 — S44

GENERATE 32 BITS RANDOM NUMBER R2 — S45

REPLACE LOWER 32 BITS OF RANDOM NUMBER R1 BY RANDOM NUMBER R2 TO OBTAIN R1HllR2 — S46

ENCRYPT R1HllR2 WITH KEY Kc — S47

S49 — DECODE RECEIVED R1HllR2 ← TRANSMIT ENCRYPTED R1HllR2 TO CONTENTS PROVIDER — S48

S50 — AUTHENTICATE EMD SERVICE CENTER IF UPPER 32 BITS OF DECODED R1HllR2 ARE MATCHED

S51 — GENERATE 32 BITS RANDOM NUMBER R3

S52 — CONSTITUTE R2llR3

S53 — ENCRYPT R2llR3 WITH KEY Kc

S54 — TRANSMIT ENCRYPTED R2llR3 TO EMD SERVICE CENTER → DECODE RECEIVED R2llR3 — S55

AUTHENTICATE CONTENTS PROVIDER IF UPPER 32 BITS OF DECODED R2llR3 ARE MATCHED — S56

# FIG.40

EP 1 039 392 A1

CONTENTS PROVIDER

EMD SERVICE CENTER

S61 — GENERATE 64-BITS RANDOM NUMBER R1

S62 — ENCRYPT R1 WITH KEY Kc1

S63 — TRANSMIT ENCRYPTED R1 TO EMD SERVICE CENTER

DECODE RECEIVED R1 — S64

ENCRYPT R1 WITH KEY Kc2 — S65

GENERATE 64-BITS RANDOM NUMBER R2 — S66

ENCRYPT R2 WITH KEY Kc2 — S67

S69 — DECODE RECEIVED R1 AND R2

TRANSMIT ENCRYPTED R1 AND R2 TO CONTENTS PROVIDER — S68

S70 — AUTHENTICATE EMD SERVICE CENTER IF DECODED R1 IS MATCHED

S71 — ENCRYPT R2 WITH KEY Kc1

S72 — TRANSMIT ENCRYPTED R2 TO EMD SERVICE CENTER

DECODE RECEIVED R2 — S73

AUTHENTICATE CONTENTS PROVIDER IF DECODED R2 IS MATCHED — S74

# FIG.41

EP 1 039 392 A1

CONTENTS PROVIDER

EMD SERVICE CENTER

S81 — GENERATE 64-BITS RANDOM NUMBER R1

S82 — TRANSMIT R1 AND CERTIFICATE
TO EMD SERVICE CENTER

S83 — VERIFY SIGNATURE OF CERTIFICATE
AND TAKE OUT PUBLIC KEY Kpcp FROM
CERTIFICATE IF SIGNATURE IS CORRECT

S84 — GENERATE 64-BITS RANDOM NUMBER R2

S85 — CONSTITUTE R1IIR2

S86 — ENCRYPT R1IIR2 WITH SECRET KEY Ksesc

S87 — ENCRYPT R1IIR2 WITH PUBLIC KEY Kpcp

S89 — VERIFY SIGNATURE OF CERTIFICATE
AND TAKE OUT PUBLIC KEY Kpcp FROM
CERTIFICATE IF SIGNATURE IS CORRECT

S88 — TRANSMIT R1IIR2 ENCRYPTED WITH
SECRET KEY Ksesc, R1IIR2 ENCRYPTED
WITH PUBLIC KEY Kpcp AND
CERTIFICATE TO CONTENTS PROVIDER

S90 — DECODE R1IIR2 WITH PUBLIC KEY Kpesc

S91 — DECODE R1IIR2 WITH SECRET KEY Kscp

S92 — AUTHENTICATE EMD SERVICE
CENTER IF DECODED R1IIR2 IS MATCHED

S93 — GENERATE 64-BITS RANDOM NUMBER R3

S94 — CONSTITUTE R2IIR3

S95 — ENCRYPT R2IIR3 WITH PUBLIC KEY Kpesc

S96 — TRANSMIT ENCRYPTED R2IIR3
TO EMD SERVICE CENTER

S97 — DECODE R2IIR3 WITH SECRET KEY Ksesc

S98 — AUTHENTICATE CONTENTS
PROVIDER IF DECODED R2 IS MATCHED

# FIG.42

EP 1 039 392 A1

START REGISTRATION
PROCESSING

↓

*S101*

IS BACKUP IC CARD LOADED ? — YES → *S102* BACKUP READ PROCESSING

NO ↓

SAM CARRIES OUT MUTUAL AUTHENTICATION WITH EMD SERVICE CENTER AND TRANSMITS CERTIFICATE — *S103*

↓

SAM ENCRYPTS INFORMATION OF USER'S SETTLEMENT INSTITUTION WITH TEMPORARY KEY AND TRANSMITS IT TO EMD SERVICE CENTER — *S104*

↓

EMD SERVICE CENTER RETRIEVES REGISTRATION DATABASE USING ID OF SAM — *S105*

↓

IS SAM OF RECEIVED ID REGISTRABLE ? *S106* — NO → EMD SERVICE CENTER PREPARES REGISTRATION LIST OF REGISTRATION REJECTION *S113*

↓ YES *S107*

IS SAM OF RECEIVED ID NEWLY REGISTERED ? — YES → EMD SERVICE CENTER PREPARES NEW REGISTRATION LIST *S114*

↓ NO

EMD SERVICE CENTER PREPARES REGISTRATION LIST OF RENEWAL REGISTRATION — *S108*

↓

EMD SERVICE CENTER TRANSMITS DISTRIBUTION KEY ENCRYPTED WITH TEMPORARY KEY TO SAM — *S109*

↓

SAM DECODES AND STORES RECEIVED DISTRIBUTION KEY — *S110*

↓

EMD SERVICE CENTER TRANSMITS REGISTRATION LIST ENCRYPTED WITH TEMPORARY KEY TO SAM — *S111*

↓

SAM DECODES AND STORES RECEIVES REGISTRATION LIST — *S112*

↓

RETURN

# FIG.43

CERTIFICATE OF SAM

VERSION NUMBER OF CERTIFICATE

SERIAL NUMBER OF CERTIFICATE
ALLOCATED BY AUTHENTICATION STATION

ALGORITHM AND PARAMETER USED FOR SIGNATURE

NAME OF AUTHENTICATION STATION

EXPIRATION DATE OF CERTIFICATE

NAME OF SAM (ID)

PUBLIC KEY OF SAM Kpu

PARAMETER INDICATING WHETHER IT IS
DEPENDENT UPON ANOTHER SAM

SECRET KEY OF AUTHENTICATION STATION Ksca

SIGNATURE

HASH FUNCTION

VERSION NUMBER OF CERTIFICATE

SERIAL NUMBER OF
CERTIFICATE ALLOCATED
BY AUTHENTICATION STATION

ALGORITHM AND PARAMETER
USED FOR SIGNATURE

NAME OF AUTHENTICATION STATION

EXPIRATION DATE OF CERTIFICATE

NAME OF SAM (ID)

PUBLIC KEY OF SAM Kpu

PARAMETER INDICATING WHETHER
IT IS DEPENDENT UPON ANOTHER SAM

FIG.44

| ID OF SAM<br>(64 BITS) | REGISTRATION<br>REJECTION FLAG<br>(1 BIT) | STATUS FLAG<br>(4 BITS) | CONDITION FLAG<br>(1 BIT) | SIGNATURE |
|---|---|---|---|---|
| 0000000000000001h | 1 | 0000 | 0 | XXXXXXXXX |
| 0000000000000002h | 1 | 1010 | 1 | XXXXXXXXX |
| 0000000000000003h | 1 | 1100 | 1 | XXXXXXXXX |
| 000000000000000Ah | 0 | 0000 | 1 | XXXXXXXXX |

# FIG.45

EP 1 039 392 A1

START BACKUP OF
STORAGE DATA IN SAM

SAM CARRIES OUT MUTUAL
AUTHENTICATION WITH IC CARD ~S121

GENERATE RANDOM NUMBER AND
USE IT AS BACKUP KEY ~S122

ENCRYPT STORAGE DATA
IN SAM WITH BACKUP KEY ~S123

ENCRYPT BACKUP KEY WITH PUBLIC KEY
OF EMD SERVICE CENTER ~S124

STORE ENCRYPTED STORAGE DATA IN SAM
AND ENCRYPTED BACKUP KEY TO IC CARD ~S125

END

# FIG.46

```
      ┌─────────────────────────────┐
      │      START BACKUP OF        │
      │    STORAGE DATA IN SAM      │
      └─────────────────────────────┘
                    │
                    ▼
   ┌────────────────────────────────────┐
   │      SAM CARRIES OUT MUTUAL        │ ~S131
   │   AUTHENTICATION WITH IC CARD      │
   └────────────────────────────────────┘
                    │
                    ▼
   ┌────────────────────────────────────┐
   │  ENCRYPT STORAGE DATA IN SAM WITH  │ ~S132
   │  PUBLIC KEY OF EMD SERVICE CENTER  │
   └────────────────────────────────────┘
                    │
                    ▼
   ┌────────────────────────────────────┐
   │      STORE ENCRYPTED STORAGE       │ ~S133
   │     DATA IN SAM TO IC CARD         │
   └────────────────────────────────────┘
                    │
                    ▼
              ┌───────────┐
              │    END    │
              └───────────┘
```

# FIG.47

START BACKUP READ
PROCESSING TO NEW RECEIVER

SAM CARRIES OUT MUTUAL
AUTHENTICATION WITH IC CARD — S141

READ OUT ENCRYPTED STORAGE DATA IN SAM
AND ENCRYPTED BACKUP KEY FROM IC CARD — S142

SAM CARRIES OUT MUTUAL AUTHENTICATION
WITH EMD SERVICE CENTER — S143

SAM TRANSMITS ENCRYPTED STORAGE
DATA IN SAM AND ENCRYPTED BACKUP
KEY TO EMD SERVICE CENTER — S144

EMD SERVICE CENTER DECODES
BACKUP KEY WITH SECRET KEY — S145

EMD SERVICE CENTER DECODES STORAGE
DATA IN SAM WITH BACKUP KEY — S146

EMD SERVICE CENTER ENCRYPTS STORAGE
DATA IN SAM WITH TEMPORARY KEY — S147

EMD SERVICE CENTER TRANSMITS
STORAGE DATA IN SAM — S148

SAM DECODES AND STORES
RECEIVED DATA — S149

EMD SERVICE CENTER MAKES OLD SAM ID
NON-REGISTRABLE — S150

RETURN

# FIG.48

START BACKUP READ
PROCESSING TO NEW RECEIVER

SAM CARRIES OUT MUTUAL
AUTHENTICATION WITH IC CARD — S151

READ OUT ENCRYPTED STORAGE DATA IN SAM
AND ENCRYPTED BACKUP KEY FROM IC CARD — S152

SAM CARRIES OUT MUTUAL AUTHENTICATION
WITH EMD SERVICE CENTER — S153

SAM TRANSMITS ENCRYPTED
BACKUP KEY TO EMD SERVICE CENTER — S154

EMD SERVICE CENTER DECODES
BACKUP KEY WITH SECRET KEY — S155

EMD SERVICE CENTER ENCRYPTS
BACKUP KEY WITH TEMPORARY KEY — S156

EMD SERVICE CENTER TRANSMITS
BACKUP KEY AND CARRIES OUT ACCOUNTING — S157

SAM DECODES RECEIVED BACKUP KEY — S158

SAM DECODES STORAGE DATA IN SAM WITH
BACKUP KEY AND STORES IT — S159

EMD SERVICE CENTER MAKES OLD SAM ID
NON-REGISTRABLE — S160

RETURN

FIG.49

```
        ╭─────────────────────────╮
        │   START BACKUP READ      │
        │ PROCESSING TO NEW RECEIVER│
        ╰─────────────────────────╯
                    │
                    ▼
     ┌───────────────────────────────┐
     ║   SAM CARRIES OUT MUTUAL       ║── S161
     ║  AUTHENTICATION WITH IC CARD   ║
     └───────────────────────────────┘
                    │
                    ▼
     ┌───────────────────────────────┐
     │   READ OUT ENCRYPTED STORAGE DATA │── S162
     │      IN SAM FROM IC CARD       │
     └───────────────────────────────┘
                    │
                    ▼
     ┌───────────────────────────────┐
     ║ SAM CARRIES OUT MUTUAL AUTHENTICATION ║── S163
     ║    WITH EMD SERVICE CENTER     ║
     └───────────────────────────────┘
                    │
                    ▼
     ┌───────────────────────────────┐
     │ SAM TRANSMITS ENCRYPTED STORAGE DATA │── S164
     │   IN SAM TO EMD SERVICE CENTER │
     └───────────────────────────────┘
                    │
                    ▼
     ┌───────────────────────────────┐
     │   EMD SERVICE CENTER DECODES   │── S165
     │ STORAGE DATA IN SAM WITH SECRET KEY │
     └───────────────────────────────┘
                    │
                    ▼
     ┌───────────────────────────────┐
     │   EMD SERVICE CENTER ENCRYPTS  │── S166
     │ STORAGE DATA IN SAM WITH TEMPORARY KEY │
     └───────────────────────────────┘
                    │
                    ▼
     ┌───────────────────────────────┐
     │   EMD SERVICE CENTER TRANSMITS │── S167
     │      STORAGE DATA IN SAM       │
     └───────────────────────────────┘
                    │
                    ▼
     ┌───────────────────────────────┐
     │ SAM DECODES AND STORES RECEIVED DATA │── S168
     └───────────────────────────────┘
                    │
                    ▼
     ┌───────────────────────────────┐
     │ EMD SERVICE CENTER MAKES OLD SAM ID │── S169
     │        NON-REGISTRABLE         │
     └───────────────────────────────┘
                    │
                    ▼
             ╭───────────╮
             │   RETURN  │
             ╰───────────╯
```

# FIG.50

START RECORDER
REGISTRATION PROCESSING

RECEIVER ADDS RECORDER ID
TO REGISTRATION LIST — S181

RECEIVER AND EMD SERVICE CENTER
CARRY OUT MUTUAL AUTHENTICATION — S182

S183
IS RECEIVER NON-REGISTRABLE ?   YES

NO

RECEIVER TRANSMITS VERSION OF DISTRIBUTION
KEY OF RECEIVER ENCRYPTED WITH TEMPORARY
KEY, ACCOUNTING INFORMATION AND REGISTRATION
LIST (HANDLING POLICY) TO EMD SERVICE CENTER — S184

EMD SERVICE CENTER DECODES RECEIVED DATA,
PROCESSES ACCOUNTING INFORMATION
AND UPDATES REGISTRATION LIST — S185

S186
IS DISTRIBUTION KEY OF RECEIVER
OF LATEST VERSION ?   NO

YES   S187                                    S189

EMD SERVICE CENTER TRANSMITS
REGISTRATION LIST ENCRYPTED WITH
TEMPORARY KEY AND ACCOUNTING
INFORMATION RECEPTION MESSAGE, AND
RECEIVER RECEIVES, DECODES AND
STORES REGISTRATION LIST AND
ACCOUNTING INFORMATION
RECEPTION MESSAGE

EMD SERVICE CENTER TRANSMITS
REGISTRATION LIST ENCRYPTED WITH
TEMPORARY KEY, ACCOUNTING
INFORMATION RECEPTION MESSAGE, AND
RECEIVER RECEIVES, DECODES AND
STORES REGISTRATION LIST, ACCOUNTING
INFORMATION RECEPTION MESSAGE
AND DISTRIBUTION KEY

S188                                         S190

RECEIVER ERASES ACCOUNTING
INFORMATION AND UPDATES
REGISTRATION LIST

RECEIVER ERASES ACCOUNTING
INFORMATION AND UPDATES
REGISTRATION LIST AND DISTRIBUTION KEY

S191
IS RECORDER
NON-REGISTRABLE ?   YES

NO

RECEIVER AND RECORDER CARRY
OUT MUTUAL AUTHENTICATION — S192

S193
RECEIVER TRANSMITS REGISTRATION COMPLETION MESSAGE
ENCRYPTED WITH TEMPORARY0 KEY AND DISTRIBUTION KEY,
AND RECORDER RECEIVES AND DECODES REGISTRATION
COMPLETION MESSAGE AND DISTRIBUTION KEY

RECORDER UPDATES DISTRIBUTION KEY — S194

RETURN

# FIG.51

```
        ┌─────────────────────────────┐
        │      START RECEPTION OF      │
        │  DISTRIBUTION KEY OF RECEIVER │
        └─────────────────────────────┘
                      │
        ┌─────────────────────────────┐
        │   RECEIVER CARRIES OUT MUTUAL│──── S201
        │   AUTHENTICATION WITH EMD    │
        │        SERVICE CENTER        │
        └─────────────────────────────┘
                      │
        ┌─────────────────────────────┐
        │   RECEIVER SENDS CERTIFICATE │──── S202
        │     TO EMD SERVICE CENTER    │
        └─────────────────────────────┘
                      │
                   S203
        ┌─────────────────────┐  YES
        │    IS RECEIVER       │──────────────────┐
        │  NON-REGISTRABLE ?   │                  │
        └─────────────────────┘                  │
                  │ NO                            │
        ┌─────────────────────────────┐          │
        │ RECEIVER TRANSMITS VESION OF │          │
        │ DISTRIBUTION KEY ENCRYPTED   │── S204    │
        │ WITH TEMPORARY KEY, ACCOUNTING│         │
        │ INFORMATION AND REGISTRATION │          │
        │ LIST (HANDLING POLICY TO EMD │          │
        │ SERVICE CENTER               │          │
        └─────────────────────────────┘          │
                  │                               │
        ┌─────────────────────────────┐          │
        │ EMD SERVICE CENTER DECODES   │── S205    │
        │ RECEIVED DATA AND PROCESSES  │          │
        │ ACCOUNTING INFORMATION       │          │
        └─────────────────────────────┘          │
                  │                               │
               S206   NO                          │
        ┌─────────────────────────┐───┐           │
        │ IS DISTRIBUTION KEY OF   │   │           │
        │ LATEST VERSION ?         │   │           │
        └─────────────────────────┘   │           │
              │ YES    S207            │  S209      │
        ┌──────────────────┐    ┌──────────────────┐
        │ EMD SERVICE      │    │ EMD SERVICE CENTER│
        │ CENTER TRANSMITS │    │ TRANSMITS         │
        │ REGISTRATION LIST│    │ REGISTRATION LIST │
        │ ENCRYPTED WITH   │    │ ENCRYPTED WITH    │
        │ TEMPORARY KEY AND│    │ TEMPORARY KEY,    │
        │ ACCOUNTING       │    │ ACCOUNTING        │
        │ INFORMATION      │    │ INFORMATION       │
        │ RECEPTION MESSAGE│    │ RECEPTION MESSAGE │
        └──────────────────┘    │ AND DISTRIBUTION  │
              │  S208           │ KEY, AND RECEIVER │
        ┌──────────────────┐    │ RECEIVES AND      │
        │ RECEIVER ERASES  │    │ DECODES           │
        │ ACCOUNTING       │    │ REGISTRATION LIST,│
        │ INFORMATION AND  │    │ ACCOUNTING        │
        │ UPDATES          │    │ INFORMATION       │
        │ REGISTRATION LIST│    │ RECEPTION MESSAGE │
        └──────────────────┘    │ AND DISTRIBUTION  │
              │                 │ KEY               │
              │                 └──────────────────┘
              │                       │  S210
              │                 ┌──────────────────┐
              │                 │ RECEIVER ERASES  │
              │                 │ ACCOUNTING       │
              │                 │ INFORMATION AND  │
              │                 │ UPDATES          │
              │                 │ REGISTRATION     │
              │                 │ LIST AND         │
              │                 │ DISTRIBUTION KEY │
              │                 └──────────────────┘
              │◄───────────────────────┘
        ┌──────────┐
        │  RETURN  │
        └──────────┘
```

# FIG.52

111

START RECEPTION OF DISTRIBUTION KEY OF RECORDER

RECEIVER AND RECORDER CARRY OUT MUTUAL AUTHENTICATION — S221

IS RECORDER ON REGISTRATION LIST OF RECEIVER ? — S222

NO

YES

REGISTER RECORDER — S237

IS RECORDER NON-REGISTRABLE ? — S223

YES

NO — S224

RECORDER TRANSMITS VERSION OF DISTRIBUTION KEY ENCRYPTED WITH TEMPORARY KEY AND ACCOUNTING INFORMATION TO RECEIVER AND RECEIVER RECEIVES AND DECODES VERSION OF DISTRIBUTION KEY AND ACCOUNTING INFORMATION

RECEIVER AND EMD SERVICE CENTER CARRY OUT MUTUAL AUTHENTICATION — S225

S226 — IS RECEIVER NON-REGISTRABLE ?

YES

NO — S227

RECEIVER TRANSMITS VERSION OF DISTRIBUTION KEY OF RECEIVER ENCRYPTED WITH TEMPORARY KEY, ACCOUNTING INFORMATION, REGISTRATION LIST (HANDLING POLICY) AND ACCOUNTING INFORMATION OF RECORDER TO EMD SERVICE CENTER

EMD SERVICE CENTER DECODES RECEIVED DATA AND PROCESSES ACCOUNTING INFORMATION — S228

IS DISTRIBUTION KEY OF RECEIVER OF LATEST VERSION ? — S229

NO

YES

EMD SERVICE CENTER TRANSMITS REGISTRATION LIST ENCRYPTED WITH TEMPORARY KEY AND ACCOUNTING INFORMATION RECEPTION MESSAGE AND RECEIVER RECEIVES AND DECODES REGISTRATION LIST AND ACCOUNTING INFORMATION RECEPTION MESSAGE — S230

EMD SERVICE CENTER TRANSMITS REGISTRATION LIST ENCRYPTED WITH TEMPORARY KEY, ACCOUNTING INFORMATION RECEPTION MESSAGE AND DISTRIBUTION KEY, AND RECEIVER RECEIVES AND DECODES REGISTRATION LIST, ACCOUNTING INFORMATION RECEPTION MESSAGE AND DISTRIBUTION KEY — S232

RECEIVER ERASES ACCOUNTING INFORMATION AND UPDATES REGISTRATION LIST — S231

RECEIVER ERASES ACCOUNTING INFORMATION AND UPDATES REGISTRATION LIST AND DISTRIBUTION KEY — S233

S234 — IS RECORDER NON-REGISTRABLE ?

YES

NO — S235

RECEIVER TRANSMITS ACCOUNTING INFORMATION RECEPTION MESSAGE ENCRYPTED WITH TEMPORARY KEY AND DISTRIBUTION KEY, AND RECORDER RECEIVES AND DECODES ACCOUNTING INFORMATION RECEPTION MESSAGE AND DISTRIBUTION KEY

RECORDER ERASES ACCOUNTING INFORMATION AND UPDATES DISTRIBUTION KEY — S236

RETURN

# FIG.53

START PROCESSING FOR TRANSMITTING
SECURE CONTAINER TO SERVICE PROVIDER

INSERT WATERMARK INTO CONTENTS — S251

COMPRESS CONTENTS — S252

GENERATE RANDOM NUMBER AND
USE IT AS CONTENTS KEY — S253

ENCRYPT CONTENTS WITH CONTENTS KEY — S254

ENCRYPT CONTENTS KEY
WITH DISTRIBUTION KEY — S255

PREPARE SIGNATURE — S256

PREPARE SECURE CONTAINER — S257

MUTUAL AUTHENTICATION
WITH SERVICE PROVIDER — S258

TRANSMIT SECURE CONTAINER — S259

RETURN

# FIG.54

START PROCESSING FOR TRANSMITTING
SECURE CONTAINER TO RECEIVER

TAKE OUT PUBLIC KEY FROM CERTIFICATE
OF SECURE CONTAINER — S291

CONFIRM THAT NO TAMPERING IS
MADE IN SECURE CONTAINER — S292

TAKE OUT HANDLING POLICY
FROM SECURE CONTAINER — S293

PREPARE PRICE INFORMATION — S294

PREPARE SECURE CONTAINER — S295

MUTUAL AUTHENTICATION
WITH SERVICE PROVIDER — S296

TRANSMIT SECURE CONTAINER — S297

RETURN

# FIG.55

**FIG.56**

FIG.57

START PROCESSING FOR
RECEIVING SECURE CONTAINER

RECEIVE SECURE CONTAINER
FROM SERVICE PROVIDER — S361

RECEIVE PUBLIC KEY CERTIFICATE
FROM SERVICE PROVIDER — S362

VERIFY SIGNATURE DATA
OF SECURE CONTAINER — S363

DETERMINE CONTENTS FOR PURCHASE
BASED ON HANDLING INFORMATION
AND PRICE INFORMATION — S364

PREPARE ACCOUNTING INFORMATION
AND USE PERMISSION INFORMATION
BASED ON HANDLING INFORMATION
AND PRICE INFORMATION — S365

RECORD CONTENTS TO HDD — S366

DECODE CONTENTS KEY WITH
DISTRIBUTION KEY — S367

ENCRYPT CONTENTS KEY WITH SAVE KEY — S368

RETRIEVE KEY DATA BLOCK HAVING
VACANCY OF EXTERNAL STORAGE SECTION — S369

CALCULATE HASH VALUE OF KEY DATA
BLOCK HAVING VACANCY OF EXTERNAL
STORAGE SECTION — S370

IS CALCULATED HASH VALUE
COINCIDENT WITH PREDETERMINED
CHECK VALUE OF STORAGE MODULE ? — S371
NO

YES

STORE CONTENTS KEY AND THE LIKE
TO EXTERNAL STORAGE SECTION — S372

CALCULATE HASH VALUE OF BLOCK
OF EXTERNAL STORAGE SECTION
IN WHICH CONTENTS KEY AND
THE LIKE HAVE BEEN STORED — S373

OVERWRITE CALCULATED HASH VALUE
WITH PREDETERMINED CHECK VALUE
OF STORAGE MODULE — S374

STORE ACCOUNTING INFORMATION
TO STORAGE MODULE — S375

HAVE ALL KEY DATA
BLOCKS OF EXTERNAL
STORAGE SECTION
BEEN CHECKED ? — S376
YES
NO

RETRIEVE ANOTHER KEY
DATA BLOCK HAVING
VACANCY OF EXTERNAL
STORAGE SECTION — S377

RETURN

START PROCESSING FOR
RECEIVING SECURE CONTAINER

RECEIVE SECURE CONTAINER
FROM SERVICE PROVIDER — S391

RECEIVE PUBLIC KEY CERTIFICATE
FROM SERVICE PROVIDER — S392

VERIFY SIGNATURE DATA
OF SECURE CONTAINER — S393

DETERMINE CONTENTS FOR PURCHASE
BASED ON HANDLING INFORMATION
AND PRICE INFORMATION — S394

PREPARE ACCOUNTING INFORMATION
AND USE PERMISSION INFORMATION
BASED ON HANDLING INFORMATION
AND PRICE INFORMATION — S395

RECORD CONTENTS TO HDD — S396

DECODE CONTENTS KEY WITH
DISTRIBUTION KEY — S397

ENCRYPT CONTENTS KEY WITH SAVE KEY — S398

RETRIEVE KEY DATA BLOCK HAVING
VACANCY OF EXTERNAL STORAGE SECTION — S399

CALCULATE HASH VALUE OF KEY DATA
BLOCK HAVING VACANCY OF EXTERNAL
STORAGE SECTION — S400

DECODE PREDETERMINED CHECK
VALUE OF EXTERNAL STORAGE
SECTION WITH CHECK KEY — S401

IS CALCULATED HASH VALUE
COINCIDENT WITH DECODED
CHECK VALUE? — S402 — NO

YES

STORE CONTENTS KEY AND THE LIKE
TO EXTERNAL STORAGE SECTION — S403

CALCULATE HASH VALUE OF BLOCK
OF EXTERNAL STORAGE SECTION
IN WHICH CONTENTS KEY AND
THE LIKE HAVE BEEN STORED — S404

ENCRYPT HASH VALUE WITH CHECK KEY — S405

OVERWRITE ENCRYPTED HASH VALUE
WITH PREDETERMINED CHECK VALUE
OF EXTERNAL STORAGE SECTION — S406

STORE ACCOUNTING INFORMATION
TO STORAGE MODULE — S407

HAVE ALL KEY DATA
BLOCKS OF EXTERNAL
STORAGE SECTION
BEEN CHECKED ? — S408 — YES

NO

RETRIEVE ANOTHER KEY
DATA BLOCK HAVING
VACANCY OF EXTERNAL
STORAGE SECTION — S409

RETURN

**FIG.58**

117

START REPRODUCTION PROCESSING

READ OUT USE PERMISSION INFORMATION AND CONTENTS KEY FROM HDD — S411

CALCULATE HASH VALUE OF USE PERMISSION INFORMATION — S412

S413
COINCIDENT WITH HASH VALUE IN SAM ? — NO

YES — S414

ERROR PROCESSING — S428

UPDATE USE PERMISSION INFORMATION

CALCULATE HASH VALUE OF USE PERMISSION INFORMATION — S415

STORE HASH VALUE INTO SAM — S416

STORE USE PERMISSION INFORMATION TO HDD — S417

SAM AND EXPANSION CARRY OUT MUTUAL AUTHENTICATION AND SHARE TEMPORARY KEY — S418

DECODE CONTENTS KEY WITH SAVE KEY — S419

ENCRYPT CONTENTS KEY WITH TEMPORARY KEY — S420

SEND CONTENTS KEY TO EXPANSION SECTION — S421

DECODE CONTENTS KEY WITH TEMPORARY KEY — S422

SEND CONTENTS TO EXPANSION SECTION — S423

DECODE CONTENTS WITH CONTENTS KEY — S424

EXPAND CONTENTS — S425

APPEND WATERMARK TO CONTENTS — S426

OUTPUT CONTENTS — S427

RETURN

FIG.59

START REPRODUCTION PROCESSING

READ OUT USE PERMISSION INFORMATION AND CONTENTS KEY TO HDD — S431

CALCULATE HASH VALUE OF USE PERMISSION INFORMATION — S432

S433 — COINCIDENT WITH HASH VALUE IN SAM ? — NO

S448 — ERROR PROCESSING

YES — S434

UPDATE USE PERMISSION INFORMATION

CALCULATE HASH VALUE OF USE PERMISSION INFORMATION — S435

STORE HASH VALUE INTO SAM — S436

STORE USE PERMISSION INFORMATION TO HDD — S437

SAM AND DECODER CARRY OUT MUTUAL AUTHENTICATION AND SHARE TEMPORARY KEY — S438

DECODE CONTENTS KEY WITH SAVE KEY — S439

ENCRYPT CONTENTS KEY WITH TEMPORARY KEY — S440

SEND CONTENTS KEY TO DECODER — S441

DECODE CONTENTS KEY WITH TEMPORARY KEY — S442

SEND CONTENTS TO DECODER — S443

DECODE CONTENTS WITH CONTENTS KEY — S444

EXPAND CONTENTS — S445

APPEND WATERMARK TO CONTENTS — S446

OUTPUT CONTENTS — S447

RETURN

# FIG.60

START SETTLEMENT
PREPARATION PROCESSING

*S451*

SELECT ACCOUNTING INFORMATION RELATED
TO USE OF PREDETERMINED CONTENTS

*S452*

IS PROFIT DISTRIBUTION TO CONTENTS
PROVIDER AND SERVICE PROVIDER INCLUDED
IN THAT ACCOUNTING INFORMATION ?

**NO**

**YES** *S453*

CALCULATE AMOUNT PAID FROM USER
TO SERVICE PROVIDER WITH REFERENCE
TO PROFIT DISTRIBUTION
OF ACCOUNTING INFORMATION

*S456*

CALCULATE AMOUNT PAID FROM USER
TO SERVICE PROVIDER WITH REFERENCE
TO PROFIT DISTRIBUTION DATA BASE

*S454*

CALCULATE AMOUNT PAID FROM SERVICE
PROVIDER TO CONTENTS PROVIDER WITH
REFERENCE TO PROFIT DISTRIBUTION OF
ACCOUNTING INFORMATION

*S457*

CALCULATE AMOUNT PAID FROM SERVICE
PROVIDER TO CONTENTS PROVIDER WITH
REFERENCE TO PROFIT DISTRIBUTION DATABASE

*S455*

CALCULATE AMOUNT PAID FROM CONTENTS
PROVIDER TO ENTITLED ORGANIZATION
WITH REFERENCE TO PROFIT DISTRIBUTION
OF ACCOUNTING INFORMATION

*S458*

CALCULATE AMOUNT PAID FROM CONTENTS
PROVIDER TO ENTITLED ORGANIZATION WITH
REFERENCE TO PROFIT DISTRIBUTION DATABASE

*S459*

CORRECT EACH AMOUNT PAID WITH REFERENCE
TO DISCOUNT INFORMATION DATABASE

*S460*

CALCULATED WITH RESPECT
TO ALL CONTENTS ?

**NO**

**YES**

*S461*

CALCULATE AMOUNT PAID FROM USER TO EACH SERVICE
PROVIDER AND PREPARE SETTLEMENT OBJECT 1

*S462*

CALCULATE TOTAL AMOUNT PAID FROM EACH SERVICE PROVIDER
TO EACH CONTENTS PROVIDER AND PREPARE SETTLEMENT OBJECT 2

*S463*

CALCULATE TOTAL AMOUNT PAID FROM EACH CONTENTS PROVIDER
TO ENTITLED ORGANIZATION AND PREPARE SETTLEMENT OBJECT 3

*S464*

DETERMINE AMOUNT CHARGED TO USER WITH REFERENCE TO SERVICE
CHARGE OF EMD SERVICE CENTER AND PREPARE SETTLEMENT OBJECT 4

END

# FIG.61

**FIG.62A**

CREDIT SETTLEMENT
OBJECT 1

PAYER : USER ID
AMOUNT CHARGED : x
PAYEE : SERVICE PROVIDER ID
AMOUNT PAID : x1

**FIG.62B**

CREDIT SETTLEMENT
OBJECT 2

PAYER : CREDIT SETTLEMENT OBJECT 1
AMOUNT CHARGED : –
PAYEE : CONTENTS PROVIDER ID
AMOUNT PAID : x2

**FIG.62C**

CREDIT SETTLEMENT
OBJECT 3

PAYER : CREDIT SETTLEMENT OBJECT 1
AMOUNT CHARGED : –
PAYEE : ENTITLED ORGANIZATION ID
AMOUNT PAID : x3

**FIG.62D**

CREDIT SETTLEMENT
OBJECT 4

PAYER : CREDIT SETTLEMENT OBJECT 1
AMOUNT CHARGED : –
PAYEE : EMD SERVICE CENTER ID
AMOUNT PAID : x4

**FIG.63A**

BANK SETTLEMENT
OBJECT 1

PAYER : SERVICE PROVIDER ID
AMOUNT CHARGED : y1
PAYEE : EMD SERVICE CENTER ID
AMOUNT PAID : y1

**FIG.63B**

BANK SETTLEMENT
OBJECT 2

PAYER : CONTENTS PROVIDER ID
AMOUNT CHARGED : y2
PAYEE : EMD SERVICE CENTER ID
AMOUNT PAID : y2

**FIG.63C**

BANK SETTLEMENT
OBJECT 3

PAYER : ENTITLED ORGANIZATION ID
AMOUNT CHARGED : y3
PAYEE : EMD SERVICE CENTER ID
AMOUNT PAID : y3

**FIG.64A**

CREDIT SETTLEMENT
OBJECT 1

PAYER : USER ID
AMOUNT CHARGED : x
PAYEE : SERVICE PROVIDER ID
AMOUNT PAID : x1

**FIG.64B**

BANK SETTLEMENT
OBJECT 2

PAYER : SERVICE PROVIDER ID
AMOUNT CHARGED : x2+x3
PAYEE : CONTENTS PROVIDER ID
AMOUNT PAID : x2+x3

**FIG.64C**

BANK SETTLEMENT
OBJECT 3

PAYER : CONTENTS PROVIDER ID
AMOUNT CHARGED : x3
PAYEE : ENTITLED ORGANIZATION ID
AMOUNT PAID : x3

**FIG.64D**

CREDIT SETTLEMENT
OBJECT 4

PAYER : CREDIT SETTLEMENT OBJECT 1
AMOUNT CHARGED : –
PAYEE : EMD SERVICE CENTER ID
AMOUNT PAID : x4

START CREDIT
SETTLEMENT PROCESSING

S471

FIND SETTLEMENT INSTRUCTION
OF PAYEE FROM PAYEE ID

S472

FIND SETTLEMENT INSTRUCTION
OF PAYER FROM PAYER ID

S473

IS CREDIT PROCESSING
NECESSARY ?

YES

NO

S474

EXECUTE CREDIT PROCESSING

S475

HAS PREVIOUSLY EXECUTED
SETTLEMENT OBJECT PROCESSING
BEEN COMPLETED ?

NO

YES S476

TRANSMIT SETTLEMENT INSTRUCTION
TO SETTLEMENT INSTITUTION

S479

EXECUTE ERROR PROCESSING
FOR INCOMPLETE SETTLEMENT

S477

TRANSMIT SETTLEMENT
INFORMATION TO PAYEE

S478

TRANSMIT SETTLEMENT
INFORMATION TO PAYER

END

# FIG.65

START BANK
SETTLEMENT PROCESSING

*S481*

FIND SETTLEMENT INSTITUTION
OF PAYEE FROM PAYEE ID

*S482*

FIND SETTLEMENT INSTITUTION
OF PAYER FROM PAYER ID

*S483*

HAS PREVIOUSLY EXECUTED SETTLEMENT
OBJECT PROCESSING BEEN COMPLETED ?

NO

YES          *S484*

TRANSMIT SETTLEMENT INSTRUCTION
TO SETTLEMENT INSTITUTION

*S487*

EXECUTE ERROR PROCESSING
FOR INCOMPLETE SETTLEMENT

*S485*

TRANSMIT SETTLEMENT
INFORMATION TO PAYEE

*S486*

TRANSMIT SETTLEMENT
INFORMATION TO PAYER

END

# FIG.66

125

EP 1 039 392 A1

HDD — 203

RECEIVER — 201

SAM — 210

STORAGE MODULE

2
CONTENTS PROVIDER

3
SERVICE PROVIDER

4
NETWORK

211

51

IC CARD

202

RECEIVER

SAM

STORAGE MODULE

55

RECEIVER

SAM

STORAGE MODULE — 73

62

221  220

HDD — 52

1
END SERVICE CENTER

200

**FIG.67**

| | SAM ID | USER ID | PURCHASE PROCESSING | ACCOUNTING | ACCOUNTING EQUIPMENT | CONTENTS SUPPLY EQUIPMENT | STATUS INFORMATION | REGISTRATION CONDITION SIGNATURE | REGISTRATION LIST SIGNATURE |
|---|---|---|---|---|---|---|---|---|---|
| REGISTRATION CONDITION OF RECEIVER 51 | ID OF SAM 62 | ID OF USER | AVAILABLE | AVAILABLE | ID OF SAM 62 | NONE | UNLIMITED | ×××· | ×××× |
| REGISTRATION CONDITION OF RECEIVER 201 | ID OF SAM 210 | ID OF USER | AVAILABLE | UN-AVAILABLE | ID OF SAM 62 | NONE | UNLIMITED | ××× | |
| REGISTRATION CONDITION OF RECEIVER 202 | ID OF SAM 220 | ID OF USER | UN-AVAILABLE | UN-AVAILABLE | NONE | ID OF SAM 62 ID OF SAM 210 | UNLIMITED | ××× | |

LIST PART

| TARGET SAM ID | ID OF SAM 62 |
|---|---|
| EXPIRATION DATE | ×××× |
| VERSION NUMBER | ×××× |
| NUMBER OF EQUIPMENTS CONNECTED | 3 |

TARGET SAM INFORMATION PART

# FIG.68

|  | SAM ID | USER ID | PURCHASE PROCESSING | ACCOUNTING | ACCOUNTING EQUIPMENT | CONTENTS SUPPLY EQUIPMENT | STATUS INFORMATION | REGISTRATION CONDITION SIGNATURE | REGISTRATION LIST SIGNATURE |
|---|---|---|---|---|---|---|---|---|---|
| REGISTRATION CONDITION OF RECEIVER 51 | ID OF SAM 62 | ID OF USER | AVAILABLE | AVAILABLE | ID OF SAM 62 | NONE | UNLIMITED | ××× | ×××× |
| REGISTRATION CONDITION OF RECEIVER 201 | ID OF SAM 210 | ID OF USER | AVAILABLE | UN-AVAILABLE | ID OF SAM 62 | NONE | UNLIMITED | ××× | |
| REGISTRATION CONDITION OF RECEIVER 202 | ID OF SAM 220 | ID OF USER | UN-AVAILABLE | UN-AVAILABLE | NONE | ID OF SAM 62 ID OF SAM 210 | UNLIMITED | ××× | |

LIST PART

| TARGET SAM ID | ID OF SAM 210 |
|---|---|
| EXPIRATION DATE | ×××× |
| VERSION NUMBER | ×××× |
| NUMBER OF EQUIPMENTS CONNECTED | 3 |

TARGET SAM INFORMATION PART

# FIG.69

EP 1 039 392 A1

**REGISTRATION CONDITION OF RECEIVER 202**

| SAM ID | USER ID | PURCHASE PROCESSING | ACCOUNTING | ACCOUNTING EQUIPMENT | CONTENTS SUPPLY EQUIPMENT | STATUS INFORMATION | REGISTRATION CONDITION SIGNATURE | REGISTRATION LIST SIGNATURE |
|---|---|---|---|---|---|---|---|---|
| ID OF SAM 220 | ID OF USER | UN-AVAILABLE | UN-AVAILABLE | NONE | ID OF SAM 62<br><br>ID OF SAM 210 | UNLIMITED | ×××  | ×××× |

} LIST PART

| | |
|---|---|
| TARGET SAM ID | ID OF SAM 220 |
| EXPIRATION DATE | ×××× |
| VERSION NUMBER | ×××× |
| NUMBER OF EQUIPMENTS CONNECTED | 3 |

} TARGET SAM INFORMATION PART

## FIG.70

EP 1 039 392 A1

FIG.71

**FIG.72**

EP 1 039 392 A1

**REGISTRATION CONDITION OF RECEIVER 51**

| SAM ID | USER ID | PURCHASE PROCESSING | ACCOUNTING | ACCOUNTING EQUIPMENT | CONTENTS SUPPLY EQUIPMENT | STATUS INFORMATION | REGISTRATION CONDITION SIGNATURE | REGISTRATION LIST SIGNATURE |
|---|---|---|---|---|---|---|---|---|
| ID OF SAM 62 | ID OF USER | AVAILABLE | AVAILABLE | ID OF SAM 62 | NONE | UNLIMITED | ✕✕✕ | ✕✕✕✕ |

LIST PART

| TARGET SAM ID | ID OF SAM 62 |
|---|---|
| EXPIRATION DATE | ✕✕✕✕ |
| VERSION NUMBER | ✕✕✕✕ |
| NUMBER OF EQUIPMENTS CONNECTED | 3 |

TARGET SAM INFORMATION PART

REGISTRATION LIST

# FIG.73

```
┌─────────────────────────────────────┐
│ START REGISTRATION PROCESSING        │
│ OF RECEIVER 201 AND RECEIVER 202     │
└─────────────────────────────────────┘
                  │
                  ▼
┌─────────────────────────────────────┐
│ RECEIVER 51 ADDS INFORMATION OF      │
│ RECEIVER 201 AND RECEIVER 202 TO     │── S531
│ REGISTRATION LIST                    │
└─────────────────────────────────────┘
                  │
                  ▼
┌─────────────────────────────────────┐
│ MUTUAL AUTHENTICATION BETWEEN        │
│ RECEIVER 51 AND EMD SERVICE CENTER 1 │── S532
└─────────────────────────────────────┘
                  │
                  ▼
┌─────────────────────────────────────┐
│ RECEIVER 51 TRANSMITS VERSION OF     │
│ DISTRIBUTION KEY, ACCOUNTING         │
│ INFORMATION, REGISTRATION LIST, AND  │── S533
│ HANDLING POLICY ENCRYPTED WITH       │
│ TEMPORARY KEY TO EMD SERVICE CENTER 1│
└─────────────────────────────────────┘
                  │
                  ▼
┌─────────────────────────────────────┐
│ EMD SERVICE CENTER 1 CONFIRMS        │
│ OPERATION LIMITING CONDITION OF      │── S534
│ RECEIVER 201 AND RECEIVER 202        │
└─────────────────────────────────────┘
                  │
                  ▼
┌─────────────────────────────────────┐
│ PREPARE REGISTRATION LIST            │── S705
└─────────────────────────────────────┘
                  │
                  ▼
┌─────────────────────────────────────┐
│ EMD SERVICE CENTER 1 TRANSMITS       │
│ REGISTRATION LIST ENCRYPTED WITH     │── S535
│ TEMPORARY KEY TO RECEIVER 51         │
└─────────────────────────────────────┘
                  │
                  ▼
┌─────────────────────────────────────┐
│ RECEIVER 51 STORES REGISTRATION LIST │── S536
└─────────────────────────────────────┘
                  │
                  ▼
              ( RETURN )
```

# FIG.74

**REGISTRATION CONDITION OF RECEIVER 51**

| SAM ID | USER ID | PURCHASE PROCESSING | ACCOUNTING | ACCOUNTING EQUIPMENT | CONTENTS SUPPLY EQUIPMENT | STATUS INFORMATION | REGISTRATION CONDITION SIGNATURE | REGISTRATION LIST SIGNATURE |
|---|---|---|---|---|---|---|---|---|
| ID OF SAM 62 | ID OF USER | AVAILABLE | AVAILABLE | ID OF SAM 62 | NONE | UNLIMITED | ×××× | ×××× |
| ID OF SAM 210 | | AVAILABLE | UN-AVAILABLE | ID OF SAM 62 | NONE | UNLIMITED | ××× | |
| ID OF SAM 220 | | UN-AVAILABLE | UN-AVAILABLE | NONE | ID OF SAM 62 | UNLIMITED | ××× | |
| | | | | | | ID OF SAM 210 | | |

LIST PART

| | |
|---|---|
| TARGET SAM ID | ID OF SAM 62 |
| EXPIRATION DATE | ×××× |
| VERSION NUMBER | ×××× |
| NUMBER OF EQUIPMENTS CONNECTED | 3 |

TARGET SAM INFORMATION PART

# FIG.75

START PROCESSING FOR
RECEPTION OF DISTRIBUTION KEY

*S541*

MUTUAL AUTHENTICATION BETWEEN RECEIVER 51 AND EMD SERVICE CENTER 1

*S542*

RECEIVER 51 SENDS CERTIFICATE TO EMD SERVICE CENTER 1

*S543*

RECEIVER 51 TRANSMITS VERSION OF DISTRIBUTION KEY,
ACCOUNTING INFORMATION, REGISTRATION LIST AND ENCRYPTED
HANDLING POLICY TO EMD SERVICE CENTER 1

*S544*

EMD SERVICE CENTER 1 CONFIRMS OPERATION LIMITING
CONDITION OF RECEIVER 51, RECEIVER 201 AND RECEIVER 202

*S545*

UNAUTHORIZED ACTION
IN RECEIVER 51 ?

YES

NO   *S546*

EMD SERVICE CENTER 1 ANALYZES
ACCOUNTING INFORMATION AND CARRIES
OUT PROCESSING FOR SETTLEMENT

*S547*

EMD SERVICE CENTER 1 CONFIRMS WHETHER
SETTLEMENT WAS SUCCESSFUL OR NOT AND
PREPARES RETURN MESSAGE

*S548*

EMD SERVICE CENTER 1 PREPARES
REGISTRATION LIST

*S555*

EMD SERVICE CENTER 1
PREPARES REGISTRATION LIST

*S556*

EMD SERVICE CENTER 1
TRANSMITS REGISTRATION
LIST TO RECEIVER 51

*S557*

RECEIVER 51 UPDATES
REGISTRATION LIST

*S549*

EMD SERVICE CENTER 1 TRANSMITS REGISTRATION LIST AND DISTRIBUTION KEY
ENCRYPTED WITH TEMPORARY KEY, AND RETURN MESSAGE TO RECEIVER 51

*S550*

RECEIVER 51 ERASES ACCOUNTING INFORMATION
AND UPDATES REGISTRATION LIST AND DISTRIBUTION KEY

*S551*

FAILURE RETURN MESSAGE OR
SUCCESS RETURN MESSAGE ?

FAILURE RETURN MESSAGE

SUCCESS
RETURN MESSAGE

*S553*

RECEIVER 51 CONFIRMS
REGISTRATION LIST

*S552*

RECEIVER 51 TRANSMITS REGISTRATION
LIST AND DISTRIBUTION KEY TO RECEIVERS
201 AND RECEIVER 202

*S554*

RECEIVER 51 CARRIES OUT
PROCESSING CORRESPONDING TO
"STATUS INFORMATION"

END

# FIG.76

START RECORDING PROCESSING
OF CONTENTS OF MD

GENERATE RANDOM NUMBER AND USE IT AS CONTENTS KEY — S601

READ OUT CONTENTS FROM MD — S602

ENCRYPT CONTENTS WITH CONTENTS KEY — S603

RECORD CONTENTS TO HDD — S604

ENCRYPT CONTENTS KEY WITH SAVE KEY — S605

RETRIEVE KEY DATA BLOCK HAVING
VACANCY OF EXTERNAL STORAGE SECTION — S606

CALCULATE HASH VALUE OF KEY DATA BLOCK
HAVING VACANCY OF EXTERNAL STORAGE SECTION — S607

S608
IS CALCULATED HASH VALUE
COINCIDENT WITH PREDETERMINED
CHECK VALUE OF STORAGE MODULE ? — NO

YES — S609
STORE CONTENTS KEY AND THE LIKE
TO EXTERNAL STORAGE SECTION

S610
CALCULATE HASH VALUE OF BLOCK OF
EXTERNAL STORAGE SECTION IN WHICH
CONTENTS KEY AND THE LIKE ARE STORED

S611
OVERWRITE CALCULATED HASH VALUE
WITH PREDETERMINED CHECK VALUE OF
STORAGE MODULE

S612
STORE ACCOUNTING INFORMATION
TO STORAGE MODULE

S613
YES — HAVE ALL KEY DATA
BLOCKS OF EXTERNAL
STORAGE SECTION
BEEN CHECKED ?

NO — S614
RETRIEVE ANOTHER KEY DATA
BLOCK HAVING VACANCY OF
EXTERNAL STORAGE SECTION

RETURN

FIG.77

START REPRODUCTION PROCESSING

READ OUT USE PERMISSION INFORMATION AND CONTENTS KEY FROM HDD — S621

CALCULATE HASH VALUE OF USE PERMISSION INFORMATION — S622

S623
COINCIDENT WITH HASH VALUE IN SAM ? — NO

S628
ERROR PROCESSING

YES — S624
UPDATE USE PERMISSION INFORMATION

CALCULATE HASH VALUE OF USE PERMISSION INFORMATION — S625

STORE HASH VALUE INTO SAM — S626

STORE USE PERMISSION INFORMATION TO HDD — S627

SAM AND EXPANSION CARRY OUT MUTUAL AUTHENTICATION AND SHARE TEMPORARY KEY — S628

DECODE CONTENTS KEY WITH SAVE KEY — S629

ENCRYPT CONTENTS KEY WITH TEMPORARY KEY — S630

SEND CONTENTS KEY TO EXPANSION SECTION — S631

DECODE CONTENTS KEY WITH TEMPORARY KEY — S632

SEND CONTENTS TO EXPANSION SECTION — S633

DECODE CONTENTS WITH CONTENTS KEY — S634

EXPAND CONTENTS — S635

APPEND WATERMARK TO CONTENTS — S636

OUTPUT CONTENTS — S637

RETURN

# FIG.78

START REPRODUCTION PROCESSING

READ OUT USE PERMISSION INFORMATION AND CONTENTS KEY FROM HDD — S641

CALCULATE HASH VALUE OF USE PERMISSION INFORMATION — S642

S643 — COINCIDENT WITH HASH VALUE IN SAM ? — NO

YES — S644

UPDATE USE PERMISSION INFORMATION

S658 — ERROR PROCESSING

CALCULATE HASH VALUE OF USE PERMISSION INFORMATION — S645

STORE HASH VALUE INTO SAM — S646

STORE USE PERMISSION INFORMATION TO HDD — S647

SAM AND DECODER CARRY OUT MUTUAL AUTHENTICATION AND SHARE TEMPORARY KEY — S648

DECODE CONTENTS KEY WITH SAVE KEY — S649

ENCRYPT CONTENTS KEY WITH TEMPORARY KEY — S650

SEND CONTENTS KEY TO DECODER — S651

DECODE CONTENTS KEY WITH TEMPORARY KEY — S652

SEND CONTENTS TO DECODER — S653

DECODE CONTENTS WITH CONTENTS KEY — S654

EXPAND CONTENTS — S655

APPEND WATERMARK TO CONTENTS — S656

OUTPUT CONTENTS — S657

RETURN

**FIG.79**

START SHIFT PROCESSING OF CONTENTS
FROM RECEIVER TO MEMORY STICK

RECEIVER AND MEMORY STICK CARRY OUT MUTUAL AUTHENTICATION
AND SHARE TEMPORARY KEY — S701

RECEIVER RETRIEVES DATA FROM HDD AND SELECTS CONTENTS TO SHIFT — S702

RECEIVER RETRIEVES CONTENTS KEY CORRESPONDING TO CONTENTS — S703

RECEIVER CALCULATED HASH VALUE OF KEY DATA BLOCK FOR STORING
CONTENTS KEY CORRESPONDING TO CONTENTS IN EXTERNAL
STORAGE SECTION — S704

S705
IS CALCULATED HASH VALUE COINCIDENT WITH
PREDETERMINED CHECK VALUE OF STORAGE MODULE? — NO → (B)

YES

RECEIVER TRANSMITS WRITE REQUEST COMMAND AND CONTENTS ID TO
MEMORY STICK, AND MEMORY STICK RECEIVES WRITE REQUEST
COMMAND AND CONTENTS ID — S706

RECEIVER TRANSMITS CONTENTS TO MEMORY STICK, AND MEMORY
STICK RECEIVES CONTENTS — S707

MEMORY STICK STORES CONTENTS INTO INFORMATION STORAGE BLOCK — S708

RECEIVER DECODES CONTENTS KEY WITH SAVE KEY, RE-ENCRYPTS IT WITH
TEMPORARY KEY AND TEMPORARILY STORES IT — S709

DELETE CONTENTS KEY FROM EXTERNAL STORAGE SECTION — S710

RECEIVER CALCULATE S HASH VALUE OF KEY DATA BLOCK FOR
STORING CONTENTS KEY CORRESPONDING TO CONTENTS IN
EXTERNAL STORAGE SECTION — S711

RECEIVER OVERWRITES HASH VALUE WITH PREDETERMINED
CHECK VALUE OF STORAGE MODULE — S712

RECEIVER TRANSMITS CONTENTS KEY AND THE LIKE TO MEMORY
STICK, AND MEMORY STICK RECEIVES CONTENTS KEY AND THE LIKE — S713

MEMORY STICK DECODES CONTENTS KEY, RE-ENCRYPTS IT WITH SAVE
KEY AND TEMPORARILY STORES IT — S714

(A)

FIG.80

A

┌─────────────────────────────┐ S715
│ MEMORY STICK RETRIEVES      │
│ KEY DATA BLOCK HAVING       │
│ VACANCY FOR KEY DATA        │
└─────────────────────────────┘

┌─────────────────────────────┐ S716
│ MEMORY STICK CALCULATES     │
│ HASH VALUE OF KEY DATA BLOCK│
│ HAVING VACANCY FOR KEY DATA │
└─────────────────────────────┘

S717
IS CALCULATED HASH VALUE COINCIDENT WITH PREDETERMINED CHECK VALUE OF STORAGE SECTION ?   NO

YES   S718

┌─────────────────────────────┐
│ MEMORY STICK STORES         │
│ CONTENTS KEY INTO KEY DATA  │
│ BLOCK HAVING VACANCY        │
└─────────────────────────────┘

┌─────────────────────────────┐ S719
│ MEMORY STICK CALCULATES HASH│
│ VALUE OF KEY DATA BLOCK IN  │
│ WHICH CONTENTS KEY IS STORED│
└─────────────────────────────┘

┌─────────────────────────────┐ S720
│ MEMORY STICK OVERWRITES HASH│
│ VALUE WITH PREDETERMINED     │
│ CHECK VALUE OF STORAGE      │
│ SECTION                      │
└─────────────────────────────┘

┌─────────────────────────────┐ S721
│ MEMORY STICK TRANSMITS      │
│ RECEPTION COMPLETION SIGNAL │
│ TO RECEIVER, AND RECEIVER   │
│ RECEIVES RECEPTION          │
│ COMPLETION SIGNAL           │
└─────────────────────────────┘

┌─────────────────────────────┐ S722
│ RECEIVER DELETES CONTENTS   │
│ FROM HDD AND DELETES CONTENTS│
│ KEY FROM TEMPORARY STORAGE  │
└─────────────────────────────┘

B

S723
YES   HAVE ALL KEY DATA BLOCKS BEEN CHECKED ?

NO   S724

┌─────────────────────────────┐
│ MEMORY STICK                │
│ RETRIEVES ANOTHER           │
│ KEY DATA BLOCK              │
│ HAVING VACANCY              │
│ FOR KEY DATA               │
└─────────────────────────────┘

END

# FIG.81

START SHIFT PROCESSING OF CONTENTS
FROM RECEIVER TO MEMORY STICK

RECEIVER AND MEMORY STICK CARRY OUT MUTUAL AUTHENTICATION
AND SHARE TEMPORARY KEY — S751

RECEIVER RETRIEVES DATA FROM HDD AND SELECTS CONTENTS TO SHIFT — S752

RECEIVER RETRIEVES CONTENTS KEY CORRESPONDING TO CONTENTS — S753

RECEIVER CALCULATES HASH VALUE OF KEY DATA BLOCK FOR STORING
CONTENTS KEY CORRESPONDING TO CONTENTS IN EXTERNAL
STORAGE SECTION — S754

RECEIVER DECODES PREDETERMINED CHECK VALUE OF
EXTERNAL STORAGE SECTION WITH CHECK KEY — S755

S756
IS CALCULATED HASH VALUE COINCIDENT WITH
DECODED CHECK VALUE ? — NO → (D)

↓ YES

RECEIVER TRANSMITS WRITE REQUEST COMMAND AND CONTENTS ID TO
MEMORY STICK, AND MEMORY STICK RECEIVES WRITE REQUEST
COMMAND AND CONTENTS ID — S757

RECEIVER TRANSMITS CONTENTS TO MEMORY STICK, AND MEMORY
STICK RECEIVES CONTENTS — S758

MEMORY STICK STORES CONTENTS INTO INFORMATION STORAGE BLOCK — S759

RECEIVER DECODES CONTENTS KEY WITH SAVE KEY, RE-ENCRYPTS IT WITH
TEMPORARY KEY AND TEMPORARILY STORES IT — S760

DELETE CONTENTS KEY FROM EXTERNAL STORAGE SECTION — S761

RECEIVER CALCULATES HASH VALUE OF KEY DATA BLOCK FOR
STORING CONTENTS KEY CORRESPONDING TO CONTENTS IN
EXTERNAL STORAGE SECTION — S762

RECEIVER ENCRYPTS HASH VALUE WITH CHECK KEY — S763

RECEIVER OVERWRITES ENCRYPTED HASH VALUE WITH PREDETERMINED
CHECK VALUE OF EXTERNAL STORAGE SECTION — S764

RECEIVER TRANSMITS CONTENTS KEY AND THE LIKE TO MEMORY
STICK, AND MEMORY STICK RECEIVES CONTENTS KEY AND THE LIKE — S765

(C)

FIG.82

C

MEMORY STICK DECODES CONTENTS KEY, RE-ENCRYPTS IT WITH SAVE KEY AND TEMPORARILY STORES IT — S766

MEMORY STICK RETRIEVES KEY DATA BLOCK HAVING VACANCY FOR KEY DATA — S767

MEMORY STICK CALCULATES HASH VALUE OF KEY DATA BLOCK HAVING VACANCY FOR KEY DATA — S768

MEMORY STICK DECODES PREDETERMINED CHECK VALUE OF KEY DATA WITH CHECK KEY — S769

S770
IS CALCULATED HASH VALUE COINCIDENT WITH DECODED CHECK VALUE? — NO

YES — S771
MEMORY STICK STORES CONTENTS KEY INTO KEY DATA BLOCK HAVING VACANCY

S772
MEMORY STICK CALCULATES HASH VALUE OF KEY DATA BLOCK IN WHICH CONTENTS KEY IS STORED

S777
YES — HAVE ALL KEY DATA BLOCKS BEEN CHECKED?

S773
MEMORY STICK ENCRYPTS HASH VALUE WITH CHECK KEY

NO — S778
MEMORY STICK RETRIEVES ANOTHER KEY DATA BLOCK HAVING VACANCY FOR KEY DATA

S774
MEMORY STICK OVERWRITES ENCRYPTED HASH VALUE WITH PREDETERMINED CHECK VALUE OF KEY DATA

S775
MEMORY STICK TRANSMITS RECEPTION COMPLETION SIGNAL TO RECEIVER, AND RECEIVER RECEIVES RECEPTION COMPLETION SIGNAL

S776
RECEIVER DELETES CONTENTS FROM HDD AND DELETES CONTENTS KEY FROM TEMPORARY STORAGE

D

END

**FIG.83**

START SHIFT PROCESSING OF CONTENTS
FROM MEMORY STICK TO RECEIVER

RECEIVER AND MEMORY STICK CARRY OUT MUTUAL AUTHENTICATION
AND SHARE TEMPORARY KEY — S791

RECEIVER SELECTS CONTENTS TO SHIFT WITH REFERENCE TO DATA
RETRIEVAL TABLE OF MEMORY STICK — S792

RECEIVER TRANSMITS SHIFT REQUEST COMMAND AND CONTENTS
ID TO MEMORY STICK, AND MEMORY STICK RECEIVES SHIFT REQUEST
COMMAND AND CONTENTS ID — S793

MEMORY STICK RETRIEVES CONTENTS KEY CORRESPONDING TO
CONTENTS ID FROM KEY DATA — S794

MEMORY STICK CALCULATES HASH VALUE OF KEY DATA BLOCK FOR
STORING CONTENTS KEY CORRESPONDING TO CONTENTS ID — S795

S796

IS CALCULATED HASH VALUE COINCIDENT WITH PREDETERMINED
CHECK VALUE OF STORAGE SECTION ? —— NO —— (B)

YES

MEMORY STICK RETRIEVES CONTENTS CORRESPONDING TO CONTENTS ID — S797

MEMORY STICK TRANSMITS CONTENTS, AND RECEIVER RECEIVES CONTENTS — S798

RECEIVER RECORDS CONTENTS TO HDD — S799

MEMORY STICK DECODES CONTENTS KEY WITH SAVE KEY, RE-ENCRYPTS IT
WITH TEMPORARY KEY AND TEMPORARILY STORES IT — S800

MEMORY STICK DELETES CONTENTS KEY FROM KEY DATA — S801

MEMORY STICK CALCULATES HASH VALUE OF KEY DATA BLOCK FROM
WHICH CONTENTS KEY HAS BEEN DELETED — S802

MEMORY STICK OVERWRITES HASH VALUE WITH PREDETERMINED
CHECK VALUE OF STORAGE SECTION — S803

(E)

FIG.84

143

E

| | |
|---|---|
| MEMORY STICK TRANSMITS CONTENTS KEY AND THE LIKE TO RECEIVER, AND RECEIVER RECEIVES CONTENTS KEY AND THE LIKE | S804 |

| | |
|---|---|
| RECEIVER RETRIEVES KEY DATA BLOCK HAVING VACANCY OF EXTERNAL STORAGE SECTION | S805 |

| | |
|---|---|
| RECEIVER CALCULATES HASH VALUE OF KEY DATA BLOCK HAVING VACANCY OF EXTERNAL STORAGE SECTION | S806 |

**S807**

IS CALCULATED HASH VALUE COINCIDENT WITH PREDETERMINED CHECK VALUE OF STORAGE MODULE? — NO

YES **S808**

RECEIVER DECODES CONTENTS KEY WITH TEMPORARY KEY AND RE-ENCRYPTS IT WITH SAVE KEY

**S809**

RECEIVER WRITES CONTENTS KEY INTO ANOTHER KEY DATA BLOCK HAVING VACANCY

**S810**

RECEIVER CALCULATES HASH VALUE OF KEY DATA BLOCK IN WHICH CONTENTS KEY IS WRITTEN

**S811**

RECEIVER OVERWRITES CALCULATED HASH VALUE WITH PREDETERMINED CHECK VALUE OF STORAGE MODULE

**S812**

RECEIVER TRANSMITS RECEPTION COMPLETION SIGNAL TO MEMORY STICK, AND MEMORY STICK RECEIVES RECEPTION COMPLETION SIGNAL

**S813**

MEMORY STICK DELETES CONTENTS FROM ENCRYPTED DATA AND DELETES CONTENTS KEY FROM KEY DATA

**S814**

YES / HAVE ALL KEY DATA BLOCKS OF EXTERNAL STORAGE SECTION BEEN CHECKED?

NO **S815**

RECEIVER RETRIEVES ANOTHER KEY DATA BLOCK HAVING VACANCY OF EXTERNAL STORAGE SECTION

F

END

# FIG.85

```
   ┌──────────────────────────────────────┐
   │  START SHIFT PROCESSING OF CONTENTS   │
   │    FROM MEMORY STICK TO RECEIVER      │
   └──────────────────────────────────────┘
                      │
                      ▼
   ╔══════════════════════════════════════╗
   ║ RECEIVER AND MEMORY STICK CARRY OUT   ║
   ║ MUTUAL AUTHENTICATION                 ║──S831
   ║ AND SHARE TEMPORARY KEY               ║
   ╚══════════════════════════════════════╝
                      │
                      ▼
   ┌──────────────────────────────────────┐
   │ RECEIVER SELECTS CONTENTS TO SHIFT    │
   │ WITH REFERENCE TO DATA                │──S832
   │ RETRIEVAL TABLE OF MEMORY STICK       │
   └──────────────────────────────────────┘
                      │
                      ▼
   ┌──────────────────────────────────────┐
   │ TRANSMITS SHIFT REQUEST COMMAND AND   │
   │ CONTENTS ID TO MEMORY                 │
   │ STICK, AND MEMORY STICK RECEIVES SHIFT│──S833
   │ REQUEST                               │
   │ COMMAND AND CONTENTS ID               │
   └──────────────────────────────────────┘
                      │
                      ▼
   ┌──────────────────────────────────────┐
   │ MEMORY STICK RETRIEVES CONTENTS KEY   │
   │ CORRESPONDING TO                      │──S834
   │ CONTENTS ID FROM KEY DATA             │
   └──────────────────────────────────────┘
                      │
                      ▼
   ┌──────────────────────────────────────┐
   │ MEMORY STICK CALCULATES HASH VALVE OF │
   │ KEY DATA BLOCK FOR                    │──S835
   │ STORING CONTENTS KEY CORRESPODING TO  │
   │ CONTENTS ID                           │
   └──────────────────────────────────────┘
                      │
                      ▼
   ┌──────────────────────────────────────┐
   │ MEMORY STICK DECODES PREDETERMINED    │
   │ CHECK VALUE OF KEY                    │──S836
   │ DATA WITH CHECK KEY                   │
   └──────────────────────────────────────┘
                      │        S837
                      ▼
   ╱──────────────────────────────────────╲   NO
   ⟨ IS CALCULATED HASH VALUE COINCIDENT   ⟩────▶ (B)
   ⟨ WITH DECODED CHECK VALUE?             ⟩
   ╲──────────────────────────────────────╱
                      │ YES
                      ▼
   ┌──────────────────────────────────────┐
   │ MEMORY STICK RETRIEVES CONTENTS       │──S838
   │ CORRESPONDING TO CONTENTS ID          │
   └──────────────────────────────────────┘
                      │
                      ▼
   ┌──────────────────────────────────────┐
   │ MEMORY STICK TRANSMITS CONTENTS, AND  │──S839
   │ RECEIVER RECEIVERS CONTENTS           │
   └──────────────────────────────────────┘
                      │
                      ▼
   ┌──────────────────────────────────────┐
   │ RECEIVER STORES CONTENTS TO HDD       │──S840
   └──────────────────────────────────────┘
                      │
                      ▼
   ┌──────────────────────────────────────┐
   │ MEMORY STICK DECODES CONTENTS KEY WITH│
   │ SAVE KEY, RE-ENCRYPTS IT              │──S841
   │ WITH TEMPORARY KEY AND TEMPORARILY    │
   │ STORES IT                             │
   └──────────────────────────────────────┘
                      │
                      ▼
   ┌──────────────────────────────────────┐
   │ MEMORY STICK DELETES CONTENTS KEY FROM│──S842
   │ KEY DATA AREA                         │
   └──────────────────────────────────────┘
                      │
                      ▼
   ┌──────────────────────────────────────┐
   │ MEMORY STICK CALCULATES HASH VALUE OF │
   │ KEY DATA BLOCK                        │──S843
   │ FROM WHICH   CONTENTS KEY HAS BEEN    │
   │ DELETED                               │
   └──────────────────────────────────────┘
                      │
                      ▼
   ┌──────────────────────────────────────┐
   │ MEMORY STICK ENCRYPTS HASH VALUE WITH │──S844
   │ CHECK KEY                             │
   └──────────────────────────────────────┘
                      │
                      ▼
   ┌──────────────────────────────────────┐
   │ MEMORY STICK OVERWRITES ENCRYPTED HASH│
   │ VALUE WITH                            │──S845
   │ PREDETERMINED CHECK VALUE OF KEY DATA │
   └──────────────────────────────────────┘
                      │
                      ▼
   ┌──────────────────────────────────────┐
   │ MEMORY STICK TRANSMITS CONTENTS KEY   │
   │ AND THE LIKE TO                       │──S846
   │ RECEIVER, AND RECEIVER RECEIVES       │
   │ CONTENTS KEY AND THE LIKE             │
   └──────────────────────────────────────┘
                      │
                      ▼
                     (G)
```

# FIG.86

145

G

RECEIVER RETRIEVES KEY DATA BLOCK HAVING VACANCY OF EXTERNAL STORAGE SECTION *S847*

RECEIVER CALCULATES HASH VALUE OF KEY DATA BLOCK HAVING VACANCY OF EXTERNAL STORAGE SECTION *S848*

RECEIVER DECODES PREDETERMINED CHECK VALUE OF EXTERNAL STORAGE SECTION WITH CHECK KEY *S849*

*S850*
IS CALCULATED HASH VALUE COINCIDENT WITH DECODED CHECK VALUE?    NO

YES    *S851*

RECEIVER DECODES CONTENTS KEY WITH TEMPORARY KEY AND RE-ENCRYPTS IT WITH SAVE KEY

*S852*
RECEIVER WRITES CONTENTS KEY INTO KEY DATA BLOCK HAVING VACANCY OF EXTERNAL STORAGE SECTION

*S853*    YES    *S858*
RECEIVER CALCULATES HASH VALUE OF KEY DATA BLOCK IN WHICH CONTENTS KEY IS WRITTEN

HAVE ALL KEY DATA BLOCKS OF EXTERNAL STORAGE SECTION BEEN CHECKED?

NO    *S859*

*S854*
RECEIVER ENCRYPTS HASH VALUE WITH CHECK KEY

RECEIVER RETRIEVES ANOTHER KEY DATA BLOCK HAVING VACANCY OF EXTERNAL STORAGE SECTION

*S855*
RECEIVER OVERWRITES ENCRYPTED HASH VALUE WITH PREDETERMINED CHECK VALUE OF EXTERNAL STORAGE SECTION

*S856*
RECEIVER TRANSMITS RECEPTION COMPLETION SIGNAL TO MEMORY STICK, AND MEMORY STICK RECEIVERS RECEPTION COMPLETION SIGNAL

*S857*
MEMORY STICK DELETES CONTENTS FROM ENCRYPTED DATA AND DELETES CONTENTS KEY FROM KEY DATA

H

END

FIG.87

START REPRODUCTION PROCESSING
OF CONTENTS OF MEMORY STICK

**S871**
SAM AND MEMORY STICK CARRY OUT
MUTUAL AUTHENTICATION AND SHARE
TEMPORARY KEY

**S872**
SAM SELECTS CONTENTS TO REPRODUCE
WITH REFERENCE TO DATA
RETRIEVAL TABLE OF MEMORY STICK

**S873**
SAM TRANSMITS READ REQUEST
COMMAND AND CONTENTS ID TO
MEMORY STICK, AND MEMORY STICK
RECEIVES READ REQUEST COMMAND
AND CONTENTS ID

**S874**
MEMORY STICK RETRIEVES CONTENTS
KEY CORRESPONDING TO CONTENTS
ID FROM KEY DATA

**S875**
MEMORY STICK CALCULATES HASH
VALUE OF KEY DATA BLOCK FOR
STORING CONTENTS KEY
CORRESPONDING TO CONTENTS ID

**S876**
IS CALCULATED HASH
VALUE COINCIDENT WITH
PREDETERMINED CHECK
VALUE OF STORAGE
SECTION?  NO

YES  **S877**
MEMORY STICK RETRIEVES CONTENTS
CORRESPONDING TO CONTENTS ID

**S878**
MEMORY STICK TRANSMITS CONTENTS,
AND RECEIVER RECEIVES CONTENTS

**S879**
MEMORY STICK DECODES CONTENTS
KEY WITH SAVE KEY, RE-ENCRYPTS IT
WITH TEMPORARY KEY AND
TEMPORARILY STORES IT

I

**S880**
MEMORY STICK TRANSMITS
CONTENTS KEY TO SAM, AND
SAM RECEIVES CONTENTS KEY

**S881**
SAM AND EXPANSION SECTION
CARRY OUT MUTUAL
AUTHENTICATION AND SHARE
TEMPORARY KEY

**S882**
SAM DECODES CONTENTS KEY AND
RE-ENCRYPTS IT WITH
TEMPORARY KEY

**S883**
SAM TRANSMITS CONTENTS KEY
TO EXPANSION SECTION
AND EXPANSION SECTION RECEIVES
CONTENTS KEY

**S884**
EXPANSION SECTION DECODES
CONTENTS KEY WITH
TEMPORARY KEY

**S885**
EXPANSION SECTION DECODES
CONTENTS WITH CONTENTS KEY

**S886**
EXPANSION SECTION EXPANDS
CONTENTS

**S887**
EXPANSION SECTION APPENDS
WATERMARK TO CONTENTS

**S888**
EXPANSION SECTION
OUTPUTS CONTENTS

**S889**
SAM TRANSMITS REPRODUCTION
COMPLETION SIGNAL TO MEMORY
STICK, AND MEMORY STICK
RECEIVES REPRODUCTION
COMPLETION SIGNAL

END

**FIG.88**

START REPRODUCTION PROCESSING
OF CONTENTS OF MEMORY STICK

*S901*

SAM AND MEMORY STICK CARRY
OUT MURAL AUTHENTICATION AND
SHARE TEMPORARY KEY

*S902*

SAM SELECTS CONTENTS TO REPRODUCE
WITH REFERENCE TO DATA RETRIEVAL
TABLE OF MEMORY STICK

*S903*

SAM TRANSMITS READ REQUEST
COMMAND AND CONTENTS ID TO
MEMORY STICK, AND MEMORY STICK
RECEIVES READ REQUEST COMMAND
AND CONTENTS ID

*S904*

MEMORY STICK RETRIEVES CONTENTS
KEY CORRESPONDING TO CONTENTS
ID FROM KEY DATA

*S905*

MEMORY STICK CALCULATES HASH
VALUE OF KEY DATA BLOCK FOR
STORING CONTENTS KEY
CORRESPONDING TO CONTENTS ID

*S906*

MEMORY STICK DECODES
PREDETERMINED CHECK VALUE OF
KEY DATA WITH CHECK KEY

*S907*

IS CALCULATED HASH VALUE
COINCIDENT WITH DECODED
CHECK VALUE?  NO

YES  *S908*

MEMORY STICK RETRIEVES CONTENTS
CORRESPONDING TO CONTENTS ID

*S909*

MEMORY STICK TRANSMITS CONTENTS,
AND RECEIVER RECEIVES CONTENTS

*S910*

MEMORY STICK DECODES CONTENTS
KEY WITH SAVE KEY, RE-ENCRYPTS IT
WITH TEMPORARY KEY AND
TEMPORARILY STORES IT

J

J

*S911*

MEMORY STICK TRANSMITS
CONTENTS KEY TO RECEIVER, AND
RECEIVER RECEIVES
CONTENTS KEY

*S912*

SAM AND EXPANSION SECTION
CARRY OUT MUTUAL
AUTHENTICATION AND SHARE
TEMPORARY KEY

*S913*

SAM DECODES CONTENTS KEY AND
RE-ENCRYPTS IT WITH
TEMPORARY KEY

*S914*

SAM TRANSMITS CONTENTS KEY
TO EXPANSION SECTION,
AND EXPANSION SECTION RECEIVES
CONTENTS KEY

*S915*

EXPANSION SECTION DECODES
CONTENTS KEY WITH
TEMPORARY KEY

*S916*

EXPANSION SECTION DECODES
CONTENTS WITH CONTENTS KEY

*S917*

EXPANSION SECTION EXPANDS
CONTENTS

*S918*

EXPANSION SECTION APPENDS
WATERMARK TO CONTENTS

*S919*

EXPANSION SECTION
OUTPUTS CONTENTS

*S920*

SAM TRANSMITS REPRODUCTION
COMPLETION SIGNAL TO MEMORY
STICK, AND MEMORY STICK
RECEIVES REPRODUCTION
COMPLETION SIGNAL

END

# FIG.89

# INTERNATIONAL SEARCH REPORT

International application No.

PCT/JP99/05689

| A. CLASSIFICATION OF SUBJECT MATTER |
|---|
| Int.Cl⁷ G06F15/00, G06F17/60, H04L9/08 |

According to International Patent Classification (IPC) or to both national classification and IPC

| B. FIELDS SEARCHED |
|---|
| Minimum documentation searched (classification system followed by classification symbols)<br>Int.Cl⁷ G06F15/00, G06F17/60, H04L9/08 |

Documentation searched other than minimum documentation to the extent that such documents are included in the fields searched

| Jitsuyo Shinan Koho | 1926-1996 | Jitsuyo Shinan Toroku Koho | 1996-2000 |
|---|---|---|---|
| Kokai Jitsuyo Shinan Koho | 1971-2000 | Toroku Jitsuyo Shinan Koho | 1994-2000 |

Electronic data base consulted during the international search (name of data base and, where practicable, search terms used)
CS, WPI, JICST contents, distribution, SuperDistribution

## C. DOCUMENTS CONSIDERED TO BE RELEVANT

| Category* | Citation of document, with indication, where appropriate, of the relevant passages | Relevant to claim No. |
|---|---|---|
| X | WO, 96/27155, A3 (Electronic Publishing Resources, Inc.),<br>06 September, 1996 (06.09.96),<br>pages 393-394, 607, 630, 785; Fig. 19;<br>pages 393-394, 607, 630, 785, 790 to 791; Fig. 19;<br>pages 169, 487-488, 638-644, 652, 830-832; Fig. 2;<br>pages 487-490;<br>page 480; Fig. 33 | 1-3<br>7-9<br>13-22<br>33-38<br>39-42 |
| Y | pages 617-618; Figs 66, 67;<br>pages 633-634;<br>pages 165-166; Fig. 2;<br>pages 485-490; Fig.35 | 10-12<br>43-51<br>52-58<br>59-66 |
| A | & JP, 10-512074, W   & AU, 9663266, A<br>& EP, 861461, A2   & US, 5910987, A<br>& US, 5915019, A   & US, 5917912, A<br>& US, 5949876, A   & US, 5982891, A | 4-6,23-32,67 |

☒ Further documents are listed in the continuation of Box C.     ☐ See patent family annex.

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>14 March, 2000 (14.03.00) | Date of mailing of the international search report<br>21 March, 2000 (21.03.00) |
|---|---|
| Name and mailing address of the ISA/<br>Japanese Patent Office | Authorized officer |
| Facsimile No. | Telephone No. |

Form PCT/ISA/210 (second sheet) (July 1992)

149

## INTERNATIONAL SEARCH REPORT

| International application No. |
|---|
| PCT/JP99/05689 |

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | US, 5701343, A (Nippon Telegraph & Telephone Corp.),<br>23 December, 1997 (23.12.97),<br>Column 8, lines 1 to 34<br>& JP, 8-160855, A   & JP, 8-160856, A<br>& EP, 715242, A1 | 67<br>43-51 |
| Y | EP, 809379, A2 (Matsushita Electric Ind. Co. Ltd.),<br>26 November, 1997 (26.11.97),<br>Full text<br>& JP, 10-51439, A   & TW, 333630, A<br>& KR, 97076418, A | 10-12<br><br><br>52-66 |
| Y | US, 5103392, A (Fujitsu Limited),<br>07 April, 1992 (07.04.92),<br>Full text<br>& JP, 6-95302, B   & JP, 6-28030, B<br>& JP, 3-14442, B | |
| Y | "Protection of the Copyright of Music; "Hadaka" no CD<br>ga genkaini", Nikkei Electronics, Nikkei BP K.K., 15<br>June, 1998 (15.06.98),<br>No. 718, pages 57-64, Figs. 5,6 | 54 |
| Y | JP, 9-265254, A (Dainippon Printing Co., Ltd.),<br>07 October, 1997 (07.10.97),<br>Full text   (Family: none) | 59-62,66 |
| Y | JP, 7-212742, A (Matsushita Electric Ind. Co., Ltd.),<br>11 August, 1995 (11.08.95),<br>column 3, lines 22-30   (Family: none) | 23,26,27 |
| Y<br>A | JP, 7-154770, A (NEC Corporation),<br>16 June, 1995 (16.06.95),<br>Full text   (Family: none) | 23,26,27<br>1-9 |
| A | EP, 840194, A2 (Matsushita Electric Ind. Co. Ltd.),<br>06 May, 1998 (06.05.98),<br>Full text<br>& JP, 10-133955, A   & AU, 695948, B<br>& KR, 98033266, A | 1-9 |

Form PCT/ISA/210 (continuation of second sheet) (July 1992)

## INTERNATIONAL SEARCH REPORT

| International application No. |
| --- |
| PCT/JP99/05689 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

The invention of the present application is categorized in the 12 groups of inventions, namely claims 1-3, 4-6, 7-9, 10-12, 13-22, 23-32, 33-35, 36-38, 39-42, 43-51, 52-58, 59-67.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1992)